# EUROPÄISCHE PATENTSCHRIFT

(11) **EP 0 796 043 B1**
(45) Veröffentlichungstag und Bekanntmachung des Hinweises auf die Patenterteilung: **08.09.1999**
(21) Anmeldenummer: 95936374.8
(22) Anmeldetag: 16.11.1995
(51) Int. Cl.: A21B 5/02

(54) **VORRICHTUNGEN UND VERFAHREN FÜR DIE HERSTELLUNG VON GEBACKENEN, DÜNNWANDIGEN FORMKÖRPERN**
DEVICES AND PROCESSES FOR PRODUCING BAKED THIN-WALLED SHAPED ARTICLES
DISPOSITIFS ET PROCEDES POUR LA PRODUCTION DE CORPS MIS EN FORME, A PAROIS MINCES, CUITS AU FOUR

(30) Priorität: 16.11.1994 AT 212194; 16.11.1994 AT 212294; 16.11.1994 AT 212394; 16.11.1994 AT 212494; 15.11.1995 AT 187195
(43) Veröffentlichungstag der Anmeldung: 24.09.1997
(73) Patentinhaber: FRANZ HAAS WAFFELMASCHINEN-INDUSTRIE AKTIENGESELLSCHAFT, 1210 Wien (AT)
(72) Erfinder: HAAS, Franz, sen., A-1210 Wien (AT); HAAS, Franz, jun., A-1010 Wien (AT); HAAS, Johann, A-3400 Klosterneuburg (AT); KOLETNIK, Erich, A-3400 Klosterneuburg (AT)
(74) Vertreter: Berger, Erhard, Dr.
(86) Internationale Anmeldenummer: AT9500220
(87) Internationale Veröffentlichungsnummer: WO9614750

(56) Entgegenhaltungen:
- AT-A- 386 727
- DE-A- 3 135 496
- GB-A- 2 204 227
- US-A- 4 038 016

## Beschreibung

### Gebiet der Erfindung:

Die Erfindung betrifft die Herstellung von gebackenen dünnwandigen Formkörpern in den auf- und zumachbaren Backformen von Backöfen oder Backvorrichtungen, in denen sich während des Backprozesses ausdehnende Back- oder Gießmassen in die geöffneten Backformen eingebracht und in den geschlossenen Backformen zu den dünnwandigen Formkörpern gebacken werden. Die dabei eingesetzten, zumeist gießfähigen Back- oder Gießmassen können für den menschlichen Genuß bestimmte Waffelteige mit oder ohne Zuckergehalt oder andere Backteige sein, wie sie zur Herstellung von Süßwaren oder nicht süssen Backwaren verwendet werden. Als gießfähige Back- oder Gießmassen können auch für den menschlichen Genuß ungeeignete Back- oder Gießmassen auf Stärkebasis oder andere Back- oder Gießmassen eingesetzt werden.

### Stand der Technik:

Aus der Backwaren-, Waffelbackwaren- bzw. Süßwarenindustrie sind Waffelbacköfen bekannt, in denen ein flüssiger, hauptsächlich aus Weizenmehl und Wasser bestehender Waffelteig als Back- bzw. Gießmasse in die Backformen der Backzangen einer endlosen Backzangenkette eingebracht und während des Umlaufes der Backzangenkette durch den Backofen zu dünnwandigen Formkörpern gebacken wird. Diese gebackenen dünnwandigen Formkörpern werden je nach der räumlichen Gestalt der Back-Hohlräume der Backformen der Backzangenkette als Waffelblätter, Waffeltüten, Speiseeistüten, Waffelbecher, Waffelteller, Waffelfiguren etc. bezeichnet. Die gebackenen dünnwandigen Formkörper sind knusprig, spröd und leicht zerbrechlich und weisen einen Feuchtigkeitsgehalt von maximal 1% - 4% auf.

Die Waffelbacköfen werden auch als Waffelbackmaschinen oder Waffelbackautomaten bezeichnet und enthalten jeweils eine endlose Backzangenkette, die innerhalb des Backofens durch einen Antriebsmotor in einer Richtung in Umlauf versetzbar ist. Die Backzangenkette enthält, je nach der Kapazität des Backofens, 18 bis 140 untereinander baugleiche, mit einer Verriegelungsvorrichtung versehene, auf- und zumachbare Backzangen, in denen untereinander baugleiche, auf- und zumachbaren Backformen enthalten sind. Die Backformen werden durch die umlaufende Backzangenkette von der Teigaufgießstation des Backofens durch dessen Backraum hindurch zu seiner Waffelentnahmestation und wieder zurück zur Teigaufgießstation des Backofens transportiert. Während des Umlaufes der Backzangenkette werden die Backformen mit Hilfe der bewegbaren Teile der Backzangen vor dem Erreichen der Waffelentnahmestation geöffnet und nach dem Verlassen der Teigaufgießstation wieder geschlossen. Die Verriegelungsvorrichtungen der Backzangen werden vor dem Öffnen der Backformen entriegelt und nach dem Schließen der Backzangen wieder verriegelt. Die dafür erforderlichen Bewegungen der bewegbaren Teile der Backzangen und ihrer Verriegelungsvorrichtungen werden über stationäre Einrichtungen des Backofens von der Umlaufbewegung der Backzangenkette abgeleitet.

Die Backzangen der Backzangenkette umfassen jeweils einen langgestreckten, quer zur Laufrichtung angeordneten Zangenoberteil mit der oberen Formhälfte der Backform und einen langgestreckten, quer zur Laufrichtung angeordneten Zangenunterteil mit der unteren Formhälfte der Backform. Der Zangenoberteil ist zum Öffnen und Schließen der Backform mit dem Zangenunterteil entweder über ein seitliches Gelenk oder über Führungssäulen verbunden.

Bei mit einem Gelenk versehenen Backzangen ist das Gelenk an einer zur Laufrichtung parallelen Längsseite der Backzange angeordnet und weist eine zur Laufrichtung und zur Haupt-Formtrennungsebene der Backform parallele Schwenkachse auf. An der dem Gelenk gegenüberliegenden Längsseite der Backzange ist eine Verriegelungsvorrichtung angeordnet. Der Zangenoberteil wird zum Öffnen und Schließen der Backform gegenüber dem Zangenunterteil hin und her geschwenkt.

Bei Backzangen mit vier Führungssäulen sind diese an beiden zur Laufrichtung parallelen Längsseiten der Backzange jeweils senkrecht zur Haupt-Formtrennungsebene der Backform angeordnet. An beiden Längsseiten der Backzange ist jeweils eine Verriegelungsvorrichtung angeordnet. Der Zangenoberteil wird zum Öffnen und Schließen der Backform gegenüber dem Zangenunterteil entlang den Führungssäulen auf und ab bewegt.

Die Verriegelungsvorrichtungen der Backzangen sind als Hakenverschluß mit schwenkbarem Verschlußhaken, oder als Hammerkopfverschluß mit drehbarem Hammerkopf, oder als Riegelverschluß mit verschiebbarem Verschlußriegel ausgebildet.

Die Backformen der Backzangen können auch sogenannte Flachwaffel-Backformen zur Herstellung von flachen dünnwandigen Formkörpern wie z.B. ebene rechteckige Waffelblätter, ebene rechteckige Waffeltafeln mit aus der Ebene herausragenden Hohlkörperhälften, runde Waffelteller etc. sein. Diese Backformen enthalten zumeist nur einen einzigen Back-Hohlraum für einen flachen dünnwandigen Formkörper und bestehen aus einer oberen Formhälfte und einer unteren Formhälfte und besitzen nur eine Haupt-Formtrennungsebene.

Die Backformen der Backzangen können sogenannte Hohlwaffel-Backformen zur Herstellung von hohlen, dünnwandigen Formkörpern wie z.B. Waffeltüten, Speiseeistüten, Waffelbecher, Waffelfiguren etc. sein. Diese Backformen enthalten zumeist mehrere, in einer einzigen Reihe nebeneinander angeordnete, untereinander baugleiche Back-Hohlräume für die hohlen, dünnwandigen Formkörper. Diese einreihigen Backformen bestehen aus einer oberen, als Patrize ausgebildeten Formhälfte und aus einer von dieser durch eine Haupt-Formtrennungsebene getrennten, als Matrize ausgebildeten unteren Formhälfte, die selbst durch eine zur Haupt-Formtrennungsebene senkrechte zweite Formtrennungsebene in zwei Backformunterteile geteilt ist. Die zweite Formtrennungsebene halbiert alle in einer Reihe nebeneinander angeordneten Back-Hohlräume der Backform.

Die einreihigen Hohlwaffel-Backformen sind mit ihrer zweiten Formtrennungsebene in speziellen Backzangen jeweils parallel zur Laufrichtung der Backzangenkette aufgenommen. Diese Backzangen enthalten in ihren, jeweils die untere Formhälfte aufnehmenden Zangenunterteilen jeweils einen Kniehebelmechanismus zum Öffnen der Matrize vor der Waffelentnahmestation und zum Schließen der Matrize vor der Teigaufgießstation. Bei jeder Backzange ist der eine Backformunterteil im Zangenunterteil fix eingebaut und der andere Backformunterteil mit dem Kniehebelmechanismus verbunden, der diesen Backformunterteil im Zangenunterteil quer zur Laufrichtung der Backzangenkette hin und her bewegt. Jeder Kniehebelmechanismus enthat einen Betätigungshebel. der die Bewegungen zum Öffnen und Schließen der Matrize über stationäre Einrichtungen des Backofens von der Umlaufbewegung der Backzangenkette ableitet.

Die dünnwandigen Formkörper werden im jeweiligen Backofen während des Umlaufes der Backzangenkette hergestellt Dabei wird jeweils bei der, die Teigaufgießstation im geöffneten Zustand passierenden Backzange flüssiger Waffelteig in die heiße, geöffnete Backforrn eingebracht Anschließend wird die Backform mit Hilfe der Backzange geschlossen und die geschlossene Backzange mit Hilfe der jeweiligen Verriegelungsvorrichtung verriegelt. Die geschlossene und verriegelte Backzange durchläuft anschliessend den Backraum des Backofens. Im Backraum werden die geschlossenen Backformen beheizt und der Waffelteig in den Backformen zu den dünnwandigen Waffelformkörpern gebacken. Vor dem Erreichen der Waffelentnahmestation wird bei jeder Backzange zuerst die Verrigelungsvorrichtung entriegelt und anschließend die Backform mit Hilfe der Backzange geöffnet. In der Waffelentnahmestation werden die gebackenen Formkörper aus den vollständig geöffneten Backformen der geöffneten Backzangen entnommen.

Bei Backzangen mit Hohlwaffel-Backformen zur Herstellung von Waffeltüten werden die Matrizen durch die Kniehebelmechanismen vor der Teigaufgießstation geschlossen und während des Durchlaufens des Backraumes geschlossen gehalten. Vor dem Erreichen der Waffelentnahmestation wird bei jeder Backzange die Verriegelungsvorrichtung entriegelt und die Backforrn mit Hilfe der Backzange geöffnet. Die Matrize bleibt geschlossen. Beim Öffnen der Backzange verbleiben die gebackenen Waffeltüten in der geschlossenen Matrize und nur die Formkerne der Patrize werden zusammen mit dem Zangenoberteil aus den gebackenen Waffeltüten herausgeschwenkt bzw. herausgehoben. In der Waffelentnahmestation wird eine Auswertervorrichtung mit der Backzangenkette mitbewegt, die den Formkernen der Patrize entsprechende (konische) Auswerferkerne besitzt. Diese Auswerferkerne werden in die, in der geschlossenen Matrize verbliebenen, offenen Waffeltüten eingefahren und unterstützen das Lösen der gebackenen Waffeltüten von den beiden Backformunterteilen der Matrize beim Öffnen der Matrize durch den Kniehebelmechanismus der Backzange. Beim Öffnen der Matrize werden die beiden Backformunterteile durch den Kniehebelmechanismus so weit auseinandergefahrenen, daß die gebackenen Waffeltüten zwischen den beiden Backformunterteilen hindurch nach unten aus der Backform heraus und auf eine unterhalb der Backzangenbann angeordnete Rutsche fallen können, auf der sie aus dem Backofen herausgeführt werden.

Bei den oben beschriebenen Backöfen ist in jeder Backzange der endlosen, umlaufenden Backzangenkette jeweils eine vollständige Backform aufgenommen und die Verriegelungsvorrichtung, die die Backforrn während des Backprozesses geschlossen hält, ist an der Backzange angebracht.

Bei dem aus der DE-AS 1 215 071 bekannten Backautomat zur Herstellung von Waffeltüten ist ein, um eine horizontale Drehachse drehbares Backformenrad vorgesehen, das zwischen seinen beiden, radialen Seitenscheiben sternförmig zu seiner Drehachse angeordnete, auf- und zuklappbare Backzangen trägt, die am Backformenrad befestigt sind und mit diesem umlaufen. In den Backzangen sind nur die Matrizen der Hohlwaffel-Backformen enthalten. Die konischen Back-Hohlräume der Hohlwaffel-Backformen sind, so wie die Backzangen, sternförmig zur Drehachse des Backformenrades angeordnet und erweitern sich innerhalb der jeweiligen Backzange, radial zur Drehachse des Backformenrades, von innen nach außen. Bei jeder Hohlwaffel-Backform verläuft die Haupt-Formtrennungsebene um äußeren Rand der jeweiligen Backzange parallel zur Drehachse des Backformenrades und die zur Haupt-Form-trennungsebene senkrechte zweite Formtrennungsebene entspricht jeweils der Formtrennungsebene der Backzange und verläuft radial zur Drehachse des Backformenrades. Die Vorrichtungen zum Auf- und Zuklappen der Backzangen sind jeweils an den beiden Seitenscheiben des Backformenrades angebracht. Für die Patrizen der Hohlwaffel-Backformen sind zur Drehachse des Backformenrades parallele Backhauben vorgesehen, die mit der jeweils zugeordneten Backzange mitumlaufen. Jede Backhaube besitzt zur Drehachse des Backformenrades parallel seitliche abstehende Achsstummel, die in einander gegenseitig zugeordneten Radialschlitzen der beiden Seitenscheiben des Backformenrades geführt sind. Zum Geschlossenhalten der geschlossenen Hohlwaffel-Backformen sind an den Außenseiten der beiden Seitenscheiben des Backformenrades bei jeder Backzange jeweils zwei dieser Backzange zugeordnete Hakenverschlüsse angebracht, die jeweils an den über die Seitenscheiben nach außen vorstehenden Achsstummeln der jeweiligen Backhaube angreifen. Die Relativbewegungen zwischen der Patrize und der Matrize jeder Hohlwaffel-Backform werden von der Rotationsbewegung des Backformenrades über im Ofengestell stationär angeordnete Kulissen abgeleitet, die mit den seitlichen Achsstummel der Backhauben zusammenwirken.

Die Waffeltüten werden in den Hohlwaffel-Backformen während der Rotation des Backformenrades hergestellt. In die geschlossenen Backzangen wird flüssiger Waffelteig eingebracht bevor diese im rotierenden Backformenrad den oberen Scheitel des Backformenrades erreicht haben. Während der weiteren Rotation des Backformenrades werden die Backhauben mit den Formkernen der Patrizen in die geschlossenen Backzangen eingeführt die außenliegenden Hakenverschlüsse geschlossen. Nach dem Passieren des unteren Scheitels des Backformenrades werden die außenliegenden Hakenverschlüsse geöffnet. Während die Backzangen durch die weitere Rotation des Backformenrades vom unteren Scheitel des Backformenrades zum vorderen Scheitel Backformenrades gelangen, werden die gebackenen Waffeltüten aus den Hohlwaffel-Backformen entnommen und auf eine, unterhalb des vorderen Scheitels des Backformenrades angeordnete, schräg nach oben ansteigende Transportbahn abgelegt.

Bei der Entnahme der gebackenen Waffeltüten aus einer Hohlwaffel-Backform wird zuerst die Backzange in einer Winkelposition am Backformenrad aufgeklappt, in der die Formkerne mit ihren Spitzen nach oben weisen. Anschließend wird die Backhaube mit den nach oben weisenden Formkernen der Patrize zusammen mit den auf den Formkernen sitzenden, gebackenen Waffeltüten aus der geöffneten Backzangen radial herausgefahren und um ihre horizontalen Achsstummel nach oben geschwenkt. Dabei wird die Backhaube entgegen der Rotationsrichtung des Backformenrades gedreht, bis die gebackenen Waffeltüten auf den während der Drehung nach oben weisenden Formkernen mit ihren nach oben weisenden geschlossenen Enden knapp oberhalb der Transportbahn am vorderen Scheitel des Backformenrades angelangt sind, wo sie durch einen hin und her bewegbaren Abstreifer von den Formkernen abgestreift werden.

Bei den bekannten, jeweils eine vollständige Backform enthaltenden Backzangen werden die zur jeweiligen Haupt-Formtrennungsebene senkrechten Abmessungen der gebackenen dünnwandigen Formkörper durch den verriegelten Zustand der jeweiligen Verriggelungsvorrichtung der Backzangen bestimmt, welche während des Umlaufes der geschlossenen Backzange ein Öffnen der Backforrn an ihrer Haupt-Formtrennungsebene durch ein Öffnen der Backzange verhindert. Die verriegelte Verriegelungsvorrichtung verhindert das Aufdrücken der Backform, durch die in ihr während des Backprozesses entstehenden Gase. Sie verhindert ferner das Öffnen der Backzange durch die auf ihre Teile wirkende Schwerkraft, wenn die Backzange beim Passieren der hinteren Umlenkung der Backzangenkette auf den Kopf gestellt und anschließend mit dem Zangenoberteil nach unten durch die untere Transportebene des Backofens befördert wird. Die bei geschlossener Backzange von außen verriegelte Verriegelungsvorrichtung hält die Backzange und damit Indirekt auch die Backforrn in der normalen und auch in der auf den Kopf gestellten Lage der Backzange geschlossen.

Bei Backzangen zur Herstellung von Flachwaffeln liegt der Zangenoberteil nach dem Einbringen des Waffelteiges in die Backform und nach dem Schließen der Backzange auf den einstellbaren Distanzbolzen des Zangenunterteiles auf. Durch den in der Backform während des Backprozesses ausgasenden Waffelteig entsteht innerhalb der Backform ein Gasdruck, der den Zangenoberteil von den Distanzbolzen des Zangenunterteiles abhebt. Die verriegelte Verriegelungsvorrichtung der Backzange bewirkt nun, daß der Zangenoberteil vom Zangenunterteil nur so weit weggedrückt werden kann, als dies für die Erzielung der gewünschten Wandstärke des gebackenen flachen Formkörpers erforderlich ist. Das in der Verriegelungsvorrichtung der Backzange vorhandene Spiel dient dazu, bei geschlossener Backzange ein für die Betätigung der Verriegelungsvorrichtung ausreichendes Bewegungsspiel für das bewegliche Verriegelungsorgan der Verriegelungsvorrichtung sicherzustellen. Die einstellbaren Distanzbolzen des Zangenunterteiles sind auf eine, um dieses Bewegungsspiel der Verriegelungsvorrichtung kleinere Wandstärke bzw. kleinere Kernwandstärke des gebackenen Formkörpers eingestellt.

Wenn der Zangenoberteil beim Schließen der Backzange gegen die Distanzbolzen des Zangenunterteiles gedrückt wird, kann das bewegliche Verriegelungsorgan der Verriegelungsvorrichtung weitgehend reibungsfrei in seine Verriegelungsstellung bewegt werden. Beim Loslassen des Zangenoberteiles wird dieser durch den Druck im Waffelteig von den Distanzbolzen des Zangenunterteiles abgehoben bis du in seiner Verriegelungsstellung befindliche Verriegelungsorgan gegen einen Anschlag der Verriegelungsvorrichtung stößt und an diesen durch den Druck im Waffelteig angedrückt wird.

Das für die Bewegung des Verriegelungsorganes unbedingt erforderliche Bewegungsspiel wird nach dem Schließen der Backzange durch im Backofen stationär angeordnete Druckwalzen aufrechterhalten, die den Zangenoberteil beim Passieren der für das Verriegeln der Verriegelungsvorrichtung vorgesehenen Betätigungsvorrichtung auf die Distanzbolzen des Zangenunterteiles niederdrücken. Nach dem Verlassen der Druckwalzen wird das, in seiner Verriegelungsstellung befindliche, bewegliche Verriegelungsorgan durch den im Waffelteig vorhandenen Druck mit einem hohen Anpreßdruck gegen einen Anschlag der Verriegelungsvorrichtung angedrückt. Dieser Anpreßdruck sinkt während des weiterlaufenden Backprozesses nur teilweise ab, sodaß der am Ende der Backzeit noch vorhandene Anpreßdruck beim Entriegeln der Verriegelungsvorrichtung vom beweglichen Verriegelungsorgan bzw. von der Betätigungsvorrichtung zum Entriegeln der Verriegelungsvorrichtungen überwunden werden muß. Dies führt zu hohen Reibungskräften zwischen dem beweglichen Verriegelungsorgan und dem mit diesem zusammenwirkenden Anschlag während des Entriegelns der Verriegelungsvorrichtung der Backzange.

Der am Ende der Backzeit in der verriegelten Verriegelungsvorrichtung der Backzange noch vorhandene Anpreßdruck kann, ohne Zerstörung des in der geschlossenen Backform befindlichen und an beiden Formhälften großflächig anliegenden gebackenen Formkörpers nur verringert aber nicht gänzlich beseitigt werden. Die auf das bewegliche Verriegelungsorgan wirkende Anpreßkraft kann nur in dem Ausmaß verringert werden, in dem der jeweilige gebackene Formkörper unbeschädigt elastisch zusammengepreßt werden kann.

Dies führt im Laute der Zeit zu unvermeidbaren Abnützungserscheinungen an den gegeneinander zu bewegenden Teilen der Verriegelungsvorrichtungen der Backzangen beim Entriegeln dieser Verriegelungsvorrichtungen.

Bei Backzangen für Hohlwaffel-Backformen mit zweigeteilten Matrizen, werden die Backformunterteile der Matrizen nur im überstreckten Zustand der Kniehebelmechanismen geschlossen gehalten, weshalb die Kniehebelmechanismen bei jedem Öffnungsvorgang und bei jedem Schließvorgang einmal über ihre vollständig gestreckte Lage hinausbewegt werden müssen. Dies führt zu einer fortschreitenden Abnützungen an den einander gegenseitig zugeordneten Dichtflächen der Backformunterteile und an den Lagerstellen und Gelenken der Kniehebelmechanismen.

Der unvermeidliche Verschleiß der Verriegelungsvorrichtungen der Backzangen führt allmählich dazu, daß nach langer Betriebsdauer der Backzangen die in diesen aufgenommenen Backformen trotz vollständig geschlossener Backzangen und vollständig verriegelter Verriegelungsvorrichtungen der Backzangen nicht mehr ausreichend geschlossen sind. Dadurch kommt es im Bereich der Dichtflächen der Backformen zur sogenannten Flossenbildung an den gebackenen, dünnwandigen Formkörpern. Diese Flossen entstehen durch den flüssigen Waffelteig, der in die zufolge der Abnützung der Verriegelungsvorrichtungen entstandenen Spalte zwischen den Backformteilen eindringt. Dies gilt auch für Backzangen mit Hohlwaffel-Backformen mit zweigeteilten Matrizen, bei denen der unvermeidliche Verschleiß der Kniehebelmechanismen zur Flossenbildung an den gebackenen, dünnwandigen Formkörpern im Bereich der zweiten Formtrennungsebenen führt. Beim Auftreten der Flossenbildung müssen die Backzangen bzw. deren Backformen in den Backzangen neu eingestellt bzw. alle abgenützten Verschleißteile der Backzangen ausgewechselt werden. Zu diesem Zweck muß der Waffelbackofen für lange Zeit ausser Betrieb genommen werden.

### Zusammenfassung der Erfindung:

Aufgabe der Erfindung ist es, die Leistungsfähigkeit der für die Herstellung von dünnwandigen Formkörpern aus sich während des Backprozesses ausdehnenden Back- oder Gießmassen eingesetzten Backvorrichtungen zu steigern.

Eine weitere Aufgabe der Erfindung ist es, einen Backofen mit einer sehr kompakten Anordnung der auf- und zumachbaren Backformen anzugeben.

Eine weitere Aufgabe der Erfindung ist es, die Entnahme der gebackenen Formkörper aus den auf- und zumachbaren Backformen der auf- und zumachbaren Backzangen einer endlosen Backzangenkette eines Backofens zu vereinfachen.

Dies wird bei einer Backzange für die Herstellung von dünnwandigen Formkörpern aus sich während des Backprozesses ausdehnenden Back- oder Gießmassen mit einer durch Öffnen und Schließen der Backzange auf- und zumachbaren, zumindest zweiteiligen Backform, die mit ihrer oberen Formhälfte im Zangenoberteil und mit ihrer unteren Formhälfte im Zangenunterteil aufgenommen ist, erfindungsgemäß dadurch erreicht, daß zumindest eine die geschlossene Backform mit einer vorgegebenen Vorspannkraft geschlossen haltende, bei geschlossener Backzange zum Aufbringen der Vorspannkraft an zumindest zwei Backform- bzw. Zangenteilen festziehbare und bei aufgebrachter Vorspannkraft unverrückbar festklemmbare Klemmvorrichtung vorgesehen ist, die zumindest ein zum Erzeugen der Vorspannkraft beim Festziehen der Klemmvorrichtung elastisch dehnbares Klemmelement und zumindest zwei beim Festziehen der Klemmvorrichtung im gegenseitigen kraftschlüssigen und selbsthemmenden Reibungseingriff relativ zueinander bewegbare Klemmflächen bzw. Klemmabschnitte am elastisch dehnbaren Klemmelement bzw. an einem der beiden Backform- bzw. Zangenteile besitzt.

Die erfindungsgemäße Ausbildung der Backzange erlaubt weit ausgreifende Bewegungen der Klemmvorrichtung beim Festziehen und Losen der Klemmvorrichtung bei geschlossener Backform. Die dabei zwischen den im kraftschlüssigen und selbsthemmenden Reibungseingriff relativ zueinander zu bewegenden Klemmflächen bzw. Klemmabschnitte der Klemmvorrichtung realisierbaren Wege sind weitgehend unabhängig von der Wandstärke des in der jeweiligen Backform zu backenden, dünnwandigen Formkörpers.

Mit der erfindungsgemäßen Ausbildung der Klemmvorrichtung der Backzange wird, im Vergleich zu den bekannten Backzangen-Verriegelungsvorrichtungen, bei denen der Bewegungsspielraum des jeweiligen Verriegelungselementes auf einen Bruchteil der Wandstärke des in der jeweiligen Backform zu backenden, dünnwandigen Formkörpers beschränkt ist, ein sehr großer Bewegungsbereich für die relativ zueinander zu bewegenden Klemmflächen bzw. Klemmabschnitte der Klemmvorrichtung beim Festziehen und Lösen der Klemmvorrichtung erreicht.

Zum Unterschied zu den bekannten Backzangen-Verriegelungsvorrichtungen, bei denen die beiden Zangenteile erst am Ende der Bewegung des jeweiligen Verriegelungselementes und erst am Ende des Bewegungsspielraumes dieses Verriegelungselementes miteinander gegenseitig verriegelt sind, werden die beiden Backformteile bzw. Zangenteile bei der erfindungsgemäßen Backzange bereits am Anfang des Bewegungsbereiches der Klemmvorrichtung miteinander gegenseitig verriegelt, wenn die relativ zueinander bewegbaren Klemmflächen bzw. Klemmabschnitte der Klemmvorrichtung in den gegenseitigen kraftschlüssigen und selbsthemmenden Reibungseingriff kommen. Beim anschließenden Festziehen der Klemmvorrichtung wird das für die einwandfreie Funktion der Klemmvorrichtung erforderliche Bewegungsspiel der Klemmvorrichtung beseitigt und auch das zwischen den Backformteilen bzw. Zangenteilen vorgesehene Bewegungsspiel beseitigt, das die unterschiedlichen Wärmedehnungen der einzelnen Zangenteile bzw. Backformteile berücksichtigt. Beim Festziehen der Klemmvorrichtung werden die Zangenteile bzw. Backformteile innerhalb dieses Bewegungsspieles zueinanderbewegt und dann gegeneinandergedrückt. Das Festziehen der Klemmvorrichtung endet erst mit dem Aufbringen der vorgegebenen Vorspannkraft auf die beiden Zangenteile bzw. Backformteile der geschlossenen Backzange. Diese Vorspannkraft wird durch die, durch das Festziehen der Klemmvorrichtung verursachte elastische Dehnung des jeweiligen elastisch dehnbaren Klemmelementes erzeugt. Diese Vorspannkraft ist nur innerhalb der Backzange wirksam und wird in ihrer Größe über die, im jeweiligen Backofen für die Betätigung der von außen zu betätigenden Klemmvorrichtungen der Backzangen vorgesehenen Betätigungsvorrichtungen gesteuert.

Die während der Benützung der Backzangen im Laufe der Zeit auftretenden Abnützungen innerhalb der Klemmvorrichtungen bzw. Backzangen bewirken eine allmähliche Vergrößerung des Bewegungsspieles der Klemmvorrichtungen bzw. Backzangen. Das vergrößerte Bewegungsspiel wird aber beim Festklemmen der Klemmvorrichtung automatisch wieder beseitigt, wenn die im gegenseitigen kraftschlüssigen und selbsthemmenden Reibungseingriff befindlichen Klemmflächen bzw. Klemmabschnitte des betreffenden elastisch dehnbaren Klemmelementes bzw. des betreffenden Backform- bzw. Zangenteiles relativ zueinander bewegt werden, bis das elastisch dehnbare Klemmelement so weit elastisch gedehnt wurde, daß seine elastische Dehnung die vorgegebene Vorspannkraft erzeugt, mit der die geschlossene Backform durch die Klemmvorrichtung geschlossen gehalten wird. Die Vergrößerung des Bewegungsspieles bzw. der in der Klemmvorrichtung auftretende Verschleiß führt lediglich zu einer Veränderung der Endstellung der Klemmvorrichtung in ihrem der aufzubringenden Vorspannkraft entsprechenden, festgeklemmten Zustand. Dies gilt auch für einen Verschleiß, der an den Anschlägen bzw. Dichtflächen auftritt, mit denen die Zangenteile bzw. die Backformteile der Backzange bei geschlossener Backzange aneinander anliegen. Die erfindungsgemäße Klemmvorrichtungen sind daher selbstnachstellend und kompensieren den auftretenden Verschleiß selbsttätig. Durch die selbsthemmende Ausbildung der Klemmflächen ist auch ein unvorhergesehenes Öffnen der Klemmvorrichtungen infolge von Erschütterungen und dergleichen ausgeschlossen.

Die erfindungsgemäße Ausbildung der Backzange erlaubt ein gleichbleibendes, dosiertes Geschlossenhalten der Backform bei geschlossener Backzange mit gleichbleibendem Druck auf die Anschlag- bzw. Dichtflächen der Backform bzw. Backzange. Durch die selbstnachstellenden und den auftretenden Verschleiß selbsttätig kompensierenden Klemmvorrichtungen bleibt das gleichbleibende, dosierte Geschlossenhalten der Backform bei geschlossener Backzange auch bei zunehmender Abnützung der Klemmabschnitte und Klemmflächen der Klemmvorrichtungen erhalten. Dies gilt auch für den Fall, daß an der Ausgabestation des Backofens ein gebackener Formkörper in der Backform einer Backzange verbleibt und in dieser Backzange ein zweites Mal eine, für die leere Backform genau dosierte Menge an Back- bzw. Gießmasse in die Backform eingebracht wird, obwohl die Backform noch durch den in ihr verbliebenen, bereits gebackenen Formkörper ausgefüllt ist. Diese zweite, für die leere Backform genau dosierte Back- bzw. Gießmassenmenge wird beim Festziehen der Klemmvorrichtungen in der geschlossenen Backform teilweise verdrängt und teilweise verdichtet. Beim Festziehen der Klemmvorrichtungen werden die betreffenden Teile der Backform bzw. Backzange mit einer vorgegebenen Vorspannkraft gegeneinander und mit ihren Anschlag- bzw. Dichtflächen zueinander gedrückt. Selbst wenn dabei ein schmaler Spalt zwischen den Anschlag- bzw. Dichtflächen der Backform bzw. Backzange bleiben sollte, sind die betreffenden Teile der Backform bzw. Backzange miteinander kraftschlüssig verbunden und werden mit einer vorgegebenen Vorspannkraft zusammengehalten. Die vorgegebene Vorspannkraft, mit der eine Klemmvorrichtung festgezogen wird, bestimmt die maximale Höhe der beim Festziehen dieser Klemmvorrichtung auf die Backform bzw. Backzange ausgeübten Kräfte und unterbindet somit eine Überbeanspruchung der Backform bzw. Backzange und der Klemmvorrichtung.

Die erfindungsgemäßen Backzangen können sowohl, mit im wesentlichen zweiteiligen, nur durch eine Haupt-Formtrennungsebene geteilten Backformen ausgerüstet sein, als auch mit im wesentlichen dreiteiligen Backformen, die durch eine Haupt-Formtrennungsebene und durch eine zu dieser senkrechte zweite Formtrennungsebene geteilt sind. Die unmittelbar an der jeweiligen Backform bzw. unmittelbar an der jeweiligen Backzange angreifenden Klemmvorrichtungen sind jeweils zumindest einer dieser Formtrennungsebenen zugeordnet.

Die erfindungsgemäßen Backzangen können jeweils mehrere, der jeweiligen Formtrennungsebene zugeordnete Klemmvorrichtungen besitzen, welche in Laufrichtung der Backzangenkette bzw. quer dazu im Abstand von einander angeordnet sind und welche die zwischen zwei benachbarten Klemmvorrichtungen auftretenden elastischen und thermischen Verformung der Backformteile bzw. der Zangenteile begrenzen. Dies erlaubt eine leichtere Konstruktion der Backformen bzw. Backzangen.

In den meisten Fällen ersetzen die erfindungsgemäßen Klemmvorrichtungen der erfindungsgemäßen Backzangen die konventionellen Backzangen-Verriegelungsvorrichtungen. Bei erfindungsgemäßen Backzangen, deren Backformen mit unmittelbar an der jeweiligen Backform angreifenden Klemmvorrichtungen ausgerüstet sind, können zusätzlich zu diesen Klemmvorrichtungen auch konventionelle Backzangen-Verriegelungsvorrichtungen vorgesehen sein.

Erfindungsgemäß kann die Klemmvorrichtung zumindest einen, als elastisch dehnbares Klemmelement ausgebildeten Klemmhebel aufweisen, der an dem einen Backform- bzw. Zangenteil schwenkbar gelagert ist und einen Klemmabschnitt besitzt, dem für den gegenseitigen kraftschlüssigen und selbsthemmenden Reibungseingriff eine an dem anderen Backform- bzw. Zangenteil angebrachte, äußere Klemmfläche zugeordnet ist.

Diese Ausbildung ermöglicht einen großen Bewegungsbereich für die Klemmvorrichtung mit weit ausgreifenden Bewegungen des vom Klemmhebel gebildeten elastisch dehnbaren Klemmelementes beim Festziehen und Lösen der Klemmvorrichtung bei geschlossener Backform. Die dabei zwischen dem Klemmabschnitt des Klemmhebels und der zugeordneten äußeren Klemmfläche realisierbaren Wege sind weitgehend unabhängig von der Wandstärke des in der Backform der Backzange zu backenden, dünnwandigen Formkörpers.

Zum Festziehen der Klemmvorrichtung wird der an dem einen Backform- bzw. Zangenteil schwenkbar gelagerte Klemmhebel verschwenkt und mit seinem Klemmabschnitt an der zugeordneten, am anderen Backform- bzw. Zangenteil angebrachten, äußeren Klemmfläche festgezogen. Während dieser Schwenkbewegung kommt der Klemmhebel mit seinem Klemmabschnitt in kraftschlüssigen und selbsthemmenden Reibungseingriff mit der zugeordneten Klemmfläche, verriegelt dadurch die beiden Backform- bzw. Zangenteile der Backzange miteinander, und gleitet dann mit seinem Klemmabschnitt im kraftschlüssigen und selbsthemmenden Reibungseingriff an der zugeordneten Klemmfläche entlang, bis jedes vorhandene Bewegungsspiel beseitigt ist und er selbst so weit elastisch gedehnt ist, daß er die gewünschte vorgegebene Vorspannkraft auf die beiden Backform- bzw. Zangenteile aufbringt und an diesen im kraftschlüssigen und selbsthemmenden Reibungseingriff festsitzt. Während dieser Bewegung des Klemmhebels werden zuerst die Zangenteile bzw. Backformteile innerhalb des vorhandenen Bewegungsspieles zueinanderbewegt und gegeneinandergedrückt und damit das für die Schwenkbewegung des Klemmhebels erforderliche Bewegungsspiel der Klemmvorrichtung und das die unterschiedlichen Wärmedehnungen der einzelnen Zangenteile bzw. Backformteile berücksichtigende Bewegungsspiel zwischen den Zangenteilen beseitigt, bevor der Klemmhebel zum Aufbringen der gewünschten Vorspannkraft elastisch gedehnt und im elastisch gedehnten Zustand fixiert wird.

Bei jedem Festziehen der Klemmvorrichtung wird der Klemmhebel mit seinem Klemmabschnitt an der zugeordneten Klemmfläche so lange bzw. so weit entlangbewegt, bis die gewünschte Vorspannkraft durch die elastische Dehnung des Klemmhebels aufgebracht ist. Der dabei vom Klemmhebel bzw. seinem Klemmabschnitt jeweils zurückgelegte Weg entspricht der jeweils aktuell vorhandenen Größe des Bewegungsspieles. Eine Vergrößerung des Bewegungsspieles wird durch eine Vergrößerung des vom Klemmhebel bzw. seinem Klemmabschnitt zurückgelegten Weges ausgeglichen. Jede Veränderung des Bewegungsspieles der Klemmvorrichtung führt lediglich zu einer Veränderung der Endstellung des Klemmhebels in seiner der aufzubringenden Vorspannkraft entsprechenden, festgeklemmten Position. Erfindungsgemäß kann eine Klemmvorrichtung zwei Klemmhebel aufweisen, die an dem einen Backform- bzw. Zangenteil um eine gemeinsame Schwenkachse schwenkbar gelagert sind und deren Klemmabschnitt für den gegenseitigen kraftschlüssigen und selbsthemmenden Reibungseingriff zwei, an dem anderen Backform- bzw. Zangenteil im Abstand von einander angeordnete, äußere Klemmflächen zugeordnet sind.

Erfindungsgemäß kann die Schwenkachse eines Klemmhebels und die seinem Klemmabschnitt zugeordnete äußere Klemrnfläche im wesentlichen symmetrisch zu der die beiden Formhälften trennenden Haupt-Formtrennungsebene der Backform angeordnet sein.

Erfindungsgemäß kann die Klemmvorrichtung zumindest eine, als elastisch dehnbares Klemmelement ausgebildete, im wesentlichen C-förmige Klammer besitzen, die an ihren Enden mit einander zugewandten Klemmabschnitten versehen ist, denen an beiden Backform- bzw. Zangenteilen jeweils eine äußere Klemmfläche für den gegenseitigen kraftschlüssigen und selbsthemmenden Reibungseingriff zugeordnet ist.

Diese Ausbildung ermöglicht es, das von der Klammer gebildete, elastisch dehnbare Klemmelement zum Festziehen der Klemmvorrichtung auf die geschlossene Backform bzw. Backzange aufzuschieben und zum Lösen der Klemmvorrichtung von der geschlossenen Backform bzw. Backzange abzuziehen. Die dabei zwischen den Klemmabschnitten der Klammer und den zugeordneten äußeren Klemmflächen der beiden Backform- bzw. Zangenteile realisierbaren Wege sind weitgehend unabhängig von der Wandstärke des in der Backform der Backzange zu backenden, dünnwandigen Formkörpers.

Zum Festziehen der Klemmvorrichtung wird die Klammer mit ihren Klemmabschnitten auf die, diesen jeweils zugeordneten, äußeren Klemmflächen aufgeschoben und festgezogen. Während dieser Bewegung kommt die Klammer mit ihren Klemmabschnitten jeweils in kraftschlüssigen und selbsthemmenden Reibungseingriff mit der jeweils zugeordneten Klemmfläche, verriegelt dadurch die beiden Backform- bzw. Zangenteile der Backzange miteinander, und gleitet dann mit ihrem jeweiligen Klemmabschnitt im kraftschlüssigen und selbsthemmenden Reibungseingriff an der jeweils zugeordneten Klemmfläche entlang, bis jedes vorhandene Bewegungsspiel beseitigt ist und die Klammer selbst so weit elastisch gedehnt ist, daß sie die gewünschte vorgegebene Vorspannkraft auf die beiden Backform- bzw. Zangenteile aufbringt und an diesen im kraftschlüssigen und selbsthemmenden Reibungseingriff festsitzt. Während dieser Bewegung der Klammer werden zuerst die Zangenteile bzw. Backformteile innerhalb des vorhandenen Bewegungsspieles zueinanderbewegt und gegeneinandergedrückt und damit das für die Bewegung der Klammer erforderliche Bewegungsspiel der Klemmvorrichtung und das die unterschiedlichen Wärmedehnungen der einzelnen Zangenteile bzw. Backformteile berücksichtigende Bewegungsspiel zwischen den Zangenteilen beseitigt, bevor die Klammer zum Aufbringen der gewünschten Vorspannkraft elastisch gedehnt und im elastisch gedehnten Zustand an der Backform bzw. Backzange fixiert wird. Bei jedem Festziehen der Klemmvorrichtung wird die Klammer mit ihren Klemmabschnitten an der jeweils zugeordneten Klemmfläche so lange bzw. so weit entlangbewegt, bis die gewünschte Vorspannkraft durch die elastische Dehnung der Klammer aufgebracht ist. Der dabei vom der Klammer bzw. ihren Klemmabschnitten jeweils zurückgelegte Weg entspricht der jeweils aktuell vorhandenen Größe des Bewegungsspieles. Eine Vergrößerung des Bewegungsspieles wird durch eine Vergrößerung des vom der Klammer bzw. ihren Klemmabschnitten jeweils zurückgelegten Weges ausgeglichen. Jede Veränderung des Bewegungsspieles der Klemmvorrichtung führt lediglich zu einer Veränderung der Endstellung der Klammer in ihrer, der aufzubringenden Vorspannkraft entsprechenden, festgeklemmten Position.

Erfindungsgemäß können die den Klemmabschnitten einer Klammer für den gegenseitigen kraftschlüssigen und selbsthemmenden Reibungseingriff zugeordneten, äußeren Klemmflächen der beiden Backform- bzw. Zangenteile im wesentlichen symmetrisch zu der die beiden Formhälften trennenden Haupt-Formtrennungsebene der Backform angeordnet sein.

Bei der erfindungsgemäßen Backzange kann zum Aufbringen einer vorgegebenen Vorspannkraft auf eine geschlossene Backform, die eine auf- und zumachbare, in zwei Backformunterteile geteilte, untere Formhälfte besitzt, zumindest eine bei geschlossener Backzange an der oberen Formhälfte bzw. am Zangenoberteil und an beiden Backformunterteilen festziehbare und bei aufgebrachter Vorspannkraft unverrückbar festklemmbare Klemmvorrichtung vorgesehen sein, die zumindest zwei an der oberen Formhälfte bzw. am Zangenoberteil schwenkbar gelagerte, als elastisch dehnbare Klemmelemente ausgebildete Klemmhebel umfaßt, die jeweils einen Klemmabschnitt besitzen, dem für den jeweiligen gegenseitigen kraftschlüssigen und selbsthemmenden Reibungseingriff eine an einem der Backformunterteile angebrachte, äußere Klemmfläche zugeordnet ist.

Erfindungsgemäß können die beiden Klemmhebel eine gemeinsame Schwenkachse besitzen und die beiden ihren Klemmabschnitten zugeordneten äußeren Klemmflächen an den Backformunterteilen im wesentlichen spiegelbildlich zu der, die beiden Backformunterteile trennenden und zur Haupt-Formtrennungsebene der Backform senkrechten, zweiten Formtrennungsebene angeordnet sein, wobei die beiden äußeren Klemmflächen und die gemeinsame Schwenkachse der Klemmhebel ein zur zweiten Formtrennungsebene im wesentlichen symmetrisches, gleichschenkeliges Dreieck bilden.

Erfindungsgemäß können die die äußeren Klemmflächen tragenden Backformunterteile im Zangenunterteil quer zur zweiten Formtrennungsebene schwenkbar angeordnet sein.

Erfindungsgemäß kann der die obere Formhälfte und die Klemmhebel der Klemmvorrichtung tragende Zangenoberteil gegenüber dem die beiden Backformunterteile tragenden Zangenunterteil zum Öffnen und Schließen der Backform parallel zu deren zweiter Formtrennungsebene verschiebbar sein, wobei der Zangenoberteil ein zur Haupt-Formtrennungsebene der Backform senkrechtes Führungsschwert besitzt, das im Zangenunterteil senkrecht zur Haupt-Formtrennungsebene der Backform verschiebbar geführt ist.

Diese Ausgestaltung der Backzange ermöglicht die Aufnahme von Backformen mit großer Längserstreckung quer zur Laufrichtung in Backzangen mit kurzer Baulänge in Laufrichtung. Diese Ausbildung ermöglicht eine einfache, robuste und langlebige Konstruktion der Backzange, die auf geringstem Raum untergebracht werden kann. Die in Laufrichtung kurze Baulänge der Backzange erlaubt eine in Laufrichtung sehr dichte Aufeinanderfolge der Backzangen bzw. Backformen innerhalb der Backzangenkette eines Backofens. Der geringe Platzbedarf der Backzange erlaubt eine Vergrößerung der Produktionskapazität eines damit ausgerüsteten Backofens. Bei unveränderter Länge der Backzangenkette eines Backofens kann dessen Produktionskapazität sowohl durch eine Vermehrung der Anzahl der in den Backzangen quer zur Laufrichtung angeordneten Back-Hohlräume als auch durch eine Vermehrung der Anzahl der Backzangen in der Backzangenkette erhöht werden. Die zur zweiten Formtrennungsebene parallele Länge der Backformen geht nicht mehr in die zur Laufrichtung parallele Baulänge der Backzangen ein und beeinflußt somit auch nicht mehr die Umlaufgeschwindigkeit der Backzangenkette. Die zur zweiten Formtrennungsebene parallele Länge der Backform kann gegenüber den bekannten Backöfen vergrößert und damit die Anzahl der Formkerne und Formausnehmungen je Backform vermehrt werden, ohne die Umlaufgeschwindigkeit der Backzangenkette des Backofens verändern zu müssen.

Die Backzange kann als einseitig offene Backzange mit seitlich neben der Backform angeordnetem Führungsschwert ausgebildet sein und eine Backform mit großer Längserstreckung quer zur Laufrichtung und kurzer Baulänge in Laufrichtung enthalten. Diese Backzange kann in Backöfen mit einer stationären Aufgießvorrichtung eingesetzt werden, die in den bei geöffneter Backzange zwischen Zangenoberteil und Zangenunterteil vorhandenen Zwischenraum hineinragt. Durch die einseitige Lagerung des Zangenoberteiles im Zangenunterteil kann der Backofen vereinfacht werden, weil die Aufgießvorrichtung für die Back- bzw. Gießmasse und die Abnahmevorrichtung für die gebackenen Formkörper nicht mehr bei jeder einzelnen Backzange der Backzangenkette jeweils einzeln in die geöffnete Backzange ein- und ausfahren müssen und daher einfacher aufgebaut sein können.

Erfindungsgemäß kann das Führungsschwert an einem am Zangenoberteil ausgebildeten, oberen Führungskopf starr befestigt sein und mit einer der Backform zugewandten, inneren Führungsbahn und einer von der Backform abgewandten, äußeren Führungsbahn in einem im Zangenunterteil ausgebildeten, unteren Führungskopf verschiebbar geführt sein, wobei beide Führungsbahnen zur zweiten Formtrennungsebene schräge Führungsflächen besitzen, die im unteren Führungskopf mit ihnen jeweils zugeordneten Führungsrollen im Eingriff stehen, die zur Haupt-Formtrennungsebene der Backform parallele Drehachsen besitzen, die in zumindest zwei, in unterschiedlichem Abstand von der HauptFormtrennungsebene angeordneten Ebenen liegen.

Erfindungsgemäß können die Führungsrollen konisch ausgebildet sein und jeweils eine zur zweiten Formtrennungsebene und zur Haupt-Formtrennungsebene parallel angeordnete Drehachse besitzen.

Erfindungsgemäß kann jeweils eine einer Führungsfläche der inneren Führungsbahn zugeordnete, konische Führungsrolle und eine einer Führungsfläche der äußeren Führungsbahn zugeordnete, konische Führungsrolle auf einem gemeinsamen Walzenkörper angeordnet sein, der im unteren Führungskopf um eine zur zweiten Formtrennungsebene parallele Drehachse drehbar gelagert ist.

Erfindungsgemäß kann jeweils eine Führungsrolle eines Walzenkörpers mit ihm einstückig ausgebildet sein und die andere Führungsrolle auf ihm axial verschiebbar angeordnet sein.

Erfindungsgemäß können alle konischen Führungsrollen bis auf eine im unteren Führungskopf axial unverschieblich gelagert sein und nur eine konische Führungsrolle im unteren Führungskopf axial federnd abgestützt sein.

Bei der erfindungsgemäßen Backzange kann zum Aufbringen einer vorgegebenen Vorspannkraft auf die geschlossene untere Formhälfte einer Backform, die eine auf- und zumachbare, in zwei Backformunterteile geteilte, untere Formhälfte besitzt, zumindest eine bei geschlossener unterer Formhälfte an beiden Backformunterteilen festziehbare und bei aufgebrachter Vorspannkraft unverrückbar festklemmbare untere Klemmvorrichtung vorgesehen sein, die zumindest ein zum Erzeugen der Vorspannkraft beim Festziehen der unteren Klemmvorrichtung elastisch dehnbares Klemmelement und zumindest zwei beim Festziehen der unteren Klemmvorrichtung im gegenseitigen kraftschlüssigen und selbsthemmenden Reibungseingriff relativ zueinander bewegbare Klemmflächen bzw. Klemmabschnitte am elastisch dehnbaren Klemmelement bzw. an einem der beiden Backformunterteile besitzt.

Erfindungsgemäß kann die untere Klemmvorrichtung zumindest einen, als elastisch dehnbares Klemmelement ausgebildeten Klemmhebel besitzen, der an einem Backformunterteil schwenkbar gelagert ist und einen Klemmabschnitt besitzt, dem für den gegenseitigen kraftschlüssigen und selbsthemmenden Reibungseingriff eine am anderen Backformunterteil angebrachte, äußere Klemmfläche zugeordnet ist.

Erfindungsgemäß können bei der unteren Klemmvorrichtung die Schwenkachse eines Klemmhebels und die seinem Klemmabschnitt zugeordnete äußere Klemmfläche im wesentlichen symmetrisch zu der die beiden Backformunterteile trennenden und zur Haupt-Formtrennungsebene der Backform senkrechten, zweiten Formtrennungsebene angeordnet sein.

Erfindungsgemäß kann die untere Klemmvorrichtung zumindest eine, als elastisch dehnbares Klemmelement ausgebildete, im wesentlichen C-förmige Klammer aufweisen, die an ihren Enden mit einander zugewandten Klemmabschnitten versehen ist, denen an beiden Backformunterteilen jeweils eine äußere Klemmfläche für den gegenseitigen kraftschlüssigen und selbsthemmenden Reibungseingriff zugeordnet ist.

Erfindungsgemäß können die den Klemmabschnitten einer Klammer der unteren Klemmvorrichtung für den gegenseitigen kraftschlüssigen und selbsthemmenden Reibungseingriff zugeordneten äußeren Klemmflächen im wesentlichen spiegelbildlich zu der die beiden Backformunterteile trennenden und zur Haupt-Formtrennungsebene der Backform senkrechten, zweiten Formtrennungsebene angeordnet sein.

Erfindungsgemäß kann die Klemmvorrichtung ein erstes, mit dem einen Backform- bzw. Zangenteil starr verbundenes, zum Erzeugen der Vorspannkraft elastisch dehnbares Klemmelement umfassen, das eine Klemmfläche für den kraftschlüssigen und selbsthemmenden Reibungseingriff mit einem Klemmabschnitt eines zweiten Klemmelementes besitzt, das an dem anderen Backform- bzw. Zangenteil beweglich gelagert ist und bei geschlossener Backzange mit seinem Klemmabschnitt im kraftschlüssigen und selbsthemmenden Reibungseingriff mit der Klemmfläche des ersten Klemmelementes an beiden Backform- bzw. Zangenteilen festklemmbar ist.

Diese Ausbildung ermöglicht einen großen Bewegungsbereich für die Klemmvorrichtung mit weit ausgreifenden Bewegungen des zweiten Klemmelementes gegenüber dem elastisch dehnbaren ersten Klemmelement beim Festziehen und Lösen der Klemmvorrichtung bei geschlossener Backform. Die dabei zwischen dem Klemmabschnitt des zweiten Klemmelementes und der zugeordneten Klemmfläche des ersten Klemmelementes realisierbaren Wege sind weitgehend unabhängig von der Wandstärke des in der Backform der Backzange zu backenden, dünnwandigen Formkörpers.

Zum Festziehen der Klemmvorrichtung wird das zweite Klemmelement bei geschlossener Backzange gegenüber beiden Backform- bzw. Zangenteilen bewegt und an dem ersten, elastisch dehnbaren Klemmelement und an den beiden Backform- bzw. Zangenteilen festgezogen. Während dieser Bewegung kommt das, an dem einen Backforrn- bzw. Zangenteil beweglich gelagerte, zweite Klemmelement zuerst mit seinem Klemmabschnitt in kraftschlüssigen und selbsthemmenden Reibungseingriff mit der Klemmfläche des, mit dem anderen Backforrn- bzw. Zangenteil starr verbundenen, elastisch dehnbaren, ersten Klemmelementes und verriegelt dadurch die beiden Backform- bzw. Zangenteile der Backzange miteinander. Anschließend gleitet das zweite Klemmelement mit seinem Klemmabschnitt im kraftschlüssigen und selbsthemmenden Reibungseingriff an der Klemmfläche des ersten Klemmelementes entlang, bis jedes vorhandene Bewegungsspiel beseitigt ist und das erste Klemmelement so weit elastisch gedehnt ist, daß es die gewünschte vorgegebene Vorspannkraft auf die beiden Backform- bzw. Zangenteile aufbringt, und das zweite Klemmelement am ersten Klemmelement und an den beiden Backform- bzw. Zangenteilen festsitzt. Während dieser Bewegung des zweiten Klemmelementes werden zuerst die Zangenteile bzw. Backformteile innerhalb des vorhandenen Bewegungsspieles zueinanderbewegt und gegeneinandergedrückt und damit das für die Bewegung des zweiten Klemmelementes erforderliche Bewegungsspiel der Klemmvorrichtung und das die unterschiedlichen Wärmedehnungen der einzelnen Zangenteile bzw. Backformteile berücksichtigende Bewegungsspiel zwischen den Zangenteilen beseitigt, bevor das erste Klemmelement zum Aufbringen der gewünschten Vorspannkraft durch das zweite Klemmelement elastisch gedehnt und im elastisch gedehnten Zustand fixiert wird.

Bei jedem Festziehen der Klemmvorrichtung wird das zweite Klemmelement mit seinem Klemmabschnitt an der Klemmfläche des ersten Klemmelementes so lange bzw. so weit entlangbewegt, bis die gewünschte Vorspannkraft durch die elastische Dehnung des ersten Klemmelementes aufgebracht ist. Der dabei vom zweiten Klemmelement jeweils zurückgelegte Weg entspricht der jeweils aktuell vorhandenen Größe des Bewegungsspieles. Eine Vergrößerung des Bewegungsspieles wird durch eine Vergrößerung des vom zweiten Klemmelement bzw. seinem Klemmabschnitt zurückgelegten Weges ausgeglichen. Jede Veränderung des Bewegungsspieles führt lediglich zu einer Veränderung der Endstellung des zweiten Klemmelementes in seiner der aufzubringenden Vorspannkraft entsprechenden, festgeklemmten Position.

Erfindungsgemäß können das erste und zweite Klemmelement der Klemmvorrichtung an zwei, bei geschlossener Backzange mit ihren Vorderseiten einander gegenüberliegenden Endabschnitten der Backform- bzw. Zangenteile angeordnet sein, das elastisch dehnbare, erste Klemmelement kann über die Vorderseite des ersten Endabschnittes vorstehen und einen Kopfteil besitzen, mit dem es bei geschlossener Backzange über die Rückseite des zweiten Endabschnittes vorsteht, und das zweite Klemmelement kann an der Rückseite des zweiten Endabschnittes beweglich gelagert und mit seinem Klemmabschnitt bei geschlossener Backzange zwischen der Rückseite des zweiten Endabschnittes und dem Kopfteil des elastisch dehnbaren, ersten Klemmelementes festklemmbar sein.

Erfindungsgemäß kann im Kopfteil des elastisch dehnbaren, ersten Klemmelementes ein Durchtrittskanal vorgesehen sein, der an seiner, der Vorderseite des ersten Endabschnittes zugewandten Kanalwand mit einer Klemmfläche für den Eingriff mit dem Klemmabschnitt des bewegbaren, zweiten Klemmelementes versehen ist.

Erfindungsgemäß kann als zweites Klemmelement ein, zumindest ein Betätigungselement zum Festziehen bzw. Lösen der Klemmvorrichtung tragender, hakenförmiger Hebel vorgesehen sein, dessen Schwenkachse senkrecht zu der die beiden Formhälften trennenden Haupt-Formtrennungsebene der Backform angeordnet ist und dessen hakenförmiger Abschnitt als Klemmabschnitt ausgebildet ist. Erfindungsgemäß kann als zweites Klemmelement ein, zumindest ein Betätigungselement zum Festziehen bzw. Lösen der Klemmvorrichtung tragender Riegel vorgesehen sein, der mit einem Klemmabschnitt versehen und parallel zu der die beiden Formhälften trennenden Haupt-Formtrennungsebene der Backform verschiebbar ist.

Weiters schlägt die Erfindung einen Backofen für die Herstellung von dünnwandigen Formkörpern aus sich während des Backprozesses ausdehnenden Back- oder Gießmassen vor, bei welchem auf- und zumachbare Backformen in auf- und zumachbaren Backzangen aufgenommen sind, die untereinander zu einer endlosen, sich über zumindest zwei Umlenkungen erstreckenden Backzangenkette verbunden sind, entlang deren Bahn eine Aufgießstation für die Back- bzw. Gießmassen, ein Backraum zum Backen der Formkörper und eine Ausgabestation für die gebackenen Formkörper in Laufrichtung der Backzangen hintereinander angeordnet sind, wobei die jeweils durch eine Haupt-Formtrennungsebene in obere und untere Formhälften geteilten Backformen mit ihren oberen Formhälften in den Zangenoberteilen und mit ihren auf- und zumachbaren, unteren Formhälften, die jeweils durch eine zur Haupt-Formtrennungsebene senkrechte zweite Formtrennungsebene in zwei Backformunterteile geteilt sind, in den Zangenunterteilen aufgenommen sind.

Dieser Backofen ist erfindungsgemäß dadurch gekennzeichnet, daß die Backformen in den Backzangen jeweils mit der, die beiden Backformunterteile trennenden, zweiten Formtrennungsebene quer zur Laufrichtung angeordnet sind, daß zum Öffnen und Schließen der unteren Formhälften zwischen den Backzangen angeordnete und mit diesen umlaufende Bewegungsmechanismen für die in den Zangenunterteilen jeweils gegenüber der zweiten Formtrennungsebene hin- und herbewegbaren Backformunterteile vorgesehen sind, daß die umlaufenden Bewegungsmechanismen beim Passieren der der Ausgabestation vorgelagerten Umlenkung die im Bereich der Bewegungsmechanismen zwischen aufeinanderfolgenden Backzangen auftretenden und zur Laufrichtung parallelen Abstandsänderungen in Relativbewegungen der bewegbaren Backformunterteile gegenüber der jeweiligen zweiten Formtrennungsebene umwandeln, und daß die umlaufenden Bewegungsmechanismen jeweils vor der der Ausgabestation vorgelagerten Umlenkung aktivierbar und nach dieser Umlenkung wieder deaktivierbar sind.

Durch diese Ausbildung des Backofens kann dieser mit einer, bezogen auf seine Baulänge deutlich größeren Produktionskapazität ausgestattet werden, als die bekannten Backöfen.

Die Produktionskapazität eines Backofens mit umlaufender Backzangenkette wird im wesentlichen durch die Backzeit begrenzt, die das Backen des jeweiligen, dünnwandigen Formkörpers benötigt und nur von dessen Gestalt abhängt. Um diese Backzeit bei allen Backzangen der Backzangenkette zu realisieren, ist eine bestimmte gleichbleibende Umlaufgeschwindigkeit der Backzangenkette erforderlich, die von der zur Laufrichtung parallelen Baulänge der Backzangen, der Anzahl der Backzangen in der Backzangenkette, der Länge der Backzangenkette und der Länge des Backofens abhängt. Im Backofen sind alle Bewegungen auf die Backzangen der umlaufenden Backzangenkette und ihre Umlaufgeschwindigkeit abgestimmt bzw. ausgerichtet. Dies gilt für die von den stationären Vorrichtungen des Backofens an den Backzangen bzw. Backformen der umlaufenden Backzangenkette auszuführenden Bewegungen ebenso, wie für die von stationären Vorrichtungen des Backofens mit den Backzangen bzw. Backformen der umlaufenden Backzangenkette zu synchronisierenden Bewegungen oder für die innerhalb der Backzangen bzw. Backformen der umlaufenden Backzangenkette auszuführenden Bewegungen. Die für diese Bewegungen jeweils erforderliche Zeit kann über ein bestimmtes Ausmaß hinaus nicht verkürzt werden. Einer mit der Steigerung der Produktionskapazität des Backofens verbundenen Erhöhung der Umlaufgeschwindigkeit der Backzangenkette sind daher Grenzen gesetzt. Ist die von den Bewegungsabläufen im Backofen abhängige höchste Umlaufgeschwindigkeit der Backzangenkette erreicht, so ist bei den bekannten Backöfen eine weitere Steigerung der Produktionskapazität des Backofens nicht mehr möglich. Bei vorgegebener Backzeit und vorgegebener, zur Laufrichtung paralleler Baulänge der Backzangen ist daher die maximale Anzahl der Backzangen in der Backzangenkette eines Backofens limitiert.

Beim erfindungsgemäßen Backofen sind die Backformen in den Backzangen der Backzangenkette mit den, die beiden Backformunterteile ihrer Matrize trennenden, zweiten Formtrennungsebenen jeweils quer zur Laufrichtung angeordnet. Dies erlaubt eine Steigerung der Produktionskapazität eines erfindungsgemäßen Backofens auf das 2- bis 2,5-fache der Produktionskapazität eines Backofens mit gleicher Länge und gleicher Umlaufgeschwindigkeit der Backzangenkette, in deren Backzangen die Backformen mit ihren zweiten Formtrennungsebenen jeweils parallel zur Laufrichtung angeordnet sind. Die erfindungsgemäße Ausbildung erlaubt eine Vermehrung der Anzahl der Backzangen in der Backzangenkette, ohne deren Länge zu vergrößern.

Beim erfindungsgemäßen Backofen sind die Bewegungsmechanismen zum Öffnen und Schließen der, in den Zangenunterteilen der Backzangen angeordneten Matrizen zwischen den Backzangen der Backzangenkette angeordnet. Diese Bewegungsmechanismen beanspruchen in den Zangenunterteilen der Backzangen keine, zur Laufrichtung parallele Baulänge der Backzangen und erlauben daher eine weitere Verkürzung der, zur Laufrichtung parallelen Baulänge der Backzangen. Die Bewegungsmechanismen sind innerhalb der Backzangenkette jeweils nur dann wirksam, wenn diese die der Ausgabestation vorgelagerte Umlenkungpassiert. Die Bewegungsmechanismen wandeln diezwischen denaufeinanderfolgenden Backzangen auftretenden, zur Laufrichtung parallelen Abstandsänderungen in Bewegungen der bewegbaren Backformunterteile der Matrizen um. Verglichen mit bekannten Backzangen, bei denen die zum Öffnen und Schließen der Matrizen jeweils eingebauten Kniehebelmechanismen die zusätzlich zu den Backformen mitzubewegende Masse deutlich erhöhen, wird durch die erfindungsgemäßen Bewegungsmechanismen die mit der Backzangenkette zusätzlich zu den Backformen mitzubewegende Masse verringert. Die sonst im Backofen für die Betätigung der Kniehebelmechanismen erforderlichen Betätigungsvorrichtungen können entfallen.

Im Vergleich mit einem bekannten Backofen mit gleicher Produktionskapazität, ist der erfindungsgemäße Backofen wesentlich kompakter gebaut und enthält eine Backzangenkette mit weniger bewegten Teilen in dem vom jeweiligen Gasbrenner direkt zu beaufschlagenden Bereich, sodaß der Gasverbrauch deutlich geringer ist.

Erfindungsgemäß kann für jeden bewegbaren Backformunterteil ein eigener, zwischen zwei aufeinanderfolgenden Backzangen angeordneter Bewegungsmechanismus vorgesehen sein.

Erfindungsgemäß kann bei Backzangen, bei denen in den Zangenunterteilen jeweils beide Backformunterteile zum Öffnen und Schließen der unteren Formhälfte gegenüber der zweiten Formtrennungsebene hin- und herbewegbar sind, zwischen aufeinanderfolgenden Backzangen jeweils ein gemeinsamer Bewegungsmechanismus für den hinteren Backformunterteil der in Laufrichtung vorauseilenden Backzange und den vorderen Backformunterteil der in Laufrichtung nachfolgenden Backzange vorgesehen sein.

Erfindungsgemäß kann ein Bewegungsmechanismus zumindest eine, den Zwischenraum zwischen zwei aufeinanderfolgenden Backzangen überbrückende Steuerlasche umfassen, die mit der einen Backzange schwenkbar verbunden ist und zum Aktivieren bzw. Deaktivieren des Bewegungsmechanismus mit einem an der anderen Backzange angebrachten Steuerbolzen in bzw. außer Eingriff bringbar ist.

Erfindungsgemäß kann eine in Laufrichtung langgestreckte Steuerlasche vorgesehen sein, die mit ihrem hinteren Ende entgegen der Laufrichtung über den Steuerbolzen der nachfolgenden Backzange hinausragt, und die Steuerlasche kann einen, langgestreckten Führungskanal besitzen, der zwei miteinander in Verbindung stehende, unterschiedlich lange Bewegungsbahnen für den Steuerbolzen enthält, zwischen welchen der Steuerbolzen beim Aktivieren und Deaktivieren des Bewegungsmechanismus durch Verschwenken der Steuerlasche hin und her bewegbar ist.

Erfindungsgemäß können die beiden Bewegungsbahnen in Längsrichtung des Führungskanales im wesentlichen parallel zueinander angeordnet sein, wobei die längere Bewegungsbahn am hinteren Ende der Steuerlasche in Laufrichtung offen ist und sich die kürzere Bewegungsbahn von einer, am vorderen Ende des Führungskanales angeordneten, entgegen der Laufrichtung nach hinten weisenden, vorderen Anschlagfläche für den Steuerbolzen in Laufrichtung bis zu einer, nach vorne weisenden, hinteren Anschlagfläche an einer zwischen den beiden Enden des Führungskanales angeordneten Stufe erstreckt.

Erfindungsgemäß kann in der kürzeren Bewegungsbahn der Abstand der vorderen Anschlagfläche von der hinteren Anschlagfläche größer sein als der Durchmesser des Steuerbolzens.

Erfindungsgemäß kann der Bewegungsmechanismus einen Steuermechanismus zum zwangsweisen Verschwenken der Steuerlaschen beim Aktivieren bzw. Deaktivieren des Bewegungsmechanismus umfassen. Erfindungsgemäß kann der Steuermechanismus zum Deaktivieren einer Steuerlasche eine der Steuerlasche zugeordnete, an der Unterseite des Zangenoberteiles der nachfolgenden Backzange angebrachte Steuerfläche umfassen, die mit der Oberseite der Steuerlasche in Eingriff bringbar ist.

Erfindungsgemäß kann der Steuermechanismus zum Aktivieren einer Steuerlasche eine der Steuerlasche zugeordnete, im Zangenunterteil der nachfolgenden Backzange senkrecht zu deren Haupt-Formtrennungsebene verschiebbare Schubstange umfassen, die mit der Unterseite der Steuerlasche in Eingriff bringbar ist.

Erfindungsgemäß kann der Steuermechanismus zum Aktivieren einer Steuerlasche eine der dieser Steuerlasche zugeordneten Schubstange ihrerseits zugeordnete, zur Bahn der Backzangen geneigte, stationäre Steuerschiene umfassen, die im Backofen vor der, der Ausgabestation vorgelagerten Umlenkung der Backzangenkette angeordnet ist.

Weiters schlägt die Erfindung ein Verfahren zur Entnahme von aus Back- oder Gießmassen gebackenen, tüten- oder becherförmigen Formkörpern aus den auf- und zumachbaren Backformen der auf- und zumachbaren Backzangen einer endlosen Backzangenkette eines Backofens vor, in welchem die Backformen mit ihren, jeweils als mit Formkernen versehene Patrizen ausgebildeten, oberen Formhälften jeweils in den Zangenoberteilen der Backzangen und mit ihren, jeweils als mit Formausnehmungen versehene Matrizen ausgebildeten, von der jeweiligen oberen Formhälfte durch eine Haupt-Formtrennungsebene getrennten und durch eine zur Haupt-Formtrennungsebene senkrechte, zweite Formtrennungsebene in zwei Backformunterteile geteilten, unteren Formhälften in den Zangenunterteilen der Backzangen aufgenommen sind und die endlose, sich von einer oberen Transportebene über eine hintere Umlenkung in eine untere Transportebene und über eine vordere Umlenkung wieder zurück in die obere Transportebene erstreckende, umlaufende Backzangenkette die Backzangen von einer Aufgießstation für die Back- bzw. Gießmassen durch einen Backraum zum Backen der Formkörper zu einer Ausgabestation für die gebackenen Formkörper transportiert, wobei die Backzangen die obere Transportebene mit obenliegenden Zangenoberteilen durchlaufen, an der hinteren Umlenkung auf den Kopf gestellt werden, dann die untere Transportebene mit untenliegenden Zangenoberteilen durchlaufen und beim Passieren der vorderen Umlenkung mit ihren Zangenoberteilen wieder nach oben umgedreht und dabei geöffnet werden.

Dieses Verfahren ist erfindungsgemäß dadurch gekennzeichnet, daß während des Umlaufes der Backzangen zuerst bei auf den Kopf gestellten Backzangen die untenliegenden Zangenoberteile von den Zangenunterteilen entlang der jeweiligen zweiten Formtrennungsebene wegbewegt und dabei die nach oben weisenden Formkerne aus den, in den nach unten offenen Formausnehmungen verbleibenden Formkörpern um einen Bruchteil der Formkörperhöhe herausgefahren werden, daß dann die unteren Formhälften durch Auseinanderbewegen der Backformunterteile geöffnet und die mit ihren Öffnungen nach unten weisenden Formkörper auf den nach oben weisenden Formkernen aufgefangen werden, daß dann die Zangenoberteile von den Zangenunterteilen wegbewegt und die Formkörper zusammen mit den nach oben weisenden Formkernen vollständig aus den Formausnehmungen herausgefahren werden, daß dann, während die Backzangen beim Passieren der vorderen Umlenkung mit ihren Zangenoberteilen wieder nach oben umgedreht werden, die Formkörper beim Durchlaufen der oberen Hälfte der vorderen Umlenkung durch die Schwerkraft von den Formkernen gelöst und mit ihren den Zangenunterteilen zugewandten Enden auf einer zwischen der Bahn der Zangenoberteile und der Bahn der Zangenunterteile angeordneten Leitfläche aufgefangen werden und daß die sich auf der Leitfläche abstützenden Formkörper durch die in sie hineinragenden Formkerne entlang der Leitfläche und über diese hinaus transportiert und in der Ausgabestation auf eine, zwischen der Bahn der Zangenoberteile und der Bahn der Zangenunterteile seitlich aus der Backzangenkette herausführende Transporteinrichtung übergeben werden.

Durch das erfindungsgemäße Verfahren wird die Ausgabe der gebackenen, tüten- oder becherförmigen Formkörpern aus dem jeweiligen Backofen vereinfacht. Beim Aus- und Einfahren der Formkerne und der gebackenen, tüten- oder becherförmigen Formkörper verbleiben die Formkerne der Patrizen jeweils in der zweiten Formtrennungsebene der Backform. Es entfällt das aufwendige Verschwenken der oberen Formhälften zum Herausführen der Formkerne aus den gebackenen Formkörpern. Es entfällt das Einfahren von eigenen Auswerfern in die gebackenen Formkörper. Es entfällt das weite Öffnen der Matrizen, um die gebackenen Formkörper mit ihren von den Patrizen abgewandten Enden voran zwischen den beiden Backformunterteilen hindurch aus den Matrizen herausfallen zu lassen. Alle diese beim erfindungsgemäßen Verfahren entfallenden Schritte benötigen für ihre Durchführung im jeweiligen Backofen Zeit, das Vorhandensein von jeweils entsprechend ausgebildeten Vorrichtungen im Backofen und bei der Backzangenkette jeweils eine bestimmte, außerhalb des Backraumes gelegene Laufstrecke zur Durchführung des jeweiligen Schrittes.

Der durch das erfindungsgemäße Verfahren zur Entnahme der gebackenen Formkörpern mögliche Entfall von auf die umlaufende Backzangenkette abzustimmenden Bewegungen samt den dafür erforderlichen Laufstrecken der Backzangenkette ermöglicht eine Erhöhung der Anzahl der Backzangen entsprechend der Länge der wegfallenden Laufstrecke bei unveränderter Länge der Backzangenkette und des Backofens, sodaß bei unveränderter Umlaufgeschwindigkeit der Backzangenkette eine höhere Produktionskapazität des Backofens resultiert.

Erfindungsgemäß können die Formkörper beim Durchlaufen der oberen Hälfte der vorderen Umlenkung durch ein, zwischen der Bahn der Zangenoberteile und der Bahn der Zangenunterteile angeordnetes, stationäres, bogenförmig gekrümmtes Leitblech aufgefangen und abgestützt werden.

Erfindungsgemäß kann beim Durchlaufen der oberen Hälfte der vorderen Umlenkung zum Lösen der Formkörper von den in sie hineinragenden Formkernen Luft zwischen die Formkörper und die Formkerne eingeblasen werden.

Weitere Merkmale und Ausgestaltungen der Erfindung sind in den Ansprüchen gekennzeichnet.

### Kurze Beschreibung der Zeichnungen:

Nachstehend wird die Erfindung anhand von mehreren, in den Zeichnungen dargestellten Ausführungsbeispielen von Vorrichtungen zur die Herstellung von dünnwandigen Formkörpern aus sich während des Backprozesses ausdehnenden Back- oder Gießmassen, näher erläutert.
- Fig. 1: zeigt eine Seitenansicht eines Backofens zur Herstellung von tüten- bzw. becherförmigen, dünnwandigen Formkörpern mit einem Vorkopf, einem Backraum und einer im Inneren des Backofens umlaufenden, endlosen Backzangenkette.
- Fig. 2: zeigt eine Draufsicht auf den Backofen der Fig. 1.
- Fig. 3: zeigt schematisch einen Teil des Inneren des Backofens der Fig. 1 im Bereich des Vorkopfes ch einen Teil des Inneren des Backofens der Fig. 1 im Bereich des Vorkopfes und der hinteren Umlenkung der Backzangenkette, wobei nur die miteinander zusammenwirkenden Teile von Backofen, Backzangenkette, Backzangen und Backformen dargestellt sind.
- Fig. 4: zeigt die Rückseite einer Backzange des Backofens der Fig. 1 in der oberen Transportebene des Backofens nach dem Passieren der für die oberen Klemmvorrichtung vorgesehenen Schließstation, wobei die Backzange und ihre Backform geschlossen, die oberen und unteren Klemmvorrichtungen an der geschlossenen Backform festgezogen und der das seitliche Führungsschwert enthaltende Teil der Backzange teilweise geschnitten dargestellt sind.
- Fig. 5: zeigt die Rückseite des, das seitliche Führungsschwert enthaltenden Teiles der Backzange der Fig. 4 in Ansicht.
- Fig. 6: zeigt einen Querschnitt der Backzange der Fig. 4 entlang der Linie B-B in Fig. 5 ohne Backform.
- Fig. 7: zeigt einen horizontalen, zur Laufrichtung parallelen Querschnitt des, das seitliche Führungsschwert enthaltenden Teiles der Backzange der Fig. 4 entlang der Linie E-E in Fig. 5.
- Fig. 8: zeigt einen Querschnitt einer teilweise geöffneten Backzange gemäß Fig. 4 entlang der Linie C-C in Fig. 4.
- Fig. 9: zeigt einen Querschnitt der Backzange der Fig. 4 entlang der Linie A-A in Fig. 4.
- Fig. 10: zeigt die Rückseite der Backzange der Fig. 9 im Bereich zweier übereinander angeordneter, an der geschlossenen Backform festgezogener Klemmvorrichtungen.
- Fig. 11: zeigt einen Abschnitt der Backzangenkette im Bereich der hinteren Umlenkung der Backzangenkette, wobei zwei aufeinanderfolgende geschlossene Backzangen in einem vertikalen und zur Laufrichtung parallelen Schnitt entlang der Linie D-D in Fig. 4 dargestellt sind.
- Fig. 12: zeigt einen, im wesentlichen der Fig. 9 entsprechenden Querschnitt durch eine Backzange, die in der, für die unteren Klemmvorrichtungen vorgesehenen Öffnungsstation angeordnet ist, wobei der Bereich zweier übereinander angeordneter Klemmvorrichtungen dargestellt ist, von denen die obere an der geschlossenen Backform festgezogen ist und die untere von der geschlossenen Backform gelöst ist.
- Fig. 13: zeigt die Rückseite der Backzange der Fig. 12 im Bereich der beiden übereinander angeordneten Klemmvorrichtungen.
- Fig. 14: zeigt einen, im wesentlichen der Fig. 9 entsprechenden Querschnitt durch eine Backzange, die in der, für die oberen Klemmvorrichtungen vorgesehenen Öffnungsstation angeordnet ist, wobei der Bereich zweier übereinander angeordneter Klemmvorrichtungen dargestellt ist, die beide von der geschlossenen Backform gelöst sind.
- Fig. 15: zeigt die Rückseite der Backzange der Fig. 14 im Bereich der beiden übereinander angeordneten Klemmvorrichtungen.
- Fig. 16: zeigt einen Abschnitt der Backzangenkette im Bereich der vorderen Umlenkung der Backzangenkette, wobei zwei aufeinanderfolgende vollständig geöffnete Backzangen in einem vertikalen und zur Laufrichtung parallelen Schnitt entlang der Linie D-D in Fig. 4 dargestellt sind.
- Fig. 17: zeigt die Rückseite einer vollständig geöffneten Backzange der Fig. 16 beim Passieren der, im Bereich der vorderen Umlenkung angeordneten Blasstation.
- Fig. 18: zeigt einen, im wesentlichen der Fig. 9 entsprechenden Querschnitt durch eine Backzange, die in der, für die unteren Klemmvorrichtungen vorgesehenen Schließstation angeordnet ist, wobei der Bereich zweier übereinander angeordneter Klemmvorrichtungen dargestellt ist, von denen die untere Klemmvorrichtung an der geschlossenen Matrize der Backform festgezogen ist.
- Fig. 19: zeigt schematisch die Eingriffsverhältnisse der Klemmvorrichtungen an einer oberen Klemmvorrichtung und deren hinterem Klemmhebel.
- Fig. 20: zeigt eine Draufsicht auf die Ausgabeeinrichtung des Backofens der Fig. 1.
- Fig. 21: zeigt eine Seitenansicht eines Backofens zur Herstellung von flachen, dünnwandigen Formkör-pern mit einem Vorkopf, einem Backraum und einer im Inneren des Backofens umlaufenden, endlosen Backzangenkette.
- Fig. 22: zeigt eine Draufsicht auf den Backofen der Fig. 21.
- Fig. 23: zeigt die Rückseite eines ersten Ausführungsbeispieles einer Backzange für den Backofen der Fig. 21 in der oberen Transportebene nach dem Passieren der Schließstation, wobei Backzange und Backform geschlossen und die Kammer der Klemmvorrichtung an der geschlossenen Backzange festgezogen dargestellt sind.
- Fig. 24: zeigt eine Draufsicht auf die Backzange der Fig. 23 mit der, an der zur Laufrichtung parallelen Längsseite der Backzange angebrachten Klemmvorrichtung.
- Fig. 25: zeigt die Rückseite eines zweiten Ausführungsbeispieles einer Backzange für den Backofen der Fig. 21 in der oberen Transportebene nach dem Passieren der Schließstation, wobei Backzange und Backform geschlossen und der Klemmhebel der Klemmvorrichtung an der geschlossenen Backzange festgezogen dargestellt sind.
- Fig. 26: zeigt eine Stirnansicht der zur Laufrichtung parallelen Längsseite der Backzange der Fig. 25 mit der, an der zur Laufrichtung parallelen Längsseite der Backzange angebrachten Klemmvorrichtung.
- Fig. 27: zeigt die Rückseite eines dritten Ausführungsbeispieles einer Backzange für den Backofen der Fig. 21 in der oberen Transportebene nach dem Passieren der Schließstation, wobei Backzange und Backform geschlossen und die Klemmhebel beider Klemmvorrichtungen an der geschlossenen Backform festgezogen dargestellt sind.
- Fig. 28: zeigt eine Draufsicht auf die Backzange der Fig. 27 mit den beiden, an den quer zur Laufrichtung angeordneten Querseiten der Backforrn angebrachten Klemmvorrichtungen.
- Fig. 29: zeigt eine Seitenansicht eines Backofens zur Herstellung von flachen, dünnwandigen Formkörpern mit einem Vorkopf, einem Backraum und einer im Inneren des Backofens umlaufenden, endlosen Backzangenkette.
- Fig. 30: zeigt eine Draufsicht auf den Backofen der Fig. 29.
- Fig. 31: zeigt die Rückseite einer, in der oberen Transportebene des Backofens der Fig. 29 angeordneten, geschlossenen Backzange, wobei die Backzange eine Backform zur Herstellung von rechteckigen, ebenen Blättern enthält und die Endabschnitte der Backzange mit der festgezogenen Klemmvorrichtung in einem, zur Laufrichtung der Backzange senkrechten Schnitt dargestellt sind.
- Fig. 32: zeigt den die Klemmvorrichtung aufweisenden Teil einer geschlossenen Backzange, die sich von jener der Fig. 31 nur durch die Backform unterscheidet, In einem zur Laufrichtung der Backzange senkrechten Schnitt, wobei die Backzange eine Backform zur gleichzeitigen Herstellung mehrerer flacher Tassen enthält und die Klemmvorrichtung an den Endabschnitten der Backzange festgezogen sind.
- Fig. 33: zeigt einen zur Laufrichtung parallelen Schnitt entlang der Linie F-F in Fig. 31 bzw. 32 durch die an den Endabschnitten festgezogene Klemmvorrichtung der geschlossenen Backzange der Fig. 31 bzw. Fig. 32.
- Fig. 34: zeigt in einer Untersicht der Fig. 33, in einer Ansicht entlang der Linie G-G in Fig. 33, den unteren Endabschnitt der Backzange mit der, bei mittlerem Verschleiß festgezogenen Klemmvorrichtung.
- Fig. 35: zeigt ähnlich Fig. 34 eine Untersicht des unteren Endabschnittes der Backzange mit der, bei noch fehlendem Verschleiß festgezogenen Klemmvorrichtung.
- Fig. 36: zeigt ähnlich Fig. 34 eine Untersicht des unteren Endabschnittes der Backzange mit der, bei größerem Verschleiß festgezogenen Klemmvorrichtung.
- Fig. 37: zeigt ähnlich Fig. 34 eine Untersicht des unteren Endabschnittes der geschlossenen Backzange, bei welcher das bewegbare Klemmelement mit dem elastisch dehnbaren Klemmelement noch nicht im Eingriff steht
- Fig. 38: zeigt eine Ausführungsform einer der Aufgießstation nachgeordneten Betätigungsvorrichtung für die Klemmvorrichtungen in Stirnansicht.
- Fig. 39: zeigt die Betätigungsvorrichtung der Fig. 38 von der Seite.
- Fig. 40: zeigt die Betätigungsvorrichtung der Fig. 38 von oben.

### Beschreibung von Ausführungsbeispielen:

### 1. TÜTENBACKÖFEN:

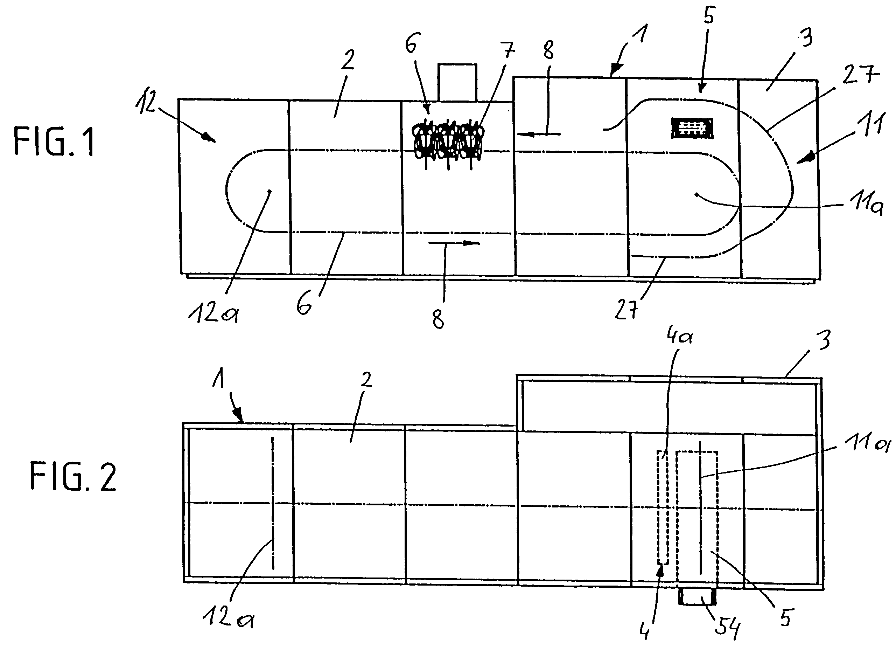

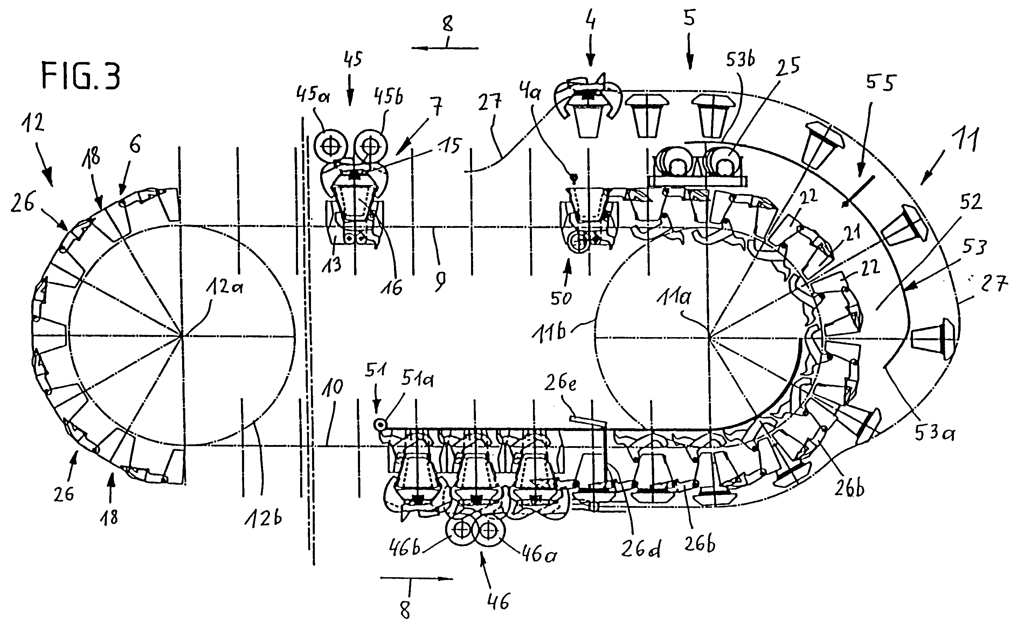

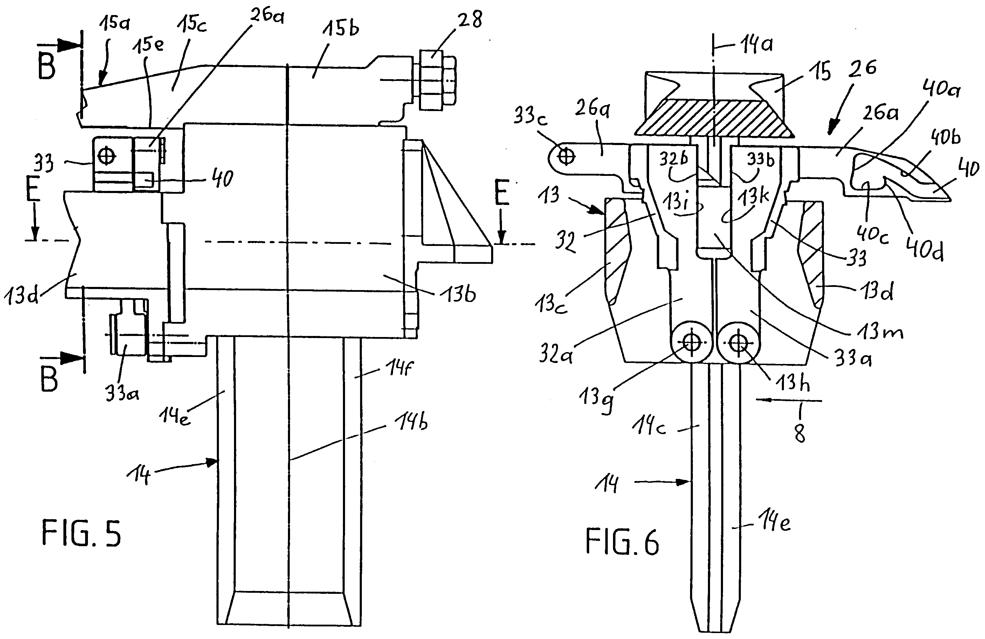

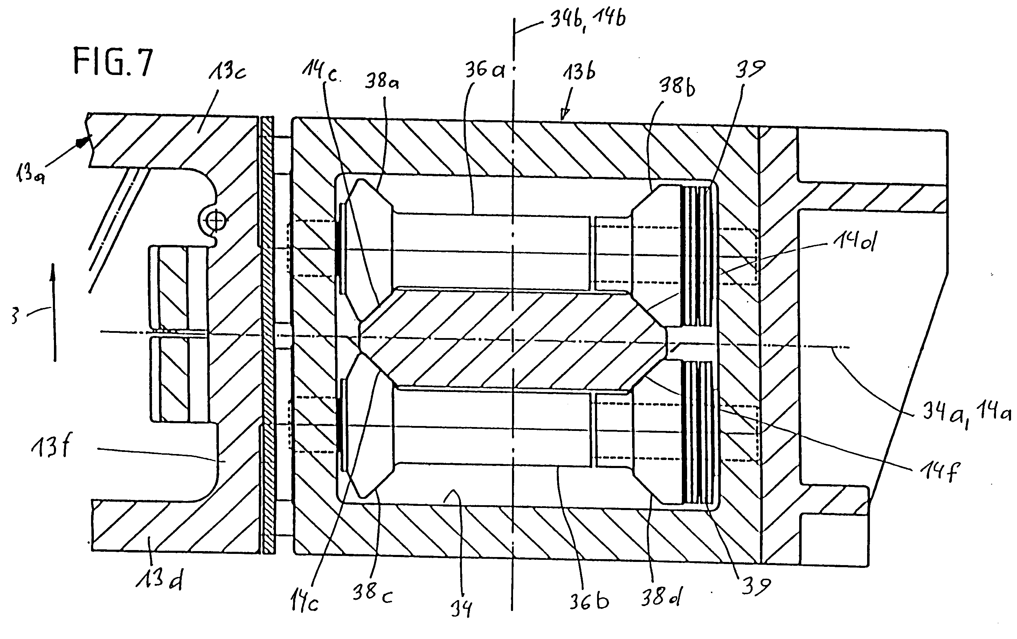

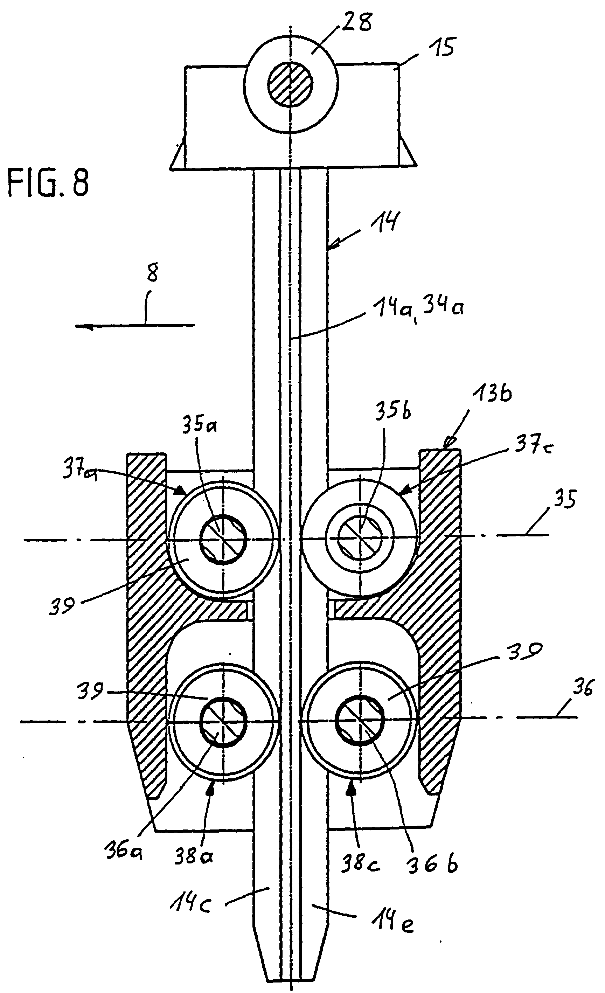

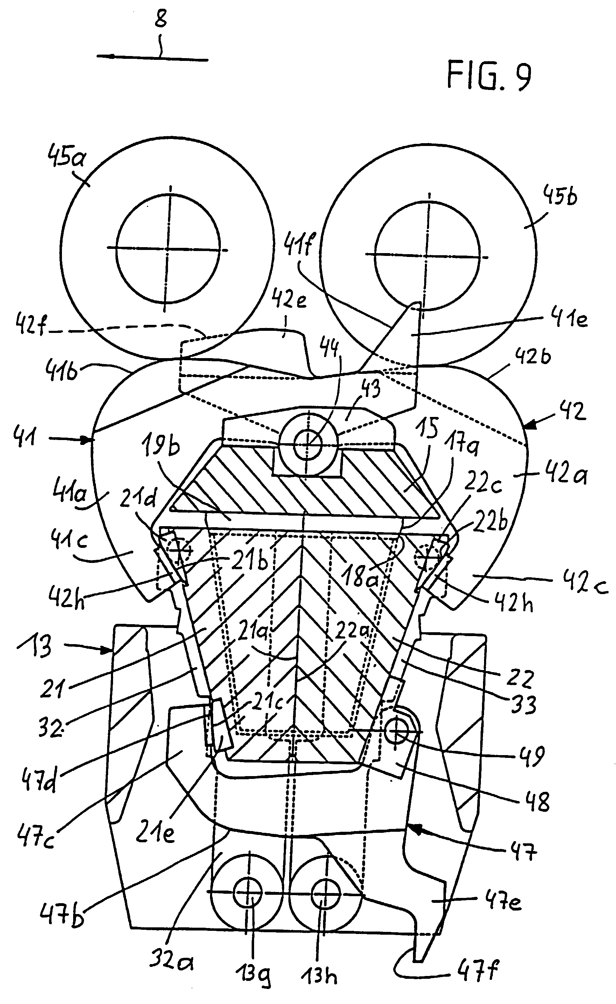

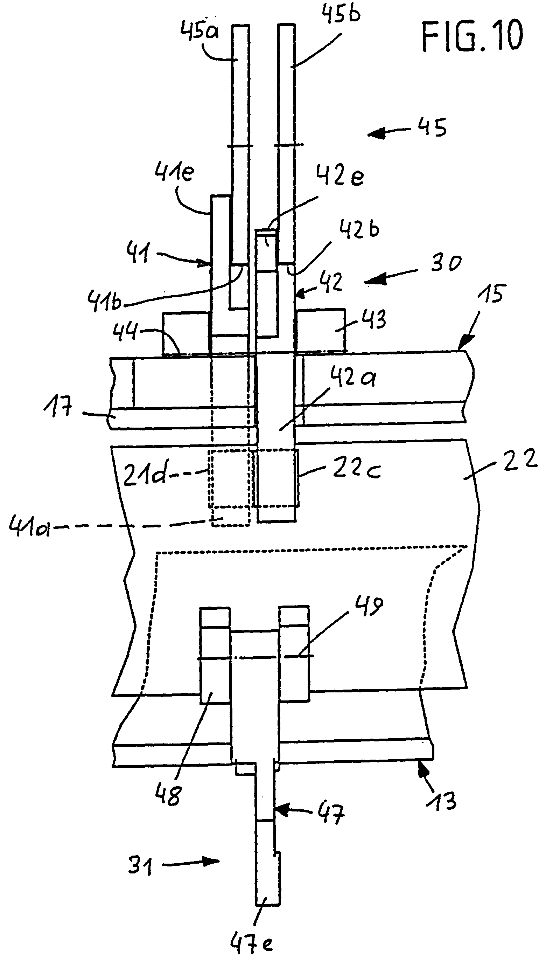

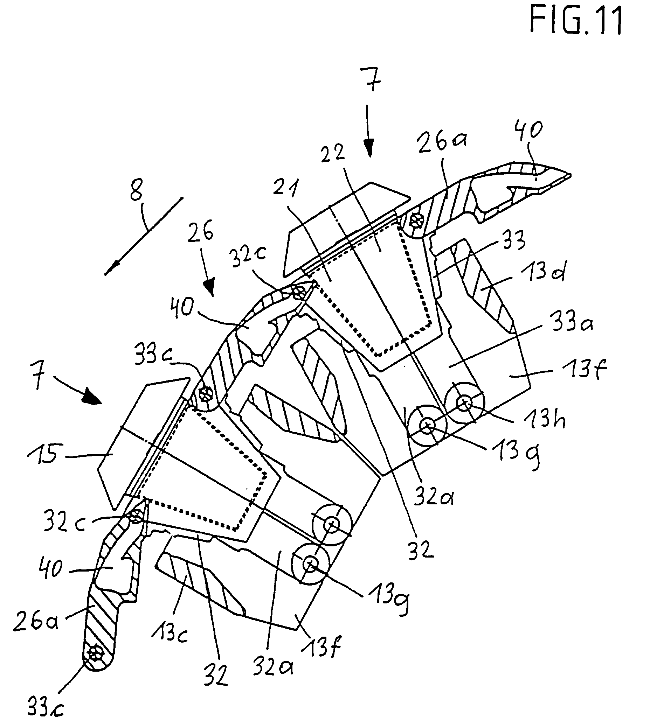

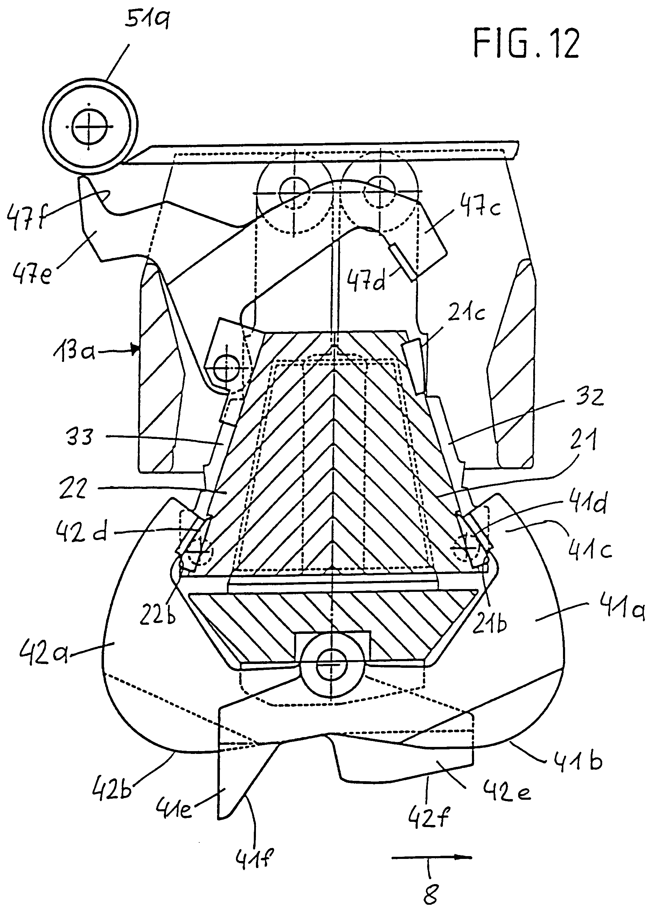

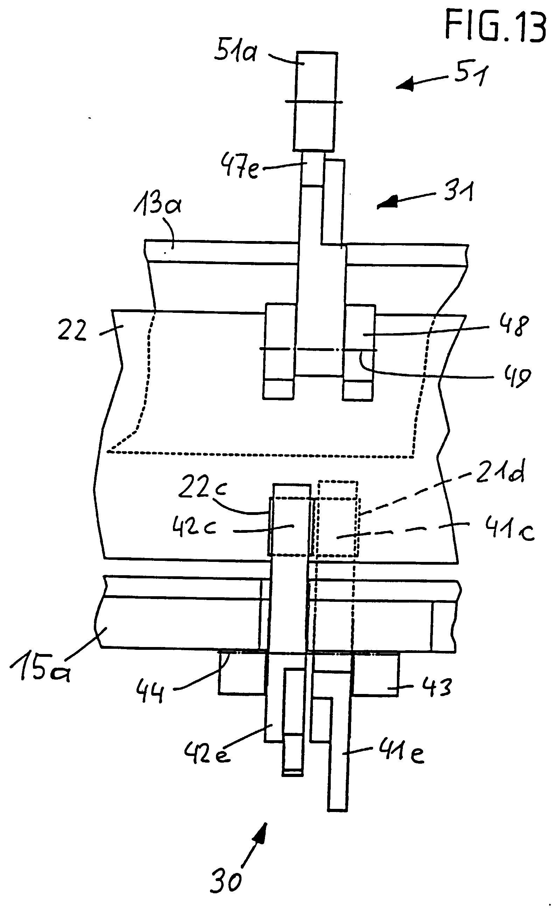

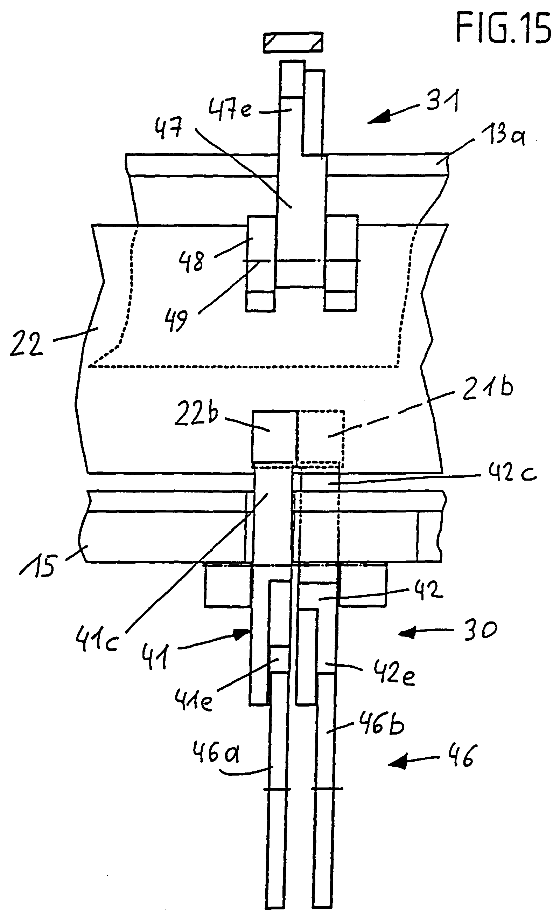

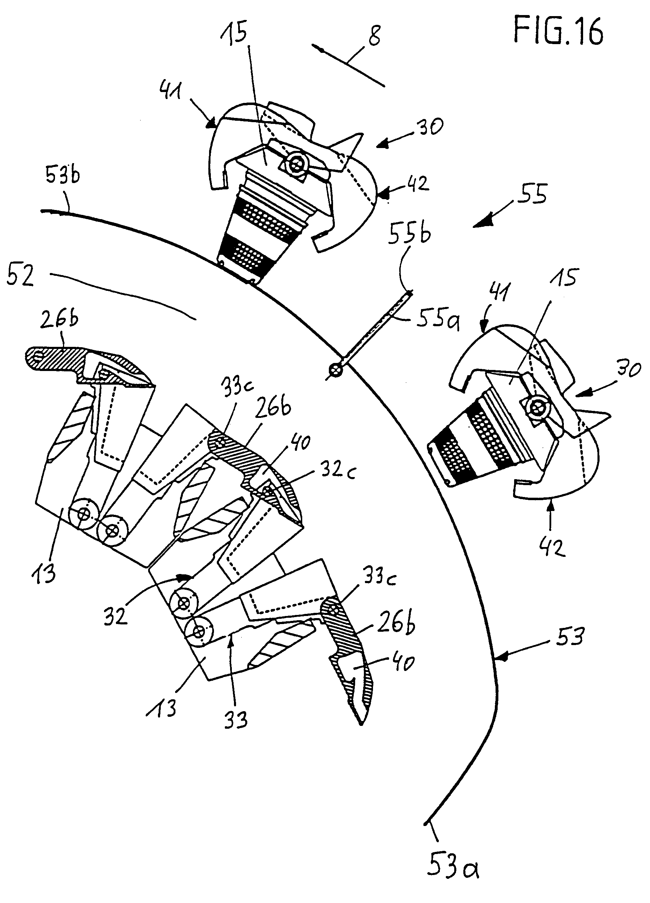

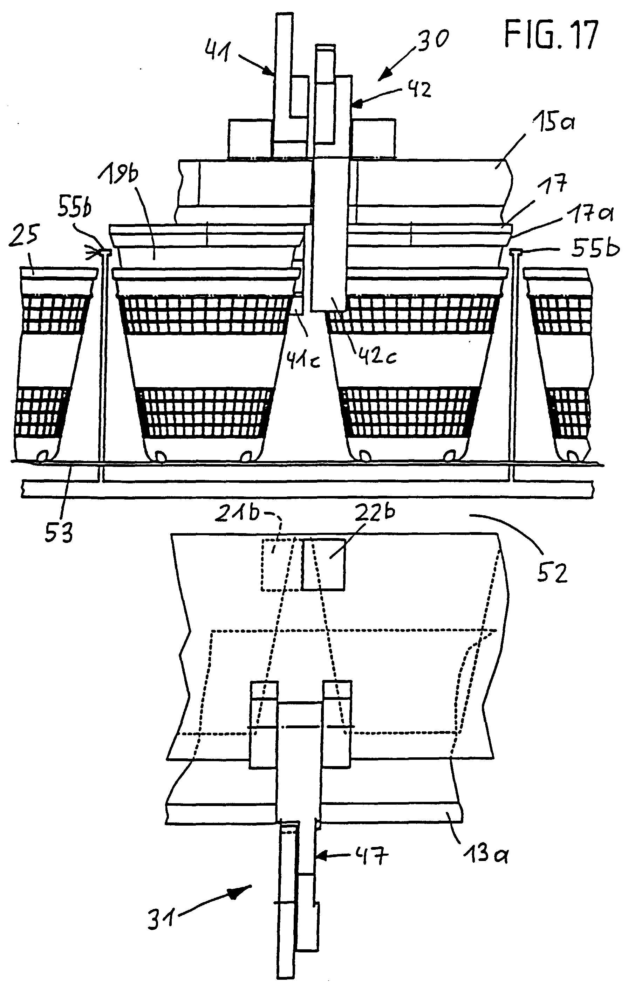

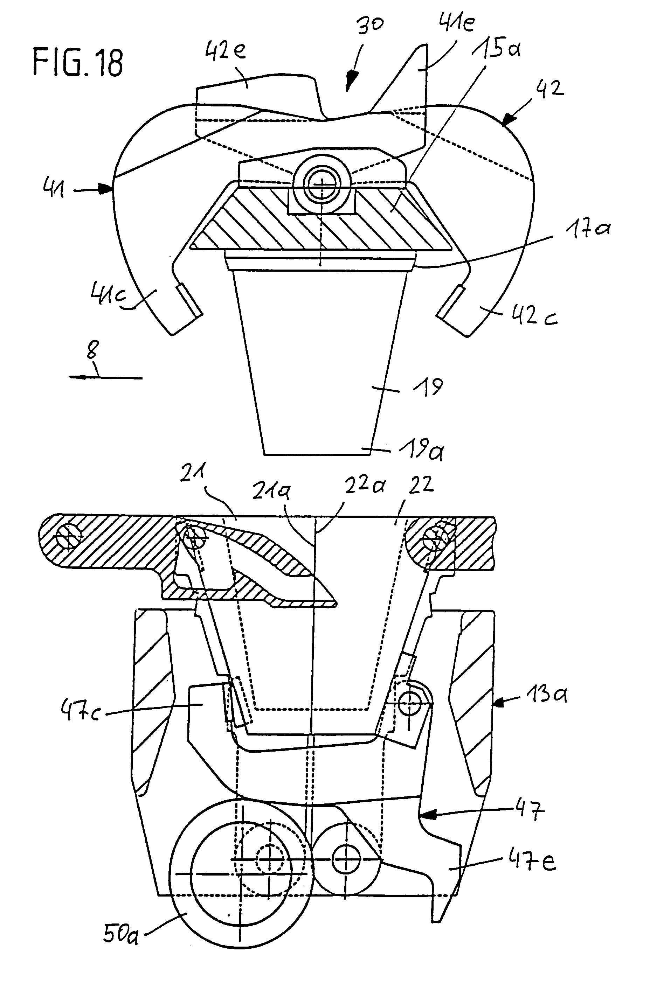

Die Fig. 1 bis 20 zeigen unterschiedliche Teile eines Ausführungsbeispieles eines langgestreckten Backofens mit einer umlaufenden Backzangenkette zur Herstellung von dünnwandigen, tüten- bzw. becherförmigen Formkörpern aus sich während des Backprozesses ausdehnenden Back- oder Gießmassen, die in die einreihigen Backformen der Backzangenkette eingebracht und in diesen zu dünnwandigen, tüten- bzw. becherförmigen Formkörper gebacken werden.

Der Backofen 1 weist einen langgestreckten Backraum 2 und einen diesem vorgelagerten Vorkopf 3 auf, in welchem eine Aufgießstation 4 für die Back- bzw. Gießmassen und eine Ausgabestation 5 für die gebackenen, dünnwandigen, tüten- bzw. becherförmigen Formkörper angeordnet sind. Im Innenraum des Backofens 1 ist eine endlose Backzangenkette 6 angeordnet, die aus gelenklosen, untereinander baugleichen, auf- und zumachbaren Backzangen 7 besteht und während des Betriebes des Backofens 1 in einer in sich geschlossenen Bahn in Richtung des Pfeiles 8 umläuft. Die Bahn der Backzangenkette 6 umfaßt eine, im wesentlichen horizontale, obere Transportebene 9, die im Backofen 1 von der im Vorkopf 3 angeordneten Ausgabestation 5 über die in Laufrichtung 8 nachgeordnete Aufgießstation 4 bis in den Backraum 2 reicht, ferner eine, im wesentlichen horizontale, untere Transportebene 10, die im Backofen 1 in Laufrichtung 8 vom Backraum 2 bis in den Vorkopf 3 reicht, sowie eine, im Vorkopf 3 angeordnete, die beiden übereinander angeordneten Transportebenen 9,10 miteinander verbindende vordere Umlenkung 11 und eine, im Backraum 2 angeordnete, die beiden Transportebenen 9,10 miteinander verbindende hintere Umlenkung 12.

### 1.1. BACKZANGE UND BACKFORM :

Die langgestreckten, einseitig offenen, auf- und zumachbaren Backzangen 7 der Backzangenkette 6 sind im Backofen 1 mit ihrer Längserstreckung quer zur Laufrichtung 8 der Backzangenkette 6 angeordnet. Jede Backzange 7 besitzt einen langgestreckten Zangenunterteil 13 und einen zu diesem parallel angeordneten, langgestreckten Zangenoberteil 15 sowie ein langgestrecktes, seitliches Führungsschwert 14, du mit dem Zangenoberteil 15 fix verbunden ist und im Zangenunterteil 13 senkrecht zur Laufrichtung 8 verschiebbar geführt ist.

In jeder Backzange 7 ist seitlich neben dem Führungsschwert 14 eine, einreihige, sechs tüten- bzw. becherförmige Formhohlräume aufweisende, auf- und zumachbare Backform 16 aufgenommen, welche aus einer, als Patrize ausgebildeten, oberen Formhälfte 17 und einer, als auf- und zumachbare Matrize ausgebildeten, unteren Formhälfte 18 besteht. In der Backzange 7 ist die Backform 16 mit den nebeneinander angeordneten, sechs konischen Formkernen 19 ihrer Patrize bzw. den diesen zugeordneten, nebeneinander angeordneten, sechs konischen Formausnehmungen 20 ihrer Matrize quer zur Laufrichtung 8 angeordnet. Die obere Formhälfte 17 der Backform 16 ist in den Hauptabschnitt 15a des Zangenoberteiles 15 integriert, welcher mit seinem, dem Führungsschwert 14 benachbarten, inneren Endbereich 15c und mit seinem, diesem gegenüberliegenden, freien Ende 15d über die obere Formhälfte 17 der Backform 16 jeweils seitlich hinausragt. Die untere Formhälfte 18 der Backform 16 ist im Hauptabschnitt 13a des Zangenunterteiles 13 der Backzange 7 aufgenommen.

### 1.2. BACKFORM:

Die in der Backzange 7 enthaltene Backform 16 ist durch eine, zur Laufrichtung 8 der Backzange 7 parallele Haupt-Formtrennungsebene in die, in den Hauptabschnitt 15a des Zangenoberteiles 15 integrierte, obere Formhälfte 17 und in die, im Hauptabschnitt 13a des Zangenunterteiles 13 aufgenommene, untere Formhälfte 18 geteilt. Die konischen Formkerne 19 der oberen Formhälfte 17 und die konischen Formausnehmungen 20 der unteren Formhälfte 18 sind jeweils mit ihren Längsachsen senkrecht zur Haupt-Formtrennungsebene angeordnet und weisen an ihren oberen Enden 19b bzw. 20a jeweils der Haupt-Formtrennungsebene zugeordnete und jeweils zur anderen Formhälfte 18 bzw. 17 weisende Dichtflächen 17a bzw. 18a auf. Diese Dichtflächen 17a 18a wirken bei geschlossener Backform 16 zusammen und schließen den jeweiligen von einem, über die Haupt-Formtrennungsebene hinaus nach unten vorstehenden Formkern 19 und einer, zur Haupt-Formtrennungsebene nach oben hin offenen Formausnehmung 20 begrenzten Back-Hohlraum an der Haupt-Formtrennungsebene ab. Um die während des Backprozesses in der im jeweiligen Back-Hohlraum eingeschlossenen Back- bzw. Gießmasse entstehenden Gase aus dem geschlossenen Back-Hohlraum entweichen zulassen, können am oberen Ende 19b der Formkerne 19 die Dichtflächen 17a,18a umgehende Dampfkanäle vorgesehen sein.

Die untere Formhälfte 18 der Backform 16 ist ihrerseits durch eine, zur Haupt-Formtrennungsebene und zur Laufrichtung 8 senkrechte, zweite Formtrennungsebene in einen vorderen und einen hinteren, beweglichen Backformunterteil 21,22 geteilt. Diese beiden Beckformunterteile 21,22 bilden jeweils eine Matrizenhälfte und enthalten jeweils eine Hälfte der sechs Formausnehmungen 20 der unteren Formhälfte 18 der Backform 16. An ihren einander bzw. der zweiten Formtrennungsebene zugewandten Stirnflächen sind die beiden beweglichen Backformunterteile 21,22 mit einander gegenseitig zugeordneten Dichtflächen 21a,22a zum seitlichen Abdichten der Formausnehmungen 20 in der zweiten Formtrennungsebene versehen. Beim Umlaufen der Backzange 7 eilt der vordere Backformunterteil 21 der, mit der Backzange 7 mitumlaufenden, zweiten Formtrennungsebene der Backform 16 in Laufrichtung 8 voraus und der hintere Backformunterteil 22 eilt der, mit der Backzange 7 mitumlaufenden, zweiten Formtrennungsebene der Backform 16 in Laufrichtung 8 nach.

### 1.3. UMLAUFENDE BACKZANGENKETTE:

Die auf- und zumachbaren Backzangen 7 sind an den seitlichen Stirnseiten ihrer Zangenunterteile 13 an den Kettenlaschen 23a,24e zweier endloser Transportketten 23,24 befestigt, welche zusammen mit den Backzangen 7 die endlose Backzangenkette 6 des Backofens 1 bilden. Die beiden Transportketten 23,24 laufen jeweils durch die obere und untere Transportebene 9,10 hindurch und an der vorderen und hinteren Umlenkung 11,12 über, jeweils um die Mittelachse 11a bzw. 12a der vorderen bzw. hinteren Umlenkung 11 bzw. 12 drehbare vordere bzw. hintere Kettenräder 11b bzw. 12b. Die endlose Backzangenkette 6 wird mittels eines, in den Zeichnungen nicht dargestellten Antriebsmotors im Backofen 1 in Laufrichtung 8 in Umlauf versetzt, wobei die einzelnen Backzangen 7 mit ihren Backformen 16 vom Vorkopf 3 durch den Backraum 2 hindurch und wieder zurück in den Vorkopf gelangen.

Während eines Umlaufes der Backzangenkette 6 wird bei jeder an der Aufgießstation 4 vorbeilaufenden geöffneten Backzange 7 eine, auf die Backform 16 genau abgestimmte Menge einer Back- bzw. Gießmasse durch die stationäre Aufgießvorrichtung 4a in die geschlossene Matrize der geöffneten Backform 16 eingebracht. Anschließend wird die Backform 16 durch Schliessen der Backzange 7 geschlossen und geschlossen durch den Backraum 2 hindurch zurück in den Vorkopf 3 transportiert. Beim Schließen der Backform 16 wird die Back- bzw. Gießmasse zwischen der Patrize und der Matrize der Backform 16 zu den dünnwandigen tüten- bzw. becherförmigen Formkörpern geformt. Beim Durchlaufen des Backraumes 2 wird die Back- bzw. Gießmasse in der geschlossenen Backform 16 zwischen Patrize und Matrize zu den dünnwandigen tüten- bzw. becherförmigen Formkörpern 25 gebacken. Im Vorkopf 3 wird die Backzange 7 und die in ihr enthaltene Backform 16 vollständig geöffnet und die gebackenen, tüten- bzw. becherförmigen Formkörper 25 werden mit Hilfe der Formkerne 19 der Patrize aus der geöffneten Matrize der Backform 16 heraus und zwischen der unteren und oberen Formhälfte 17,18 zur Ausgebestation 5 geführt, wo die gebackenen Formkörper 25 seitlich aus dem Backofen 1 hinaus transportiert werden. Nach dem Passieren der Ausgebestation 5 wird die Matrize bei geöffneter Backform 16 und geöffneter Backzange 7 geschlossen und die Backzange 16 wieder zur Aufgießstation 4 transportiert, wo neuerlich eine bestimmte Menge an Back- bzw. Gießmasse in die geschlossene Matrize der geöffneten Backform 16 bei geöffneter Backzange 7 eingebracht wird.

Bei geschlossener Backform 16 begrenzen die beiden Formhälften 17,18 mit ihren sechs Formkernen 19 und ihren sechs Formausnehmungen 20 sechs, untereinander gleich große, tüten- bzw. bechenförmige Hohlräume. In diese Hohlräume wird jeweils eine, auf das Volumen der Hohlräume abgestimmte Menge einer Back- bzw. Gießmasse eingebracht und in den sechs Hohlräumen jeweils zu einem dünnwendigen, tüten- bzw. becherförmigen Formkörper geformt. In jedem der sechs Hohlräume wird die zu einem tüten- bzw. becherförmigen Formkörper geformte Beck- bzw. Gießmasse während des Backprozesses zu den gebackenen, tüten- bzw. becherförmigen Formkörpern 25 gebacken. Die für den Backprozeß erforderliche Wärmemenge wird der in der geschlossenen Backform 16 zwischen Patrize und Matrize eingeschlossenen Back- bzw. Gießmasse über die von außen beheizte Backform 16 zugeführt. Zu diesem Zweck sind im Backraum 2 des Backofens 1 in Längsrichtung des Backofens 1 verlaufende, in den Zeichnungen nicht dargestellte, langgestreckte, stationäre Heizeinrichtungen z.B. Gasbrenner vorgesehen, über welche die endlose Backzangenkette 6 mit den in ihren Backzangen 7 enthaltenen Backformen 16 in Längsrichtung hinwegläuft.

Beim Passieren des Vorkopfes 3 werden die auf- und zumachbaren Backformen 16 an ihren Haupt-Formtrennungsebenen durch die sie enthaltenden Backzangen 7 senkrecht zur Haupt-Formtrennungsebene geöffnet und geschlossen. Zu diesem Zweck wird bei jeder Backzange 7 der Zangenoberteil 15 mit seinem Führungsschwert 14 im Zangenunterteil 13 senkrecht zur Haupt-Formtrennungsebene auf und ab bewegt.

An ihren zweiten Formtrennungsebenen hingegen werden die auf- und zumachbaren Backformen 16 durch aktivierbare und deaktivierbare Bewegungsmechanismen 26 geöffnet und geschlossen. Diese Bewegungsmechanismen 26 sind innerhalb der Backzangenkette 6 zwischen den einzeinen Backzangen 7 im Bereich der Haupt-Formtrennungsebenen der Backzangen 7 angeordnet und weisen jeweils zwei zur Laufrichtung 8 parallele, langgestreckte Steuerlaschen 26a,26b auf. Die beiden Steuerlaschen 26a,26b eines Bewegungsmechanismus 26 sind den beiden Backformen 16 zweier, einander benachbarter Backzangen 7 zugeordnet und jeweils im Bereich der zur Laufrichtung 8 parallelen Ränder dieser Backformen 16 angeordnet. Jeder Bewegungsmechanismus 26 umfaßt eine, den Führungsschwertern 14 dieser beiden Backzangen 7 benachbarte, innere Steuerlasche 26a und eine, den freien Enden 15d der Zangenoberteile 15 dieser beiden Backzangen 7 benachbarte, äußere Steuerlasche 26b. Im avtivierten Zustand des Bewegungsmechanismus 26 verbinden seine beiden Steuerlaschen 26a,26b die einander gegenseitig benachbarten, beweglichen Backformunterteile 21,22 der beiden ihm zugeordneten Backzangen 7. Dadurch wird bei beiden Backzangen 7 der im Zangenunterteil 13 der jeweiligen Backzange 7 angeordnete Backformunterteil 21,22 durch den Bewegungsmechanismus 26 zur zweiten Formtrennungsebene der jeweiligen Backform 16 hin und von dieser wieder weg bewegt, wenn der Bewegungsmechanismus 26 zusammen mit den beiden ihm zugeordneten Backzangen 7 innerhalb der Backzangenkette 6 die vordere Umlenkung 11 der Backzangenkette 6 passiert

Während des Umlaufes der Backzangenkette 6 durchlaufen die, durch die Transportketten 23,24 untereinander verbundenen Zangenunterteile 13 der Backzangen 7 einerseits und die, mit den Zangenunterteilen 13 über die Führungsschwerter 14 der Backzangen 7 verbundenen Zangenoberteile 15 der Backzangen 7 anderseits sowie die, annähernd in den Haupt-Formtrennungsebenen der Backformen 16 der Backzangen 7 angeordneten Bewegungsmechanismen 26 der Backzangenkette 6 im Backofen 1 unterschiedliche, jeweils in sich geschlossene Bahnen.

Die Zangenunterteile 13 der Backzangen 7 durchlaufen im Backofen 1 eine, durch die beiden seitlichen Transportketten 23, 24 der Backzangenkette 6 vorgegebene, innere Bahn. Die Innere Bann der Zangenunterteile 13 ist durch die, in Fig. 1 strichpunktiert eingezeichnete, durch beide Transportebenen 9,10 und über beide Umlenkungen 11,12 verlaufende Bahn der beiden Transportketten 23,24 definiert. Nach außen ist die innere Bahn der Zangenunterteile 13 durch die, zur Bahn der beiden Transportketten 23,24 parallele, von den Haupt-Formtrennungsebenen dar Backformen 16 durchlaufene Bahn begrenzt, die im Backofen 1 in einem vorgegebenen Abstand parallel zur Bahn der beiden Transportketten 23,24 außerhalb dieser Bahn veläuft.

Die Bewegungsmechanismen 26 der Backzangenkette 6 durchlaufen im Backofen 1 eine, knapp unterhalb der Bahn der Haupt-Formtrennungsebenen der Backformen 16 gelegene, zu dieser parallel verlaufende, mittlere Bahn.

Die Zangenoberteile 15 durchlaufen im Backofen 1 eine äußere Bahn, welche innerhalb des Backraumes 2 durch die geschlossenen Backzangen 7 vorgegeben ist und innerhalb des Vorkopfes 3 durch die, strichpunktiert eingezeichneten, stationären Führungsschienen 27 vorgegeben ist, an denen die an beiden Stirnseiten der Zangenoberteiie 15 vorgesehenen Steuerrollen 28 des jeweiligen Zangenoberteiles 15 entlanglaufen. Die äußere Bahn der Zangenoberteile 15 ist nach innen durch die Bahn der freien Enden 19a der Formkerne 19 der oberen Formhälften 17 der Backformen 16 und nach außen durch die Bahn der Steuerrollen 28 der Zangenoberteile 15 begrenzt.

Innerhalb des Backraumes 2 sind die Backzangen 7 geschlossen: Bei jeder Backzange 7 ragen die vom Zangenoberteil 15 über die Haupt-Formtrennungsebene nach unten vorstehenden Formkerne 19 der oberen Formhälfte 17 in die zur Haupt-Formtrennungsebenen hin offenen Formausnehmungen 20 der im Zangenunterteil 13 enthaltenen, unteren Formhälfte 18 der Backform 16 hinein. Die die äußere Bahn der Zangenoberteile 15 nach innen begrenzende Bahn der freien Enden 19a der Formkerne 19 verläuft im Backraum zwischen der Bahn der Transportketten 23,24 und der mittleren Bahn der Bewegungsmechanismen 26. Die die innere Bahn der Zangenunterteile 13 nach außen begrenzende Bahn der Haupt-Formtrennungsebenen der Backformen 16 verläuft im Backraum zwischen der mittleren Bahn der Bewegungsmechanismen 26 und der Bahn der Steuerrollen 28 der Zangenoberteile 15.

Wenn die Backzangenkette 6 den Vorkopf passiert, werden bei jeder einzelnen Backzange zuerst die am Zangenoberteil 15 angebrachten Formkerne 19 durch den Zangenoberteil 15 aus den Formausnehmungen 20 der im Zangenunterteil 13 enthaltenen, unteren Formhälfte 18 herausgeführt. Anschließend werden die am Zangenoberteil 15 angebrachten Formkerne 19 durch den Zangenoberteil 15 im Anstand von den Formausnehmungen 20 der unteren Formhälften 18 transportiert und dann wieder durch den Zangenoberteil 15 in die Formausnehmungen 20 der unteren Formhälften 18 eingeführt. Die diesen Bewegungen der Zangenoberteile 15 entsprechende Bahn ihrer Steuerrollen 28 verläuft im Vorkopf zuerst in dem, den geschlossenen Backzangen 7 entsprechenden Abstand parallel zur mittleren Bahn der Bewegungsmechanismen 26. Dieser Anstand vergrößert sich dann allmählich bis zur vorderen Umlenkung 11. In der unteren Hälfte der vorderen Umlenkung 11 vergrößert sich dieser Anstand in einem großen Bogen bis auf etwas mehr als die doppelte Höhe der Formkerne 19, bleibt dann über die obere Hälfte der vorderen Umlenkung 11 hinweg bis zur Aufgießstation 4 gleich und verringert sich nach der Aufgießstation 4 wieder auf die, den geschlossenen Backzangen 7 entsprechende Größe.

Unabhängig von der räumlichen Position der Backzangen 7 innerhalb des Backofens 1 weisen jeweils die in ihnen enthaltenen Backformen 16 mit den freien Enden 19a ihrer Formkerne 19 bzw. mit den verjüngten Enden 20a ihrer Formausnehmungen 20 von der äußeren Bahn der Zangenoberteile 15 weg zur inneren Bahn der beiden Transportketten 23,24 hin. Beim Durchlaufen des Backofens 1 ändern sich die räumlichen Positionen der Backzangen 7 und die freien Enden 19a der Formkerne 19 weisen in der oberen Transportebene 9 nach unten, in der unteren Transportebene 10 nach oben und an den beiden Umlenkungen 11,12 jeweils radial zur jeweiligen Mittelachse 11a,12a der jeweiligen Umlenkung 11, 12.

### 1.4. BACKZANGEN:

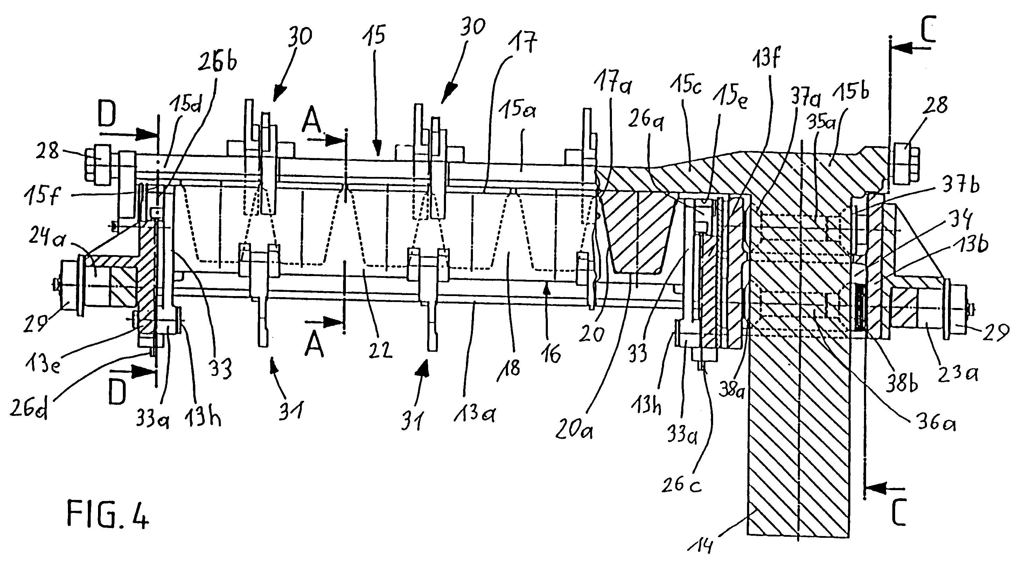

Fig. 4 zeigt eine, im Backraum 2 des Backofens 1 in der oberen Transportebene 9 quer zur Laufrichtung 8 angeordnete, geschlossene Backzange 7, die durch mehrere, an der in ihr enthaltenen Backform 16 direkt angreifende, selbstnachstellende, obere und untere Klemmvorrichtungen 30,31 geschlossen gehalten wird. Auf der Backform 16 sind entlang ihrer Oberseite drei obere Klemmvorrichtungen 30 und entlang ihrer Unterseite drei untere Klemmvorrichtungen 31 jeweils quer zur Laufrichtung 8 im Abstand voneinander angeordnet. Jeweils eine obere Klemmvorrichtung 30 und eine untere Klemmvorrichtung 31 sind genau übereinander und jeweils zwischen zwei benachbarten Formkernen 19 bzw. Formausnehmungen 20 angeordnet. Diese Klemmvorrichtungen 30,31 greifen jeweils an der Backform 16 selbst an und werden an der geschlossenen Backform 16 festgezogen bzw. von dieser gelöst, wenn diese durch die Bewegung des Zangenoberteiles 15 und durch die Bewegungen der, an ihren Backformunterteilen 21,22 angreifenden Bewegungsmechanismen 26 geschlossen wurde.

Beim Festziehen der Klemmvorrichtungen 30,31 an der Backform 16 werden jeweils zuerst die Bewegungsspiele beseitigt, welche innerhalb der Klemmvorrichtungen 30,31, zwischen den beiden Formhälf-ten 17,18 und zwischen den beiden Backformunterteilen 21,22 vorhanden sind und zum Ausgleichen von unterschiedlichen Wärmedehnungen beim Einbringen der Back- bzw. Gießmasse in die heiße Backform 16 und beim Beheizen der Backform 16 während des Umlaufes der Backzange 7 erforderlich sind. Durch das Festziehen der Klemmvorrichtungen 30,31 werden die einzelnen Teile 17,21,22 der Backform 16 mit ihren jeweils einander gegenseitig zugeordneten Dichtflächen 17a, 18a bzw. 21a,22a spielfrei aneinandergedrückt. Anschliessend werden die Klemmvorrichtungen 30,31 an der geschlossenen Backform 16 weiter festgezogen, bis die Backformteile 17,21,22 von den Klemmvorrichtungen 30,31 mit einer jeweils vorgegebenen Vorspannkraft an den einander gegenseitig zugeordneten Dichtflächen 17a,18a bzw. 21a,22a der Backformteile 17,21,22 aneinander angedrückt werden.

Beim Durchlaufen durch den Backraum 2 wird die Backform 16 und mit ihr die Backzange 7 von den Klemmvorrichtungen 30,31 der Backform 16 mit diesen, auf die geschlossene Backform 16 der Backzange 7 aufgebrachten Vorspannkräften entgegen dem Druck der in der geschlossenen Backform 16 während des Backprozesses entstehenden Gase geschlossen halten.

Beim Lösen der Klemmvorrichtungen 30,31 werden zuerst die, die Backform 16 geschlossen haltenden Vorspannkräfte an ihren einander gegenseitig zugeordneten Dichtflächen 17a,18a bzw. 21a,22a abgebaut, dann das jeweilige Bewegungsspiel in den Klemmvorrichtungen 30,31 zwischen den beiden Formhälften 17, 18 und zwischen den beiden Backformunterteilen 21,22 wiederhergestellt und schließlich die einzelnen Backformteile 17, 21,22 für eine Bewegung durch die Zangenteile 13,15 bzw. für eine Bewegung durch die Bewegungsmechanismen 26 freigegeben.

### 1.4.1. ZANGENOBERTEIL :

Der Zangenoberteil 15 der Backzange 7 umfaßt einen Hauptabschnitt 15a, in den die obere Formhälfte 17 der Backform 16 mit ihren konischen Formkernen 19 integriert ist, und einen, an den Hauptabschnitt 15a seitlich anschließenden, oberen Führungskopf 15b, in dem ein Ende des Führungsschwertes 14 der Backzange 7 unverrückbar festgehalten ist.

An der der Haupt-Formtrennungsebene zugewandten Unterseite des Hauptabschnittes 15a ist sowohl an seinem, an den oberen Führungskopf 15b anschließenden inneren Endbereich 15c als auch an seinem, diesem gegenüberliegenden, freien Ende 15d jeweils eine Steuerfläche 15e,15f für die Steuerlaschen 26a,26b des der Backzange 7 in Laufrichtung 8 vorauseilenden Bewegungsmechanismus 26 vorgesehen. Die am inneren Endbereich 15c vorgesehene, innere Steuerfläche 15e ist der inneren Steuerlasche 26a dieses Bewegungsmechanismus 26 zugeordnet und die am freien Ende 15d vorgesehene, äußere Steuerfläche 15f ist der äußeren Steuerlasche 26b dieses Bewegungsmechanismus 26 zugeordnet.

Der Zangenoberteil 15 trägt an seinen seitlichen Stirnseiten die beiden Steuerrollen 28, welche im Eingriff mit den stationären Führungsschienen 27 des Vorkopfes 3 die zum Öffnen und Schließen der Backzange 7 erforderlichen, zur Haupt-Formtrennungsebene der Backform 16 senkrechten Relativbewegungen des Zangenoberteiles 15 gegenüber dem Zangenunterteil 13 von der Umlaufbewegung der Backzange 7 ableiten.

### 1.4.2. FÜHRUNGSSCHWERT :

Das langgestreckte Führungsschwert 14 ragt aus dem oberen Führungskopf 15b des Zangenoberteiles 15 senkrecht zur Haupt-Formtrennungsebene der Backform 16 nach unten, zum Zangenunterteil 13 hin heraus. Das Führungsschwert 14 besitzt eine, zur Laufrichtung 8 senkrechte Längsmittelebene 14a, die vorteilhafterweise in der zweiten Formtrennungsebene der Backform 16 angeordnet ist, und eine zur Laufrichtung 8 parallele Quermittelebene 14b. Die senkrecht zur Laufrichtung 8 gemessenen Breite des Führungsschwertes 14 beträgt etwa das 3-fache der in Laufrichtung 8 gemessenen Dicke des Führungsschwertes 14. Das Führungsschwert 14 besitzt eine, der Backform 16 benachbarte und der Backform 16 zugewandte, innere Schmalseite und eine, von der Backform 16 abgewandte, äußere Schmalseite sowie eine vordere und hintere Breitseite. Bei in Laufrichtung 8 umlaufender Backzange 7 eilt die vordere Breitseite des Führungsschwertes 14 der zweiten Formtrennungsebene der Backform 16 voraus und die hintere Breitseite nach. An den vier, jeweils einer Schmalseite und einer Breitseite gemeinsamen Längsrädern des Führungsschwertes 14 ist jeweils eine zur Laufrichtung 8 schräge Führungsfläche 14c,14d,14e,14f des Führungsschwertes 14 ausgebildet.

Die an dem, der inneren Schmalseite und der vorderen Breitseite gemeinsamen Längsrand des Führungsschwertes 14 angeordnete, vordere, innere Führungsfläche 14c und die an dem, der inneren Schmalseite und der hinteren Breitseite gemeinsamen Längsrand des Führungsschwertes 14 angeordnete, hintere, innere Führungsfläche 14e sind symmetrisch zur Längsmittelebene 14a angeordnet und bilden zusammen eine innere Führungsbahn des Führungsschwertes 14. Die an dem, der äußeren Schmalseite und der vorderen Breitseite gemeinsamen Längsrand des Führungsschwertes 14 angeordnete, vordere, äußere Führungsfläche 14d und die an dem, der äußeren Schmalseite und der hinteren Breitseite gemeinsamen Längsrand des Führungsschwertes 14 angeordnete, hintere, äußere Führungsfläche 14f sind ebenfalls symmetrisch zur Längsmittelebene 14a angeordnet und bilden zusammen eine äußere Führungsbahn des Führungsschwertes 14. Der Abstand zwischen der inneren und der äußeren Führungsbahn des Führungsschwertes 14 entspricht etwa dem 3,5-fachen bis 4-fachen des Abstandes zwischen den vorderen und hinteren Führungsfläche 14c,14e bzw. 14d,14f.

### 1.4.3. ZANGENUNTERTEIL :

Der unterhalb der Haupt-Formtrennungsebene der Backform 16 angeordnete Zangenunterteil 13 der Backzange 7 umfaßt ebenfalls einen Hauptabschnitt 13a, in dem die untere Formhälfte 18 mit ihren beiden beweglichen Backformunterteilen 21,22 aufgenommen ist, und einen, an den Hauptabschnitt 13a seitlich anschließenden, unteren Führungskopf 13b, in dem das zur Haupt-Formtrennungsebene senkrechte Führungsschwert 14 der Backzange 7 senkrecht zur Haupt-Formtrennungsebene verschiebbar geführt ist. Der Zangenunterteil 13 ist auf den Kettenlaschen 23a,24a der beiden Transportketten 23,24 befestigt, die ihrerseits mit seitlichen Laufrädern 29 versehen sind, mit denen sich die Backzangenkette 6 in der oberen bzw. unteren Transportebene 9 bzw. 10 des Backofens 1 auf seitlich angebrachten, in der Zeichnung nicht dargestellten Laufschienen abstützt.

### 1.4.3.1. HAUPTABSCHNITT DES ZANGENUNTERTEILES :

Der kastenförmig ausgebildete, nach unten offene Hauptabschnitt 13a des Zangenunterteiles 13 besitzt zwei, in Laufrichtung 8 im Abstand von einander angeordnete, quer zur Laufrichtung 8 verlaufende Querwände 13c,13d und zwei, quer zur Laufrichtung 8 im Abstand von einander angeordnete, in Laufrichtung 8 verlaufende Seitenwände 13e,13f. Im Hauptabschnitt 13a des Zangenunterteiles 13 sind die beiden langgestreckten Backformunterteile 21,22 zwischen den beiden Querwänden 13c, 13d quer zur Laufrichtung 8 angeordnet und an den beiden Seitenwänden 13e,13f jeweils um eine, zu beiden Formtrennungsebenen parallele Schwenkachse schwenkbar gelagert. Im Hauptabschnitt 13a des Zangenunterteiles 13 ist in jeder Seitenwand 13e,13f jeweils eine, zur Haupt-Formtrennebene senkrecht verschiebbare Schubstange 26c, 26d des der Backzange 7 in Laufrichtung vorauseilenden Bewegungsmechanismus 26 in einer senkrechten Führungsbohrungen geführt.

Jeder Backformunterteil 21 bzw. 22 ist an seinen beiden, den Seitenwände 13e,13f jeweils benachbarten Enden mit einem Backformträger 32 bzw. 33 fest verbunden, der einen über das den Transportketten 23,24 nähergelegene, untere Ende des jeweiligen Backformunterteiles 21 bzw. 22 nach unten vorstehenden Lagerarm 32a bzw. 33a besitzt, der an einem von der benachbarten Seitenwand 13e,13f unterhalb der Bahn der Transportketten 23,24 nach innen vorstehenden Achsbolzen 13g,13h schwenkbar gelagert ist. Die Achsbolzen 13g bzw. 13h der beiden Backformträger 32 bzw. 33 eines Backformunterteiles 21 bzw. 22 liegen einander gegenüber und bilden jeweils eine, zu beiden Formtrennungsebenen der Backform 18 parallele Schwenkachse für den jeweiligen Backformunterteil 21 bzw. 22. Jeder Backformträger 32 bzw. 33 besitzt eine, der zweiten Formtrennungsebene zugewandte Stirnseite mit einer zur zweiten Formtrennungsebene parallelen Anschlagfläche 32b bzw. 33b, die jeweils mit einer von der zweiten Formtrennungsebene abgewandten Anschlagfläche 13i bzw. 13k eines, von der benachbarten Seitenwand 13e,13f nach innen vorstehenden Anschlagblock 13m zusammenwirkt.

Die beiden, mit dem vorderen Backformunterteil 21 fest verbundenen Backformträger 32 weisen eine, vom vorderen Backformunterteil 21 abgewandte und der jeweils benachbarten Seitenwand 13e,13f des Hauptabschnittes 13a des Zangenunterteiles 13 zugewandte, seitliche Stirnseite auf, an der ein vorderer, zur zweiten Formtrennungsebene paralleler, zylindrischer Steuerbolzen 32c angebracht ist, der dem der jeweiligen Backzange 7 in Laufrichtung vorauseilenden Bewegungsmechanismus 26 zugeordnet ist. Die beiden, mit dem hinteren Backformunterteil 22 fest verbundenen Backformträger 33 weisen eine, vom hinteren Backformunterteil 22 abgewandte und der jeweils benachbarten Seitenwand 13e,13f des Hauptabschnittes 13a des Zangenunterteiles 13 zugewandte, seitliche Stirnseite auf, an der ein hinterer, zur zweiten Formtrennungsebene paralleler, zylindrischer Lagerbolzen 32c angebracht ist, der dem der jeweiligen Backzange 7 in Laufrichtung nacheilenden Bewegungsmechanismus 26 zugeordnet ist.

### 1.4.3.2. FÜHRUNGSKOPF DES ZANGENUNTERTEILES :

Der untere Führungskopf 13b enthält einen zur Haupt-Formtrennungsebene der Backform 16 senkrechten und zur zweiten Formtrennungsebene symetrisch ausgebildeten Durchlaß 34, in welchem das Führungsschwert 14 der Backzange 7 senkrecht zur Haupt-Formtrennungsebene und parallel zur zweiten Formtrennungsebene verschiebbar geführt ist. Der Durchlaß 34 weist analog dem Führungsschwert 14 eine, in der zweiten Formtrennungsebene liegende, zur Laufrichtung 8 senkrechte Längsmittelebene 34a und eine zur Laufrichtung 8 parallele Quermittelebene 34b auf. In zwei in unterschiedlichem Abstand von der Haupt-Formtrennungsebene angeordneten und zu dieser parallelen Ebenen 35,36 ist jeweils ein vorderer Walzenkörper 35a, 36a und ein hinterer Walzenkörper 35b,36b jeweils parallel zur Längsmittelebene 34a angeordnet. Bei in Laufrichtung 8 umlaufender Backzange 7 eilen die beiden vorderen Walzenkörper 35a,36a der zweiten Formtrennungsebene voraus und die beiden hinteren Walzenkörper 35b,36b nach. Die beiden, jeweils in einer Ebene 35 bzw. 36 angeordneten Walzenkörper 35a,35b bzw. 36a,36b tragen jeweils vier, zu beiden Mittelebenen 34a, 34b des Durchlasses 34 paarweise symmetrisch angeordnete Führungsrollen 37, deren zur Laufrichtung 8 schräge Laufflächen mit den entsprechenden zur Laufrichtung 8 schrägen Führungsflächen 14c,14d,14e,14f des Führungsschwertes 14 im Eingriff stehen.

Die in der oberen Ebene 35 angeordnete, vordere innere Führungsrolle 37a und die in der unteren Ebene 36 angeordnete, vordere innere Führungsrolle 38a stehen jeweils mit der vorderen inneren Führungsfläche 14c des Führungsschwertes 14 im Eingriff. Die in der oberen Ebene 35 angeordnete, vordere äußere Führungsrolle 37b und die in der unteren Ebene 36 angeordnete, vordere äußere Führungsrolle 38b stehen jeweils mit der vorderen äußeren Führungsfläche 14d des Führungsschwertes 14 im Eingriff. Die in der oberen Ebene 35 angeordnete, hintere innere Führungsrolle 37c und die in der unteren Ebene 36 angeordnete, hintere innere Führungsrolle 38c stehen jeweils mit der hinteren inneren Führungsfläche 14e des Führungsschwertes 14 im Eingriff. Die in der oberen Ebene 35 angeordnete, hintere äußere Führungsrolle 37d und die in der unteren Ebene 36 angeordnete, hintere äußere Führungsrolle 38d stehen jeweils mit der hinteren äußeren Führungsfläche 14f des Führungsschwertes 14 im Eingriff.

Die vorderen und hinteren Walzenkörper 35a,36a und 35b,36b tragen jeweils eine innere und eine äußere Führungsrolle 37a und 37b bzw. 37c und 37d bzw. 38a und 38b bzw. 38c und 38d, wobei die inneren Führungsrollen 37a,37c,38a,38c mit dem jeweiligen Walzenkörper 35a,36a und 35b,36b einstückig ausgebildet sind, während die äußeren Führungsrollen 37b,37d,38b, 38d am jeweiligen Walzenkörper 35a,36a und 35b,36b quer zur Laufrichtung 8 axial verschieb- und verstellbar angeordnet sind. Von den vier Walzenkörpern 35a,36a,35b,36b ist nur der obere hintere Walzenkörper 35b im unteren Führungskopf 13b axial unverschieblich gelagert, während die drei übrigen Walzenkörper 35a,36a,36b an einem ihrer Enden im unteren Führungskopf 13b über Tellerfedern 39 axial federnd abgestütut sind. Die Walzenkörper 35a,36a,35b,36b selbst sind direkt im unteren Führungskopf 13b drehbar gelagert.

### 1.5. BEWEGUNGSMECHANISMEN :

Die innerhalb der Backzangenkette 6 zwischen den einzelnen Backzangen 7 angeordneten Bewegungsmechanismen 26 sind jeweils vor und nach einer Backzange 7 angeordnet, sodaß der hintere Bewegungsmechanismus 26 einer ersten Backzange 7 gleichzeitig der vordere Bewegungsmechanismus 26 einer, der ersten Backzange 7 in Laufrichtung 8 nacheilenden zweiten Backzange 7 Ist, während der hintere Bewegungsmechanismus 26 der zweiten Backzange 7 gleichzeitig der vordere Bewegungsmechanismus 26 einer, der zweiten Backzange 7 nacheilenden dritten Backzange 7 ist.

Ist der vordere Bewegungsmechanismus 26 der zweiten Backzange 7 aktiviert, so bewegt er einerseits den hinteren Backformunterteil 22 der ersten Backzange 7 im Zangenunterteil 13 der ersten Backzange 7 gegenüber der zweiten Formtrennungsebene der ersten Backzange 7 hin und her und anderseits auch den vorderen Backformunterteil 21 der zweiten Backzange 7 im Zangenunterteil 13 der zweiten Backzange 7 gegenüber der zweiten Formtrennungsebene der zweiten Backzange 7 hin und her.

Ist der hintere Bewegungsmechanismus 26 der zweiten Backzange 7 aktiviert, so bewegt er einerseits den hinteren Backformunterteil 22 der zweiten Backzange 7 im Zangenunterteil 13 der zweiten Backzange 7 gegenüber der zweiten Formtrennungsebene der zweiten Backzange 7 hin und her und anderseits auch den vorderen Backformunterteil 21 der dritten Backzange 7 im Zangenunterteil 13 der dritten Backzange 7 gegenüber der zweiten Formtrennungsebene der dritten Backzange 7 hin und her.

Bei in Laufrichtung 8 umlaufender Backzangenkette 6 eilt die erste Backzange 7 dem vorderen Bewegungsmechanismus 26 der zweiten Backzange 7 voraus. Dieser eilt seinerseits der zweiten Backzange 7 voraus und der ersten Backzange 7 nach. Die zweite Backzange 7 eilt ihrerseits ihrem vorderen Bewegungsmechanismus 26 nach und ihrem der hinteren Bewegungsmechanismus 26 voraus. Dieser eilt seinerseits der zweiten Backzange 7 nach und der dritten Backzange 7 voraus.

Jeder Bewegungsmechanismus 26 überbrückt den, innerhalb der Backzangenkette 6 im Bereich der mittleren Bahn der Bewegungsmechanismen 26 vorhandenen Zwischenraum zwischen der ihm vorauseilenden Backzange 7 und der ihm nacheilenden Backzange 7. Die beiden Steuerlaschen 26a,26b des Bewegungsmechanismus 26 sind an ihren vorderen Enden mit den, an den Backformträgern 33 des hinteren Backformunterteiles 22 der vorauseilenden Backzange 7 angebrachten, hinteren Lagerbolzen 33c schwenkbar verbunden. Die beiden Steuerlaschen 26a,26b überbrücken den Zwischenraum zwischen den beiden Backzangen 7 bis zu den, an den Backformträgern 32 des vorderen Backformunterteiles 21 der nacheilenden Backzange 7 angebrachten, vorderen Steuerbolzen 32c. Die beiden Steuerlaschen 26a,26b erstrecken sich mit ihren hinteren Enden entgegen der Laufrichtung 8 über diese Steuerbolzen 32c hinaus.

Jede Steuerlasche 26a,26b besitzt eine Innenseite, die dem hinteren Backformunterteil 22 der vorauseilenden Backzange 7 und dem vorderen Backformunterteil 21 der nacheilenden Backzange 7 zugewandt ist, sowie eine von der inneren Bahn der Transportketten 23,24 abgewandte Oberseite und eine der inneren Bahn der Transportketten 23,24 zugewandte Unterseite Auf der Innenseite der Steuerlasche 26a,26b ist ein, zur Innenseite hin offener, langgestreckter Führungskanal 40 eingelassen, in dem ein vorderer Steuerbolzen 32c geführt ist, der an einem Backformträger 32 des vorderen Backformunterteiles 21 der nacheilenden Backzange 7 angebracht ist.

Der Führungskanal 40 weist ein, dem vorderen Ende der Steuerlasche 26a,26b näher gelegenes, in Laufrichtung 8 geschlossenes, vorderes Ende und ein am hinteren Ende der Steuerlasche 26a,26b angeordnetes, entgegen der Laufrichtung 8 offenes hinteres Ende auf. Der Führungskanal 40 besitzt eine, der Oberseite der Steuerlasche 26a,26b benachbarte, obere Seitenwand 40b, die eine äußere Bewegungsbahn des Steuerbolzens 32c nach außen begrenzt. Der Führungskanal 40 besitzt ferner eine, der Unterseite der Steuerlasche 26a,26b benachbarte, untere Seitenwand 40c, die eine innere Bewegungsbahn des Steuerbolzens 32c und einen Teil von dessen äußerer Bewegungsbahn nach innen begrenzt. Die beiden Bewegungsbahnen des Führungskanales 40 sind unterschiedlich lang und enden mit ihren vorderen Enden am vorderen Ende des Führungskanales 40. An diesem Ende ist eine, entgegen der Laufrichtung 8 nach hinten weisende, vordere Anschlagfläche 40a für den Steuerbolzen 32c ausgebildet. Die äußere Bewegungsbahn verläuft entlang der oberen Seitenwand 40b des Führungskanales 40 bis zu dessen hinterem Ende und begenzt die innere Bewegungsbahn nach außen. In der unteren Seitenwand 40c des Führungskanales 40 ist zwischen seinem vorderen und hinteren Ende eine Stufe ausgebildet, welche eine, in Laufrichtung 8 nach vorne weisende, hintere Anschlagfläche 40d für den Steuerbolzen 32c bildet, an der die innere Bewegungsbahn mit ihrem hinteren Ende endet. Die äußere Bewegungsbahn wird zwischen ihrem vorderen Ende und der Stufe durch die innere Bewegungsbahn nach innen begrenzt. Die äußere Bewegungsbahn erstreckt sich entlang der unteren Seitenwand 40c des Führungskanales 40 über die Stufe entgegen der Laufrichtung 8 hinaus bis zum hinteren Ende des Führungskanales 40.

Die für den Steuerbolzen 32c vorgesehene, äußere Bewegungsbahn des Führungskanales 40 ist der Freigabestellung der Steuerlasche 26a,26b des deaktvierten Bewegungsmechanismus 26 zugeordnet. Die für den Steuerbolzen 32c vorgesehene, innere Bewegungsbahn des Führungskanales 40 ist der Arbeitsstellung der Steuerlasche 26a,26b des aktivierten Bewegungsmechanismus 26 zugeordnet. Die Steuerlasche 26a,26b wird hauptsächlich durch die auf sie wirkende Schwerkraft zwischen ihrer Freigabestellung und ihrer Arbeitsstellung hin und her geschwenkt. Sie wird dabei jeweils mit ihrem vorderen Ende um den, an einem Backformträger 33 des hinteren Backformunterteiles 22 der vorauseilenden Backzange 7 angebrachten, hinteren Lagerbolzen 33c zwischen ihrer Freigabestellung und ihrer Arbeitsstellung hin und her geschwenkt.

Wenn die Backzangenkette 6 im Vorkopf 3 den Übergang von der unteren Transportebene 10 zur vorderen Umlenkung 11 passiert, vergrößert sich der gegenseitige Abstand zwischen dem, an einem Backformträger 33 des hinteren Backformunterteiles 22 der vorauseilenden Backzange 7 angebrachten Lagerbolzen 33c einer Steuerlasche 26a,26b und dem in ihr geführten, an einem Backformträger 32 des vorderen Backformunterteiles 21 der nacheilenden Backzange 7 angebrachten Steuerbolzen 32c. Wenn die Backzangenkette 6 anschließend den Übergang von der vorderen Umlenkung 11 zur oberen Transportebene 9 passiert, verkleinert sich der gegenseitige Abstand zwischen dem, an der vorauseilenden Backzange 7 angebrachten Lagerbolzen 33c der Steuerlasche 26a,26b und dem in ihr geführten, an der nacheilenden Backzange 7 angebrachten Steuerbolzen 32c.

Beim Passieren des Überganges von der oberen Transportebene 9 zur hinteren Umlenkung 12 im Backraum 2 vergrößert sich der gegenseitige Abstand zwischen dem, an der vorauseilenden Backzange 7 angebrachten Lagerbolzen 33c der Steuerlasche 26a,26b und dem in ihr geführten, an der nacheilenden Backzange 7 angebrachten Steuerbolzen 32c. Beim anschließenden Passieren des Überganges von der hinteren Umlenkung 12 zur unteren Transportebene 10 verkleinert sich der gegenseitige Abstand zwischen dem, an der vorauseilenden Backzange 7 angebrachten Lagerbolzen 33c der Steuerlasche 26a,26b und dem in ihr geführten, an der nacheilenden Backzange 7 angebrachten Steuerbolzen 32c.

Beim Passieren der vorderen Umlenkung 11 im Vorkopf 3 sind die Bewegungsmechanismen 26 aktiviert und ihre Steuerlaschen 26a,26b in ihre Arbeitsstellung verschwenkt. In dieser Arbeitsstellung gleiten jeweils die beiden, an der dem Bewegungsmechanismus 26 nacheilenden Backzange 7 angebrachten Steuerbolzen 32c in der inneren Bewegungsbahn des jeweiligen Führungskanales 40 an dessen unterer Seitenwand 40c entlang jeweils von der, nach hinten weisenden vorderen Anschlagfläche 40a bis zu der, nach vorne weisenden hinteren Anschlagfläche 40d und wieder zurück.

Während der Vergrößerung des Abstandes zwischen den Lagerbolzen 33c und den Steuerbolzen 32c werden die beiden Steuerbolzen 32c in den inneren Bewegungsbahnen der Führungskanäle 40 zuerst bis zur Anlage an den hinteren Anschlagflächen 40d der Führungskanäle 40 der beiden Steuerlaschen 26a,26b bewegt, anschließend wird die weitere Vergrößerung des Abstandes zwischen den Lagerbolzen 33c und den Steuerbolzen 32c jeweils in eine Schwenkbewegung des mit den beiden Lagerbolzen 33c bzw. des mit den beiden Steuerbolzen 32c verbundenen Backformunterteiles 21,22 umgewandelt. wodurch die, in den Zangenunterteilen 13 der dem jeweiligen Bewegungsmechanismus 26 benachbarten Backzangen 7 enthaltenen Matrizen geöffnet werden.

Während der Verkleinerung des Abstandes zwischen den Lagerbolzen 33c und den Steuerbolzen 32c werden die beiden Steuerbolzen 32c in den inneren Bewegungsbahnen der Führungskanäle 40 zuerst bis zur Anlage an den vorderen Anschlagflächen 40a der Führungskanäle 40 der beiden Steuerlaschen 26a,26b bewegt, anschließend wird die weitere Verkleinerung des Abstandes zwischen den Lagerbolzen 33c und den Steuerbolzen 32c jeweils in eine Schwenkbewegung des mit den beiden Lagerbolzen 33c bzw. des mit den beiden Steuerbolzen 32c verbundenen Backformunterteiles 21,22 umgewandelt, wodurch die, in den Zangenunterteilen 13 der dem jeweiligen Bewegungsmechanismus 26 benachbarten Backzangen 7 enthaltenen Matrizen geschlossen werden.

Beim Passieren der hinteren Umlenkung 12 im Backraum 2 sind die Bewegungsmechanismen 26 deaktiviert und ihre Steuerlaschen 26a,26b in ihre Freigabestellung verschwenkt. In dieser Freigabestellung gleiten die beiden, an der dem Bewegungsmechanismus 26 nacheilenden Backzange 7 angebrachten Steuerbolzen 32c in den äußeren Bewegungsbahnen der Führungskanäle 40 an der oberen Seitenwand 40b entlang, ohne mit der, nach vorne weisenden, hinteren Anschlagfläche 40d an der, in der unteren Seitenwand 40c ausgebildeten Stufe in Berührung zu kommen. Dadurch nehmen die Steuerlaschen 26a,26b der Bewegungsmechanismen 26 die Vergrößerungen und Verkleinerungen des Abstandes zwischen den Lagerbolzen 33c und den Steuerbolzen 32c in den äußeren Bewegungsbahnen der Führungskanäle 40 ohne jedwede Bewegungsumwandlung in sich auf.

Das Aktivieren der Steuerlaschen 26a,26b der Bewegungsmechanismen 26 erfolgt in der unteren Transportebene 10 vor dem Erreichen der vorderen Umlenkung 11, wobei die Zangenoberteile 15 aus den noch geschlossenen Matrizen der Zangenunterteile 13 bei gelösten oberen Klemmvorrichtungen 30 geringfügig herausgefahren werden. Dadurch werden die, den Steuerlaschen 26a,26b eines Bewegungsmechanismus 26 zugeordneten Steuerflächen 15e,15f des Zangenoberteiles 15 der Backzange 7 von den Steuerlaschen 26a,26b so weit weg bewegt, daß die hinteren Enden der Steuerlaschen 26a,26b durch die auf sie wirkende Schwerkraft aus der Freigabestellung in die Arbeitsstellung verschwenken können und die Führungskanäle 40 mit ihren unteren Seitenwänden 40c auf den beiden Steuerbolzen 32c zu liegen kommen.

Im Backofen 1 sind den, in den Zangenunterteilen 13 angeordneten Schubstangen 26c,26d der Bewegungsmechanismen 26 zugeordnete, stationäre Steuerschienen 26e der vorderen Umlenkung 11 vorgelagert. Diese Steuerschienen 26e verlaufen parallel zur Laufrichtung 8 und sind gegenüber dieser geneigt angeordnet. Ist eine Steuerlasche 26a,26b noch nicht aktiviert, so steht die ihr zugeordnete Schubstange 26c,26d mit ihrem oberen Ende an der Unterseite der Steuerlasche 26a,26b an und mit ihrem unteren Ende über die nach oben weisende Unterseite der Backzange 7 nach oben hinaus. Beim Passieren der Steuerschienen 26e kommt die Schubstange 26c,26d mit ihrem unteren Ende an der ihr zugeordneten Steuerschiene 26e zur Anlage und die Schubstange 26c,26d wird durch den Zangenunterteil 13 hindurch gegen die Steuerlasche 26a,26b gedrückt, die dadurch in ihre Arbeitsstellung verschwenkt wird.

Das Deaktivieren der Steuerlaschen 26a,26b der Bewegungsmechanismen 26 erfolgt beim Passieren der vorderen Umlenkung 11, wenn die hinteren Enden der Steuerlaschen 26a,26b durch die auf sie wirkende Schwerkraft aus der Arbeitsstellung wieder zurück in die Freigabestellung verschwenken können und die Führungskanäle 40 mit ihren oberen Seitenwänden 40b auf den beiden Steuerbolzen 32c zu liegen kommen. Beim Schließen der Backzange 7 werden die, den Steuerlaschen 26a,26b zugeordneten Steuerflächen 15e,15f des Zangenoberteiles 15 an die Steuerlaschen 26a,26b angenähert und allenfalls noch nicht in der Freigabestellung befindliche Steuerlaschen 26a,26b zwangsweise verschwenkt. Die Steuerflächen 15e,15f des Zangenoberteiles 15 begrenzen die Stellung der beiden Steuerlaschen 26a,26b bei geschlossener Backzange 7 so, daß die unteren Seitenwände 40c der Führungskanäle 40 mit den Steuerbolzen 32c nicht in Eingriff kommen können.

### 1.6. OBERE KLEMMVORRICHTUNGEN;

Die an der Backform 16 quer zur Laufrichtung 8 jeweils im Abstand voneinander angeordneten, untereinander baugleichen, selbstnachstellenden, oberen Klemmvorrichtungen 30 sind jeweils am Zangenoberteil 15 angebracht.

Eine obere Klemmvorrichtung 30 umfaßt zwei, jeweils parallel zur Laufrichtung 8 angeordnete, zweiarmige Klemmhebel 41,42, welche in einem, an der Oberseite des Zangenoberteiles 15 befestigten Lager 43 auf einer gemeinsamen, quer zur Laufrichtung 8 angeordneten Schwenkachse 44 nebeneinander schwenkbar gelagert sind.

Der vom Führungsschwert 14 der Backzange 7 weiter entfernt angeordnete, vordere Klemmhebel 41 besitzt einen, von der Schwenkachse 44 in Laufrichtung 8 nach vorne ragenden, im wesentlichen C-förmigen, vorderen Klemmarm 41a, der die in Laufrichtung 8 vorauseilende Vorderseite des Zangenoberteiles 15 übergreift und an seiner vom Zangenoberteil 15 abgewandten Rückseite eine äußere, gekrümmte Angriffsfläche 41b für den Eingriff mit einer ersten, vorderen Schließrolle 45a einer Schließstation 45 besitzt, in der alle nebeneinander angeordneten, oberen Klemmvorrichtungen 30 einer Backform 16 gleichzeitig festgezogen werden. Der vordere Klemmarm 41a des vorderen Klemmhebels 41 besitzt ferner an seinem, von der Schwenkachse 44 entfernten und zu dieser hin abgewinkelten freien Ende einen vorderen Klemmabschnitt 41c mit einer, der Schwenkachse 44 zugewandten, ebenen Klemmfläche 41d an seiner dem Zangenoberteil 15 zugewandten Vorderseite. Der vordere Klemmhebel 41 besitzt ferner einen, von der Schwenkachse 44 entgegen der Laufrichtung 8 nach hinten ragenden, hinteren Betätigungsarm 41e, der an seiner vom Zangenoberteil 15 abgewandten Rückseite eine äußere Angriffsfläche 41f für den Eingriff mit einer ersten, vorderen Öffnungsrolle 46a einer Öffnungsstation 46 besitzt.

Der dem Führungsschwert 14 der Backzange 7 näher liegende, hintere Klemmhebel 42 besitzt einen, von der Schwenkachse 44 entgegen der Laufrichtung 8 nach hinten ragenden, im wesentlichen C-förmigen, hinteren Klemmarm 42a, der die in Laufrichtung 8 nacheilende Rückseite des Zangenoberteiles 15 übergreift und an seiner vom Zangenoberteil 15 abgewandten Rückseite eine äußere, gekrümmte Angriffsfläche 42b für den Eingriff mit einer zweiten, hinteren Schließrolle 45b der Schließstation 45 besitzt. Der hintere Klemmarm 42a des hinteren Klemmhebels 42 besitzt ferner an seinem, von der Schwenkachse 44 entfernten und zu dieser hin abgewinkelten freien Ende einen hinteren Klemmabschnitt 42c mit einer, der Schwenkachse 43 zugewandten, ebenen Klemmfläche 42d an seiner dem Zangenoberteil 15 zugewandten Vorderseite. Der hintere Klemmhebel 42 besitzt ferner einen, von der Schwenkachse 44 in Laufrichtung 8 noch vorne ragenden, vorderen Betätigungsarm 42e, der an seiner vom Zangenoberteil 15 abgewandten Rückseite eine äußere, gekrümmte Angriffsfläche 42f für den Eingriff mit einer zweiten, hinteren Öffnungsrolle 45b der Öffnungsstation 46 besitzt.

Eine obere Klemmvorrichtung 30 umfaßt ferner zwei, jeweils einem ihrer beiden zweiarmigen Klemmhebeln 41,42 zugeordnete, äußere, gekrümmte Klemmflächen 21b,22b, welche jeweils an der Außenseite einer der beiden schwenkbaren Backformunterteile 21,22 der unteren Formhälfte 18 der Backform 16, jeweils nahe der Haupt-Formtrennungsebene der Backform 16 angebracht sind. Diese äußeren, gekrümmten Klemmflächen 21b,22b sind jeweils an der zur Laufrichtung 8 quer verlaufenden Seitenfläche eines, in die Rückseite des jeweiligen Backformunterteiles 21, 22 eingelassenen, vorzugsweise aus Hartmetall bestehenden Einsatzes 21d,22c angeordnet.

Die an der Außenseite des vorderen Backformunterteiles 21 nahe der Haupt-Formtrennungsebene der Backform 16 angebrachte, vordere, gekrümmte Klemmfläche 21b ist als Teil einer eigenen Kreiszylinderfläche mit zur Schwenkachse 44 paralleler Zylinderachse ausgebildet und dem vorderen Klemmabschnitt 41c des vorderen Klemmhebels 41 zugeordnet. Durch Verschwenken des vorderen Klemmhebels 41 bei geschlossener Backform 16 kann die, am vorderen Klemmabschnitt 41c des vorderen Klemmhebels 41 angeordnete, der Schwenkachse 44 zugewandte, ebene Klemmfläche 41d mit der vorderen, gekrümmten Klemmfläche 21b des vorderen Backformunterteiles 21 in einen kraftschlüssigen und selbsthemmenden Reibungseingriff gebracht und in diesem Eingriff entlang der vorderen, gekrümmten Klemmfläche 21b verschoben werden.

Die an der Außenseite des hinteren Backformunterteiles 22 nahe der Haupt-Formtrennungsebene der Backform 16 angebrachte, hintere, gekrümmte Klemmfläche 22b ist als Teil einer eigenen Kreiszylinderfläche mit zur Schwenkachse 44 paralleler Zylinderachse ausgebildet und dem hinteren Klemmabschnitt 42c des hinteren Klemmhebels 42 zugeordnet. Durch Verschwenken des hinteren Klemmhebels 42 bei geschlossener Backform 16 kann die, am hinteren Klemmabschnitt 42c des hinteren Klemmhebels 42 angeordnete, der Schwenkachse 44 zugewandte, ebene Klemmfläche 42d mit der hinteren, gekrümmten Klemmfläche 22b des hinteren Backformunterteiles 22 in einen kraftschlüssigen und selbsthemmenden Reibungseingriff gebracht und in diesem Eingriff entlang der hinteren, gekrümmten Klemmfläche 22b verschoben werden.

Die beiden, an der Oberseite des Zangenoberteiles 15 schwenkbar gelagerten Klemmhebel 41,42 der oberen Klemmvorrichtung 30 werden beim Festziehen der oberen Klemmvorrichtung 30 an der geschlossenen Backforrn 16 mit ihren Klemmabschnitten 41c, 42c zueinander geschwenkt, um die Klemmabschnitte 41c,42c mit den beiden gekrümmten Klemmflächen 21b,22b in Eingriff zu bringen, die an den Außenseiten der beiden Backformunterteile 21,22, jeweils nahe der Haupt-Formtrennungsebene der Backform 16 angebracht sind. Beim Losen der oberen Klemmvorrichtung 30 von der geschlossenen Backform 16 werden die beiden Klemmhebel 41,42 mit ihren Klemmabschnitten 41c,42c auseinander geschwenkt, um die Klemmabschnitte 41c,42c von diesen beiden gekrümmten Klemmflächen 21b,22b der beiden Backformunterteile 21,22 zu lösen.

### 1.7. UNTERE KLEMMVORRICHTUNGEN:

Die an der Backform 16 quer zur Laufrichtung 8 jeweils im Abstand voneinander angeordneten, untereinander baugleichen, selbstnachstellenden, unteren Klemmvorrichtungen 31 sind jeweils unterhalb einer oberen Klemmvorrichtung 30 am unteren Ende der beiden Backformunterteile 21,22 direkt angebracht und erlauben es, im Bereich des unteren Endes der Backform 16 zusätzlich eine zusätzliche Vorspannkraft zum Zuhalten der geschlossenen Matrize auf die Backformunterteile 21,22 aufzubringen.

Jede untere Klemmvorrichtung 31 umfaßt einen unteren, zweiarmigen Klemmhebel 47, welcher in einem, an der Außenseite des hinteren Backformunterteiles 22 der Backform 16 nahe dessen unterem Ende befestigten Lager 48 um eine quer zur Laufrichtung 12 angeordnete Schwenkachse 49 schwenkbar gelagert ist. Der untere Klemmhebel 47 besitzt einen, von der Schwenkachse 49 in Laufrichtung 8 nach vorne ragenden, im wesentlichen C-förmigen, unteren Klemmarm 47a, der am unteren Ende der beiden Backformunterteile 21,22 die zweite Formtrennungsebene der Backform 16 übergreift und an seiner, von den beiden Backformunterteilen 21,22 abgewandten Rückseite eine äußere, gekrümmte Angriffsfläche 47b für den Eingriff mit einer unteren Schließrolle 50a einer weiteren Schließstation 50 besitzt, in der alle nebeneinander angeordneten, unteren Klemmvorrichtungen 31 einer Backform 16 gleichzeitig festgezogen werden. Der untere Klemmarm 47a des unteren Klemmhebels 47 besitzt ferner an seinem, von der Schwenkachse 49 entfernten und zu dieser hin abgewinkelten freien Ende einen unteren Klemmabschnitt 47c mit einer, der Schwenkachse 49 zugewandten, ebenen Klemmfläche 47d an seiner, den beiden Backformunterteilen 21,22 zugewandten Vorderseite. Der untere Klemmhebel 47 besitzt ferner einen, von der Schwenkachse 49 entgegen der Laufrichtung 8 nach hinten ragenden, hinteren Betätigungsarm 47e, der an seiner von den beiden Backformunterteilen 21,22 abgewandten Rückseite eine äußere Angriffsfläche 47f für den Eingriff mit einer unteren Öffnungsrolle 51a einer weiteren Öffnungsstation 51 besitzt.

Jede untere Klemmvorrichtung 31 umfaßt ferner eine, der ebenen Klemmfläche 47d des unteren Klemmhebels 47 zugeordnete, äußere, untere, gekrümmte Klemmfläche 21c, welche an der Außenseite des vorderen Backformunterteiles 21 nahe dessen unterem Ende angebracht ist. Diese untere, gekrümmte Klemmfläche 21c ist als Teil einer eigenen Kreiszylinderfläche mit zur Schwenkachse 49 paralleler Zylinderachse ausgebildet. Durch Verschwenken des unteren Klemmhebels kann seine, seiner Schwenkachse 49 zugewandte, ebene Klemmfläche 47d mit der unteren, gekrümmten Klemmfläche 21c des vorderen Backformunterteiles 21 in einen kraftschlüssigen und selbsthemmenden Reibungseingriff gebracht und in diesem Eingriff entlang der unteren, gekrümmten Klemmfläche 21c verschoben werden.

### 1.8. BETÄTIGUNG DER OBEREN UND UNTEREN KLEMMVORRICHTUNGEN:

Wenn eine offene Backzange 7 im Vorkopf 3 die, in der oberen Transportebene 9 den unteren Klemmvorrichtungen 31 zugeordnete weiteren Schließstation 50 passiert, werden die unteren Klemmvorrichtungen 31 ihrer Backform 16 an der geschlossenen unteren Formhälfte 18 der Backform 16 gleichzeitig festgezogen. Anschließend wird die noch offene Backzange 7 von der Backzangenkette 6 zur Aufgießstation 4 transportiert, in der Back- bzw. Gießmasse in die geschlossene untere Formhälfte 18 eingebracht wird.

Nach der Aufgießstation 4 werden Backzange 7 und Backform 16 durch Absenken des Zangenoberteiles 15 geschlossen und die oberen Klemmvorrichtungen 30 beim Passieren der, in der oberen Transportebene 9 den oberen Klemmvorrichtungen 30 zugeordneten Schließstation 45 an der geschlossenen Backform 16 gleichzeitig festgezogen. Nun sind Backzange 7 und Backform 16 geschlossen und die Formkerne 19 der oberen Formhälfte 17 vollständig in die Formausnehmungen 20 der geschlossenen, unteren Formhälfte 18 eingefahren. Der Zangenoberteil 15 ist durch die drei oberen Klemmvorrichtungen 30, die die drei Backformteile 17,21,22 der geschlossenen Backform 16 gegenseitig mit einer vorgegebenen Vorspannkraft kraftschlüssig aneinanderdrücken, mit dem Zangenunterteil 13 zu einer Einheit untrennbar verbunden. In diesem Zustand verlaßt die Backzange 7 den Vorkopf 3 in der oberen Transportebene 9, durchläuft den Backraum 2, wo sie an der hinteren Umlenkung 12 auf den Kopf gestellt wird, und tritt in der unteren Transportebene 10 wieder in den Vorkopf 3 ein.

Im Vorkopf 3 werden an der, auf den Kopf gestellten, geschlossenen Backzange 7 die, an der jetzt nach oben weisenden Unterseite der geschlossenen Backform 16 angeordneten, unteren Klemmvorrichtungen 31 beim Passieren der, in der unteren Transportebene 10 den unteren Klemmvorrichtungen 31 zugeordneten weiteren Öffnungsstation 51 gelöst. Die, an der jetzt nach unten weisenden Oberseite der geschlossenen Backform 16 angeordneten, oberen Klemmvorrichtungen 30 werden beim Passieren der, in du unteren Transportebene 10 den oberen Klemmvorrichtungen 30 zugeordneten Öffnungsstation 46 gelöst.

In dem, in den Fig. 1 bis 20 dargestellten Ausführungsbeispiel eines Backofens 1 ist die Öffnungsvon 46 für die oberen Klemmvorrichtungen 30 der Öffnungsstation 51 für die unteren Klemmvorrichtungen 31 In Laufrichtung 8 nachgeordnet.

Beim Passieren der beiden Öffnungsstationen 46,51 ist die, durch die Klemmvorrichtungen 30,31 der Backform 16 gebildete, untrennbare Einheit von Zangenoberteil 15 und Zangenunterteil 13 durch das Lösen der oberen und unteren Klemmvorrichtungen 30,31 aufgelöst worden, sodaß nach der Öffnungsstation 46 die einzelnen Teile 17,21,22 der Backform 16 unabhängig von einander bewegt werden können. In dem an die Öffnungsstation 46 in Laufrichtung 8 anschließenden Teil des Vorkopfes 3 wird die Backform 16 an der Haupt-Formtrennungsebene beim Auseinanderfahren von Zangenoberteil 15 und Zangenunterteil 13 geöffnet und die untere Formhälfte 18 der Backform 16 beim Passieren der vorderen Umlenkung 11 an der zweiten Formtrennungsebene durch die, in der Backzangenkette 6 beidseits der Backzange 7 angeordneten Bewegungsmechanismen 26 geöffnet.

### 1.8.1. SCHLIESSEN DER UNTEREN KLEMMVORRICHTUNGEN:

Die unteren Klemmvorrichtungen 31 der Backzange 7 werden in der, den unteren Klemmvorrichtungen 31 zugeordneten weiteren Schließstation 50 des Vorkopfes 3 an der geschlossenen unteren Formhälfte 18 der Backform 16 bei offener Backzange 7 gleichzeitig festgezogen. Die beiden Klemmhebel 41,42 der oberen Klemmvorrichtungen 30 der Backzange 7 sind durch die auf sie wirkende Schwerkraft mit ihren Klemmabschnitten 41c,42c zueinandergeschwenkt.

Die weitere Schließstation 50 besitzt drei, quer zur Laufrichtung 8 nebeneinander angeordnete, jeweils einer der drei unteren Klemmvorrichtungen 31 der Backform 16 zugeordnete Schließrollen 50a, welche in der oberen Transportebene 9 des Backofens 1 jeweils unterhalb der Bahn der Backzangenkette 6 angeordnet und am Gestell des Backofens 1 federnd abgestüzt sind.

Wenn eine offene Backzange 7 die weitere Schließstation 50 passiert, kommt jede Schließrolle 50a jeweils mit der äußeren Angriffsfläche 47b an der Rückseite des, sich in Laufrichtung 8 nach vorne erstreckenden, unteren Klemmarmes 47a des unteren Klemmhebels 47 der jeweils zugeordneten unteren Klemmvorrichtung 31 in Eingriff und schwenkt diesen unteren Klemmhebel 47 zum vorderen Backformunterteil 21 hin, bis er mit seiner ebenen Klemmfläche 47d auf der ihm zugeordneten, unteren, äußeren, gekrümmten Klemmfläche 21c des vorderen Backformunterteiles 21 in einem kraftschlüssigen und selbsthemmenden Reibungseingriff festgezogen ist.

Im ersten Teil dieser Schwenkbewegung wird der untere Klemmhebel 47 zum vorderen Backformunterteil 21 hin verschwenkt, bis er mit seiner ebenen Klemmfläche 47d mit der ihm zugeordneten, gekrümmten Klemmfläche 21c des vorderen Backformunterteiles 21 in einen kraftschlüssigen und selbsthemmenden Reibungseingriff kommt. Im zweiten Teil dieser Schwenkbewegung wird der untere Klemmhebel 47 mit seiner ebenen Klemmfläche 47d in diesem Eingriff an dieser gekrümmten Klemmfläche 21c des vorderen Backformunterteiles 21 entlanggeschoben. bis das zwischen den beiden Backformunterteilen 21,22 der Backform 16 vorhandene Bewegungsspiel bzw. das in der unteren Klemmvorrichtung 31 vorhandene Bewegungsspiel beseitigt ist und die beiden Backformunterteile 21,22 mit ihren einander gegenseitig zugeordneten Dichtflächen 21a,22a aneinanderliegen. Im dritten Teil dieser Schwenkbewegung wird der untere Klemmhebel 47 mit seiner ebenen Klemmfläche 47d im kraftschlüssigen und selbsthemmenden Reibungseingriff an der ihm zugeordneten, gekrümmten Klemmfläche 21c des vorderen Backformunterteiles 21 weiter entlanggeschoben, bis die beiden Backformunterteile 21,22 der Backform 16 an ihren einander gegenseitig zugeordneten Dichtflächen 21a,22a mit einer über den Anpreßruck der Schließrolle 50a voreinstellbaren, durch die elastische Dehnung des unteren Klemmarmes 47a aufgebrachten Vorspannkraft gegeneinander gedrückt werden.

### 1.8.2. SCHLIESSEN DER OBEREN KLEMMVORRICHTUNGEN;

Nach dem Passieren der Aufgießstation 4 wird der Zangenoberteil 15 der Backzange 7 durch das Zusammenwirken seiner Steuerrollen 28 mit den Führungsschienen 27 des Vorkopfes 3 zum Zangenunterteil 13 hin abgesenkt und die Backzange 7 und ihre Backform 16 an der Haupt-Formtrennungsebene geschlossen.

Die beiden Klemmhebel 41,42 der oberen Klemmvorrichtungen 30 der Backzange 7 sind durch die Schwerkraft mit ihren Klemmabschnitten 41c,42c zueinandergeschwenkt. Beim Absenken des Zangenoberteiles 15 kommen die Klemmhebel 41,42 mit den freien Enden ihrer Klemmabschnitte 41c,42c jeweils mit der oberen Stirnseite jenes Einsatzes 21d,22c in Eingriff, der die dem jeweiligen Klemmabschnitt 41c,42c zugeordnete, äußere gekrümmte Klemmfläche 21b,22b des jeweiligen Backformunterteiles 21,22 trägt. Durch diesen Eingriff werden die Klemmhebel 41,42 beim Absenken des Zangenoberteiles 15 entgegen der Schwerkraft auseinandergeschwenkt bis sie mit ihren Klemmabschnitten 41c,42c über die äußeren Ränder der Einsätze 21d,22c hinausgleiten. Anschließend werden die Klemmabschnitte 41c,42c der Klemmhebel 41,42 durch die Schwerkraft zueinandergeschwenkt und ihre ebenen Klemmflächen 41d,42d mit den jeweils zugeordneten, äußeren gekrümmten Klemmflächen 21b,22b der beiden Backformunterteile 21,22 in Eingriff gebracht.

Die jeweilige Backzange 7 kommt mit ihren, durch die Wirkung der Schwerkraft bereits teilweise angezogenen, oberen Klemmvorrichtungen 30 zu der, den oberen Klemmvorrichtungen 30 zugeordneten Schließstation 45 des Vorkopfes 3, in der die oberen Klemmvorrichtungen 30 an der geschlossenen Backform 16 festgezogen werden. Die Schließstation 45 besitzt drei, quer zur Laufrichtung 8 nebeneinander angeordnete, jeweils einer oberen Klemmvorrichtung 30 der Backform 16 zugeordnete Schließrollenpaare, die jeweils aus einer ersten, vorderen Schließrolle 45a und einer zweiten, hinteren Schließrolle 45b bestehen. Die beiden Schließrollen 45a,45b jedes Schließrollenpaares sind im Backofen 1 oberhalb der Bahn der Backzangenkette 6 angeordnet und am Gestell des Backofens 1 oberhalb der Bahn der Backzangenkette 6 federnd abgestützt.

Wenn eine geschlossene Backzange 7 die Schließstation 45 passiert, kommt bei jedem Schließrollenpaar und der ihm zugeordneten oberen Klemmvorrichtung 30 jeweils die vordere Schließrolle 45a mit der äußeren Angriffsfläche 41b an der Rückseite des vorderen Klemmarmes 41a des vorderen Klemmhebels 41 in Eingriff und die hintere Schließrolle 45b mit der äußeren Angriffsfläche 42b an der Rückseite des hinteren Klemmarmes 42a des hinteren Klemmhebels 42 in Eingriff. Durch diesen Eingriff mit den beiden Schließrollen 45a,45b werden die beiden Klemmarme 41a,42a der beiden Klemmhebei 41,42 zwangsweise weiter zueinandergeschwenkt. Dabei werden die ebenen Klemmflächen 41d,42d der Klemmarme 41a,42a im kraftschlüssigen und selbsthemmenden Reibungseingriff mit der jeweils zugeordneten äußeren gekrümmten Klemmfläche 21b,22b am Einsatz 21d,22c des jeweiligen Backformunterteiles 21,22 an dieser gekrümmten Klemmfläche 21b,22b zwangsweise entlanggeschoben bis das Bewegungsspiel zwischen oberer und unterer Formhälfte 17,18 bzw. das Bewegungsspiel innerhalb der jeweiligen oberen Klemmvorrichtung 30 beseitigt ist und die ebenen Klemmflächen 41d,42d der Klemmarme 41a,42a, unter elastischer Dehnung der Klemmarme 41a,42a, an diesen äußeren gekrümmten Klemmflächen 21b,22b der Backformunterteile 21,22 mit einer vorgegebenen Vorspannkraft festgezogen sind.

### 1.8.3. ÖFFNEN DER UNTEREN KLEMMVORRICHTUNGEN;

Die unteren Klemmvorrichtungen 31 der Backzange 7 werden in der weiteren Öffnungsstation 51 des Backofens 1 von der geschlossenen Backform 16 gelöst. Die weitere Öffnungsstation 51 besitzt drei, quer zur Laufrichtung 8 nebeneinander angeordnete, jeweils einer unteren Klemmvorrichtung 31 der Backform 16 zugeordnete Öffnungsrollen 51a, welche in der unteren Transportebene 10 des Backofens jeweils oberhalb der Bahn der Backzangenkette 6 angeordnet und am Gestell des Backofens 1 federnd abgestützt sind.

Wenn eine geschlossene Backzange 7 die weitere Öffnungsstation 51 passiert, kommt jeweils eine Öffnungsrolle 51a bei der ihr zugeordneten unteren Klemmvorrichtung 31 mit der äußeren Angriffsfläche 47f an der Rückseite des, sich entgegen der Laufrichtung 8 nach hinten erstreckenden, hinteren Betätigungsarmes 47e des unteren Klemmhebeis 47 in Eingriff. Durch diesen Eingriff wird der untere Klemmhebel 47 der jeweiligen unteren Klemmvorrichtung 31 mit seinem sich in Laufrichtung 8 nach vorne erstreckenden, unteren Klemmarm 47a vom vorderen Backformunterteil 21 weggeschwenkt. Dabei wird die ebene Klemmfläche 47d des Klemmarmes 47a zuerst an der ihr zugeordneten gekrümmten Klemmfläche 21c des vorderen BackformunterteiIes 21 entlanggeschoben und schließlich von dieser gelöst. Dabei wird zuerst die durch die elastische Dehnung des Klemmarmes 47a aufgebrachte Vorspannkraft aufgehoben, die die beiden Backformunterteile 21,22 mit ihren einander jeweils gegenseitig zugeordneten, der zweiten Formtrennungsebene zugewandten Dichtflächen 21a,22a aneinanderdrückt. Anschliessend wird die ebene Klemmfläche 47d des Klemmarmes 47a an der gekrümmten Klemmfläche 21c des vorderen Backformunterteiles 21 im kraftschlüssigen und selbsthemmenden Reibungseingriff mit dieser entlanggeschoben bis das in der unteren Klemmvorrichtung 31 vorgesehene Bewegungsspiel wiederhergestellt ist und die beiden Backformunterteile 21,22 freigegeben sind.

### 1.8.4. ÖFFNEN DER OBEREN KLEMMVORRICHTUNGEN:

Die oberen Klemmvorrichtungen 30 der Backzange 7 werden in der, den oberen Klemmvorrichtungen 30 zugeordneten Öffnungsstation 46 des Backofens 1 von der geschlossenen Backform 16 gelöst. Die Öffnungsstation 46 besitzt drei, quer zur Laufrichtung 8 nebeneinander angeordnete, jeweils einer oberen Klemmvorrichtung 30 der Backform 16 zugeordnete Öffnungsrollenpaare, die jeweils aus einer ersten, vorderen Öffnungsrolle 46a und einer zweiten, hinteren Öffnungsrolle 46b bestehen. Die beiden Öffnungsrollen 46a,46b jedes Öffnungsrollenpaares sind in der unteren Transportebene 10 des Backofens 1 unterhalb der Bahn der Backzangenkette 6 angeordnet und am Gestell des Backofens 1 unterhalb der Bahn der Backzangenkette 6 federnd abgestützt.

Wenn eine geschlossene Backzange 7 die Öffnungsstation 46 passiert, kommen ihre oberen Klemmvorrichtung 30 mit jeweils einem der Öffnungsrollenpaare in Eingriff. Bei jeder oberen Klemmvorrichtung 30 kommt die vordere Öffnungsrolle 46a eines Öffnungsrollenpaares mit der äußeren Angriffsfläche 41f an der Rückseite des hinteren Betätigungsarmes 41e des vorderen Klemmhebels 41 in Eingriff und die hintere Öffnungsrolle 46b dieses Öffnungsrollenpaares mit der äußeren Angriffsfläche 42f an der Rückseite des vorderen Betätigungsarmes 42e des hinteren Klemmhebels 42 in Eingriff. Durch diesen Eingriff der beiden Öffnungsrollen 46a,46b mit den beiden Klemmhebeln 41,42 werden deren Klemmarme 41a,42a auseinander geschwenkt. Dabei werden die ebenen Klemmflächen 41d,42d der Klemmarme 41a,42a zuerst an den ihnen jeweils zugeordneten gekrümmten Klemmflächen 21b,22b der beiden Backformunterteile 21,22 entlanggeschoben und schließlich von diesen gelöst. Dabei werden bei beiden Klemmhebeln 41,42 zuerst die durch die elastische Dehnung ihrer Klemmarme 41a,42a aufgebrachten Vorspannkräfte aufgehoben, die die beiden Formhälften 17,17 bzw. die beiden Backformunterteile 21,22 jeweils mit ihren einander jeweils gegenseitig zugeordneten, der Haupt-Formtrennungsebene bzw. der zweiten Formtrennungsebene zugewandten Dichtflächen 17a, 18a bzw. 21a,22a aneinanderdrücken. Anschließend werden die ebenen Klemmflächen 41d,42d der Klemmarme 41a,42a an den ihnen jeweils zugeordneten gekrümmten Klemmflächen 21b,22b der beiden Backformunterteile 21,22 jeweils im kraftschlüssigen und selbsthemmenden Reibungseingriff mit diesen entlanggeschoben bis das in der oberen Klemmvorrichtung 30 vorgesehene Bewegungsspiel wiederhergestellt ist und die Backformteile 17, 18 bzw. 21,22 freigegeben sind.

### 1.8.5. EINGRIFF DER KLEMMVORRICHTUNGEN :

Beim Festziehen der oberen und unteren Klemmvorrichtungen 30,31 durchläuft der jeweilige, um seine Schwenkachse 44,49 in Anzugsrichtung verschwenkte Klemmhebel 41,42,47 mit seiner ebenen Klemmfläche 41d,42d,47d eine kreisförmige Bewegungsbahn, welche auf die, dem jeweiligen Klemmhebel 41,42,47 zugeordnete, äußere, gekrümmte Klemmfläche 21b,21c,22b am jeweiligen Backformunterteil 21,22 der geschlossenen Backform 16 trifft.

Die ebene Klemmfläche 41d,42d,47d am Klemmabschnitt 41c, 42c,47c jedes Klemmhebels 41,42,47 ist parallel zur Schwenkachse 44,49 dieses Klemmhebels 41,42,47 angeordnet. Die ebene Klemmfläche 41d,42d,47d wird jeweils durch eine zur Schwenkachse 44,49 ihres Klemmhebels 41,42,47 parallele Vorderkante und durch eine zur Schwenkachse 44,49 ihres Klemmhebels 41, 42,47 parallele Hinterkante begrenzt. Beim Festziehen des Klemmhebels 41,42,47 eilt die Vorderkante der ebenen Klemmfläche 41d,42d,47d ihrer Hinterkante in Anzugsrichtung voraus, wobei der Schwenkradius der Vorderkante geringfügig größer ist als der Schwenkradius der Hinterkante. Der Schwenkradius des Klemmabschnittes 41c,42c,47c des Klemmhebels 41,42,47 ist der, zwischen Vorderkante und Hinterkante liegenden, zur Schwenkachse 44,49 parallelen Mittellinie der ebenen Klemmfläche 41d,42d,47d zugeordnet. Die ebene Klemmfläche 41d,42d,47d steigt gegenüber der zum Schwenkradius des Klemmabschnittes 41c,42c,47c senkrechten Tangentialebene in Anzugsrichtung von innen nach außen an.

Die an den Backformunterteilen 21,22 angeordneten den ebenen Klemmflächen 41d,42d,47d der Klemmhebel 41,42,47 jeweils zugeordneten, äußeren, gekrümmten Klemmflächen 21b,21c,22b der oberen und unteren Klemmvorrichtungen 30,31 sind jeweils als Teil einer Kreiszylinderfläche ausgebildet. Bei jeder äußeren, gekrümmten Klemmfläche 21b,21c,22b entspricht der Krümmungsradius dar Kreiszylinderfläche dem Schwenkradius des Klemmabschnittes 41c,42c,47c des zugeordneten Klemmhebels 41,42,47 und die Zylinderachse der Kreiszylinderfläche verläuft parallel zur Schwenkachse 44,49 des zugeordneten Klemmhebels 41,42,47. Die äußere, gekrümmte Klemmfläche 21b,21c, 22b wird durch eine zur Zylinderachse parallele Vorderkante und durch eine zur Zylinderachse parallele Hinterkante begrenzt. Die zwischen Vorderkante und Hinterkante liegende, zur Zylinderachse parallele Mittellinie der gekrümmten Klemmfläche 21b, 21c,22b ist der Auftreffzone zugeordnet, auf der die ebene Klemmfläche 41d,42d,47d des zugeordneten Klemmhebels 41,42,47 mit ihrem, ihre Mittellinie umgebenden Bereich beim Verschwenken und Festziehen des zugeordneten Klemmhebels 41,42,47 auftrifft. Beim Verschwenken des Klemmhebels 41,42, 47 passiert seine ebene Klemmfläche 41d,42d,47d mit ihrer Vorderkante die Vorderkante dar gekrümmten Klemmfläche 21b,21c, 22b bevor sie auf der gekrümmten Klemmfläche 21b,21c,22b auftrifft

Die Zylinderachse der Kreiszylinderfläche der gekrümmten Klemmfläche 21b,21c,22b ist gegenüber der Schwenkachse 44,49 des zugeordneten Klemmhebels 41,42,47 in Anzugsrichtung nach vorne versetzt, sodaß beim Auftreffen der ebenen Klemmfläche 41d,42d,47d das Klemmhebels 41,42,47 auf der ihm zugeordneten, äußeren, gekrümmten Klemmfläche 21b,21c,22b des Backformunterteiles 21,22 die äußere, gekrümmte Klemmfläche 21b,21c, 22b gegenüber der auf ihr aufliegenden ebenen Klemmfläche 41d,42d,47d des ihr zugeordneten Klemmhebels 41,42,47 von der Auftreffzone weg allmählich radial nach außen ansteigt.

In der Auftreffzone bildet die äußere, gekrümmte Klemmfläche 21b,21c,22b zusammen mit der auf ihr aufliegenden ebenen Klemmfläche 41d,42d,47d einen, sich in Anzugsrichtung des Klemmhebels 41,42,47 sichelförmig verjüngenden Spalt. Die Höhe und der keilförmige Verlauf dieses sichelförmigen Spaltes hängt von der, für einen kraftschlüssigen und selbsthemmenden Reibungseingriff zwischen der äußeren, gekrümmten Klemmfläche 21b,21c,22b des Backformunterteiles 21,22 und der ebenen Klemmfläche 41d,42d,47d des zugeordneten Klemmhebels 41,42,47 für die beiden Klemmflächen jeweils ausgewählten Werkstoffpaarung der für die beiden Klemmflächen 41d,42d,47d bzw. 21b, 21c,22b verwendeten Werkstoffe ab.

Zum Festziehen eines Klemmhebels 41,42,47 auf der ihm zugeordneten, äußeren, gekrümmten Klemmfläche 21b,21c,22b des jeweiligen Backformunterteiles 21,22 drückt die jeweilige in Anzugsrichtung federnd vorbelastete Schließrolle 45a,45b,50a gegen die äußere Angriffsfläche 41b,42b,47b auf der Rückseite des Klemmarmes 41a,42a,47a des Klemmhebels 41,42,47 und drückt dessen Klemmabschnitt 41c,42c,47c mit einer vorgegebenen Vorspannkraft zum Backformunterteil 21,22 hin. Dadurch reitet der Klemmarm 41a,42a,47a des Klemmhebels 41,42,47 mit seiner ebenen Klemmfläche 41d,42d,47d auf die Auftreffzone der äußeren, gekrümmten Klemmfläche 21b,21c,22b des Backformunterteiles 21,22 auf. Dabei kommt es zu einem kraftschlüssigen und selbsthemmenden Reibungseingriff zwischen der ebenen Klemmfläche 41d,42d,47d und der ihr zugeordneten, äußeren, gekrümmten Klemmflache 21b. 21c,22b und in weiterer Folge zu einer elastischen Dehnung des Klemmarmes 41a,42a,47a des Klemmhebels 41,42,47, welche durch den kraftschlüssigen und selbsthemmenden Reibungseingriff der beiden Klemmflächen 41d, 42d,47d bzw. 21b,21c,22b festgehalten und quasi eingefroren wird.

Zum Lösen eines Klemmhebels 41,42,47 von der ihm zugeordneten, äußeren, gekrümmten Klemmfläche 21b,21c,22b des jeweiligen Backformunterteiles 21,22 drückt die jeweilige in Löserichtung federnd vorbelastete Öffnungsrolle 46a,46b,51a gegen die Angriffsfläche 41f,42f,47f auf der Rückseite des Betätigungsarmes 41e,42e,47e des Klemmhebels 41,42,47. Dadurch wird der Klemmabschnitt 41c,42c,47c Klemmhebels 41,42,47 mit einer vorgegebenen Vorspannkraft vom Backformunterteil 21,22 weggedrückt. Die durch die Öffnungsrolle 46a,46b,51a aufgebrachten, großen, äußeren Kräfte überwinden den kraftschlüssigen und selbsthemmenden Reibungseingriff zwischen der ebenen Klemmfläche 41d,42d,47d des Klemmarmes 41a,42a,47a und der zugeordneten, äußeren, gekrümmten Klemmfläche 21b,21c,22b des Backformunterteiles 21,22 und bauen die durch diesen Reibungseingriff festgehaltene bzw. eingefrorene elastischen Dehnung des Klemmarmes 41a,42a,47a des Klemmhebels 41,42,47 wieder ab.

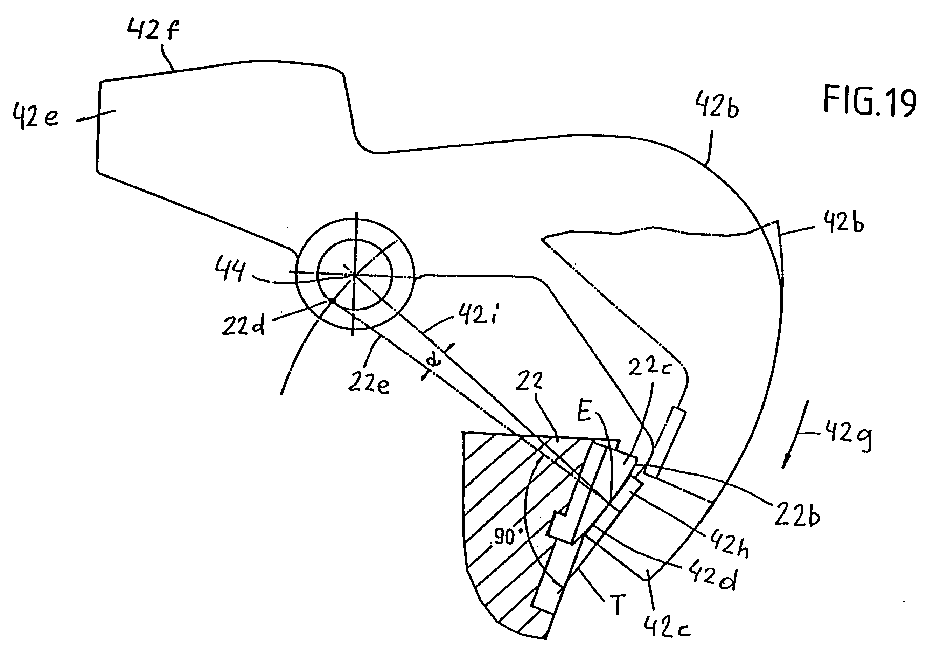

In Fig. 19 ist ein Ausführungsbeispiel für den gegenseitigen Eingriff zwischen der ebenen Klemmfläche eines Klemmhebels und derzugeordneten, äußeren, gekrümmten Klemmfläche eines Backformunterteiles am Beispiel einer oberen Klemmvorrichtung 30 dargestellt.

Fig. 19 zeigt den, um seine Schwenkachse 44 in Anzugsrichtung 42g verschwenkten, hinteren Klemmhebei 42 in seiner, mit seiner ebenen Klemmfläche 42d an der ihm zugeordneten, hinteren, gekrümmten Klemmfläche 22b des hinteren Backformunterteiles 22 festgezogenen Stellung. Die durch den Betrieb des Backofens 1 an der Backform 16 und der oberen Klemmvorrichtung 30 im Laufe der Zeit auftretenden Abnützungserscheinungen sind in der Darstellung nicht berücksichtigt, sodaß die beiden Klemmflächen 42d und 22b in der Eingriffsstellung mit ihren Mittellinien aufeinanderliegen. Mit zunehmender Abnützung verschiebt sich die Auftreffzone auf der gekrümmten Klemmfläche 22b zu ihrer Hinterkante hin.

Fig. 19 zeigt zusätzlich den Klemmabschnitt 42c des Klemmarmes 42a des Klemmhebels 42 in einer von der gekrümmten Klemmfläche 22b gelösten Schwenkstellung, in der der Klemmabschnitt 42c mit seiner ebenen Klemmfläche 42d von der ihm zugeordneten, gekrümmten Klemmfläche 22b entgegen der Anzugsrichtung 42g weggeschwenkt ist.

Im festgezogenen Zustand sitzt der hintere Klemmhebel 42 mit der ebenen Klemmfläche 42d seines Klemmabschnittes 42c mit deren, ihre Mittellinie umgebenden Bereich auf der Auftreffzone der gekrümmten Klemmfläche 22b des hinteren Backformunterteiles 22 auf. In Fig. 19 sind die dabei zusammenfallenden Mittellinien der beiden Klemmflächen 42d und 22b durch den Eingriffspunkt E dargestellt. Die ebene Klemmfläche 42d ist gegenüber der, durch ihre Mittellinie verlaufenden, zum Schwenkradius 42i des Klemmabschnittes 42c senkrechten Tangentialebene um einen Winkel α (Alpha) nach außen angestellt. Die ebene Klemmfläche 42d liegt an der gekrümmten Klemmfläche 22b in der, durch die Mittellinie der gekrümmten Klemmfläche 22b verlaufenden, zum Krümmungsradius 22r der gekrümmten Klemmfläche 22b senkrechten Tangentialebene an. In Fig. 19 ist die zu dieser Tangentialebene parallele Ebene T eingezeichnet, in der die zur ebenen Klemmfläche 42d parallele Rückseite des Hartmetalleinsatzes 42h liegt, an dessen Vorderseite die ebene Klemmfläche 42d ausgebildet ist. Die Krümmungsachse 22d der gekrümmten Klemmfläche 22b liegt parallel zur Schwenkachse 44 des hinteren Klemmhebels 42 und ist gegenüber dieser in Anzugsrichtung 42g nach vorne versetzt. Der Schwenkradius 42i des Klemmabschnittes 42c und der Krümmungsradius 22r der gekrümmten Klemmfläche 22b sind gleich groß. Die gekrümmte Klemmfläche 22b steigt gegenüber der, der Mittellinie der ebenen Klemmfläche 42d zugeordneten, kreisförmigen Schwenkbahn in Anzugsrichtung 42g nach vorne allmählich von innen nach außen an. Die ebene Klemmflache 42d bildet mit der gekrümmten Klemmfläche 22b einen, sich in Anzugsrichtung 42g sichelförmig verjüngenden Spalt, der im Eingriffspunkt E mit dem Winkel α (Alpha) endet. Dieser Winkel α (Alpha) ist kleiner als dar Haftreibungswinkel der für die beiden Klemmflächen 42d, 22b gewählten Werkstoffpaarung und beträgt bei einem bevorzugten Ausführungsbeispiel für die Werkstoffpaarung Hartmetall-Hartmetall 6 Grad.

### 1.9. AUSGABESTATION:

Im Vorkopf 3 entfernt sich die Bahn dar Steuerrollen 28 der Zangenoberteile 15 im Bereich der vorderen Umlenkung 11 von der mittleren Bahn der Bewegungsmechanismen 26 bis auf etwas mehr als die doppelte Höhe der Formkerne 19 und verläuft dann bis zur Aufgießstation 4 parallel zur Bahn der Zangenunterteile 13 bzw. der Transportketten 23,24. Zwischen der, die Bahn der Zangenunterteile 13 nach außen begrenzenden Bahn der Haupt-Formtrennungsebenen der Backformen 16 und der die Bahn der Zangenoberteile 15 nach innen begrenzenden Bann der freien Enden 19a der Formkerne 19 ist ein Zwischenraum 52 vorgesehen, der im Bereich der unteren Hälfte der vorderen Umlenkung 11 beginnt und sich in Laufrichtung 8 entlang der vorderen Umlenkung 11 über die Ausgabestation 5 hinaus bis zur Aufgießstation 4 erstreckt. In diesem Zwischenraum 52 ist ein bogenförmig gekrümmtes Leitblech 53 in einem vorgegebenen Abstand zur Bahn der freien Enden 19a der Formkerne 19 angeordnet.

Das Leitblech 53 erstreckt sich quer zur Laufrichtung 8 über die gesamte, quer zur Laufrichtung 8 gemessene Längserstreckung der Backformen 16. In Laufrichtung 8 erstreckt sich das Leitblech von seinem, unterhalb der Mitte der vorderen Umlenkung 11 gelegenen Anfang 53a bis zu seinem, in die Ausgabestation 5 hineinreichenden Endabschnitt 53b. Der Endabschnitt 53b des Leitbleches 53 ist entsprechend der Bahn dar zur Laufrichtung 8 parallelen, vertikalen Mittelebenen der Backformen 16 quer zur Laufrichtung 8 in einen inneren Abschnitt 53c und einen äußeren Abschnitt 53d geteilt. Der der Bahn der Führungsschwerter 14 benachbarte innere Abschnitt 53c ragt in Laufrichtung 8 über den äußeren Abschnitt 53d hinaus. Die Enden der beiden Abschnitte 53c, 53d sind in Laufrichtung 8 abgestuft und enden oberhalb eines Förderbandes 54, welches in der Ausgabestation 5 im Zwischenraum 52 angeordnet ist und quer zur Laufrichtung 8 aus dem Vorkopf 3 hinausführt.

Das Leitblech 53 bildet eine bogenförmig gekrümmte Unterstützungsfläche für die zur Mittelachse 11a der vorderen Umlenkung 11 weisenden geschlossenen Enden der gebackenen Formkörper 25, welche von den in sie hineinraganden Formkernen 19 der Backformen 16 der umlaufenden Backzangen 7 in Laufrichtung 8 über das Leitblech 53 transportiert werden. Das Leitblech 53 verhindert, daß die mit ihren geschlossenen Enden auf dem Leitblech 53 aufsitzenden, gebackenen Formkörper 25 während ihres Weitertransportes von den in sie hineinragenden Formkernen 19 der Backform 16 abrutschen.

Im Bereich der oberen Hälfte der vorderen Umlenkung 11 ist im Zwischenraum 52 eine Blasstation 55 angeordnet. In der Blasstation 55 sind über das Leitblech 53 nach außen vorstehende Blasrohre 55a in einer quer zur Laufrichtung 8 verlaufenden Reihe im Abstand voneinander angeordnet. Wenn sich ein Zangenoberteil 15 mit seinen Formkernen 19 im Bereich der Blasstation 55 bzw. der Blasrohre 55a befindet, ragt jeweils ein Blasrohr 55a zwischen zwei einander benachbarte Formkerne 19 der Backformen 16 bis zu den oberen Enden 19b dieser Formkerne 19 hinein. An den äußeren Enden der Blasrohre 55a sind zwei, jeweils quer zur Laufrichtung 8 auf die oberen Enden 19b dar Formkerne 19 gerichtete Blasdüsen 55b angeordnet.

Die gebackenen Formkörper 25 werden im Bereich der vorderen Umlenkung 11 der Backzangenkette 6 von den, in sie hineinragenden Formkernen 19 von der unteren Transportebene 10 über die vordere Umlenkung 11 bis in die obere Transportebene 9 zur Ausgabestation 5 transportiert. Beim Passieren der unteren Hälfte der vorderen Umlenkung 11 sitzen die gebackenen Formkörper 25, zufolge der Schwerkraft, lose auf den in sie hineinragenden, nach oben bzw. zur Mittelachse 11a weisenden Formkernen 19 der oberen Formhälften 17 der Zangenoberteile 15 auf und werden von den Formkernen 19 getragen. Beim Passieren der oberen Hälfte der vorderen Umlenkung 11 sitzen die gebackenen Formkörper 25 mit ihren geschlossenen Enden, zufolge der Schwerkraft, lose auf dem Leitblech 53 auf und werden vom Leitblech 53 getragen.

Beim Passieren der oberen Hälfte der vorderen Umlenkung 11 lösen sich die gebackenen Formkörper 25, zufolge der Schwerkraft, von den in sie hineinragenden Formkernen 19 und stützen sich mit ihren geschlossenen Enden am Leitblech 53 ab. Beim Passieren der Blasstation 55 wird aus den Blasdüsen 55b der, zwischen den gebackenen Formkörpern 25 und den in diese hineinragenden Formkernen 19 angeordneten Blasrohre 55a Luft gegen die oberen Enden 19b der Formkerne 19 gablasen. Diese Luft dringt, bei einem, auf dem in ihn hineinragenden Formkern 19 hängengebliebenen, gebackenen Formkörper 25 entlang dem oberen Ende 19b dieses Formkernes 19 und durch den offenen Rand dieses Formkörpers 25 in diesen hängengebliebenen, gebackenen Formkörper 25 ein und löst diesen von dem in ihn hineinragenden Formkern 19. Die oberhalb des offenen Randes des hängengebliebenen gebackenen Formkörpers 25 gegen das obere Ende 19b des in ihn hineinragenden Formkernes 19 geblasene Luft gleicht einen, in dem Zwischenraum zwischen dem gebackenen Formkörper 25 und dem in ihn hineinragenden Formkern 19 allenfalls entstandenen Unterdruck aus und verhindert ein Hängenbleiben eines beim Abkühlen geringfügig schrumpfenden, gebackenen Formkörpers 25 an dem in ihn hineinragenden Formkern 19. Die gegen die oberen Enden 19b der Formkerne 19 gerichteten Luftstrahlen stellen sicher, daß alle gebackenen Formkörper 25 von ihrem Formkern 19 abgleiten und mit ihren geschlossenen Enden auf dem Leitblech 53 auftreffen und sich mit ihren geschlossenen Enden auf dem Leitblech 53 abstützen.

In der oberen Transportebene 9 des Backofens 1 werden die, sich mit ihren geschlossenen Enden auf dem Leitblech 53 abstützenden, gebackenen Formkörper 25 von den, in sie hineinragenden und mit ihren freien Enden 19a nach unten weisenden Formkernen 19 entlang dem Leitblech 53 bis zu dessen, in der Ausgabestation 5 angeordneten Endabschnitt 53b transportiert. Von diesem Endabschnitt 53b fallen die gebackenen Formkörper 25, zufolge der Schwerkraft, über die abgestuften Enden des inneren und äußeren Abschnittes 53c,53d des Leitbleches in zwei getrennten Reihen auf das Förderband 54.

### 1.10. ÖFFNEN UND SCHLIESSEN DER MATRIZEN :

Wenn die Backzangenkette 6 im Backofen 1 in Laufrichtung 8 umläuft, werden an der, der Ausgabestation 5 vorgelagerten, vorderen Umlenkung 11 die in den Zangenunterteilen 13 enthaltenen Matrizen durch die zwischen den Backzangen 7 angeordneten und bereits aktivierten Bewegungsmechanismen 26 geöffnet und geschlossen.

Innerhalb der Backzangenkette 6 ist jeweils zwischen einer in Laufrichtung 8 vorauseilenden ersten Backzange 7 und der dieser nacheilenden zweiten Backzange 7 ein erster Bewegungsmechanismus 26 und zwischen der zweiten Backzange 7 und der dieser nacheilenden dritten Backzange 7 ein zweiter Bewegungsmechanismus 26 angeordnet.

Passiert ein aus drei Backzange 7 und zwei dazwischenliegenden Bewegungsmechanismen 26 bestehender Abschnitt der Backzangenkette 6 den Übergang von der unteren Transportebene 10 zur vorderen Umlenkung 11 in Laufrichtung 8 so geschieht folgendes.

Wenn die erste Backzange 7 den Übergang bereits passiert hat und durch die Wirkung der vorderen Umlenkung 11 auf die Backzangenkette 6 gegenüber der zweiten Backzange 7 bereits in Laufrichtung 8 nach vorne geschwenkt wurde, wird in der selbst noch nicht verschwenkten zweiten Backzange 7 der vordere Backformunterteil 21 durch den ersten Bewegungsmechanismus 26 in Laufrichtung 8 nach vorne geschwenkt. Dabei werden die, der zweiten Formtrennungsebene der zweiten Backzange 7 zugeordneten Anschläge 32b der Backformträger 32 des vorderen Backformunterteiles 21 der zweiten Backzange 7 von den, der zweiten Formtrennungsebene der zweiten Backzange 7 zugewandten Anschlägen 13i am Hauptabschnitt 13a des Zangenunterteiles 13 der zweiten Backzange 7 abgehoben.

Wenn die zweite Backzange 7 den Übergang passiert, wird sie durch die Wirkung der vorderen Umlenkung 11 auf die Backzangenkette 6 gegenüber der dritten Backzange 7 in Laufrichtung 8 nach vorne geschwenkt. Dabei wird der hintere Backformunterteil 22 der zweiten Backzange 7 durch den zweiten Bewegungsmechanismus 26 entgegen dar Laufrichtung 8 nach hinten verschwenkt und der vordere Backformunterteil 21 der dritten Backzange 7 in Laufrichtung 8 nach vorne verschwenkt. Beim hinteren Backformunterteil 22 der zweiten Backzange 7 werden die, der zweiten Formtrennungsebene der zweiten Backzange 7 zugeordneten Anschläge 33b der Backformträger 33 des hinteren Backformunterteiles 22 der zweiten Backzange 7 von den, der zweiten Formtrennungsebene der zweiten Backzange 7 zugewandten Anschlägen 13k am Hauptabschnitt 13a des Zangenunterteiles 13 der zweiten Backzange 7 abgehoben. Beim vorderen Backformunterteil 21 der dritten Backzange 7 werden die, der zweiten Formtrennungsebene der dritten Backzange 7 zugeordneten Anschläge 32b der Backformträger 32 des vorderen Backformunterteiles 21 der dritten Backzange 7 von den, der zweiten Formtrennungsebene der dritten Backzange 7 zugewandten Anschlägen 13i am Hauptabschnitt 13a des Zangenunterteiles 13 der dritten Backzange 7 abgehoben.

Beim Verschwenken der zweiten Backzange 7 durch die Wirkung der vorderen Umlenkung 11 auf die Backzangenkette 6 entsteht über die beiden Steuerlaschen 26a,26b das zweiten Bewegungsmechanismus 26 eine formschlüssige, auf Zug beanspruchte Verbindung zwischen dem hinteren Backformunterteil 22 der zweiten Backzange 7 und dem vorderen Backformunterteil 21 der dritten Backzange 7 zum Öffnen der Matrizen der zweiten und dritten Backzange 7. Bei beiden, an den Lagerbolzen 33c der Backformträger 33 des hinteren Backformunterteiles 22 der zweiten Backzange 7 angelenkten Steuerlaschen 26a,26b des zweiten Bewegungsmechanismus 26 liegen die in ihren Führungskanälen 40 geführten Steuerbolzen 32c dar Backformträger 32 das vorderen Backformunterteiles 21 der dritten Backzange 7 an den, in Laufrichtung 8 weisenden, hinteren Anschlagflächen 40d der Steuerlaschen 26a,26b des zweiten Bewegungsmechanismus 26 an.

Ebenso entsteht beim Verschwenken der ersten Backzange 7 durch die Wirkung der vorderen Umlenkung 11 auf die Backzangenkette 6 über die beiden Steuerlaschen 26a,26b des ersten Bewegungsmechanismus 26 eine formschlüssige, auf Zug beanspruchte Verbindung zwischen dem hinteren Backformunterteil 22 der ersten Backzange 7 und dem vorderen Backformunterteil 21 der zweiten Backzange 7 zum Öffnen der Matrizen der ersten und zweiten Backzange 7. Bei beiden, an den Lagerbolzen 33c der Backformträger 33 des hinteren Backformunterteiles 22 der ersten Backzange 7 angelenkten Steuerlaschen 26a,26b des ersten Bewegungsmechanismus 26 liegen die in ihren Führungskanälen 40 geführten Steuerbolzen 32c dar Backformträger 32 des vorderen Backformunterteiles 21 dar zweiten Backzange 7 an den, in Laufrichtung 8 weisenden, hinteren Anschlagflächen 40d der Steuerlaschen 26a,26b des ersten Bewegungsmechanismus 26 an.

Die jeweils in Laufrichtung 8 voneinander weggeschwenkten Backzangen 7 sind an ihren auseinandergeklappten Backformunterteilen 21,22 über die zwischen den Backzangen 7 angeordneten Bewegungsmechanismen 26 untereinander formschlüssig verbunden und werden von der Backzangenkette 6 über die vordere Umlenkung 11 zur oberen Transportebene 9 transportiert Während dieses Transportes laufen die beiden Transportketten 23, 24 über die beiden, um die Mittelachse 11a rotierenden vorderen Kettenräder 11b und die Steuerrollen 28 der Zangenoberteile 15 laufen an den Führungsschienen 27 des Vorkopfes 3 entlang.

Bei jeder Backzange 7 weisen die freien Enden 19a der Formkerne 19 des Zangenoberteiles 15 radial zur Mittelachse 11a der vorderen Umlenkung 11 und die beiden Backformunterteile 21,22 des Zangenunterteiles 13 sind symmetrisch zur zweiten Formtrennungsebene der Backform 16 auseinandergeklappt. Der Zangenoberteil 15 wird mit den Formkernen 19 seiner oberen Formhälften 17 entlang der zweiten Formtrennungsebene der Backform 16 bzw. radial zur Mittelachse 11a aus den auseinandergeklappten Backformunterteilen 21,22 der unteren Formhälfte 18 des Zangenunterteiles 13 geradlinig herausgezogen. Die in der Backform 16 gebackenen Formkörper 25 liegen beim Passieren der unteren Hälfte der vorderen Umlenkung 11, zufolge der Schwerkraft, auf den, in sie hineinragenden Formkernen 19 der oberen Formhälften 17 auf und werden von diesen bis zum Leitblech 53 und an diesem entlang in die Ausgabestation 5 transportiert.

Passiert ein aus drei Backzange 7 und zwei dazwischenliegenden Bewegungsmechanismen 26 bestehender Abschnitt der Backzangenkette 6 den Übergang von der vorderen Umlenkung 11 zur oberen Transportebene 9 in Laufrichtung 8 so geschieht folgendes.

Wenn die erste Backzange 7 den Übergang bereits passiert hat und durch die Wirkung der oberen Transportebene 9 auf die Backzangenkette 6 gegenüber der zweiten Backzange 7 bereits entgegen der Laufrichtung 8 nach hinten geschwenkt wurde, wird in der selbst noch nicht verschwenkten zweiten Backzange 7 der vordere Backformunterteil 21 durch den ersten Bewegungsmechanismus 26 entgegen der Laufrichtung 8 nach hinten geschwenkt. Dabei werden die, der zweiten Formtrennungsebene der zweiten Backzange 7 zugeordneten Anschläge 32b dar Backformträger 32 des vorderen Backformunterteiles 21 der zweiten Backzange 7 an die, der zweiten Formtrennungsebene der zweiten Backzange 7 zugewandten Anschlägen 13i am Hauptabschnitt 13a des Zangenunterteiles 13 der zweiten Backzange 7 angenähert.

Wenn die zweite Backzange 7 den Übergang passiert, wird sie durch die Wirkung der oberen Transportebene 9 auf die Backzangenkette 6 gegenüber der dritten Backzange 7 entgegen der Laufrichtung 8 nach hinten geschwenkt Dabei wird dar hintere Backformunterteil 22 der zweiten Backzange 7 durch den zweiten Bewegungsmechanismus 26 in Laufrichtung 8 nach vorne verschwenkt und der vordere Backformunterteil 21 der dritten Backzange 7 entgegen dar Laufrichtung 8 nach hinten verschwenkt. Beim hinteren Backformunterteil 22 dar zweiten Backzange 7 werden die, der zweiten Formtrennungsebene der zweiten Backzange 7 zugeordneten Anschläge 33b der Backformträger 33 des hinteren Backformunterteiles 22 der zweiten Backzange 7 an die, der zweiten Formtrennungsebene der zweiten Backzange 7 zugewandten Anschlägen 13k am Hauptabschnitt 13a des Zangenunterteiles 13 der zweiten Backzange 7 angenähert. Beim vorderen Backformunterteil 21 der dritten Backzange 7 werden die, der zweiten Formtrennungsebene der dritten Backzange 7 zugeordneten Anschläge 32b der Backformträger 32 des vorderen Backformunterteiles 21 der dritten Backzange 7 an die, der zweiten Formtrennungsebene der dritten Backzange 7 zugewandten Anschlägen 13i am Hauptabschnitt 13a das Zangenunterteiles 13 der dritten Backzange 7 angenähert.

Beim Verschwenken der zweiten Backzange 7 wird über die beiden Steuerlaschen 26a,26b des zweiten Bewegungsmechanismus 26 zuerst die, zum Öffnen der Matrizen vorgesehene, auf Zug beanspruchte, formschlüssige Verbindung zwischen dem hinteren Backformunterteil 22 der zweiten Backzange 7 und dem vorderen Backformunterteil 21 der dritten Backzange 7 aufgehoben und anschließend eine neue, zum Schließen der Matrizen vorgesehene, auf Druck beanspruchte, formschlüssige Verbindung zwischen dem hinteren Backformunterteil 22 der zweiten Backzange 7 und dem vorderen Backformunterteil 21 der dritten Backzange 7 hergestellt. In den Führungskanälen 40 beider Steuerlaschen 26a,26b des zweiten Bewegungsmechanismus werden die Steuerbolzen 32c der Backformträger 32 des vorderen Backformunterteiles 21 der dritten Backzange 7 jeweils von der, in Laufrichtung 8 weisenden, hinteren Anschlagfläche 40d der Steuerlasche 26a,26b abgehoben und gegen die vordere Anschlagfläche 40a der Steuerlasche 26a,26b zur Anlage gebracht.

Ebenso wird beim Verschwenken dar ersten Backzange 7 über die beiden Steuerlaschen 26a,26b des ersten Bewegungsmechanismus 26 zuerst die, zum Öffnen dar Matrizen vorgesehene, auf Zug beanspruchte, formschlüssige Verbindung zwischen dem hinteren Backformunterteil 22 der ersten Backzange 7 und dem vorderen Backformunterteil 21 der zweiten Backzange 7 aufgehoben und anschließend eine neue, zum Schließen der Matrizen vorgesehene, auf Druck beanspruchte, formschlüssige Verbindung zwischen dem hinteren Backformunterteil 22 der ersten Backzange 7 und dem vorderen Backformunterteil 21 der zweiten Backzange 7 hergestellt. In den Führungskanälen 40 beider Steuerlaschen 26a,26b des ersten Bewegungsmechanismus 26 werden die Steuerbolzen 32c der Backformträger 32 des vorderen Backformunterteiles 21 der zweiten Backzange 7 jeweils von der, in Laufrichtung 8 weisenden, hinteren Anschlagfläche 400 der Steuerlasche 26a,26b abgehoben und gegen die vordere Anschlagfläche 40a der Steuerlasche 26a,26b zur Anlage gebracht.

Der von den schwenkbaren Backformunterteilen 21,22 beim Öffnen und Schließen der Matrizen jeweils zurückgelegte Schwenkweg wird in den Führungskanälen 40 der Stauerlaschen 26a,26b der Bewegungsmechanismen 26 jeweils durch den Abstand der hinteren Anschlagfläche 40d von der vorderen Anschlagfläche 40a der Steuerlasche 26a,26b bestimmt. Bei diesem Abstand ist das, für den Ausgleich von vorallem beim Aufheizen und Auskühlenlassen des Backofens 1 auftretenden unterschiedlichen Wärmedehnungen der schwenkbaren Backformunterteile 21,22 und der Steuerlaschen 26a,26b erforderliche Spiel zwischen Führungskanal 40 und Steuerbolzen 32c zu berücksichtigen.

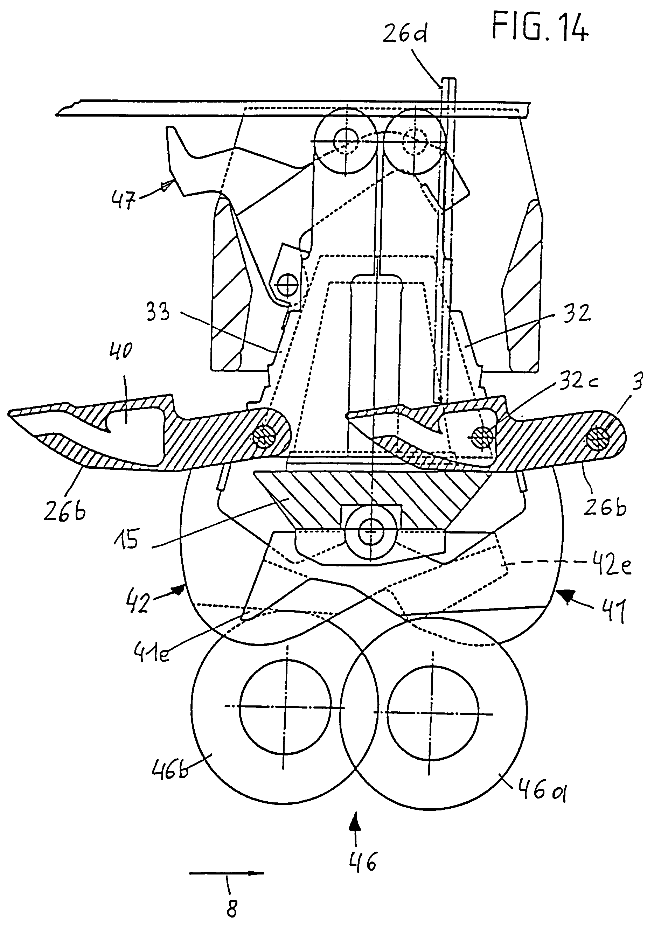

Bei der Betriebstemparatur des Backofens 1 entspricht die Größe dieses Schwenkweges dem, um den Durchmesser des jeweiligen Steuerbolzens 32c verminderten Abstand zwischen der hinteren und der vorderen Anschlagflache 40d bzw. 40a der Steuerlasche 26a,26b. In Fig. 14 ist der, in der Steuerlasche 26b der hinteren Anschlagfläche 40d zugeordnete Steuerbolzen 32c im erkalteten Zustand des Backofens 1 mit einem, dem für den Ausgleich von unterschiedlichen Wärmedehnungen erforderlichen Spiel entsprechenden Abstand von der hinteren Anschlagfläche 40d dargestellt.

### 2. FLACHWAFFEL-BACKÖFEN :

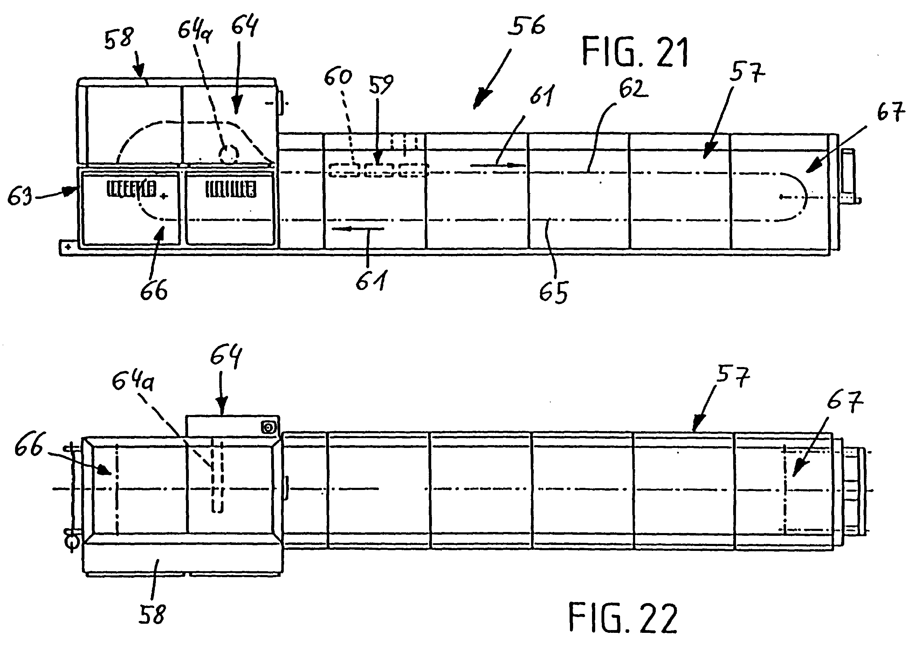

Fig. 21 zeigt eine Seitenansicht und Fig. 22 eine Draufsicht eines Backofens 56 zur Herstellung von flachen, rechteckigen, dünnwandigen Formkörpern aus sich während des Backprozesses ausdehnenden Back- oder Gießmassen. Dieser Backofen 56 umfaßt einen langgestreckten Backraum 57, einen diesem vorgelagerten Vorkopf 58 und eine im Innenraum des Backofens 56 angeordnete, Backraum 57 und Vorkopf 58 durchlaufende, endlose Backzangenkette 59.

Die Backzangenkette 59 besteht aus, untereinander baugleichen, auf- und zuklappbaren Backzangen 60, die während des Betriebes des Backofens 56 in einer in sich geschlossenen Bahn in Richtung des Pfeiles 61 umläuft. Die Bahn der Backzangenkette 59 umfaßt eine, im wesentlichen horizontale, obere Transportebene 62, die im Backofen 56 von der, an der Stirnseite des Vorkopf 58 angeordneten Ausgabestation 63 für die gebackenen, flachen, rechteckigen, dünnwandigen Formkörper über die, der Ausgabestation 63 in Laufrichtung 61 nachgeordneten Aufgießstation 64 für die Back- oder Gießmassen bis in den Backraum 57 reicht. Die Bahn der Backzangenkette 59 umfaßt ferner eine, im wesentlichen horizontale, untere Transportebene 65, die im Backofen 56 in Laufrichtung 61 vom Backraum 57 bis in den Vorkopf 58 reicht sowie eine, im Vorkopf 58 angeordnete, die beiden übereinander angeordneten Transportebenen 62,65 miteinander verbindende vordere Umlenkung 66 und eine, im Backraum 57 angeordnete, die beiden Transportebenen 62,65 miteinander verbindende hintere Umlenkung 67.

### 2.1. BACKZANGEN :

Die langgestreckten, einseitig offenen, auf- und zuklappbaren Backzangen 60 der Backzangenkette 59 sind im Backofen 56 mit ihrer Längserstreckung quer zur Laufrichtung 61 der Backzangenkette 59 angeordnet. Jede Backzange 60 umfaßt einen Zangenoberteil 68 und einen mit diesem über ein Gelenk 69 schwenkbar verbundenen Zangenunterteil 70. Das Gelenk 69 ist an einer zur Laufrichtung 61 parallelen Längsseite der Backzange 60 angeordnet und besitzt eine zur Laufrichtung 61 parallele Schwenkachse. In der Backzange 60 ist eine auf- und zumachbare Backform 71 enthalten, die durch eine zur Schwenkachse des Gelenkes 69 parallele Haupt-Formtrennungsebene in eine obere Formhälfte 72 und eine untere Formhälfte 73 geteilt ist. Die obere Formhälfte 72 ist in den Zahgenoberteil 68 integriert und die untere Formhälfte ist in den Zangenunterteil 69 integriert.

Der Zangenoberteil 68 umfaßt neben der oberen Formhälfte 72 der Backform 71 noch den oberen Scharnierabschnitt 68a des Gelenkes 69 und einen, auf der dem Gelenk 69 gegenüberliegenden Längsseite der Backzange 60 angeordneten oberen Endabschnitt 68b. An der der Haupt-Formtrennungsebene zugewandten Vorderseite des oberen Endabschnittes 68a sind zwei obere Distanzbolzen 68c,68d in Laufrichtung 61 im Abstand voneinander angeordnet und senkrecht zur Haupt-Formtrennungsebene verstellbar bzw. feststellbar ausgebildet. An der von der Haupt-Formtrennungsebene abgewandten Rückseite des oberen Endabschnittes 68a ist eine Steuerolle 74 zum Öffnen und Schliessen der Backzange 60 angebracht.

Der Zangenunterteil 70 umfaßt neben der unteren Formhälfte 73 der Backform 71 noch den unteren Scharnierabschnitt 70a des Gelenkes 69 und einen, auf der dem Gelenk 69 gegenüberliegenden Längsseite der Backzange 60 angeordneten unteren Endabschnitt 70b. An der der Haupt-Formtrennungsebene zugewandten Vorderseite des unteren Endabschnittes 70a sind zwei untere Distanzbolzen 70c,70d in Laufrichtung 61 im Abstand voneinander angeordnet und senkrecht zur Haupt-Formtrennungsebene verstellbar bzw. feststellbar ausgebildet.

Die beiden Formhälften 72,73 der Backform 71 umfassen zwei gleich große, im wesentlichen ebene und im wesentlichen rechteckige Backplatten 72a,73a. Die zur Laufrichtung 61 parallele Längserstreckung der beiden Backplatten 72a,73a ist jeweils deutlich kleiner ist als ihre zur Laufrichtung 61 senkrechte Quererstreckung.

An der, der Haupt-Formtrennungsebene der Backform 71 zugewandten, Vorderseite der oberen Backplatte 72a ist eine im wesentlichen ebene, obere Backfläche ausgebildet. Die obere Backfläche ist an der vorderen bzw. hinteren Querseite der oberen Backplatte 72a jeweils durch eine, quer zur Laufrichtung 61 angeordnete, vordere bzw. hintere obere Abschlußleiste 72b bzw. 72c begrenzt. Die beiden oberen Abschlußleisten 72b,72c stehen über die obere Backfläche zur Haupt-Formtrennungsebene hin vor. An der von der Haupt-Formtrennungsebene abgewandten, Rückseite der oberen Backplatte 72a sind quer zur Laufrichtung 61 verlaufende, obere Versteifungsrippen 73d vorgesehen.

An der, der Haupt-Formtrennungsebene der Backforrn 71 zugewandten, Vorderseite der unteren Backplatte 73a ist eine im wesentlichen ebene, untere Backfläche ausgebildet Die untere Backfläche ist an der dem Gelenk 69 näheren, inneren Längsseite und an der dem Gelenk 69 ferneren, äußeren Längsseite der unteren Backplatte 73a jeweils durch eine, zur Laufrichtung 61 parallele, innere bzw. äußere untere Abschlußleiste 73b bzw. 73c begrenzt. Die beiden unteren Abschlußleisten 73b,73c stehen über die untere Backfläche zur Haupt-Formtrennungsebene hin vor. An der von der Haupt-Formtrennungsebene abgewandten. Rückseite der unteren Backplatte 73a sind quer zur Laufrichtung 61 verlaufende, untere Versteifungsrippen 73d vorgesehen.

### 2.2. BACK-HOHLRAUM DER BACKFORM :

Die beiden Formhälften 72,73 der Backform 71 begrenzen bei geschlossener Backzange 60 einen Back-Hohlraum, in welchem die dünnwandigen, flachen Formkörper aus einer z.B. dünnflüssigen Back- bzw. Gießmasse geformt und gebacken werden. Dieser Back-Hohlraum wird oberhalb der Haupt-Formtrennungsebene von der, im wesentlichen ebenen, oberen Backfläche und unterhalb der Haupt-Formtrennungsebene von der, im wesentlichen ebenen, unteren Backfläche begrenzt. An den beiden zur Laufrichtung 61 parallelen Längsseiten wird der Back-Hohlraum durch die beiden unteren Abschlußleisten 73b,73c begrenzt. An den beiden quer zur Laufrichtung 61 verlaufenden Querseiten wird der Back-Hohlraum durch die beiden oberen Abschlußleisten 72b,72c begrenzt.

Die bei geschlossener Backzange 60 vorhandene Höhe des Back-Hohlraumes bestimmt die Wandstärke der, in der Backform 71 gebackenen, flachen, dünnwandigen Formkörper. Diese Höhe des Back-Hohlraumes wird an seiner, dem Gelenk 69 zugewandten, inneren Längsseite durch das Gelenk 69 der Backzange 60 bestimmt. An der vom Gelenk 69 abgewandten, äußeren Längsseite des Back-Hohlraumes wird dessen Höhe durch die aneinander anliegenden oberen und unteren Distanzbolzen 68c,68d und 70c, 70d der geschlossenen Backzange 60 bestimmt. Bei geschlossener Backzange 60 liegt der vordere obere Distanzbolzen 68c auf dem vordem unteren Distanzbolzen 70c und der hintere obere Distanzbolzen 68d liegt auf dem hinteren unteren Distanzbolzen 70d auf.

In den bei geöffneter Backzange offenen Back-Hohlraum wird eine auf das Volumen dieses Back-Hohlraumes abgestimmte Menge an Back- bzw. Gießmasse eingebracht Beim Schließen der Backzange 60 wird der Back-Hohlraum geschlossen und die Back- bzw. Gießmasse im Back-Hohlraum verteilt und zu einem dünnwandigen, flachen Formkörper geformt. Dieser dünnwandige, flache Formkörper anschließend im geschlossenen Back-Hohlraum der von außen beheizte Backform 71 gebacken. Die dafür erforderliche Wärmemenge wird der geschlossenen Backform 71 im Backraum 57 des Backofens 56 von außen zugeführt. Im Backraum 57 des Backofens 56 sind in Längsrichtung des Backofens 56 verlaufende, in den Zeichnungen nicht dargestellte, Heizeinrichtungen wie z.B. langgestreckte, stationäre Gasbrenner, Infrarotstrahlungsheizkörper oder dergleichen vorgesehen, über welche die endlose Backzangenkette 59 mit den in ihren Backzangen 60 enthaltenen Backformen 71 in Laufrichtung 61 hinwegläuft.

### 2.3. BACKZANGENKETTE :

Die auf- und zuklappbaren Backzangen 60 sind untereinander über zwei, zueinander parallel verlaufende, endlose Transportketten 75 und 76 zur endlosen Backzangenkette 59 verbunden, die mittels eines, in den Zeichnungen nicht dargestellten Antriebsmotors in Umlauf versetzt werden kann.

Jede Backzange 60 ist mit ihrem Zangenunterteil 70 an einer der Kettenlaschen 75a,76a der Transportketten 75,76 befestigt und stützt sich über an den Bolzen der Transportketten 75,76 angebrachte Laufräder 77 in der oberen bzw. unteren Transportebene 62 bzw. 65 auf im Gestell des Backofens 56 seitlich angebrachten Laufschienen 78 ab.

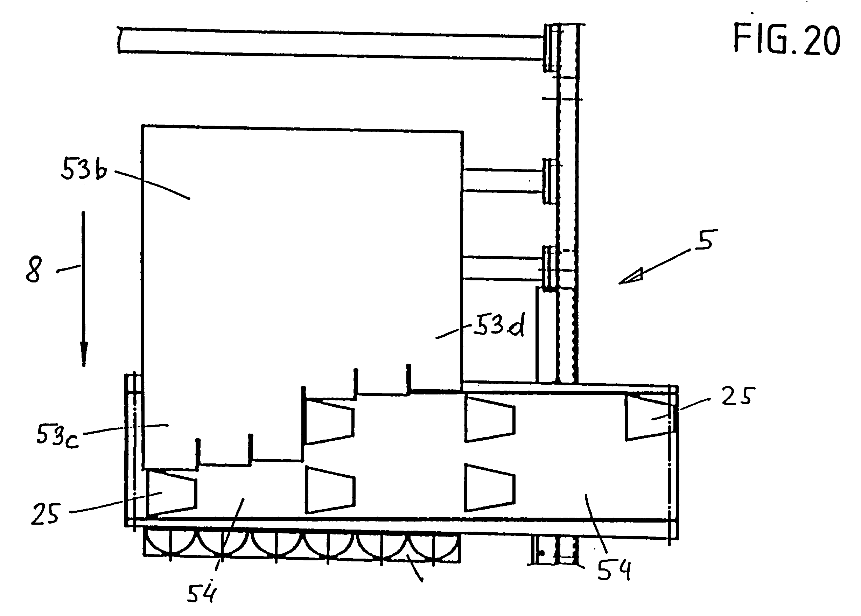

Während des Umlaufes der Backzangenkette 59 durchlaufen die Zangenunterteile 70 und die Zangenoberteile 68 im Backofen 56 unterschiedliche, jeweils in sich geschlossene Bahnen. Die Zangenunterteile 70 durchlaufen eine, durch die beiden seitlichen Transportketten 75,76 bzw. durch die Laufräder 77 und die Laufschienen 78 vorgegebene Bahn. Diese Bahn ist in Fig. 20 strichpunktiert eingezeichnet und verläuft durch beide Transportebenen 62,65 und über beide Umlenkungen 66,67. Die Zangenoberteile 68 durchlaufen eine Bahn, welche im Backraum 57 durch die geschlossenen Backzangen 60 und im Vorkopf 58 durch, in den Zeichnungen strichpunktiert dargestellte, stationäre Führungsschienen für die Steuerrollen 74 der Zangenoberteile 68 vorgegeben ist. Im Vorkopf 58 entfernt sich die Bahn der Steuerrollen 74 der Zangenoberteile 68 an der vorderen Umlenkung 66 in einem großen Bogen von der Bahn der Zangenunterteile 70 nach außen und verläuft dann bis zur Aufgießstation 64 in der oberen Transportebene 62 parallel zur Bahn der Zangenunterteile 70. Nach der Aufgießstation 64 nähert sich die Bahn der Steuerrollen 74 der Zangenoberteile 68 wieder der Bahn der Zangenunterteile 70.

Während des Umlaufes der Backzangenkette 59 werden die Backzangen 60 mit dem Zangenoberteil 69 nach oben durch die obere Transportebene 62 transportiert Beim Passieren der hinteren Umlenkung 67 wird die Backzange 60 auf den Kopf gestellt und durchlauft anschließend die untere Transportebene 65 mit dem Zangenoberteil 69 nach unten. Beim Passieren der vorderen Umlenkung 66 wird die Backzange 60 nochmals auf den Kopf gestellt und durchläuft anschließend die obere Transportebene 62 wieder mit dem Zangenoberteil 69 nach oben.

### 2.4. ÖFFNEN UND SCHLIESSEN DER BACKZANGEN:

Im Vorkopf 58 werden die auf- und zumachbaren Backformen 71 durch das Auf- und Zuklappen der Backzangen 60 geöffnet und geschlossen. Beim Auf- und Zuklappen der Backzangen 60 um ihre Backzangengelenke 69 werden die auf- und zumachbaren Backformen 71 an ihren Haupt-Formtrennungsebenen im wesentlichen senkrecht zu diesen geöffnet und geschlossen.

Während eines Umlaufes der Backzangenkette 59 wird jede Backzange 60 vor der Aufgießstation 64 aufgeklappt und eine Back- bzw. Gießmasse durch die stationäre Aufgießvorrichtung 64a in die untere Formhälfte 73 der Backform 71 eingebracht. Nach der Aufgießstation 64 wird die Backzange 60 geschlossen und zum Backen des flachen, dünnwandigen Formkörpers geschlossen durch den Backraum 57 und wieder zurück in den Vorkopf 58 transportiert. Im Vorkopf 58 wird die Backzange 60 beim Passieren der vorderen Umlenkung 66 aufgeklappt und der gebackene, dünnwandige, flache wird Formkörper aus der geöffneten Backforrn 71 entnommen und an der Ausgabestation 63 aus dem Backofen 56 hinaus transportiert. Nach dem Passieren der Ausgabestation 63 wird die aufgeklappte Backzange 60 in der oberen Transportebene 62 wieder zur Aufgießstation 64 transportiert, wo neuerlich eine Back- bzw. Gießmasse in die untere Formhälfte 73 der geöffneten Backform 71 bei geöffneter Backzange 60 eingebracht wird.

### 2.5. WEITERE AUSFÜHRUNGSFORMEN DER BACKZANGEN :

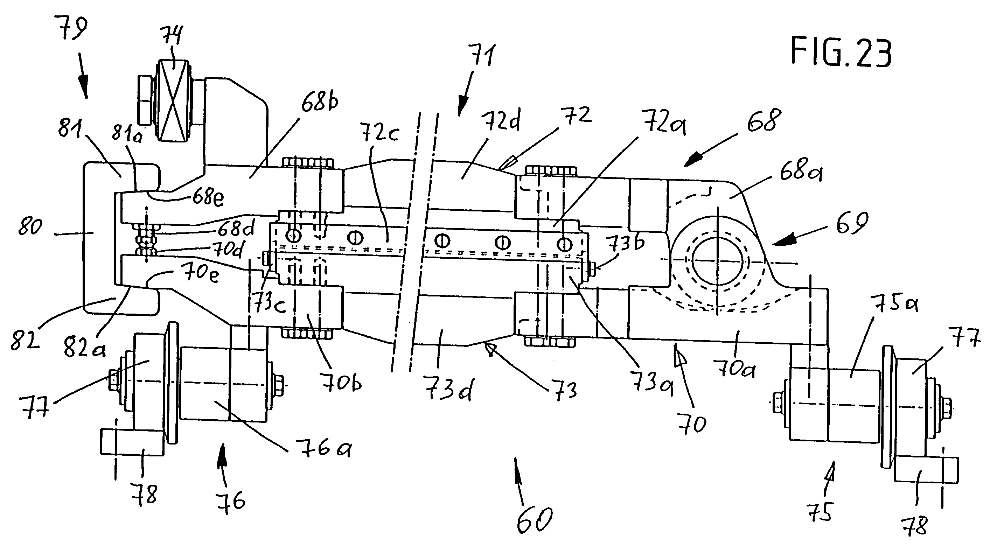

In den Fig. 23 und 24 bzw. 25 und 26 bzw. 27 und 28 sind drei verschiedene Ausführungsbeispiele einer Backzange 60 für einen Backofen 56 gemäß den Fig. 21,22 dargestellt. Diese Backzangen 60 enthalten jeweils eine, oben näher erläuterte Backform 71 zur Herstellung von flachen, rechteckigen, dünnwandigen Formkörpern aus sich während des Backprozesses ausdehnenden Back- oder Gießmassen. Diese Backzangen 60 werden beim Durchlaufen des Backraumes 57 des Backofens 56 in ihrem geschlossenen Zustand von einer oder mehreren, an der Backzange 60 bzw. an der in ihr enthaltenen Backform 71 spielfrei festziehbaren, selbstnachstellenden Klemmvorrichtungen geschlossen gehalten. Die drei Ausführungsbeispiele der Backzangen 60 unterscheiden sich untereinander durch die Anordnung und die Ausführungsform dieser Klemmvorrichtungen. Für die einzelnen Teile der Backzange 60 werden in der nachfolgenden Beschreibung der drei Ausführungsbeispiele und in den Fig. 22 bis 27 jeweils dieselben Bezugszeichen verwendet.

### 2.5.1. KLEMMVORRICHTUNG AN DER BACKZANGE:

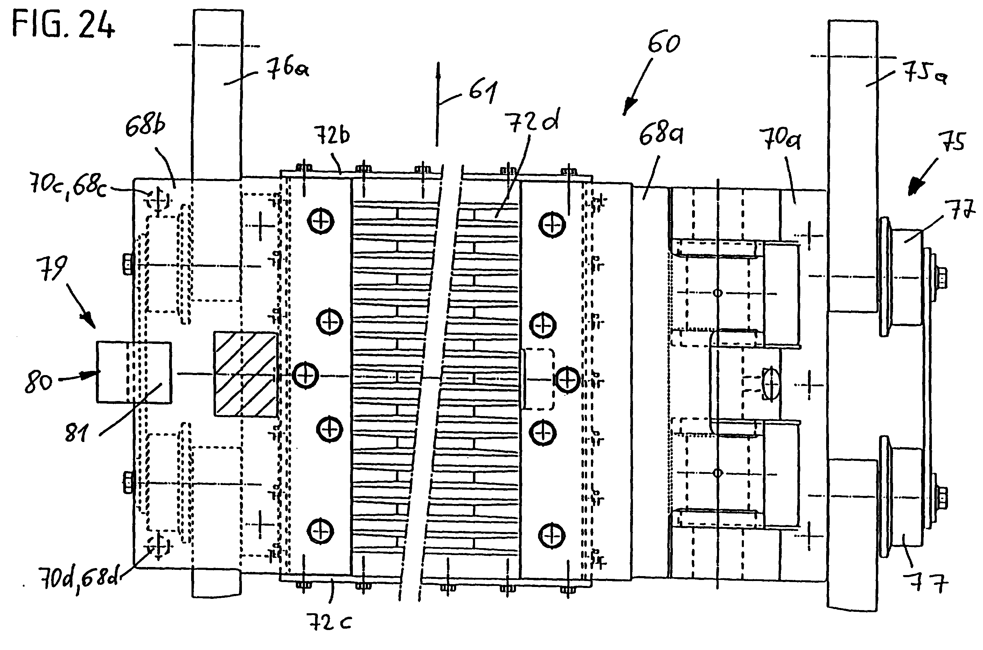

Die Fig. 23 und 24 zeigen ein Ausführungsbeispiel der Backzange 60 mit einer ersten Ausführungsform einer Klemmvorrichtung 79, die auf der dem Gelenk, 69 gegenüberliegenden Längsseite der Backzange 60 im Mittelbereich dieser Längsseite angeordnet ist. Die an der Backzange 60 seitlich angebrachte Klemmvorrichtung 79 ist in ihrem, an der geschlossenen Backzange 60 festgezogenen Zustand dargestellt.

Diese Klemmvorrichtung 79 umfaßt zwei, äußere gekrümmte Klemmflächen 68e,70e an der, von der Haupt-Formtrennungsebene abgewandten Außenseite des oberen bzw. unteren Endabschnittes 68b bzw. 70b der Backzange 60. Die beiden gekrümmten Klemmflächen 68e,70e sind dem freien äußeren Längsrand des jeweiligen Endabschnittes 68b,70b benachbart angeordnet. Die beiden gekrümmten Klemmflächen 68e,70e sind bezüglich der Haupt-Formtrennungsebene der geschlossenen Backform 71 symmetrisch zueinander angeordnet und von der Haupt-Formtrennungsebene abgewandt.

Die Klemmvorrichtung 79 umfaßt ferner eine, langgestreckte, von der Backzange 60 getrennte, im wesentlichen C-förmige Klammer 80 mit zwei, gegenüber ihrer Längsachse abgewinkelten, im Abstand von einander angeordneten Klemmabschnitten 81,82. An den einander zugewandten Seiten der beiden Klemmabschnitte 81,82 sind ebene Klemmflächen 81a,82a für den Eingiff mit einer der beiden äußeren, gekrümmten Klemmflächen 68e,70e der Backzange 60 vorgesehen. Jede ebene Klemmfläche 81a,82a ist zur Längsachse der Klammer 80 geringfügig geneigt angeordnet und steigt vorn Hauptkörper der Klammer 80 weg nach außen an.

Diese Klemmvorrichtung 79 wird während des Umlaufes der Backzangenkette 59 durch Aufschieben der Klammer 80 auf die geschlossene Backzange 60 festgezogen und durch Abziehen der Klammer 80 von der geschlossenen Backzange 60 wieder gelöst

Nach der Aufgießstation 64 wird die Backzange 60 geschlossen. Dabei wird der Zangenoberteil 68 mit Hilfe der Steuerrolle 74 um das Gelenk 69 herum zum Zangenunterteil 72 hin geschwenkt, bis die Distanzbolzen 68c,68d des Zangenoberteiles 68 auf den Distanzbolzen 70c,70d des Zangenunterteiles 70 aufliegen. In einer der Aufgießstation 64 in Laufrichtung 61 nachgeordneten, in den Zeichnungen nicht dargestellten Aufsteckvorrichtung wird eine Klammer 80 auf die geschlossene Backzange 60 aufgeschoben. Die Klammer 80 ist mit ihrer Längsachse senkrecht zur Haupt-Formtrennungsebene der Backform 71 angeordnet und wird mit ihren Klemmabschnitten 81,82 quer zur Laufrichtung 61 auf die beiden Endabschnitte 68b,70b der Backzange 60 aufgeschoben. Die ebenen Klemmflachen 81a,82a der Klemmabschnitte 81,82 der Klammer 80 sind der Haupt-Formtrennungsebene der geschlossenen Backform 71 zugewandt. Die äußeren gekrümmten Klemmflächen 68e, 70e der Endabschnitte 68b, 70b der Backzange 60 sind von der Haupt-Formtrennungsebene der geschlossenen Backform 71 abgewandt. Beim Aufschieben der Klammer 80 werden die ebenen Klemmflächen 81a,82a der Klemmabschnitte 81,82 in einen kraftschlüssigen und selbsthemmenden Reibungseingriff mit den äußeren gekrümmten Klemmflächen 68e, 70e der Endabschnitte 68b,70b der Backzange 60 gebracht Die ebenen Klemmflächen 81a,82a werden in diesem Reibungseingriff an den äußeren gekrümmten Klemmflächen 68e, 70e solange quer zur Laufrichtung 61 entlanggeschoben, bis durch die elastische Dehnung der Klammer 80 auf die beiden Zangenteile 68,70 eine vorgegebene Vorspannkraft aufgebracht ist, mit der die, mit ihren Distanzbolzen 68c,68d,70c,70d aufeinanderliegenden Zangenteile 68,70 gegeneinander gedrückt werden. Diese Vorspannkraft wird über den Anpreßdruck der Klammer 80 voreingestellt.

Die geschlossene Backzange 60 durchläuft den Backraum 57 mit festgezogener Klemmvorrichtung 79. Nach dem Backraum 57 wird die Klammer 80 in einer, der Ausgabestation 63 vorgelagerten, in den Zeichnungen nicht dargestellten Abziehvorrichtung von der geschlossenen Backzange 60 quer zur Laufrichtung 61 wieder abgezogen. Dabei wird zuerst die, durch die elastische Dehnung der Klammer 80 auf die beiden Zangenteile 68,70 aufgebrachte Vorspannkraft abgebaut Anschließend werden die ebenen Klemmflächen 81a,82a der Klemmabschnitte 81,82 im kraftschlüssigen und selbsthemmenden Reibungseingriff an den äußeren gekrümmten Klemmflächen 68e, 70e der Endabschnitte 68b, 70b der Backzange 60 solange entlanggeschoben, bis dieser Reibungseingriff gelöst und die beiden Zangenteile 68,70 freigegeben sind.

Die gegenseitige Lage und der gegenseitige Verlauf der Klemmflächen 81a,82a bzw. 68e,70e hängt von den, für einen kraftschlüssigen und selbsthemmenden Reibungseingriff zwischen diesen Klemmflächen 81a,82a bzw. 81,82 ausgewählten Werkstoffen ab und muß allenfalls experimentell ermittelt werden. Im Detail entspricht dieser Eingriff den weiter oben im Zusammenhang mit der Fig. 19 erläuterten Eingriffsverhältnissen. Die Klemmvorrichtung 79 umfaßt als bewegbares Klemmelement eine, von der Backzange 60 unabhängige Klammer 80. Bei der Klemmvorrichtung 79 steigt die obere gekrümmte Klemmfläche 68e am oberen Endabschnitt 68b der Backzange 60 in der Eingriffstellung der Klammer 80 gegenüber der ebenen Klemmfläche 81a,82a des entsprechenden Klemmabschnittes 81 der Klammer 80 bezogen auf die Haupt-Formtrennungsebene der Backform 71 allmählich von innen nach außen an. In gleicher Weise steigt die untere gekrümmte Klemmfläche 70e des unteren Endabschnittes 70b der Backzange 60 in der Eingriffstellung der Klammer 80 gegenüber der ebenen Klemmfläche 82a des entsprechenden Klemmabschnittes 82 der Klammer 80 bezogen auf die Haupt-Formtrennungsebene der Backform 71 allmählich von innen nach außen an. In der Eingriffsstellung der Klammer 80 bildet jeweils die ebene Klemmfläche 81a,82a eines Klemmabschnittes 81,82 zusammen mit der entsprechenden gekrümmten Klemmflächen 68e, 70e eines Endabschnittes 68b,70b der Backzange 60 einen, sich in Aufschieberichtung sichelförmig verjüngenden Spalt, der im Eingriffspunkt mit dem Winkel endet, der kleiner ist als der Haftreibungswinkel der für die beiden Klemmflächen gewählten Werkstoffpaarung. Dieser Winkel beträgt bei einem bevorzugten Ausführungsbeispiel für die Werkstoffpaarung Hartmetall-Hartmetall 6 Grad.

### 2.5.2. KLEMMVORRICHTUNG AN DER BACKZANGE:

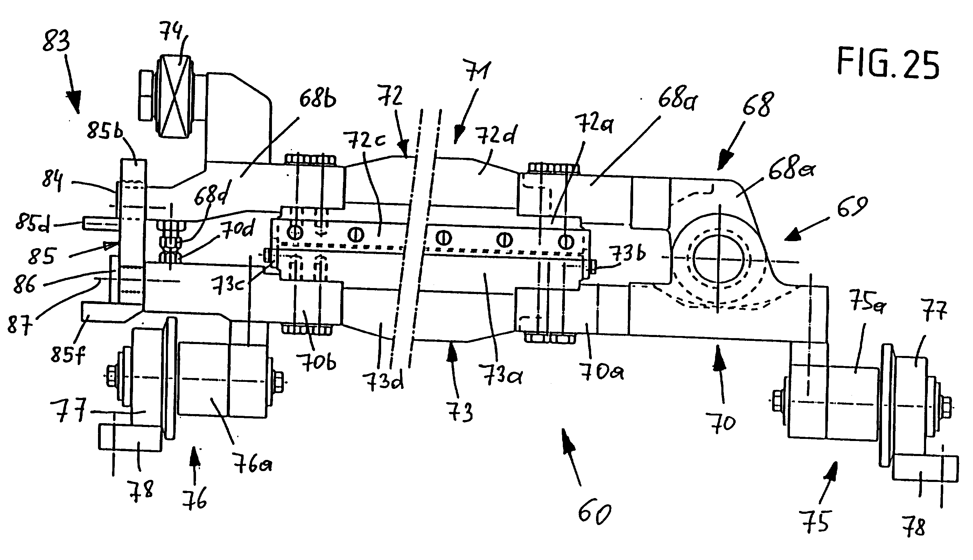

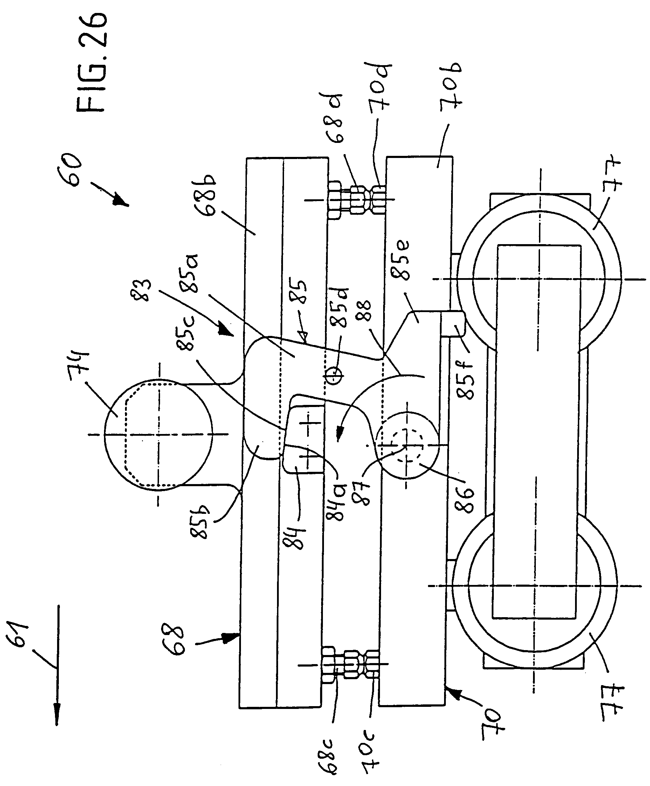

Die Fig. 25 und 26 zeigen ein Ausführungsbeispiel der Backzange 60 mit einer zweiten Ausführungsform einer Klemmvorrichtung 83, die auf der dem Gelenk 69 gegenüberliegenden Längsseite der Backzange 60 im Mittelbereich dieser Langsseite angeordnet ist. Die an der Backzange 60 seitlich angebrachte Klemmvorrichtung 83 ist in ihrem, an der geschlossenen Backzange 60 festgezogenen Zustand dargestellt.

Die Klemmvorrichtung 83 umfaßt einen vom oberen Endabschnitt 68b der Backzange 60 quer zur Laufrichtung 61 seitlich anstehenden Fortsatz 84. An der Außenseite dieses Fortsatzes 84 ist eine, von der Haupt-Formtrennungsebene der Backform 71 abgewandte äußere, gekrümmte Klemmfläche 84a vorgesehen. Die Klemmvorrichtung 83 umfaßt ferner einen zweiarmigen Klemmhebel 85, der sich parallel zur Laufrichtung 61 erstreckt und unterhalb der Haupt-Formtrennungsebene der Backform 71 am unteren Endabschnitt 70b der Backzange 60 an einem Achsbolzen 86 schwenkbar gelagert ist. Dieser Achsbolzen 86 steht vom unteren Endabschnitt 70b quer zur Laufrichtung 61 seitlich nach außen ab und bildet eine, quer zur Laufrichtung 61 und parallel zur Haupt-Formtrennungsebene der Backform 71 angeordnete Schwenkachse 87 für den Klemmhebel 85. Bei geschlossener Backzange 60 liegt der Achsbolzen 86 dem Fortsatz 84 des oberen Endabschnittes 68b bezüglich der Haupt-Formtrennungsebene der Backform 71 gegenüber. Um diesen Achsbolzen 86 kann der Klemmhebel 85 aus einer Ruhestellung in Anzugsrichtung 88 in eine Arbeitsstallung geschwenkt werden. In seiner Ruhestellung befindet sich der Klemmhebel 85 unterhalb der Haupt-Formtrennungsebene der Backform 71. In seiner Arbeitsstellung überbrückt der Klemmhebel 85 die Haupt-Formtrennungsebene der Backform 71 vom Zangenunterteil 70 zum Zangenoberteil 68 der Backzangen 60.

Der Klemmhebel 85 umfaßt einen, im wesentlichen C-förmigen Klemmarm 85a mit zwei, einander zugewandten und im Abstand von einander angeordneten Abschnitten. Mit dem inneren Abschnitt des Klemmarmes 85a ist der Klemmhebel 85 am Achsbolzen 86 schwenkbar gelagert Der äußere, von der Schwenkachse 87 im Abstand angeordnete Abschnitt des Klemmarmes 85a ist als Klemmabschnitt 85b ausgebildet, der an seiner der Schwenkachse 88 zugewandten Innenseite eine ebene Klemmfläche 85c für den kraftschlüssigen und selbsthemmenden Reibungseingriff mit der äußeren, gekrümmten Klemmfläche 84a des oberen Endabschnittes 68b der Backzange 60 trägt. Am Klemmarm 85a ist ein, zum Achsbolzen 86 exzentrisch angeordneter, erster Betätigungszapfen 85d des Klemmhebels 85 angebracht, der vom Klemmarm 85a quer zur Laufrichtung 61 seitlich absteht. Der Klemmhebel 85 umfaßt ferner einen, vom inneren Abschnitt des Klemmarmes 85a entgegen der Anzugsrichtung 88 nach hinten abstehenden Betätigungsarm 85e, der an seinem hinteren Ende einen, quer zur Laufrichtung 61 seitlich abstehenden, zweiten Betätigungszapfen 85f des Klemmhebels 85 trägt.

Nach der Aufgießstation 64 passieren die bereits geschlossenen Backzangen 60 der Backzangenkette 59 eine, in den Zeichnungen nicht dargestellte, den seitlichen Klemmvorrichtungen 83 zugeordnete, erste Betätigungsvorrichtung zum Festziehen der seitlichen Klemmvorrichtungen 83 an den bereits geschlossenen Backzangen 60. Der Klemmhebel 85 der Klemmvorrichtung 83 einer Backzange 60 kommt mit seinem ersten Betätigungszapfen 85d in Eingriff mit der ersten Betätigungsvorrichtung und wird mit seinem Klemmarm 85a in Anzugsrichtung 88 nach oben in seine Arbeitsstellung geschwenkt. Bei dieser Schwenkbewegung wird der Klemmhebel 85 mit der ebenen Klemmfläche 85c seines Klemmabschnittes 85b in Laufrichtung 61 nach vorne geschwenkt und mit der äußeren, gekrümmten Klemmfläche 84a am Fortsatz 84 des oberen Endabschnittes 68b der Backzange 60 in einen kraftschlüssigen und selbsthemmenden Reibungseingriff gebracht. In diesem Reibungseingriff wird die ebene Klemmfläche 85c an der äußeren gekrümmten Klemmfläche 84a in Laufrichtung 61 so lange nach vorne geschoben, bis zuerst das Bewegungsspiel des Klemmhebels 85 beseitigt ist und bis anschliessend durch die elastische Dehnung des Klemmarmes 85a auf die beiden Zangenteile 68,70 eine vorgegebene Vorspannkraft aufgebracht ist, mit der die, mit ihren Distanzbolzen 68c,68d, 70c,70d aufeinanderliegenden Zangenteile 68,70 gegeneinander gedrückt werden. Diese Vorspannkraft wird über den, von der ersten Betätigungsvorrichtung auf den ersten Betätigungszapfen 85d des Klemmhebels 85 aufgebrachten Anpreßdruck voreingestellt.

Nach dem Backraum 57 passieren die geschlossenen Backzangen 60 der Backzangenkette 59 eine, in den Zeichnungen nicht dargestellte, den seitlichen Klemmvorrichtungen 83 zugeordnete, zweite Betätigungsvorrichtung zum Lösen der seitlichen Klemmvorrichtungen 83 von den noch immer geschlossenen Backzangen 60. Der Klemmhebel 85 der Klemmvorrichtung 83 einer Backzange 60 kommt mit seinem zweiten Betätigungszapfen 85f in Eingriff mit der zweiten Betätigungsvorrichtung und wird mit seinem Klemmarm 85a entgegen der Anzugsrichtung 88 nach unten in seine Ruhestellung geschwenkt. Dabei wird zuerst die, durch die elastische Dehnung des Klemmarmes 85a auf die beiden Zangenteile 68,70 aufgebrachte Vorspannkraft abgebaut. Anschließend wird die ebene Klemmfläche 85c des Klemmabschnittes 85b im kraftschlüssigen und selbsthemmenden Reibungseingriff an der äußeren gekrümmten Klemmfläche 84a des Fortsatzes 84 solange entgegen der Laufrichtung 61 entlanggeschoben, bis das Bewegungsspiel des Klemmhebels 85 wieder hergestellt, dieser Reibungseingriff gelöst und die beiden Zangenteile 68,70 freigegeben sind.

Die gegenseitige Lage und der gegenseitige Verlauf der Klemmflächen 84a,85c hängt von der Werkstoffpaarung der für einen kraftschlüssigen und selbsthemmenden Reibungseingriff zwischen der ebenen Klemmfläche 85c des Klemmabschnittes 85b und der gekrümmten Klemmfläche 84a am Fortsatz 84 des Endabschnittes 68b der Backzange 60 gewählten Werkstoffe ab und muß allenfalls experimentell ermittelt werden. Im Detail entspricht dieser Eingriff den weiter oben im Zusammenhang mit der Fig. 19 erläuterten Eingriffsverhältnissen.

### 2.5.3 KLEMMVORRICHTUNGEN AN DER BACKFORM:

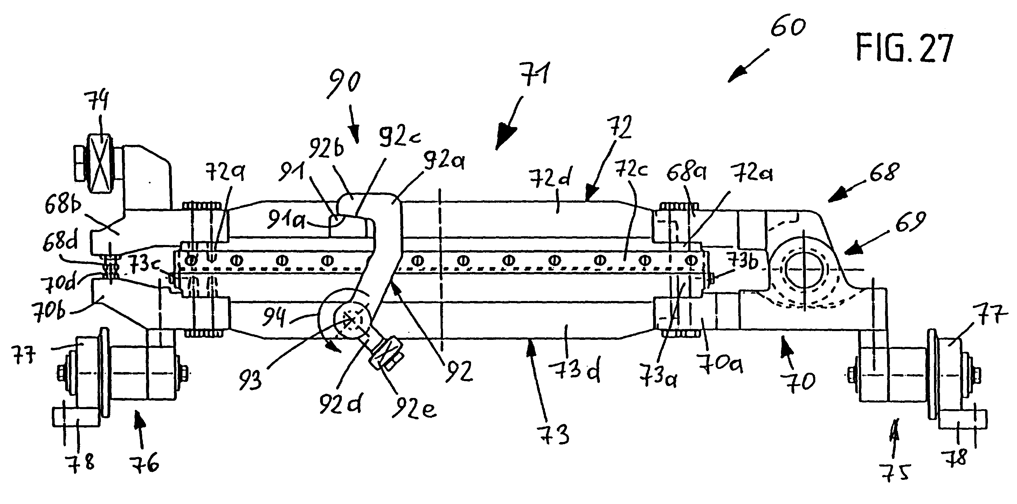

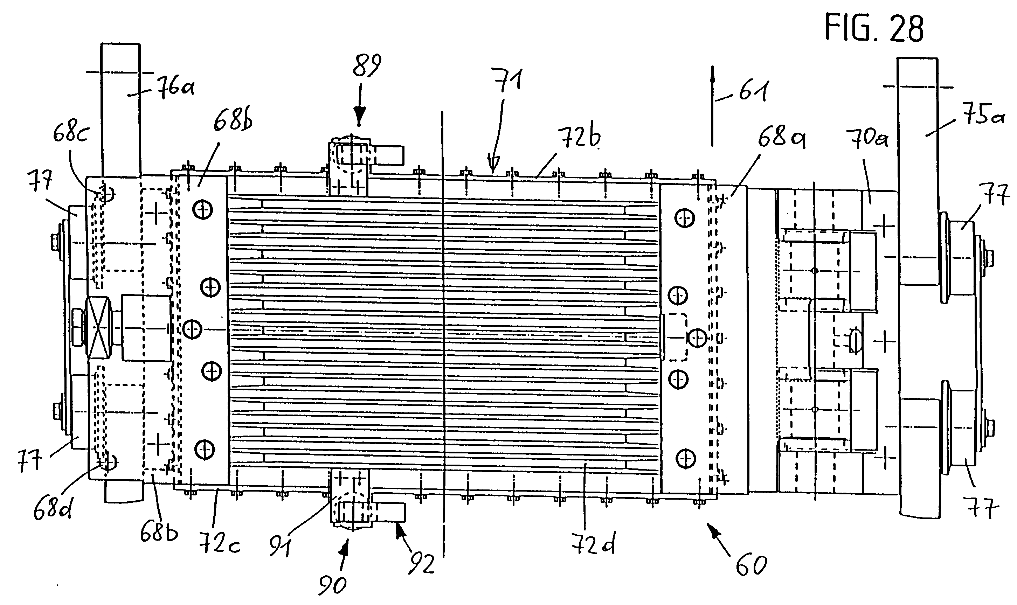

Die Fig. 27 und 28 zeigen ein Ausführungsbeispiel der Backzange 60, bei der an den beiden quer zur Laufrichtung 61 verlaufenden Querseiten der Backform 71 zwei Klemmvorrichtungen 89 und 90 angebracht sind, die einander in Laufrichtung 61 der Backzange 60 gegenüberliegen. Die beiden an der Backform 71 seitlich angebrachten Klemmvorrichtungen 89,90 werden bei geschlossener Backzange 60 an der geschlossenen Backform 71 spielfrei festgezogen. In Fig. 27 und 28 sind sie in ihrem, an der geschlossenen Backform 71 festgezogenen Zustand dargestellt. Beide Klemmvorrichtungen 89,90 weisen die gleiche Konstruktion auf, sodaß die folgende Beschreibung der in Fig. 27 sichtbaren, an der hinteren Querseite der Backform 71 angeordneten, hinteren Klemmvorrichtung 90 sinngemäß auch für die an der vorderen Querseite der Backform 71 angeordnete, vordere Klemmvorrichtung 89 gilt.

Die hintere Klemmvorrichtung 90 umfaßt einen, von der oberen Formhälfte 72 der Backform 71 entgegen der Laufrichtung 61 nach hinten abstehenden, hinteren Fortsatz 91 mit einer, äußeren, gekrümmten Klemmfläche 91a an dessen von der Haupt-Formtrennungsebene der Backform 71 abgewandter Außenseite. Die hintere Klemmvorrichtung 90 umfaßt ferner einen, quer zur Laufrichtung 61 angeordneten, hinteren, zweiarmigen Klemmhebel 92, der unterhalb der Haupt-Formtrennungsebene der Backform 71 an der unteren Formhälfte 73 schwenkbar gelagert ist. Der hintere Klemmhebel 92 ist an einem hinteren Achsbolzen schwenkbar gelagert, der bei geschlossener Backform 71 dem hinteren Fortsatz 91 der oberen Formhälfte 72 bezüglich der Haupt-Formtrennungsebene der Backform 71 gegenüberliegt und von der unteren Formhälfte 73 entgegen der Laufrichtung 61 nach hinten absteht. Dieser hintere Achsbolzen bildet eine, zur Laufrichtung 61 und zur Haupt-Formtrennungsebene der Backforrn 71 parallele Schwenkachse 93, um die der hintere Klemmhebel 92 aus einer Ruhestellung in Anzugsrichtung 94 in eine Arbeitsstellung geschwenkt werden kann. In seiner Ruhestellung befindet sich der hintere Klemmhebel 92 unterhalb der Haupt-Formtrennungsebene der Backform 71. In seiner Arbeitsstellung überbrückt der hintere Klemmhebel 92 die Haupt-Formtrennungsebene der Backform 71 von der unteren Formhälfte 73 zur oberen Formhälfte 72 der Backform 71.

Der hintere Klemmhebel 92 umfaßt einen, im wesentlichen C-förmigen Klemmarm 92a mit zwei, einander zugewandten und im Abstand von einander angeordneten Abschnitten. Mit dem inneren Abschnitt des Klemmarmes 92a ist der Klemmhebel 92 am hinteren Achsbolzen schwenkbar gelagert. Der äußere, von der Schwenkachse 93 im Abstand angeordnete Abschnitt des Klemmarmes 92a ist als Klemmabschnitt 92b ausgebildet, der an seiner der Schwenkachse 93 zugewandten Innenseite eine ebene Klemmfläche 93c für den kraftschlüssigen und selbsthemmenden Reibungseingriff mit der äußeren, gekrümmten Klemmfläche 91a des hinteren Fortsatzes 91 der oberen Formhälfte 72 trägt. Der Klemmhebel 92 umfaßt ferner einen, vom inneren Abschnitt des des Klemmarmes 92a abstehenden, von der Schwenkachse 93 weg schräg zum Klemmarm 92a verlaufenden Betätigungsarm 92d, der an seinem äußeren Ende eine drehbare Betätigungsrolle 92e trägt.

Nach der Aufgießstation 64 passieren die geschlossenen Backzangen 60 der Backzangenkette 59 eine, in den Zeichnungen nicht dargestellte, den Klemmvorrichtungen 89,90 zugeordnete, erste Betätigungsvorrichtung zum Festziehen der Klemmvorrichtungen 89,90 an den geschlossenen Backformen 71. Sowohl bei der Klemmvorrichtung 89 als auch bei der Klemmvorrichtung 90 kommt der jeweilige Klemmhebel 92 mit der Betätigungsrolle 92e seines Betätigungsarmes 92d mit der ersten Betätigungsvorrichtung in Eingriff und wird aus seiner Ruhestellung in seine Arbeitsstellung verschwenkt. Bei dieser Schwenkbewegung wird der jeweilige Klemmhebel 92 mit seinem Klemmarm 92a um seine Schwenkachse 93 in Anzugsrichtung 94 hochgeschwenkt und mit der ebenen Klemmfläche 92c seines Klemmabschnittes 92b mit der zugeordneten, äußeren, gekrümmten Klemmfläche 91a am entsprechenden Fortsatz 91 der oberen Formhälfte 72 in einen kraftschlüssigen und selbsthemmenden Reibungseingriff gebracht.

Bei der hinteren Klemmvorrichtung 92 der Backform 71 wird der Klemmhebel 92 mit der ebenen Klemmfläche 92c seines Klemmabschnittes 92b um seine Schwenkachse 93 in Anzugsrichtung 94 hochgeschwenkt. Dabei wird die ebene Klemmfläche 92c mit der äußeren, gekrümmten Klemmfläche 91a am hinteren Fortsatz 91 der oberen Formhälfte 72 in einen kraftschlüssigen und selbsthemmenden Reibungseingriff gebracht. In diesem Reibungseingriff wird die ebene Klemmfläche 92c an der äußeren gekrümmten Klemmfläche 91a so lange in Anzugsrichtung 94 nach vorne geschoben, bis das Bewegungsspiel des Klemmhebels 92 beseitigt ist und bis anschließend durch die elastische Dehnung des Klemmarmes 92a auf die beiden Zangenteile 68,70 eine vorgegebene Vorspannkraft aufgebracht ist, mit der die, mit ihren Distanzbolzen 68c,68d,70c,70d aufeinanderliegenden Zangenteile 68,70 gegeneinander gedrückt werden. Diese Vorspannkraft wird über den, von der ersten Betätigungsvorrichtung auf den Betätigungsarm 92d des Klemmhebels 85 aufgebrachten Anpreßdruck voreingestellt.

Nach dem Backraum 57 passieren die geschlossenen Backzangen 60 der Backzangenkette 59 eine, in den Zeichnungen nicht dargestellte, den Klemmvorrichtungen 89,90 zugeordnete, zweite Betätigungsvorrichtung zum Lösen der Klemmvorrichtungen 89,90 von den noch immer geschlossenen Backformen 71. Sowohl bei der Klemmvorrichtung 89 als auch bei der Klemmvorrichtung 90 kommt der jeweilige Klemmhebel 92 mit der Betätigungsrolle 92e seines Betätigungsarmes 92d mit der zweiten Betätigungsvorrichtung in Eingriff und wird aus seiner Arbeitsstellung in seine Ruhestellung verschwenkt. Bei dieser Schwenkbewegung wird der jeweilige Klemmhebel 92 mit seinem Klemmarm 92a um seine Schwenkachse 93 entgegen der Anzugsrichtung 94 nach unten geschwenkt und mit der ebenen Klemmfläche 92c seines Klemmabschnittes 92b aus dem kraftschlüssigen und selbsthemmenden Reibungseingriff mit der zugeordneten, äußeren, gekrümmten Klemmfläche 91a am entsprechenden Fortsatz 91 der oberen Formhälfte 72 gelöst. Dabei wird bei jeder Klemmvorrichtung 89,90 zuerst die, durch die elastische Dehnung des jeweiligen Klemmarmes 92a auf die beiden Zangenteile 68,70 der Backzange 60 aufgebrachte Vorspannkraft abgebaut. Anschließend wird bei jeder Klemmvorrichtung 89,90 jeweils die ebene Klemmfläche 92c des Klemmabschnittes 92b des Klemmhebels 92 im kraftschlüssigen und selbsthemmenden Reibungseingriff an der äußeren gekrümmten Klemmfläche 91a des jeweiligen Fortsatzes 91 der oberen Formhälfte 72 der Backform 71 solange entgegen der Anzugsrichtung 94 entlang geschoben, bis das Bewegungsspiel des jeweiligen Klemmhebels 92 wieder hergestellt, dieser Reibungseingriff gelöst und die beiden Zangenteile 68,70 der Backzange 60 freigegeben sind.

Die gegenseitige Lage und der gegenseitige Verlauf der Klemmflächen der Klemmvorrichtungen 89,90 hängt von der Werkstoffpaarung der für einen kraftschlüssigen und selbsthemmenden Reibungseingriff zwischen der ebenen Klemmfläche des jeweiligen Klemmabschnittes und der gekrümmten Klemmfläche am jeweiligen Fortsatz der oberen Formhälfte 72 der Backform 71 gewählten Werkstoffe ab und muß allenfalls experimentell ermittelt werden. Im Detail entspricht dieser Eingriff dem weiter oben im Zusammenhang mit der Fig. 19 erläuterten Eingriffsverhältnissen.

### 3. WEITERE AUSFÜHRUNGSSEISPIELE DER BACKZANGEN :

Bei den oben beschriebenen Backzangen 7 für die Herstellung von dünnwandigen, tüten- bzw. becherförmigen Formkörpern können die, der zweiten Formtrennungsebene der Backform 16 zugeordneten, jeweils einen schwenkbaren Klemmhebel 47 als bewegliches Klemmelement aufweisenden, unteren Klemmvorrichtungen 31 auch durch jeweils eine von der Backform 16 getrennte, im wesentlichen C-förmige Klammer als bewegliches Klemmelement aufweisende, untere Klemmvorrichtungen ersetzt werden, die im wesentlichen der oben im Zusammenhang mit den Fig. 23 und 24 beschriebenen Klemmvorrichtung 79 entsprechen. In einem solchen Fall ist die den unteren Klemmvorrichtungen zugeordnete weitere Öffnungsstation 51 des Backofens 1 mit einer Vorrichtung zum Abziehen der Klammern und die den unteren Klemmvorrichtungen zugeordnete weitere Schließstation 50 des Backofens 1 mit einer Vorrichtungen zum Aufschieben der Klammern auszurüsten.

Bei den oben, im Zusammenhang mit den Fig. 4 - 20 beschriebenen Backzangen 7 für die Herstellung von dünnwandigen, tüten- bzw. becherförmigen Formkörpern können in den Backzangen 7 der Backzangenkette 6 auch Backformen 16 eingebaut werden, bei denen beim Backen der dünnwandigen Formkörper am unteren Ende der, von den beiden Backformunterteilen 21,22 gebildeten Matrize in der zweiten Formtrennungsebene eine so geringe Druckbelastung auftritt, daß diese von den festgezogenen, oberen Klemmvorrichtungen 30 alleine aufgenommen werden kann. Bei solchen Backzangen 7 entfallen die, der zweiten Formtrennungsebene zugeordneten, unteren Klemmvorrichtungen an den Backformen 16. Weiters entfallen auch die den unteren Klemmvorrichtungen zugeordnete, weitere Öffnungsstation 51 und die den unteren Klemmvorrichtungen zugeordnete, weitere Schließstation 50 im Backofen 1. Eine mit solchen, nur mit oberen Klemmvorrichtungen 30 versehenen Backformen 16 ausgerüstete Backzangenkette 6 enthält zweckmäßigerweise etwas modifizierte Bewegungsmechanismen für die Backformunterteile 21,22 der Backzangen 7. Die modifizierten Bewegungsmechanismen drücken die Backformunterteile 21,22 der Backzange 7 mit ihren, der zweiten Formtrennungsebene der Backform 16 zugeordneten Dichtflächen 21a,22a gegeneinander. Dies kann beispielweise mit Hilfe von, in den Führungskanälen 40 der Steuerlaschen 26a, 26b angeordneten, mit den Steuerbolzen 32c der Backformträger 32 der vorderen Backformunterteile 21 in Eingriff bringbaren Andrückfedern geschehen. Dies kann auch mit Hilfe von Andrückfedern geschehen, die direkt auf die einander zugewandten Rückseiten der benachbarten Backformunterteile 21,22 zweier benachbarter Backzangen 7 wirken.

Bei den oben beschriebenen Backzangen 60 für die Herstellung von flachen, dünnwandigen, Formkörpern können an statt des, jeweils den Zangenoberteil 68 mit dem Zangenunterteil 70 verbindenden Gelenkes 69 auch jeweils zumindest ein, quer zur Laufrichtung 61 neben der jeweiligen Backform 71 angeordnetes, zur Haupt-Formtrennungsebene dar jeweiligen Backform 71 senkrecht angeordnetes Führungsschwert verwendet werden. Dieses seitliche Führungsschwert ist, ebenso wie bei der Backzange 7, in einem, quer zur Laurichtung 61 neben der oberen Formhälfte 72 der Backform 71 angeordneten, oberen Führungskopf des Zangenoberteiles 68 mit dem Zangenoberteil 68 starr verbunden und in einem, quer zur Laufrichtung 61 neben der unteren Formhälfte 73 der Backform 71 angeordneten, unteren Führungskopf des Zangenunterteiles 70 senkrecht zur Haupt-Formtrennungsebene der Backform 71 verschiebbar geführt.

### 4. BACKOFEN MIT UMLAUFENDER BACKZANGENKETTE:

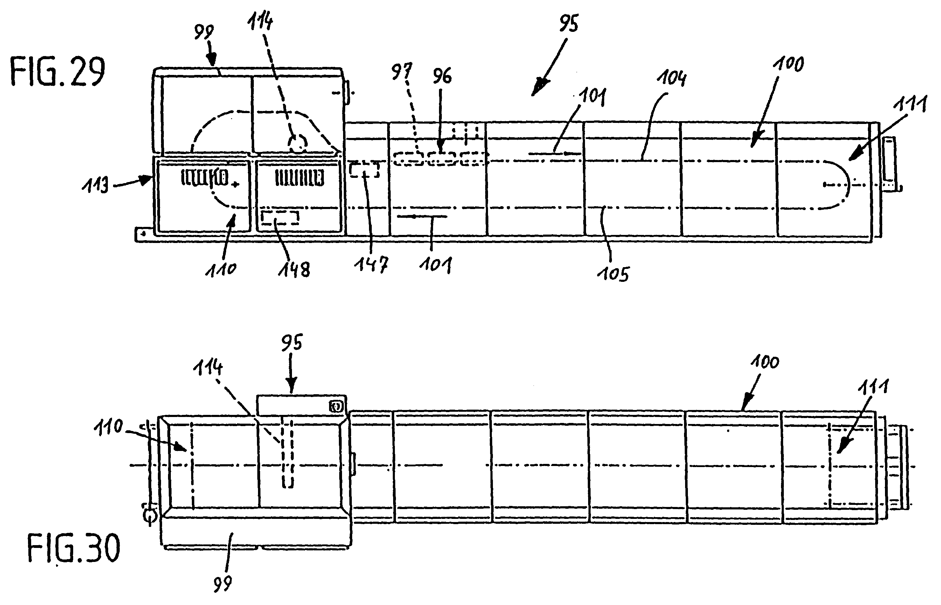

Die Fig. 29 und 30 zeigen einen langgestreckten Backofen 95 mit einer in diesem umlaufenden, endlosen Backzangenkette 96, deren Backzangen 97 jene zwei- oder mehrteilige Backformen 98 enthalten, in deren Hohlräume die dünnwandigen Formkörper aus den jeweiligen Back- bzw. Gießmassen geformt und gebacken werden.

Der Backofen 95 ist mit einer äußeren, wärmeisolierenden Verkleidung versehen und besteht aus einem Vorkopf 99 und einem an diesen anschließenden, langgestreckten Backraum 100.

Die Backzangenkette 96 durchläuft den Vorkopf 99 und den Backraum 100 in Richtung des Pfeiles 101. Die auf- und zumachbaren Backzangen 97 der Backzangenkette 96 sind in Längsrichtung des Backofens 95 hintereinander angeordnet und an ihren zur Laufrichtung 101 parallelen Seitenrändern mit endlosen Transportketten 102,103 verbunden, die jeweils einer Seitenwand des Ofens 95 benachbart angeordnet sind und sich parallel zur Längsrichtung des Backofens 95 erstrecken. Die Backzangenkette 96 durchläuft den Backofen 95 in zwei übereinanderliegenden Transportebenen 104 und 105. Jeder Transportebene sind im Ofen 95 seitliche Laufschienen 106,107 zugeordnet, auf denen sich die Backzangen 97 mittels seitlicher Laufräder 108,109 abstützen, die an den Transportketten 102,103 angebracht sind.

Im Vorkopf 96 wird die Backzangenkette 96 über eine vordere Umlenkung 110 von der unteren Transportebene 105 in die obere Transportebene 104 umgelenkt. Am hinteren Ende des Backraumes 100 wird die Backzangenkette 96 über eine hintere Umlenkung 111 von der oberen Transportebene 104 in die untere Transportebene 105 umgelenkt Beim Passieren der Umlenkungen 110,111 werden die Backzangen 97 samt den in ihnen aufgenommenen Backformen 98 jeweils auf den Kopf gestellt. Die Backzangen 97 und die in ihnen aufgenommenen Backformen 98 werden im geschlossenen Zustand durch den Backraum 100 transportiert und beim Passieren des Vorkopfes 99 mit Hilfe von Steuerrollen 122, die an den Backzangen 97 angebracht sind, zuerst geöffnet dann offen gehalten und schließlich wieder geschlossen.

Im Vorkopf 99 ist im Bereich der vorderen Umlenkung 110 der Backzangenkette 96 eine Ausgabestation 113 für die dünnwandigen Formkörper vorgesehen, in der die gebackenen, dünnwandigen Formkörper aus den geöffneten Backformen 98 entfernt und aus dem Backofen 95 hinaustransportiert werden. Im Vorkopf 99 ist in der oberen Transportebene 104 des Backofens 95 eine Aufgießstation 114 für die Back- bzw. Gießmassen vorgesehen, in der die Back- bzw. Gießmassen in genau dosierten Mengen in die geöffneten Backformen 98 eingebracht werden. Diese Aufgießstation 114 ist der Ausgabestation 113 in Laufrichtung 101 der Backzangenkette 96 nachgeordnet. Im Vorkopf 99 ist ein Gestänge 115 vorgesehen, das sich entlang der Bahn der Backzangenkette 96 erstreckt. Das Gestänge 115 beginnt bereits vor der Ausgabestation 114 und endet erst nach der Aufgießstation 113. Dieses Gestänge 115 steht mit den Steuerrollen 112 der Backzangen 97 im Eingriff, wenn diese beim Passieren des Vorkopfes 99 geöffnet, offen gehalten und wieder geschlossen werden. Die den Vorkopf 99 passierenden Backzangen 97 werden samt den in ihnen aufgenommenen Backformen 98 vor dem Erreichen der Ausgabestation 113 geöffnet, auf dem Weg von der Ausgabestation 113 bis zur Aufgießstation 114 offen gehalten und nach dem Verlassen der Aufgießstation 114 wieder geschlossen.

Die für den, in den einzelnen Backformen 98 ablaufenden Backprozeß erforderliche Wärme, wird den in den Backzangen 97 enthaltenen Backformen 98 während des Umlaufes der Backzangenkette 96 zugeführt. Diese Wärme kann den Backformen 98, je nach Bauart des Backofens 95, von in die umlaufenden Backzangen 97 eingebauten Heizelementen (z.B. Elektroheizelementen) oder von im Gestell des Backofens 95 angeordneten Heizelementen zugeführt werden, die entlang der Bahn der Backzangenkette 96 angeordnet sind und die Backformen 98 der an ihnen vorbeilaufenden Backzangen 97 beheizen.

### 4.1. BACKZANGEN :

Jede Backzange 97 besitzt einen plattenförmigen Zangenunterteil 116, der sich quer zur Laufrichtung 101 erstreckt und seitlich an zwei, einander gegenseitig zugeordneten Kettenlaschen 102a,103a der beiden Transportketten 102,103 befestigt ist. Jede Backzange 97 besitzt ferner ein, am Zangenunterteil 116 nahe der einen Transportkette 103 angebrachtes Gelenk 117 mit zur Laufrichtung 101 paralleler Schwenkachse. Jede Backzange 97 besitzt ferner einen plattenförmigen Zangenoberteil 118, der sich quer zur Laufrichtung 101 erstreckt und im Gelenk 117 quer zur Laufrichtung 101 schwenkbar gelagert ist. An seinem, vom Gelenk 117 abgewandten Seitenrand trägt der Zangenoberteil 118 eine Steuerrolle 112, mit der er zum Öffnen und Schließen der Backzange 97 gegenüber dem Zangenunterteil 118 quer zur Laufrichtung 101 verschwenkt wird. Bei geschlossener Backzange 97 liegen die beiden Zangenteile 116, 118 übereinander und sind mit ihren Vorderseiten einander zugewandt.

Jede Backzange 97 enthält eine auf- und zumachbare Backform 98, die aus zwei Formhälften 119,120 besteht, die im gleichen Abstand vom Gelenk 117 an den Vorderseiten der beiden Zangenteile 116,118 befestigt sind, wobei die untere Formhälfte 119 am Zangenunterteil 116 und die obere Formhälfte 120 am Zangenoberteil 118 befestigt ist Die Backform 98 ist durch eine Haupt-Formtrennungsebene in die beiden Formhälften 119,120 geteilt, welche mit ihren einander zugewandten Vorderseiten, bei geschlossener Backform 98, einen oder mehrere Back-Hohlräume begrenzen, deren dreidimensionale Gestatt jeweils den in der Backforrn 98 herzustellenden, dünnwandigen Formkörpern entspricht.

Jede Backzange 97 erstreckt sich mit ihren beiden Zangenteilen 116,118 quer zur Laufrichtung 101 über die in ihr aufgenommene Backform 98 seitlich hinaus. Auf der vom Gelenk 117 abgewandten Seite der Backform 98 bilden beide Zangenteile 116,118 über die jeweilige Formhälften 119,120 seitlich vorstehende Endabschnitte 121,122. Der Endabschnitt 121 des Zangenunterteiles 116 ist an seinem äußeren Seitenrand mit der Kettenlasche 102a der Transportkette 102 verbunden. Der Endabschnitt 122 des Zangenoberteiles 118 trägt an seinem äußeren Seitenrand die Steuerrolle 112.

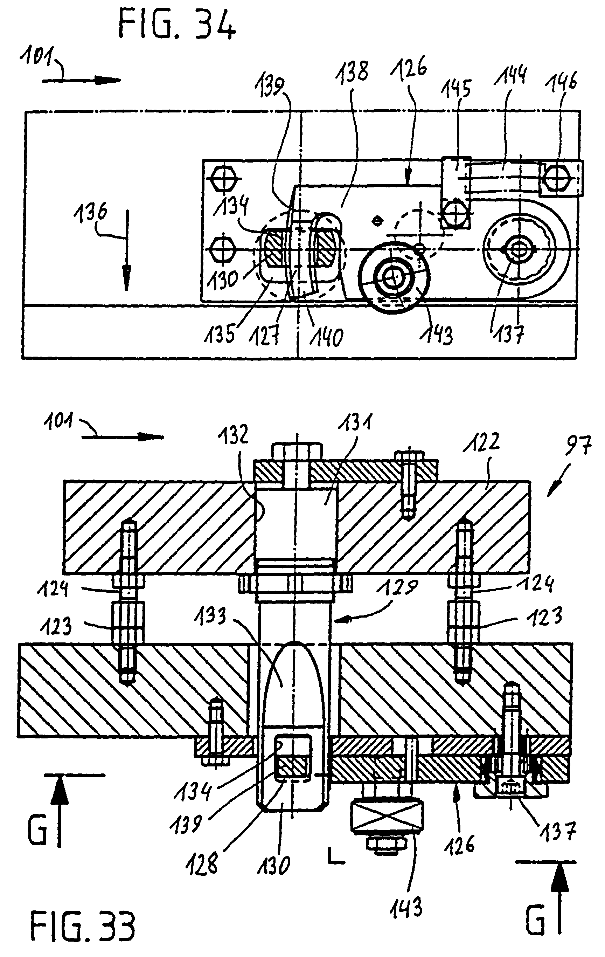

An den Endabschnitten 121,122 beider Zangenteile 116,118 sind, jeweils der Backform 98 benachbart, gegenseitig aufeinander ausgerichtete Distanzbolzen 123,124 angebracht, die den gegenseitigen Abstand der beiden Formhälften 119,120 bei geschlossener Backform 98 festlegen. Jeder Endabschnitt 121,122 trägt an seiner Vorderseite zwei, zur Haupt-Formtrennungsebene der Backform 98 senkrechte Distanzbolzen 123,124, die in Laufrichtung 101 hintereinander angeordnete sind. Die Distanzbolzen 123 des unteren Endabschnittes 121 liegen bei geschlossener Backzange 97 auf den Distanzbolzen 124 des oberen Endabschnittes 122 auf. Die Distanzbolzen 124 des oberen Endabschnittes 122 sind entlang ihrer Längsachse und somit senkrecht zur Haupt-Formtrennungsebene verstellbar. (Fig. 33)

### 4.1.1. BACKFORMEN :

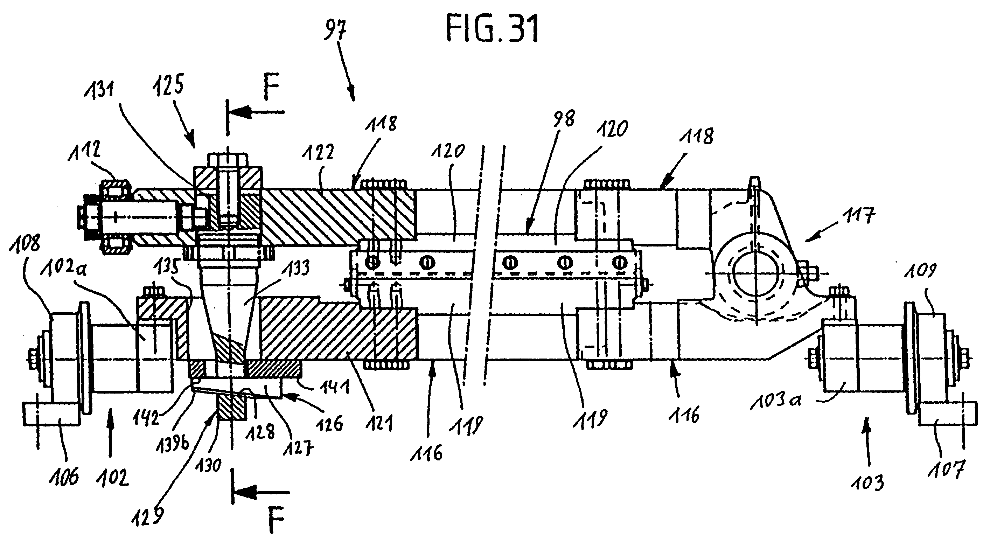

Bei der Backzange 97 der Fig. 31 besteht sowohl die untere Formhälfte 119 als auch die obere Formhälfte 120 der Backform 98 aus einer rechteckigen Backplatte mit zur Laufrichtung 101 parallelen bzw. senkrechten Seitenrändern und aus zwei, als Abschlußleisten bezeichneten, seitlichen Leisten, die an entgegengesetzten Seitenrändern der Backplatte angebracht sind und jeweils über die, an der Vorderseite der Backplatte ausgebildete ebene, rechteckige Backfläche vorspringen.

Bei geschlossener Backzange 97 begrenzen die beiden Formhälften 119,120 einen einzigen, von ihren Backflächen und ihren Abschlußleisten nach außen begrenzten, quaderförmigen Back-Hohlraum zur Herstellung von dünnen rechteckigen Blättern. Dieser Back-Hohlraum wird an seinen zur Laufrichtung 101 parallelen Seitenrändern von den, mit Dampfkanälen versehenen Abschlußleisten der unteren Formhälfte 119 und an seinen zur Laufrichtung 101 senkrechten Seitenrändern von den Abschlußleisten der oberen Formhälfte 120 abgeschlossen. Die Hohe dieses Back-Hohlraumes bestimmt die Dicke der in ihm hergestellten dünnen rechteckigen Blätter. Diese Hohe wird durch den bei geschlossener Backform 98 vorhandenen, gegenseitigen Abstand der beiden Formhälften 119,120 bestimmt Dieser Abstand wird durch die Distanzbolzen 123,124 an den Endabschnitten 121,122 der beiden Zangenteile 116,118 der Backzange 97 festgelegt und durch das Verstellen der Distanzbolzen 124 eingestellt bzw. verstellt.

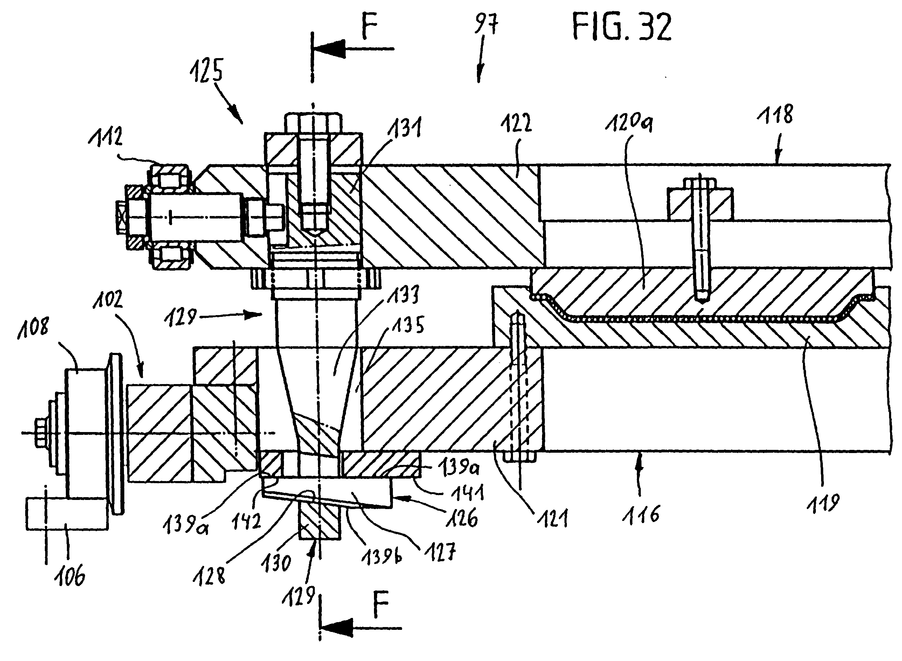

Bei der Backzange 97 der Fig. 32 ist die untere Formhälfte 119 der Backform 98 als einteilige ebene Backplatte ausgebildet, die an ihrer Vorderseite mehrere im Abstand von einander angeordnete Matrizen in sich vereinigt. Die obere Formhälfte 120 der Backform 98 ist mehrteilig ausgebildet und umfaßt mehrere von einander getrennte Patrizen 120a. Bei geschlossener Backzange 97 begrenzen die beiden Formhälften 119,120 mehrere, von einander getrennte, nach außen geschlossene Back-Hohlräume für die gleichzeitige Herstellung mehrerer dünnwandiger flacher Tassen in einer einzigen Backzange 97. Die Höhe dieser Back-Hohlräume bestimmt die Wandstärke der in ihnen hergestellten Tassen. Diese Höhe wird durch den gegenseitigen Abstand der beiden Formhälften 119,120 bei geschlossener Backform 98 bestimmt. Dieser Abstand wird durch die Distanzbolzen 123,124 an den Endabschnitten 121,122 der beiden Zangenteile 116,118 der Backzange 97 festgelegt und durch das Verstellen der Distanzbolzen 124 eingestellt bzw. verstellt.

### 4.1.2. KLEMMVORRICHTUNG AN DER BACKZANGE :

Jede Backzange 97 ist auf der vom Gelenk 117 abgewandten Seite der Backform 98 mit einer Klemmvorrichtung 125 versehen, die bei geschlossener Backzange 97 von außen betätigt wird, wenn sich die beiden Zangenteile 116,118 mit den Distanzbolzen 123,124 ihrer Endabschnitte 121,122 aneinander abstützen. Die Klemmvorrichtung 125 wird im Vorkopf 99 nach dem Schliessen und vor dem Öffnen der Backzange 97 jeweils einmal von außen betätigt.

Nach dem Schließen der Backzange wird die Klemmvorrichtung 125 an den Endabschnitten 121,122 formschlüssig festgezogen, wobei sichergestellt sein muß, daß zum einen sich die beiden Zangenteile 116,118 über ihre Distanzbolzen 123,124 aneinander abstützen und das Klemmelement 126 mit seinem Klemmabschnitt 127 spielfrei mit der Klemmfläche 128 des Klemmelementes 129 im Eingriff steht. Während des Backprozesses wirkt die Klemmvorrichtung 125 bei geschlossener Backzange 97 dem sich im Back-Hohlraum der geschlossenen Backform 98 aufbauenden Innendruck entgegen, der auf die einander zugewandten Backflächen der beiden Formhälften 119,120 der Backform 98 drückt und in Öffnungsrichtung der Backzange 97 wirkt. Die von der Klemmvorrichtung 125 aufgebrachte, in Schließrichtung der Backzange 97 wirkende Vorspannkraft ist stets größer als die durch den Innendruck der Backform 98 während des Backprozesses erzeugte, in Öffnungsrichtung der Backzange 97 wirkende Kraft. Vor dem Öffnen der Backzange 97 wird die Klemmvorrichtung 125 gelöst, so lange noch die beiden Zangenteile 116,118 durch eine Andrückvorrichtung über die Distanzbolzen 123,124 ihrer Endabschnitte 121,122 gegeneinander gedrückt werden.

Die Klemmvorrichtung 125 umfaßt ein, am Endabschnitt 121 des einen Zangenteiles 116 bewegbar gelagertes Klemmelement 126, welches mit seinem Klemmabschnitt 127 an einer Klemmfläche 128 eines, mit dem Endabschnitt 122 des anderen Zangenteiles 118 starr verbundenen, elastisch dehnbaren Klemmelementes 129 festgezogen werden kann. Bei geschlossener und noch unverschlossener Backzange 97 liegen die beiden Endabschnitte 121,122 einander gegenüber und das bewegbare Klemmelemente 126 ist seitlich neben dem elastisch dehnbaren Klemmelement 129 angeordnet.

Die Klemmvorrichtung 125 wird im Backofen 95 vor dem Öffnen der geschlossenen Backzange 97 und nach dem Schließen der offenen Backzange 97 jeweils durch eine eigene Betätigungsvorrichtung des Backofens 95 betätigt. Diese beiden Betätigungsvorrichtungen Verlagern jeweils das bewegbare Klemmelement 126 der Klemmvorrichtung 125.

Beim Betätigen der Klemmvorrichtung 125 nach dem Schließen der Backzange 97 wird zuerst das bewegbare Klemmelement 126 zum elastisch dehnbaren Klemmelement 129 hin bewegt bis das bewegbare Klemmelement 126 mit seinem Klemmabschnitt 127 an der Klemmfläche 128 des elastisch dehnbaren Klemmelementes 129 spielfrei anliegt

Zwischendem Klemmabschnitt 127 des bewegbaren Klemmelementes 126 und der Klemmfläche 128 des elastisch dehnbaren Klemmelementes 129 ist ein kraftschlüssiger und selbsthemmender Reibungseingriff vorgesehen. Nach dem spielfreien Eingriff der Klemmvorrichtung bewirkt der weitere Verlagerungsweg des bewegbaren Klemmelementes 126 gegenüber dem elastisch dehnbaren Klemmelernent 129, daß die beiden Endabschnitte 121,122 zueinandergezogen werden. Dadurch wird im ersten Teil dieses Verlagerungsweges das Bewegungsspiel der Backzange 97 und der Klemmvorrichtung 125 beseitigt. Im daran anschließenden Teil dieses Verlagerungsweges wird das elastisch dehnbare Klemmelernent 129 elastisch gedehnt. Dieser Verlagerungsweg endet erst dann, wenn durch die elastische Dehnung des elastisch dehnbaren Klemmelementes 129 eine vorbestimmte, das Abheben der Distanzbolzen 123,124 voneinander während des Backprozesses verhindernde Vorspannkraft auf die beiden Zangenteile 116,118 aufgebracht ist.

Die Fig. 31 und 32 zeigen zwei geschlossene Backzangen 97 mit Klemmvorrichtungen 125, bei denen jeweils ein, mit dem oberen Endabschnitt 121 starr verbundenes, elastisch dehnbares Klemmelernent 129 über den unteren Endabschnitt 121 nach unten vorsteht und an der Rückseite des unteren Endabschnittes 121 mit einem bewegbaren Klemmelement 126 in Eingriff gebracht wird, welches zwischen dem über den unteren Endabschnitt 121 vorstehenden Teil des elastisch dehnbaren Klemmelementes 129 und dem unteren Endabschnitt 121 eingeklemmt wird.

Das elastisch dehnbare Klemmelement 129 ist als länglicher, sich in seiner Längsrichtung verjüngender Zapfen ausgebildet, der über die Vorderseite des oberen Endabschnittes 122 nach unten vorsteht und einen im Abstand vom oberen Endabschnitt 122 angeordneten Kopfteil 130 besitzt Der am oberen Ende des zapfenförmigen Klemmelementes 129 angeordnete zylindrische Befestigungsabschnitt 131 ist in eine Bohrung 132 des oberen Endabschnittes 122 eingesetzt und mit diesem drehfest bzw. undrehbar verbunden. An den Befestigungsabschnitt 131 schließt ein elastisch dehnbarer, sich nach unten konisch verjüngender Abschnitt 133 an, der an seinem verjüngten Ende in den Kopfteil 130 übergeht. Der Kopfteil 130 enthält einen zur Haupt-Formtrennungsebene der Backforrn 98 parallelen und zur Laufrichtung 101 der Backzange 97 senkrechten Querkanal 134, der im Kopfteil 130 eine Öse bildet, in die der Klemmabschnitt 127 des bewegbaren Klemmelementes 126 eingeführt werden kann. Die Klemmfläche 128 des elastisch dehnbaren Klemmelementes 129 ist im Querkanal 134 an seiner der Vorderseite des oberen Endabschnittes 122 zugewandten Kanalwand ausgebildet.

Beim Schließen der Backzange 97 wird der Zangenoberteil 118 gegen den Zangenunterteil 116 geschwenkt bis die Distanzbolzen 124 des oberen Endabschnittes 122 auf den Distanzbolzen 123 des unteren Endabschnittes 121 aufliegen. Während dieser Schwenkbewegung taucht das elastisch dehnbare Klemmelement 129 mit seinem Kopfteil 130 an der Vorderseite des unteren Endabschnittes 121 in eine Ausnehmung 135 des unteren Endabschnittes 121 ein. Wenn die Zangenteile 116,118 mit ihren Distanzbolzen 123,124 aufeinanderliegen, ragt das elastisch dehnbare Klemmelernent 129 mit seinem Kopfteil 130 an der Rückseite des unteren Endabschnittes 121 aus der Ausnehmung 135 hervor. Zum Festziehen der Klemmvorrichtung 125 wird der Klemmabschnitt 127 des bewegbaren Klemmelementes 126 in Richtung des Pfeiles 136 an der Rückseite des unteren Endabschnittes 121 entlangbewegt und sowohl am Zangenoberteil 118 als auch am Zangenunterteil 116 festgezogen. Der Klemmabschnitt 127 wird zuerst durch den Querkanal 134 des Kopfteiles 130 hindurchgeschoben und anschließend zwischen dem Kopfteil 130 und der die Ausnehmung 135 umgebenden Rückseite des unteren Endabschnittes 121 festgeklemmt.

Das bewegbare Klemmelement 126 ist als einarmiger Hebel ausgebildet, der sich auf der Rückseite des unteren Endabschnittes 121 im wesentlichen parallel zur Laufrichtung 101 der Backzange 97 erstreckt. Der Hebel 126 ist an einer, zur Haupt-Formtrennungsebene der Backform 98 senkrechten Drehachse 137 quer zur Laufrichtung 101 der Backzange 97 schwenkbar gelagert. Das der Drehachse 137 entgegengesetzte, freie Ende 138 des Hebel 126 ist hakenförmig ausgebildet und mit einem in Anzugsrichtung 136 frei vorstehenden, bogenförmig gekrümmten Hakenabschnitt 139 versehen, der als Klemmabschnitt 127 ausgebildet ist Der Hakenabschnitt 139 verjüngt sich keilförmig zu seinem, in Anzugsrichtung 136 nach vorne weisenden, freien Ende 140 hin.

Der Hakenabschnitt 139 ist an seiner, der Rückseite des unteren Endabschnittes 121 zugewandten, inneren Seitenflläche 139a mit einer Klemmfläche versehen, der Klemmflächen 141,142 (Fig. 32) zugeordnet sind, die an der die Ausnehmung 135 umgebenden Rückseite des unteren Endabschnittes 121 angeordnet sind. An der vom unteren Endabschnitt 121 abgewandten, äußeren Seitenfläche 139b des Hakenabschnittes 139 ist eine Klemmfläche ausgebildet, der die im Querkanal 134 des Kopfteiles 130 angeordnete Klemmfläche 128 des elastisch dehnbaren Klemmelementes 129 zugeordnet ist.

Zum Betätigen des Hebels 126 ist dieser mit einer, zwischen seinem freien Ende 138 und seiner Drehachse 137 angebrachten Betätigungsrolle 143 versehen. Weiters ist zum Betätigen des Hebels 126 eine am Hebel 126 und am unteren Endabschnitt 121 angreifende Biegefeder 144 vorgesehen, die entgegen der Anzugsrichtung 136 hinter dem Hebel 126 angeordnet ist und in Anzugsrichtung 136 auf den Hebel 126 wirkt Die Biegefeder 144 stützt sich am Hebel 126 in einem, zwischen seinem freien Ende 138 und seiner Drehachse 137 angeordneten Widerlager 145 ab. Am unteren Endabschnitt 121 stützt, sich die Biegefeder 144 in einem Widerlager 146 ab, das gegenüber der Drehachse 137 quer zur Laufrichtung 101 seitlich versetzt angeordnet ist

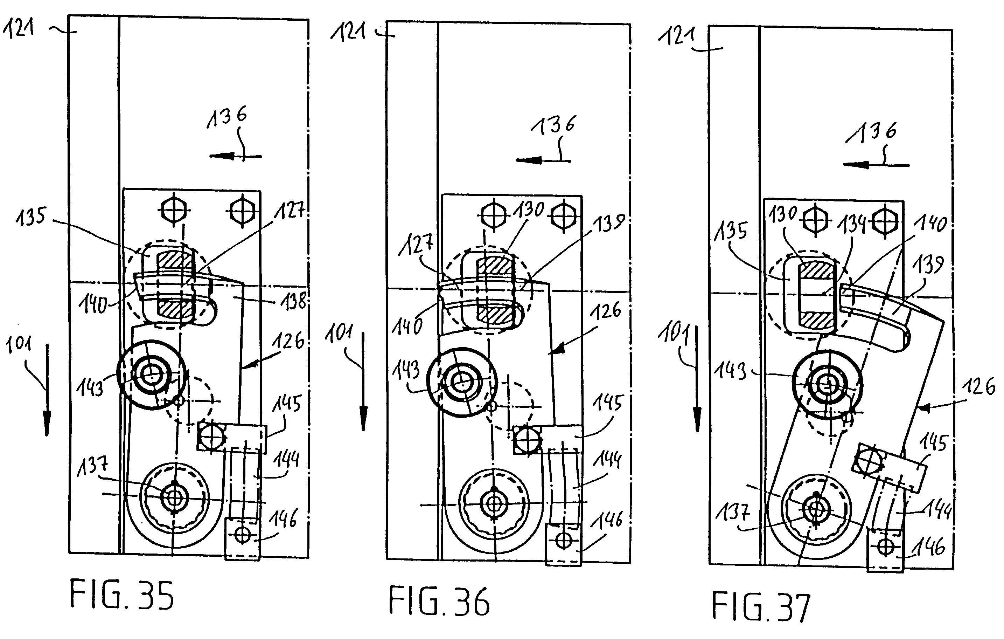

Das als einarmiger Hebel ausgebildete, bewegbare Klemmelement 126 kann sowohl mit Hilfe der Betätigungsrolle 143 als auch mit Hilfe der Biegefeder 144 um die Drehachse 137 zwischen einer Ruhestellung, einer Freigabestellung (Fig. 37) und einer Arbeitsstellung (Fig. 34,35,36) verschwenkt werden. In der Ruhestellung steht das bewegbare Klemmelement 126 mit seinem Klemmabschnitt 127 über die Ausnehmung 135 vor und die Biegefeder 144 ist entspannt.

Im Vorkopf 99 ist eine erste Betätigungsvorrichtung 147 zum Betätigen der Klemmvorrichtungen 125 der Backzangen 97 der Aufgießstation 114 in Laufrichtung 101 nachgeordnet. Jede an der ersten Betä`tigungsvorrichtung 147 vorbeilaufende Backzange 97 kommt mit der Betätigungsrolle 143 des bewegbaren Klemmelementes 126 ihrer Klemmvorrichtung 125 in Eingriff mit der ersten Betätigungsvorrichtung 147. Durch diesen Eingriff wird das bewegbare Klemmelement 126 entgegen der Anzugsrichtung 136 aus seiner Ruhestellung in seine Freigabestellung (Fig. 37) verschwenkt, wodurch die Biegefeder 144 gespannt und die Ausnehmung 135 für den Durchtritt des elastisch dehnbaren Klemmelementes 129 freigegeben wird.

Aus der Freigabestellung wird das Klemmelement 126 durch die gespannte Biegefeder 144 in Anzugsrichtung 136 bis in die Arbeitsstellung (Fig. 34,35,36) verschwenkt und die Klemmvorrichtung 125 festgezogen. Dabei wird die an der inneren Seitenfläche 139a des Hakenabschnittes 139 vorgesehene Klemmfläche in Anzugsrichtung 136 an den, die Ausnehmung 135 umgebenden, an der Rückseite des unteren Endabschnittes 121 angeordneten Klemmflächen 141,142 entlanggeschoben. Weiters wird die an der äußeren Seitenfläche 139b des Hakenabschnittes 139 vorgesehene Klemmflache in Anzugsrichtung 136 an der im Querkanal 134 des Kopfteiles 130 angeordneten Klemmfläche 128 des elastisch dehnbaren Klemmelementes 129 entlangbewegt. Der Hakenabschnitt 139 wird mit seinen Klemmflächen solange an den seinen Klemmflächen jeweils zugeordneten Klemmflächen 128,141,142 des unteren Endabschnittes 121 bzw. des elastisch dehnbaren Klemmelementes 129 entlanggeschoben, bis die durch dieses Entlangschieben im elastisch dehnbaren Klemmelement 129 hervorgerufene elastische Dehnung der gewünschten, durch die Biegefeder 144 vorbestimmten Vorspannkraft entspricht. Die einer vorbestimmten Vorspannkraft entsprechende Endstellung des bewegbaren Klemmelementes 126 und der von diesem bis dort hin zurückzulegende Schwenkweg verändern sich mit zunehmender Abnützung der miteinander im Eingriff stehenden Klemmflächen, ohne daß sich diese Veränderungen auf die Druckverhältnisse in der Backform oder auf die an den Dichtflächen der Backform bzw. an den Distanzbolzen 123, 124 der Endabschnitte 121,122 wirksamen Anpreßdrücke auswirken.

In den Fig. 34 bis 36 sind unterschiedliche Endstellungen des, von der Biegefeder 144 mit gleicher Federkraft bis in seine Arbeitsstellung bewegten Klemmelementes 126 dargestellt. Diese Endstellungen entsprechen unterschiedlichen Abnützungen an den miteinander im Eingriff stehenden Klemmflächen 128,139a,139b,141,142. Der jeweilige Grad der Abnützung ist daran zu erkennen, wie tief der Hakenabschnitt 139 des bewegbaren Klemmelementes 126 in den Querkanal 134 des Kopfteiles 130 des elastisch dehnbaren Klemmelementes 129 hineinragt bzw. wie weit der Hakenabschnitt 139 mit seinem freien Ende 140 seitlich über den Kopfteil 130 vorsteht Die Fig. 34 zeigt die Arbeitsstellung des bewegbaren Klemmelementes 126 bei mittlerem Verschleiß, die Fig. 35 noch ohne Verschleiß und die Fig. 36 bei großem Verschleiß. In der Arbeitsstellung des bewegbaren Klemmelementes 126 ist das elastisch dehnbare Klemmelement 129 elastisch gedehnt und bringt eine vorbestimmte Vorspannkraft auf die beiden Zangenteile 116,118 auf. Die Größe der diese Vorspannkraft erzeugenden Dehnung des Klemmelementes 129 wird durch die, auf das elastisch dehnbare Klemmelement 126 wirkende Biegefeder 144 der Klemmvorrichtung 125 bestimmt und durch das bis in seine Arbeitsstellung festgezogene, bewegbare Klemmelement 126 quasi eingefroren und durch den selbsthemmenden Reibungseingriff der aneinandergepreßten Klemmflächen fixiert.

Im Vorkopf 99 ist eine zweite Betätigungsvorrichtung 148 zum Betätigen der Klemmvorrichtungen 125 der Backzangen 97 der Ausgabestation 113 vorgelagert. Jede an der zweiten Betätigungsvorrichtung 148 vorbeilaufende Backzange 97 kommt mit der Betätigungsrolle 143 des bewegbaren Klemmelementes 126 ihrer Klemmvorrichtung 125 in Eingriff mit der zweiten Betätigungsvorrichtung 148. Durch diesen Eingriff wird das bewegbare Klemmelement 126 entgegen der Anzugsrichtung 136 aus seiner Arbeitssteilung in seine Freigabestellung (Fig. 37) verschwenkt, wodurch die Klemmvorrichtung 125 gelöst und die Ausnehmung 135 zum Herausziehen des elastisch dehnbaren Klemmelementes 129 freigegeben wird.

Beim Lösen der Klemmvorrichtung 125 wird das Klemmelement 126 entgegen der Wirkung der Biegefeder 144 bewegt und deren Spannung erhöht. Dabei wird die an der inneren Seitenfläche 139a des Hakenabschnittes 139 vorgesehene Klemmfläche entgegen der Anzugsrichtung 136 an den, die Ausnehmung 135 umgebenden, an der Rückseite des unteren Endabschnittes 121 angeordneten Klemmflachen 141,142 entlanggeschoben. Weiters wird die an der äußeren Seitenfläche 139b des Hakenabschrittes 139 vorgesehene Klemmfläche entgegen der Anzugsrichtung 136 an der im Querkanal 134 des Kopfteiles 130 angeordneten Klemmfläche 128 des elastisch dehnbaren Klemmelementes 129 entlanggeschoben.

Das Klemmelement 126 wird von der zweiten Betätigungsvorrichtung 148 in seiner Freigabestellung gehalten bis das elastisch dehnbare Klemmelement 129 durch das Öffnen bzw. Aufklappen der Backzange 97 aus der Ausnehmung 135 herausgezogen wurde. Erst dann wird die Betätigungsrolle 143 durch die zweite Betätigungsvorrichtung 148 freigegeben und das Klemmelement 126 wird durch die Biegefeder 144 wieder zurück in seine Ruhestellung geschwenkt.

Bei den Backzangen 97 der Fig. 31 bis 37 wird die, für die Erzeugung der elastischen Dehnung des elastisch dehnbaren Klemmelementes 129 erforderliche Bewegung des bewegbaren Klemmelementes 126 innerhalb der Klemmvorrichtung 125 durch die, auf das elastisch dehnbare Klemmelement 126 wirkende Biegefeder 144 erzeugt. Diese Bewegung des bewegbaren Klemmelementes 126 kann auch außerhalb der Klemmvorrichtung 125 und innerhalb der ersten Betätigungsvorrichtung 147 erzeugt werden, die diese Bewegung auf das bewegbare Klemmelement 126 der Klemmvorrichtung 125 einer die erste Betätigungsvorrichtung 147 passierenden Backzange 97 überträgt. Bei der Verwendung einer solchen ersten Betätigungsvorrichtung 147 können bei den Klemmvorrichtungen 125 der Backzangen 97 die Biegefeder 144 samt ihren Widerlagern 145,146 weggelassen werden.

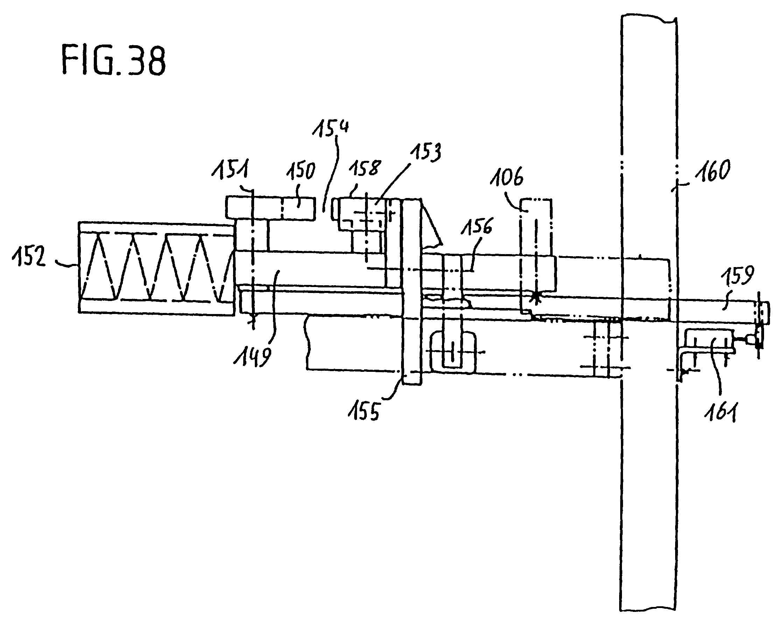

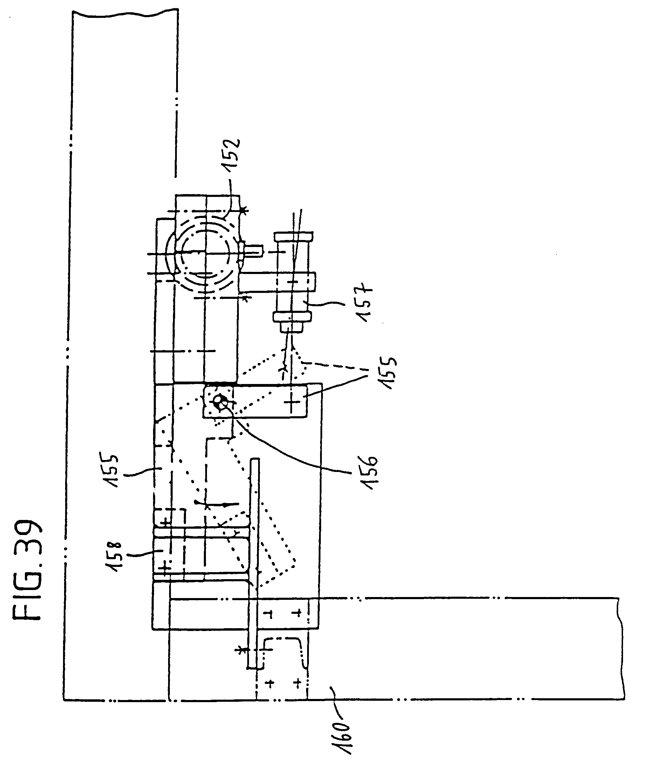

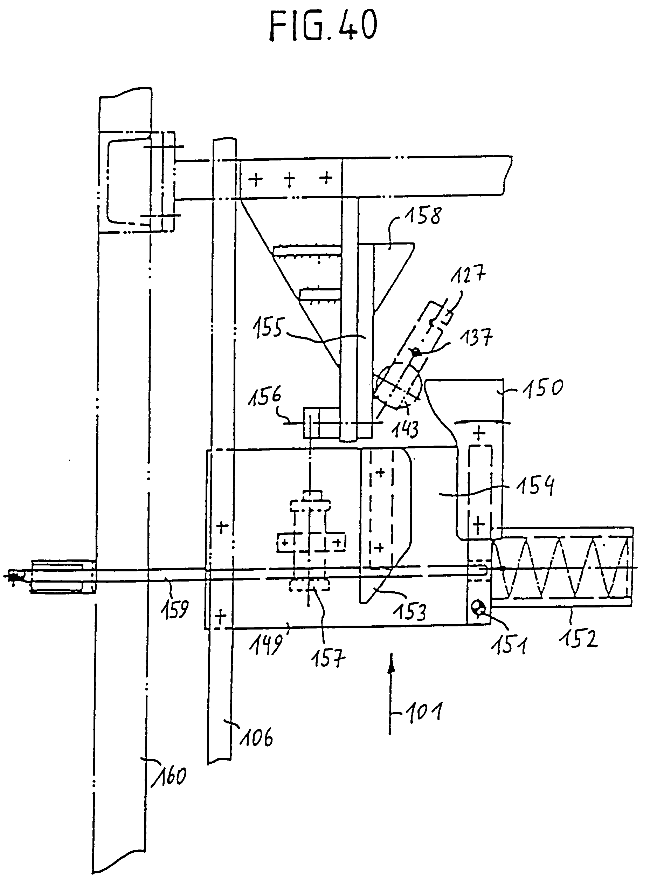

Die Fig. 38 bis 40 zeigen eine, der oberen Transportebene 104 des Backofens 95 zugeordnete, erste Betätigungsvorrichtung 147 für Backzangen 97, bei deren Klemmvorrichtungen 125 die Biegefedern 144 samt ihren Widerlagern 145,146 weggelassen wurden. Diese Betätigungsvorrichtung 147 weist eine an der Unterseite der Laufschiene 106 befestigte, zur oberen Transportebene 104 parallele Platte 149 auf, an deren Oberseite ein nockenartig ausgebildetes Schließelement 150 um eine zur oberen Transportebene 104 senkrechte Drehachse 151 schwenkbar gelagert ist. Das Schließelement 150 ist durch eine Druckfeder 152 in seine Arbeitsstellung vorgespannt. Auf der Oberseite der Platte 149 ist weiters ein Anlaufelement 153 befestigt, welches dem Schließelement 150 quer zur Laufrichtung 101 gegenüber liegt und diesem entgegen der Laufrichtung 101 vorgelagert ist. Das Schließelement 150 und das Anlaufelement 153 begrenzen einen sich im wesentlichen in Laufrichtung 101 erstreckenden Führungskanal 154 für die Betätigungsrolle 143 der bewegbaren Klemmelemente 126.

Wenn eine Backzange 97 diese Betätigungsvorrichtung 147 passiert, läuft das bewegbare Klemmelement 126 der Klemmvorrichtung 125 mit seiner Steuerrolle 143 zuerst an das Anlaufelement 153 an und dann an dem Anlaufelement 153 entlang weiter. Dadurch wird das bewegbare Klemmelement 126 zuerst quer zur Laufrichtung 101 in seine Freigabestellung verschwenkt und dann in dieser Freigabestellung gehalten. Anschließend läuft das bewegbare Klemmelement 126 mit seiner Steuerrolle 143 gegen das Schließelement 150 und wird von diesem quer zur Laufrichtung 101 In seine Arbeitsstellung verschwenkt. Dabei wird das bewegbare Klemmelement 126 in Anzugsrichtung 136 bis in seine Arbeitsstellung verschwenkt und gleichzeitig das Schließelement 150 entgegen der Anzugsrichtung 136 aus seiner Ausgangsstellung verdrängt.

Die Druckfeder 152 erzeugt die für die Erzeugung der elastischen Dehnung des elastisch dehnbaren Klemmelementes 129 erforderliche Bewegung des bewegbaren Klemmelementes 126. Die Druckfeder 152 bewegt das bewegbare Klemmelement 126 mit gleicher Federkraft an den Klemmflächen der Klemmvorrichtung 125 entlang, bis es in seiner Arbeitsstellung durch das elastisch dehnbare Klemmelement 129 blockiert wird. Dem dabei vom bewegbaren Klemmelement 126 innerhalb der Klemmvorrichtung 125 zurückgelegten Schwenkweg entspricht gleichzeitig ein vom Schließelement 150 innerhalb der ersten Betätigungsvorrichtung 147 zurückgelegter Verdrängungsweg. Während des Betriebes des Backofens 95 nimmt die Abnützung der Klemmflächen der Klemmvorrichtung 125 einer Backzange 97 zu und der vorn Schließelement 150 beim Festziehen der Klemmvorrichtung 125 dieser Backzange 97 jeweils zurückgelegte Verdrängungsweg ab.

Bei einer Fehlfunktion des Backofens 95, die zum vorzeitigen Blockieren des Schwenkweges des Klemmelementes 126 beim Festziehen der Klemmvorrichtung 125 einer Backzange 97 führt, kommt es zu einer übermäßigen Vergrößerung des Verdrängungsweges des Schließelementes 150 der ersten Betätigungsvorrichtung 147.

Die Betätigungsvorrichtung 147 weist einen Winkelhebel 155 auf, der im Gestell des Backofens 95 um eine zur oberen Transportebene 104 senkrechte Drehachse 156 quer zur Laufrichtung 101 schwenkbar gelagert ist und mittels eines Betätigungszylinders 157 aus seiner Ruhestellung in seine Arbeitsstellung geschwenkt werden kann. Der Winkelhebel 155 trägt ein Öffnungselement 158, welches in der Arbeitsstellung des Winkelhebels 155 in die Bahn der Steuerrollen 143 der Klemmelemente 126 ragt und das Klemmelement 126 wieder zurück in seine Freigabestellung verschwenkt, wenn dessen Steuerrolle 143 am Öffnungselement 158 entlanglauft. Das Schließelement 150 ist mit einer Schaltstange 159 verbunden, die zu einem an der Außenseite der Seitenwand 160 des Backofens 95 befestigten Schalter 161 führt, der mit dem an einem Schenkel des Winkelhebels 155 angreifenden Betätigungszylinder 157 verbunden ist. Dieser Schalter wird erst dann betätigt, wenn beim Festziehen einer Klemmvorrichtung 125 der vom Schließelement 150 zurückgelegte Verdrängungsweg eine vorbestimmte Größe überschreitet.

Bei dem, von der Vorderseite eines der Endabschnitte 121,122 der Zangenteile 116,118 abstehenden, elastisch dehnbaren Klemmelement 129 kann die dem jeweiligen Endabschnitt 121,122 zugewandte, für den Eingriff mit dem Klemmabschnitt 127 des bewegbaren Klemmelementes 126 vorgesehene Klemmfläche 128 auch in einem seitlich offenen Schlitz des hakenförmig ausgebildeten Kopfteiles 130 des elastisch dehnbaren Klemmelementes 129 oder an der dem jeweiligen Endabschnitt 121,122 zugewandten Rückseite des als Hammerkopf ausgebildeten Kopfteiles 130 des elastisch dehnbaren Klemmelementes 129 angeordnet sein.

Das bewegbare Klemmelement 126 kann auch als steifer Haken ausgebildet sein, der an einem der Endabschnitte 121,122 der Zangenteile 116,118 um eine zur Haupt-Formtrennungsebene der Backform 98 parallele Drehachse schwenkbar gelagert ist und um diese Drehachse zwischen einer Ruhestellung, einer Freigabestellung und einer Arbeitsstellung verschwenkt werden kann. Das bewegbare Klemmelement 126 kann auch als steifer Schieber ausgebildet sein, der an einem der Endabschnitte 121,122 der Zangenteile 116,118 parallel zur Haupt-Formtrennungsebene der Backform 98 verschiebbar gelagert ist und entlang einer geradlinigen oder gekrümmten Bahn zwischen einer Ruhestellung, einer Freigabestellung und einer Arbeitsstellung verschoben werden kann.

Die vorliegende Erfindung umfaßt auch Backzangen 97, deren Klemmvorrichtungen 125 zum Aneinanderpressen der Formhälften 119,120,120a bzw. Zangenteile 113,118 der geschlossenen Backforrn 98 bzw. Backzange 97 mit den zulern genannten Ausführungsformen des bewegbaren Klemmelementes 126 bzw. des elastisch dehnbaren Klemmelementes 129 ausgerüstet sind. Auch bei diesen Backzangen 97 können innerhalb der jeweiligen Klemmvorrichtung 125 Biegefeder oder Druckfeder angeordnet sein, welche die für die Erzeugung der elastischen Dehnung des elastisch dehnbaren Klemmelementes 129 erforderliche Bewegung des bewegbaren Klemmelementes 126 erzeugen. Alternativ dazu können die Biegefeder oder Druckfeder, welche die für die Erzeugung der elastischen Dehnung des elastisch dehnbaren Klemmelementes 129 erforderliche Bewegung des bewegbaren Klemmelementes 126 erzeugen, auch in der ersten Betätigungsvorrichtung 147 zum betätigen der Klemmvorrichtungen 125 angeordnet sein.

Die einander gegenseitig zugeordneten Klemmflächen 139a und 141,142 bzw 139b und 128 sind jeweils unter geringfügig voneinander abweichenden Winkeln zur Haupt-Formtrennungsebene der Backform 98 geneigt und bilden beim Festziehen der Klemmvorrichtung 125 einen, sich in Anzugsrichtung 136 verjüngenden Spalt. Die gegenseitige Lage und der gegenseitige Verlauf der Klemmflächen 139a und 141,142 bzw 139b und 128 hängt von den, für einen kraftschlüssigen und selbsthemmenden Reibungseingriff zwischen diesen Klemmflächen 139a und 141,142 bzw. 139b und 128 ausgewählten Werkstoffen ab und muß allenfalls experimentell ermittelt werden. Der Öffnungswinkel dieses Spaltes ist kleiner als der Haftreibungswinkel jener Werkstoffpaarung, die für die beiden Klemmflächen 139a und 141,142 bzw. 139b und 128 für einen kraftschlüssigen und selbsthemmenden Reibungseingriff zwischen ihnen ausgewählt wurde. Der Öffnungswinkel dieses Spaltes beträgt bei einem bevorzugten Ausführungsbeispiel für die Werkstoffpaarung Hartmetall-Hartmetall 6 Grad.

Bei geschlossener Backzange 97 nehmen die selbsttragenden Zangenteile 116,118 die während des Backprozesses in der jeweiligen Backform 98 auftretenden Innendrücke auf und übertragen sie auf das dem einen Seitenrand der Backzange 97 benachbarte Gelenk 117 und auf die am gegenüberliegenden Seitenrand der Backzange 97 angeordnete und dort festgezogene Klemmvorrichtung 125. Das Gelenk 117 und die festgezogene Klemmvorrichtung 125 wirkt den in Öffnungsrichtung der Backzange 97 wirkenden Innendrücken entgegen und halten die Backzange 97 geschlossen. Die Formhälften 119,120,120a der Backformen 98 können in diese selbsttragenden Zangenteile 116,118 bereits integriert sein, oder sie sind als von den selbsttragenden Zangenteilen abnehmbare Formhälften ausgebildet, die für sich und ohne sich an den selbsttragenden Zangenteilen abzustützen den während des Backprozesses auftretenden Innendrücken nicht standhalten. Die in die selbsttragenden Zangenteile integrierten bzw. eingebauten Backformen können ebene Backplatten, oder aus Matrize und Patrize bestehende Backformen für flache Tassen oder tiefe Becher oder Tüten etc. sein.

## Patentansprüche

1. Backzange (7, 60, 97) für die Herstellung von dünnwandigen Formkörpern aus sich während des Backprozesses ausdehnenden Back- oder Gießmassen mit einer durch Öffnen und Schließen der Backzange (7, 60, 97) auf- und zumachbaren, zumindest zweiteiligen Backform (16, 71, 98), die mit ihrer oberen Formhälfte (17, 72, 120, 120a) im Zangenoberteil (15, 68, 118) und mit ihrer unteren Formhälfte (18, 73, 119) im Zangenunterteil (13, 70, 116) aufgenommen ist, dadurch gekennzeichnet, daß zumindest eine, die geschlossene Backform (16, 71, 98) mit einer vorgegebenen Vorspannkraft geschlossen haltende, bei geschlossener Backzange (7, 60, 97) zum Aufbringen der Vorspannkraft an zumindest zwei Backform- bzw. Zangenteilen (13, 15, 17, 18, 68, 70, 72, 73, 116, 118, 119, 120, 120a) festziehbare und bei aufgebrachter Vorspannkraft unverrückbar festklemmbare Klemmvorrichtung (30, 31, 79, 83, 89, 90, 125) vorgesehen ist, die zumindest ein zum Erzeugen der Vorspannkraft beim Festziehen der Klemmvorrichtung (30, 31, 79, 83, 89, 90, 125) elastisch dehnbares Klemmelement (41, 42, 47, 80, 85, 92, 129) und zumindest zwei beim Festziehen der Klemmvorrichtung (30, 31, 79, 83, 89, 90, 125) im gegenseitigen kraftschlüssigen und selbsthemmenden Reibungseingriff relativ zueinander bewegbare Klemmflachen (21b, 21c, 22b, 68e, 70e, 91a, 128, 139a, 139b, 141, 142) bzw. Klemmabschnitte (41c, 42c, 47c, 81, 82, 85b, 92b, 127) am elastisch dehnbaren Klemmelement (41, 42, 47, 80, 85, 92, 129) bzw. an einem der beiden Backform- bzw. Zangenteile (13, 15, 17, 18, 68, 70, 72, 73, 116, 118, 119, 120, 120a) besitzt.

2. Backzange nach Anspruch 1, dadurch gekennzeichnet, daß die Klemmvorrichtung (30, 31, 83, 89, 90) zumindest einen, als elastisch dehnbares Klemmelement ausgebildeten Klemmhebel (41, 42, 85, 92) aufweist, der an dem einen Backform- bzw. Zangenteil (15, 17, 70, 73) schwenkbar gelagert ist und einen Klemmabschnitt (41c, 42c, 85b, 92b) besitzt, dem für den gegenseitigen kraftschlüssigen und selbsthemmenden Reibungseingriff eine an dem anderen Backform- bzw. Zangenteil (18, 68, 72) angebrachte, äußere Klemmfläche (21b, 22b, 84a, 91a) zugeordnet ist.

3. Backzange nach Anspruch 2, dadurch gekennzeichnet, daß eine Klemmvorrichtung (30) zwei Klemmhebel (41, 42) aufweist, die an dem einen Backform- bzw. Zangenteil (15, 15a, 17) um eine gemeinsame Schwenkachse (44) schwenkbar gelagert sind und deren Klemmabschnitten (41c, 42c) für den gegenseitigen kraftschlüssigen und selbsthemmenden Reibungseingriff zwei an dem anderen Backform- bzw. Zangenteil (18) im Abstand von einander angeordnete, äußere Klemmflächen (21b, 22b) zugeordnet sind.

4. Backzange nach Anspruch 2, dadurch gekennzeichnet, daß die Schwenkachse (87, 93) eines Klemmhebels (85, 92) und die seinem Klemmabschnitt (85c, 92c) zugeordnete äußere Klemmfläche (84a, 91a) im wesentlichen symmetrisch zu der die beiden Formhälften (72, 73) trennenden Haupt-Formtrennungsebene der Backform (71) angeordnet sind.

5. Backzange nach Anspruch 1, dadurch gekennzeichnet, daß die Klemmvorrichtung (79) zumindest eine, als elastisch dehnbares Klemmelement ausgebildete, im wesentlichen C-förmige Klammer (80) besitzt, die an ihren Enden mit einander zugewandten Klemmabschnitten (81, 82) versehen ist, denen an beiden Backform- bzw. Zangenteilen (68, 70) jeweils eine äußere Klemmfläche (68e, 70e) für den gegenseitigen kraftschlüssigen und selbsthemmenden Reibungseingriff zugeordnet ist.

6. Backzange nach Anspruch 5, dadurch gekennzeichnet, daß die den Klemmabschnitten (81, 82) einer Klammer (80) für den gegenseitigen kraftschlüssigen und selbsthemmenden Reibungseingriff zugeordneten äußeren Klemmflächen (68e, 70e) der beiden Backform- bzw. Zangenteile (68, 70) im wesentlichen symmetrisch zu der die beiden Formhälften (72, 73) trennenden Haupt-Formtrennungsebene der Backform (71) angeordnet sind.

7. Backzange nach Anspruch 1, dadurch gekennzeichnet, daß zum Aufbringen einer vorgegebenen Vorspannkraft auf eine geschlossene Backform (16), die eine auf- und zumachbare, in zwei Backformunterteile (21, 22) geteilte, untere Formhälfte (18) besitzt, zumindest eine bei geschlossener Backzange (7) an der oberen Formhälfte (17) bzw. am Zangenoberteil (15) und an beiden Backformunterteilen (21, 22) festziehbare und bei aufgebrachter Vorspannkraft unverrückbar festklemmbare Klemmvorrichtung (30) vorgesehen ist, die zumindest zwei an der oberen Formhälfte (17) bzw. am Zangenoberteil (15) schwenkbar gelagerte, als elastisch dehnbare Klemmelemente ausgebildete Klemmhebel (41, 42) umfaßt, die jeweils einen Klemmabschnitt (41c, 42c) besitzen, dem für den jeweiligen gegenseitigen kraftschlüssigen und selbsthemmenden Reibungseingriff eine an einem der Backformunterteile (21, 22) angebrachte, äußere Klemmfläche (21b, 22b) zugeordnet ist.

8. Backzange nach Anspruch 7, dadurch gekennzeichnet, daß die beiden Klemmhebel (41, 42) eine gemeinsame Schwenkachse (44) besitzen und die beiden ihren Klemmabschnitten (41c, 42c) zugeordneten äußeren Klemmflachen (21b, 22b) an den Backformunterteilen (21, 22) im wesentlichen spiegelbildlich zu der, die beiden Backformunterteile (21, 22) trennenden und zur Haupt-Formtrennungsebene der Backform (16) senkrechten, zweiten Formtrennungsebene angeordnet sind, wobei die beiden äußeren Klemmflächen (21b, 22b) und die gemeinsame Schwenkachse (44) der Klemmhebel (41, 42) ein zur zweiten Formtrennungsebene im wesentlichen symmetrisches, gleichschenkeliges Dreieck bilden.

9. Backzange nach Anspruch 7 oder 8, dadurch gekennzeichnet, daß die die äußeren Klemmflächen (21b, 22b) tragenden Backformunterteile (21, 22) im Zangenunterteil (13) quer zur zweiten Formtrennungsebene schwenkbar angeordnet sind.

10. Backzange nach einem der Ansprüche 7 bis 9, dadurch gekennzeichnet, daß der die obere Formhälfte (17) und die Klemmhebel (41 , 42) der Klemmvorrichtung (30) tragende Zangenoberteil (15) gegenüber dem die beiden Backformunterteile (21, 22) tragenden Zangenunterteil (13) zum Öffnen und Schließen der Backforrn (16) parallel zu deren zweiter Formtrennungsebene verschiebbar ist, wobei der Zangenoberteil (15) ein zur Haupt-Formtrennungsebene der Backform (16) senkrechtes Führungsschwert (14) besitzt, das im Zangenunterteil (13) senkrecht zur Haupt-Formtrennungsebene der Backform (16) verschiebbar geführt ist.

11. Backzange nach Anspruch 10, dadurch gekennzeichnet, daß das Führungsschwert (14) an einem am Zangenoberteil (15) ausgebildeten, oberen Führungskopf (15b) starr befestigt ist und mit einer der Backform (16) zugewandten, inneren Führungsbahn (14c, 14e) und einer von der Backform (16) abgewandten, äußeren Führungsbahn (14d, 14f) in einem im Zangenunterteil (13) ausgebildeten, unteren Führungskopf (13b) verschiebbar geführt ist, wobei beide Führungsbahnen zur zweiten Formtrennungsebene schräge Führungsflächen (14c, 14d, 14e, 14f) besitzen, die im unteren Führungskopf (13b) mit ihnen jeweils zugeordneten Führungsrollen (37) im Eingriff stehen, die zur Haupt-Formtrennungsebene der Backform (16) parallele Drehachsen besitzen, die in zumindest zwei, in unterschiedlichem Abstand von der Haupt-Formtrennungsebene angeordneten Ebenen (35, 36) liegen.

12. Backzange nach Anspruch 11, dadurch gekennzeichnet, daß die Führungsrollen (37) konisch ausgebildet sind und jeweils eine zur zweiten Formtrennungsebene und zur Haupt-Formtrennungsebene parallel angeordnete Drehachse besitzen.

13. Backzange nach Anspruch 12, dadurch gekennzeichnet, daß jeweils eine einer Führungsfläche (14c, 14e) der inneren Führungsbahn zugeordnete, konische Führungsrolle (37a, 37c, 38a, 38c) und eine einer Führungsfläche (14d, 14f) der äußeren Führungsbahn zugeordnete, konische Führungsrolle (37b, 37d, 38b, 38d) auf einem gemeinsamen Walzenkörper (35a, 36a, 35b, 36b) angeordnet sind, der im unteren Führungskopf (13b) um eine zur zweiten Formtrennungsebene parallele Drehachse drehbar gelagert ist.

14. Backzange nach Anspruch 13, dadurch gekennzeichnet, daß jeweils eine Führungsrolle (37) eines Walzenkörpers (35a, 36a, 35b, 36b) mit ihm einstückig ausgebildet ist und die andere Führungsrolle (37) auf ihm axial verschiebbar angeordnet ist.

15. Backzange nach einem der Ansprüche 12 bis 14, dadurch gekennzeichnet, daß alle konischen Führungsrollen (37) bis auf eine im unteren Führungskopf (13b) axial unverschieblich gelagert sind und nur eine konische Führungsrolle (37) im unteren Führungskopf (13b) axial federnd abgestützt ist.

16. Backzange nach einem der Ansprüche 1 bis 15, dadurch gekennzeichnet, daß zum Aufbringen einer vorgegebenen Vorspannkraft auf die geschlossene untere Formhälfte (18) einer Backform (16), die eine auf- und zumachbare, in zwei Backformunterteile (21, 22) geteilte, untere Formhälfte (18) besitzt, zumindest eine bei geschlossener unterer Formhälfte (18) an beiden Backformunterteilen (21, 22) festziehbare und bei aufgebrachter Vorspannkraft unverrückbar festklemmbare untere Klemmvorrichtung (31) vorgesehen ist, die zumindest ein zum Erzeugen der Vorspannkraft beim Festziehen der unteren Klemmvorrichtung (31) elastisch dehnbares Klemmelement (47) und zumindest zwei beim Festziehen der unteren Klemmvorrichtung (31) im gegenseitigen kraftschlüssigen und selbsthemmenden Reibungseingriff relativ zueinander bewegbare Klemmflächen (21c, 47d) bzw. Klemmabschnitte (47c) am elastisch dehnbaren Klemmelement (47) bzw. an einem der beiden Backformunterteile (21) besitzt.

17. Backzange nach Anspruch 16, dadurch gekennzeichnet, daß die untere Klemmvorrichtung (31) zumindest einen, als elastisch dehnbares Klemmelement ausgebildeten Klemmhebel (47) besitzt, der an einem Backformunterteil (22) schwenkbar gelagert ist und einen Klemmabschnitt (47c) besitzt, dem für den gegenseitigen kraftschlüssigen und selbsthemmenden Reibungseingriff eine am anderen Backformunterteil (21) angebrachte, äußere Klemmfläche (21c) zugeordnet ist.

18. Backzange nach Anspruch 17, dadurch gekennzeichnet, daß bei der unteren Klemmvorrichtung (31) die Schwenkachse (49) eines Klemmhebels (47) und die seinem Klemmabschnitt (47c) zugeordnete äußere Klemmfläche (21c) im wesentlichen symmetrisch zu der die beiden Backformunterteile (21, 22) trennenden und zur Haupt-Formtrennungsebene der Backform (16) senkrechten, zweiten Formtrennungsebene angeordnet sind.

19. Backzange nach Anspruch 16, dadurch gekennzeichnet, daß die untere Klemmvorrichtung (31) zumindest eine, als elastisch dehnbares Klemmelement ausgebildete, im wesentlichen C-förmige Klammer aufweist, die an ihren Enden mit einander zugewandten Klemmabschnitten versehen ist, denen an beiden Backformunterteilen (21, 22) jeweils eine äußere Klemmfläche für den gegenseitigen kraftschlüssigen und selbsthemmenden Reibungseingriff zugeordnet ist.

20. Backzange nach Anspruch 19, dadurch gekennzeichnet, daß die den Klemmabschnitten einer Klammer der unteren Klemmvorrichtung für den gegenseitigen kraftschlüssigen und selbsthemmenden Reibungseingriff zugeordneten äußeren Klemmflächen im wesentlichen spiegelbildlich zu der die beiden Backformunterteile trennenden und zur Haupt-Formtrennungsebene der Backform senkrechten, zweiten Formtrennungsebene angeordnet sind.

21. Backzange nach Anspruch 1, dadurch gekennzeichnet, daß die Klemmvorrichtung (125) ein erstes mit dem einen Backform- bzw. Zangenteil (118, 120, 120a, 122) starr verbundenes, zum Erzeugen der Vorspannkraft elastisch dehnbares Klemmelement (129) umfaßt, das eine Klemmfläche (128) für den kraftschlüssigen und selbsthemmenden Reibungseingriff mit einem Klemmabschnitt (127) eines zweiten Klemmelementes (126) besitzt, das an dem anderen Backform- bzw. Zangenteil (116, 119, 121) beweglich gelagert ist und bei geschlossener Backzange (97) mit seinem Klemmabschnitt (127) im kraftschlüssigen und selbsthemmenden Reibungseingriff mit der Klemmfläche (128) des ersten Klemmelementes (129) an beiden Backform- bzw. Zangenteilen (116, 118, 119, 120, 120a, 121, 122) festklemmbar ist.

22. Backzange nach Anspruch 21, dadurch gekennzeichnet, daß die beiden Klemmelemente (126, 129) der Klemmvorrichtung (125) an zwei, bei geschlossener Backzange (97) mit ihren Vorderseiten einander gegenüberliegenden Endabschnitten (121, 122) der Backform- bzw. Zangenteile (116, 118, 119, 120, 120a, 121, 122) angeordnet sind, daß das elastisch dehnbare, erste Klemmelement (129) über die Vorderseite des ersten Endabschnittes (122) vorsteht und einen Kopfteil (130) besitzt, mit dem es bei geschlossener Backzange (97) über die Rückseite des zweiten Endabschnittes (121) vorsteht, und daß das zweite Klemmelement (126) an der Rückseite des zweiten Endabschnittes (121) beweglich gelagert und mit seinem Klemmabschnitt (127) bei geschlossener Backzange (97) zwischen der Rückseite des zweiten Endabschnittes (121) und dem Kopfteil (130) des elastisch dehnbaren, ersten Klemmelementes (129) festklemmbar ist.

23. Backzange nach Anspruch 22, dadurch gekennzeichnet, daß im Kopfteil (130) des elastisch dehnbaren, ersten Klemmelementes (129) ein Durchtrittskanal (134) vorgesehen ist, der an seiner, der Vorderseite des ersten Endabschnittes (122) zugewandten Kanalwand mit einer Klemmfläche (128) für den Eingriff mit dem Klemmabschnitt (127) des bewegbaren, zweiten Klemmelementes (126) versehen ist.

24. Backzange nach einem der Ansprüche 21 bis 23, dadurch gekennzeichnet, daß als zweites Klemmelement (126) ein zumindest ein Betätigungselement (143) zum Festziehen bzw. Lösen der Klemmvorrichtung (125) tragender, hakenförmiger Hebel vorgesehen ist, dessen Schwenkachse (137) senkrecht zu der die beiden Formhälften (119, 120, 120a) trennenden Haupt-Formtrennungsebene der Backform (98) angeordnet ist und dessen hakenförmiger Abschnitt (139) als Klemmabschnitt ausgebildet ist.

25. Backzange nach einem der Ansprüche 21 bis 23, dadurch gekennzeichnet, daß als zweites Klemmelement ein zumindest ein Betätigungselement zum Festziehen bzw. Lösen der Klemmvorrichtung tragender Riegel vorgesehen ist, der mit einem Klemmabschnitt versehen und parallel zu der die beiden Formhälften trennenden Haupt-Formtrennungsebene der Backform verschiebbar ist.

26. Backofen (1) für die Herstellung von dünnwandigen Formkörpern aus sich während des Backprozesses ausdehnenden Back- oder Gießmassen, bei welchem auf- und zumachbare Backformen (16) in aufund zurnachbaren Backzangen (7) aufgenommen sind, die untereinander zu einer endlosen, sich über zumindest zwei Umlenkungen (11, 12) erstreckenden Backzangenkette (6) verbunden sind, entlang deren Bahn eine Aufgießstation (4) für die Back- bzw. Gießmassen, ein Backraum (2) zum Backen der Formkörper und eine Ausgabestation (5) für die gebackenen Formkörper in Laufrichtung (8) der Backzangen (7) hintereinander angeordnet sind, wobei die jeweils durch eine Haupt-Formtrennungsebene in obere und untere Formhälften geteilten Backformen (16) mit ihren oberen Formhälften (17) in den Zangenoberteilen (15) und mit ihren auf- und zumachbaren, unteren Formhälften (18), die jeweils durch eine zur Haupt-Formtrennungsebene senkrechte zweite Formtrennungsebene in zwei Backformunterteile (21, 22) geteilt sind, in den Zangenunterteilen (13) aufgenommen sind, dadurch gekennzeichnet, daß die Backformen (16) in den Backzangen (7) jeweils mit der, die beiden Backformunterteile (21, 22) trennenden, zweiten Formtrennungsebene quer zur Laufrichtung (8) angeordnet sind, daß zum Öffnen und Schließen der unteren Formhälften (18) zwischen den Backzangen (7) angeordnete und mit diesen umlaufende Bewegungsmechanismen (26) für die in den Zangenunterteilen (13) jeweils gegenüber der zweiten Formtrennungsebene hin- und herbewegbaren Backformunterteile (21, 22) vorgesehen sind, daß die umlaufenden Bewegungsmechanismen (26) beim Passieren der der Ausgabestation (5) vorgelagerten Umlenkung (11) die im Bereich der Bewegungsmechanismen (26) zwischen aufeinanderfolgenden Backzangen (7) auftretenden und zur Laufrichtung (8) parallelen Abstandsänderungen in Relativbewegungen der bewegbaren Backformunterteile (21, 22) gegenüber der jeweiligen zweiten Formtrennungsebene umwandeln, und daß die umlaufenden Bewegungsmechanismen (26) jeweils vor der der Ausgabestation (5) vorgelagerten Umlenkung (11) aktivierbar und nach dieser Umlenkung (11) wieder deaktivierbar sind.

27. Backofen nach Anspruch 26, dadurch gekennzeichnet, daß für jeden bewegbaren Backformunterteil (21, 22) ein eigener, zwischen zwei aufeinanderfolgenden Backzangen (7) angeordneter Bewegungsmechanismus (26) vorgesehen ist.

28. Backofen nach Anspruch 26, dadurch gekennzeichnet, daß bei Backzangen (7), bei denen in den Zangenunterteilen (13) jeweils beide Backformunterteile (21, 22) zum Öffnen und Schließen der unteren Formhälfte (18) gegenüber der zweiten Formtrennungsebene hin- und herbewegbar sind, zwischen aufeinanderfolgenden Backzangen (7) jeweils ein gemeinsamer Bewegungsmechanismus (26) für den hinteren Backformunterteil (22) der in Laufrichtung (8) vorauseilenden Backzange (7) und den vorderen Backformunterteil (21) der in Laufrichtung (8) nachfolgenden Backzange (7) vorgesehen ist.

29. Backofen nach einem der Ansprüche 26 bis 28, dadurch gekennzeichnet, daß ein Bewegungsmechanismus (26) zumindest eine, den Zwischenraum zwischen zwei aufeinanderfolgenden Backzangen (7) überbrückende Steuerlasche (26a, 26b) umfaßt, die mit der einen Backzange (7) schwenkbar verbunden ist und zum Aktivieren bzw. Deaktivieren des Bewegungsmechanismus (26) mit einem an der anderen Backzange (7) angebrachten Steuerbolzen (32c) in bzw. außer Eingriff bringbar ist.

30. Backofen nach Anspruch 29, dadurch gekennzeichnet, daß eine in Laufrichtung (8) langgestreckte Steuerlasche (26a, 26b) vorgesehen ist, die mit ihrem hinteren Ende entgegen der Laufrichtung (8) über den Steuerbolzen (32c) der nachfolgenden Backzange (7) hinausragt, und daß die Steuerlasche (26a, 26b) einen, langgestreckten Führungskanal (40) besitzt, der zwei miteinander in Verbindung stehende, unterschiedlich lange Bewegungsbahnen für den Steuerbolzen (32c) enthält, zwischen welchen der Steuerbolzen (32c) beim Aktivieren und Deaktivieren des Bewegungsmechanismus (26) durch Verschwenken der Steuerlasche (26a, 26b) hin und her bewegbar ist.

31. Backofen nach Anspruch 30, dadurch gekennzeichnet, daß die beiden Bewegungsbahnen in Längsrichtung des Führungskanales (40) im wesentlichen parallel zueinander angeordnet sind, wobei die längere Bewegungsbahn am hinteren Ende der Steuerlasche (26a, 26b) in Laufrichtung (8) offen ist und sich die kürzere Bewegungsbahn von einer, am vorderen Ende des Führungskanales (40) angeordneten, entgegen der Laufrichtung (8) nach hinten weisenden, vorderen Anschlagfläche (40a) für den Steuerbolzen (32c) in Laufrichtung (8) bis zu einer, nach vorne weisenden, hinteren Anschlagfläche (40d) an einer zwischen den beiden Enden des Führungskanales (40) angeordneten Stufe erstreckt.

32. Backofen nach Anspruch 31, dadurch gekennzeichnet, daß in der kürzeren Bewegungsbahn der Abstand der vorderen Anschlagfläche (40a) von der hinteren Anschlagfläche (40d) größer ist als der Durchmesser des Steuerbolzens (32c).

33. Backofen nach einem der Ansprüche 29 bis 32, dadurch gekennzeichnet, daß der Bewegungsmechanismus (26) einen Steuermechanismus zum zwangsweisen Verschwenken der Steuerlaschen (26a, 26b) beim Aktivieren bzw. Deaktivieren des Bewegungsmechanismus (26) umfaßt.

34. Backofen nach Anspruch 33, dadurch gekennzeichnet, daß der Steuermechanismus zum Deaktivieren einer Steuerlasche (26a, 26b) eine der Steuerlasche (26a, 26b) zugeordnete, an der Unterseite des Zangenoberteiles (15) der nachfolgenden Backzange (7) angebrachte Steuerfläche (15e, 15f) umfaßt, die mit der Oberseite der Steuerlasche (26a, 26b) in Eingriff bringbar ist.

35. Backofen nach Anspruch 33, dadurch gekennzeichnet, daß der Steuermechanismus zum Aktivieren einer Steuerlasche (26a, 26b) eine der Steuerlasche (26a, 26b) zugeordnete, im Zangenunterteil (13) der nachfolgenden Backzange (7) senkrecht zu deren Haupt-Formtrennungsebene verschiebbare Schubstange (26c, 26d) umfaßt, die mit der Unterseite der Steuerlasche (26a, 26b) in Eingriff bringbar ist.

36. Backofen nach Anspruch 35, dadurch gekennzeichnet, daß der Steuermechanismus zum Aktivieren einer Steuerlasche (26a, 26b) eine der dieser Steuerlasche (26a, 26b) zugeordneten Schubstange (26c, 26d) ihrerseits zugeordnete, zur Bahn der Backzangen (7) geneigte, stationäre Steuerschiene (26e) umfaßt, die im Backofen (1) vor der, der Ausgabestation (5) vorgelagerten Umlenkung (11) der Backzangenkette angeordnet ist.

37. Verfahren zur Entnahme von aus. Back- oder Gießmassen gebackenen, tüten- oder becherförmigen Formkörpern aus den auf- und zumachbaren Backformen der auf- und zumachbaren Backzangen einer endlosen Backzangenkette eines Backofens, in welchem die Backformen mit ihren, jeweils als mit Formkernen versehene Patrizen ausgebildeten, oberen Formhälften jeweils in den Zangenoberteilen der Backzangen und mit ihren, jeweils als mit Formausnehmungen versehene Matrizen ausgebildeten, von der jeweiligen oberen Formhälfte durch eine Haupt-Formtrennungsebene getrennten und durch eine zur Haupt-Formtrennungsebene senkrechte, zweite Formtrennungsebene in zwei Backformunterteile geteilten, unteren Formhälften in den Zangenunterteilen der Backzangen aufgenommen sind und die endlose, sich von einer oberen Transportebene über eine hintere Umlenkung in eine untere Transportebene und über eine vordere Umlenkung wieder zurück in die obere Transportebene erstreckende, umlaufende Backzangenkette die Backzangen von einer Aufgießstation für die Back- bzw. Gießmassen durch einen Backraum zum Backen der Formkörper zu einer Ausgabestation für die gebackenen Formkörper transportiert, wobei die Backzangen die obere Transportebene mit obenliegenden Zangenoberteilen durchlaufen, an der hinteren Umlenkung auf den Kopf gestellt werden, dann die untere Transportebene mit untenliegenden Zangenoberteilen durchlaufen und beim Passieren der vorderen Umlenkung mit ihren Zangenoberteilen wieder nach oben umgedreht und dabei geöffnet werden, dadurch gekennzeichnet, daß während des Umlaufes der Backzangen zuerst bei auf den Kopf gestellten Backzangen die untenliegenden Zangenoberteile von den Zangenunterteilen entlang der jeweiligen zweiten Formtrennungsebene wegbewegt und dabei die nach oben weisenden Formkerne aus den, in den nach unten offenen Formausnehmungen verbleibenden Formkörpern um einen Bruchteil der Formkörperhöhe herausgefahren werden, daß dann die unteren Formhälften durch Auseinanderbewegen der Backformunterteile geöffnet und die mit ihren Öffnungen nach unten weisenden Formkörper auf den nach oben weisenden Formkernen aufgefangen werden, daß dann die Zangenoberteile von den Zangenunterteilen wegbewegt und die Formkörper zusammen mit den nach obenweisenden Formkernen vollständig aus den Formausnehmungen herausgefahren werden, daß dann, während die Backzangen beim Passieren der vorderen Umlenkung mit ihren Zangenoberteilen wieder nach oben umgedreht werden, die Formkörper beim Durchlaufen der oberen Hälfte der vorderen Umlenkung durch die Schwerkraft von den Formkernen gelöst und mit ihren den Zangenunterteilen zugewandten Enden auf einer zwischen der Bahn der Zangenoberteile und der Bahn der Zangenunterteile angeordneten Leitfläche aufgefangen werden und daß die sich auf der Leitfläche abstützenden Formkörper durch die in sie hineinragenden Formkerne entlang der Leitfläche und über diese hinaus transportiert und in der Ausgabestation auf eine, zwischen der Bahn der Zangenoberteile und der Bahn der Zangenunterteile seitlich aus der Backzangenkette herausführende Transporteinrichtung übergeben werden.

38. Verfahren nach Anspruch 37, dadurch gekennzeichnet, daß die Formkörper beim Durchlaufen der oberen Hälfte der vorderen Umlenkung durch ein, zwischen der Bahn der Zangenoberteile und der Bahn der Zangenunterteile angeordnetes, stationäres, bogenförmig gekrümmtes Leitblech aufgefangen und abgestützt werden.

39. Verfahren nach Anspruch 37 oder 38, dadurch gekennzeichnet, daß beim Durchlaufen der oberen Hälfte der vorderen Umlenkung zum Lösen der Formkörper von den in sie hineinragenden Formkernen Luft zwischen die Formkörper und die Formkerne eingeblasen wird.

## Claims

1. Baking tongs (7, 60, 97) for producing thin-walled shaped articles from baking or pouring mixtures which expand during the baking process, having an at least two-part baking mould (16, 71, 98) which can be opened and closed by virtue of the baking tongs (7, 60, 97) being opened and closed and has its top mould half (17, 72, 120, 120a) received in the top tong part (15, 68, 118) and its bottom mould half (18, 73, 119) received in the bottom tong part (13, 70, 116), characterized in that there is provided at least one clamping device (30, 31, 79, 83, 89, 90, 125) which keeps the closed baking mould (16, 71, 98) closed with a predetermined prestressing force, can be secured on at least two baking-mould or tong parts (13, 15, 17, 18, 68, 70, 72, 73, 116, 118, 119, 120, 120a) when the baking tongs (7, 60, 97) are closed, in order to apply the prestressing force, can be clamped securely in captive fashion when the prestressing force has been applied, and has at least one clamping element (41, 42, 47, 80, 85, 92, 129) which can be extended elastically for producing the prestressing force as the clamping device (30, 31, 79, 83, 89, 90, 125) is secured and at least two clamping sections (41c, 42c, 47c, 81, 82, 85b, 92b, 127) and/or clamping surfaces (21b, 21c, 22b, 68e, 70e, 91a, 128, 139a, 139b, 141, 142), which can be moved relative to one another in mutual force-fitting and self-locking frictional engagement as the clamping device (30, 31, 79, 83, 89, 90, 125) is secured, on the elastically extensible clamping element (41, 42, 47, 80, 85, 92, 129) and/or on one of the two baking-mould or tong parts (13, 15, 17, 18, 68, 70, 72, 73, 116, 118, 119, 120, 120a).

2. Baking tongs according to Claim 1, characterized in that the clamping device (30, 31, 83, 89, 90) has at least one clamping lever (41, 42, 85, 92) which is designed as an elastically extensible clamping element, is mounted pivotably on one baking-mould or tong part (15, 17, 70, 73) and has a clamping section (41c, 42c, 85b, 92b) which is assigned, for the mutual force-fitting and self-locking frictional engagement, an outer clamping surface (21b, 22b, 84a, 91a) provided on the other baking-mould or tong part (18, 68, 72).

3. Baking tongs according to Claim 2, characterized in that a clamping device (30) has two clamping levers (41, 42) which are mounted on one baking-mould or tong part (15, 15a, 17) such that they can be pivoted about a common pivot axis (44) and of which the clamping sections (41c, 42c) are assigned, for the mutual force-fitting and self-locking frictional engagement, two outer clamping surfaces (21b, 22b) which are spaced apart from one another on the other baking-mould or tong part (18).

4. Baking tongs according to Claim 2, characterized in that the pivot axis (87, 93) of one clamping lever (85, 92) and the outer clamping surface (84a, 91a), which is assigned to the clamping section (85c, 92c) of said clamping lever, are arranged essentially symmetrically in relation to the main mould-parting plane of the baking mould (71), which separates the two mould halves (72, 73).

5. Baking tongs according to Claim 1, characterized in that the clamping device (79) has at least one essentially C-shaped clamp (80) which is designed as an elastically extensible clamping element and is provided at its ends with mutually facing clamping sections (81, 82) which are assigned, for the mutual force-fitting and self-locking frictional engagement, in each case one outer clamping surface (68e, 70e) on the two baking-mould or tong parts (68, 70).

6. Baking tongs according to Claim 5, characterized in that the outer clamping surfaces (68e, 70e), which belong to the two baking-mould or tong parts (68, 70) and are assigned to the clamping sections (81, 82) of a clamp (80) for the mutual force-fitting and self-locking frictional engagement, are arranged essentially symmetrically in relation to the main mould-parting plane of the baking mould (71), which separates the two mould halves (72, 73).

7. Baking tongs according to Claim 1, characterized in that, in order to apply a predetermined prestressing force to a closed baking mould (16) which has a bottom mould half (18) which can be opened and closed and is divided into two bottom baking-mould parts (21, 22), there is provided at least one clamping device (30) which can be secured on the top mould half (17) or on the top tong part (15) and on the two bottom baking-mould parts (21, 22) when the baking tongs (7) are closed, can be clamped securely in captive fashion when the prestressing force has been applied, and has at least two clamping levers (41, 42) which are mounted pivotably on the top mould half (17) or on the top tong part (15), are designed as elastically extensible clamping elements and each have a clamping section (41c, 42c) which is assigned, for the respective mutual force-fitting and self-locking frictional engagement, an outer clamping surface (21b, 22b) provided on one of the bottom baking-mould parts (21, 22).

8. Baking tongs according to Claim 7, characterized in that the two clamping levers (41, 42) have a common pivot axis (44), and the two outer clamping surfaces (21b, 22b), which are located on the bottom baking-mould parts (21, 22) and are assigned to the clamping sections (41c, 42c) of said clamping levers, are arranged in an essentially mirror-inverted manner in relation to the second mould-parting plane, which separates the two bottom baking-mould parts (21, 22) and is perpendicular to the main mould-parting plane of the baking mould (16), it being the case that the two outer clamping surfaces (21b, 22b) and the common pivot axis (44) of the clamping levers (41, 42) form an isosceles triangle which is essentially symmetrical in relation to the second mould-parting plane.

9. Baking tongs according to Claim 7 or 8, characterized in that the bottom baking-mould parts (21, 22), which bear the outer clamping surfaces (21b, 22b), are arranged in the bottom tong part (13) such that they can be pivoted transversely to the second mould-parting plane.

10. Baking tongs according to one of Claims 7 to 9, characterized in that the top tong part (15), which bears the top mould half (17) and the clamping levers (41, 42) of the clamping device (30), can be displaced with respect to the bottom tong part (13), which bears the two bottom baking-mould parts (21, 22), in order to open and close the baking mould (16) parallel to the second mould-parting plane of the same, it being the case that the top tong part (15) has a guide strut (14) which is perpendicular to the main mould-parting plane of the baking mould (16) and is guided in the bottom tong part (13) such that it can be displaced perpendicularly to the main mould-parting plane of the baking mould (16).

11. Baking tongs according to Claim 10, characterized in that the guide strut (14) is fastened rigidly on a top guide head (15b), which is formed on the top tong part (15), and, by way of an inner guide track (14c, 14e), which is directed towards the baking mould (16), and an outer guide track (14d, 14f), which is directed away from the baking mould (16), is guided displaceably in a bottom guide head (13b), which is formed in the bottom tong part (13), it being the case that the two guide tracks have guide surfaces (14c, 14d, 14e, 14f) which are oblique in relation to the second mould-parting plane and, in the bottom guide head (13b), are in engagement with guide rollers (37) which are assigned to them in each case and have axes of rotation which are parallel to the main mould-parting plane of the baking mould (16) and are located in at least two planes (35, 36) arranged at different spacings from the main mould-parting plane.

12. Baking tongs according to Claim 11, characterized in that the guide rollers (37) are of conical design and each have an axis of rotation which is arranged parallel to the second mould-parting plane and to the main mould-parting plane.

13. Baking tongs according to Claim 12, characterized in that in each case one conical guide roller (37a, 37c, 38a, 38c), which is assigned to a guide surface (14c, 14e) of the inner guide track, and one conical guide roller (37b, 37d, 38b, 38d), which is assigned to a guide surface (14d, 14f) of the outer guide track, are arranged on a common roller body (35a, 36a, 35b, 36b) which is mounted in the bottom guide head (13b) such that it can be rotated about an axis of rotation which is parallel to the second mould-parting plane.

14. Baking tongs according to Claim 13, characterized in that in each case one guide roller (37) of a roller body (35a, 36a, 35b, 36b) is formed in one piece with the latter and the other guide roller (37) is arranged in an axially displaceable manner thereon.

15. Baking tongs according to one of Claims 12 to 14, characterized in that all the conical guide rollers (37) apart from one are mounted in an axially non-displaceable manner in the bottom guide head (13b), and just one conical guide roller (37) is supported in an axially resilient manner in the bottom guide head (13b).

16. Baking tongs according to one of Claims 1 to 15, characterized in that, in order to apply a predetermined prestressing force to the closed bottom mould half (18) of a baking mould (16) which has a bottom mould half (18) which can be opened and closed and is divided into two bottom baking-mould parts (21, 22), there is provided at least one bottom clamping device (31) which can be secured on the two bottom baking-mould parts (21, 22) when the bottom mould half (18) is closed, can be clamped securely in captive fashion when the prestressing force has been applied, and has at least one clamping element (47) which can be extended elastically for producing the prestressing force as the bottom clamping device (31) is secured and at least two clamping sections (47c) and/or clamping surfaces (21c, 47d), which can be moved relative to one another in mutual force-fitting and self-locking frictional engagement as the bottom clamping device (31) is secured, on the elastically extensible clamping element (47) or on one of the two bottom baking-mould parts (21).

17. Baking tongs according to Claim 16, characterized in that the bottom clamping device (31) has at least one clamping lever (47) which is designed as an elastically extensible clamping element, is mounted pivotably on one bottom baking-mould part (22) and has a clamping section (47c) which is assigned, for the mutual force-fitting and self-locking frictional engagement, an outer clamping surface (21c) provided on the other bottom baking-mould part (21).

18. Baking tongs according to Claim 17, characterized in that, in the case of the bottom clamping device (31), the pivot axis (49) of one clamping lever (47) and the outer clamping surface (21c), which is assigned to the clamping section (47c) of said clamping lever, are arranged essentially symmetrically in relation to the second mould-parting plane, which separates the two bottom baking-mould parts (21, 22) and is perpendicular to the main mould-parting plane.

19. Baking tongs according to Claim 16, characterized in that the bottom clamping device (31) has at least one essentially C-shaped clamp which is designed as an elastically extensible clamping element and is provided at its ends with mutually facing clamping sections which are assigned, for the mutual force-fitting and self-locking frictional engagement, in each case one outer clamping surface on the two bottom baking-mould parts (21, 22).

20. Baking tongs according to Claim 19, characterized in that the outer clamping surfaces which are assigned to the clamping sections of a clamp of the bottom clamping device for the mutual force-fitting and self-locking frictional engagement are arranged in an essentially mirror-inverted manner in relation to the second mould-parting plane, which separates the two bottom baking-mould parts and is perpendicular to the main mould-parting plane of the baking mould.

21. Baking tongs according to Claim 1, characterized in that the clamping device (125) comprises a first clamping element (129) which is connected rigidly to one baking-mould or tong part (118, 120, 120a, 122), can be extended elastically for producing the prestressing force and has a clamping surface (128) for the force-fitting and self-locking frictional engagement with a clamping section (127) of a second clamping element (126) which is mounted in a moveable manner on the other baking-mould or tong part (116, 119, 121) and, when the baking tongs (97) are closed, can be clamped securely with its clamping section (127) in force-fitting and self-locking frictional engagement with the clamping surface (128) of the first clamping element (129) on the two baking-mould or tong parts (116, 118, 119, 120, 120a, 121, 122).

22. Baking tongs according to Claim 21, characterized in that the two clamping elements (126, 129) of the clamping device (125) are arranged on two end sections (121, 122) which belong to the baking-mould or tong parts (116, 118, 119, 120, 120a, 121, 122) and, when the baking tongs (97) are closed, have their front sides located opposite one another, in that the elastically extensible, first clamping element (129) projects beyond the front side of the first end section (122) and has a head part (130) by way of which it projects beyond the rear side of the second end section (121) when the baking tongs (97) are closed, and in that the second clamping element (126) is mounted in a moveable manner on the rear side of the second end section (121) and, when the baking tongs (97) are closed, can be clamped securely with its clamping section (127) between the rear side of the second end section (121) and the head part (130) of the elastically extensible, first clamping element (129).

23. Baking tongs according to Claim 22, characterized in that there is provided in the head part (130) of the elastically extensible, first clamping element (129) a through-passage channel (134) which, on its channel wall which is directed towards the front side of the first end section (122), is provided with a clamping surface (128) for the engagement with the clamping section (127) of the moveable, second clamping element (126).

24. Baking tongs according to one of Claims 21 to 23, characterized in that provided as second clamping element (126) is a hook-shaped lever which bears at least one actuating element (143) for securing and releasing the clamping device (125), of which the pivot axis (137) is arranged perpendicularly to the main mould-parting plane of the baking mould (98), which separates the two mould halves (119, 120, 120a), and of which the hook-shaped section (139) is designed as a clamping section.

25. Baking tongs according to one of Claims 21 to 23, characterized in that provided as second clamping element is a bar which bears at least one actuating element for securing and releasing the clamping device, is provided with a clamping section and can be displaced parallel to the main mould-parting plane of the baking mould, which separates the two mould halves.

26. Baking oven (1) for producing thin-walled shaped articles from baking or pouring mixtures which expand during the baking process, in the case of which baking moulds (16) which can be opened and closed are received in baking tongs (7) which can be opened and closed and are connected together to form an endless baking-tong chain (6) which extends over at least two deflections (11, 12) and along the path of which there are arranged, one behind the other in the running direction (8) of the baking tongs (7), a pouring station (4) for the baking or pouring mixtures, a baking area (2) for baking the shaped articles and a discharge station (5) for the baked shaped articles, it being the case that the baking moulds (16), which are each divided into top and bottom mould halves by a main mould-parting plane, have their top mould halves (17) received in the top tong parts (15) and their bottom mould halves (18), which can be opened and closed and are each divided into two bottom baking-mould parts (21, 22) by a second mould-parting plane, which is perpendicular to the main mould-parting plane, received in the bottom tong parts (13), characterized in that the baking moulds (16) are arranged in the baking tongs (7) in each case with the second mould-parting plane, which separates the two bottom baking-mould parts (21, 22), transverse to the running direction (8), in that, in order to open and close the bottom mould halves (18), there are provided movement mechanisms (26) for the bottom baking-mould parts (21, 22), which can be moved back and forth in the bottom tong parts (13) in relation to the second mould-parting plane in each case, the movement mechanisms being arranged between the baking tongs (7) and circulating therewith, in that upon passing the deflection (11), which is arranged upstream of the discharge station (5), the circulating movement mechanisms (26) convert the spacing changes which occur in the region of the movement mechanisms (26) between successive pairs of baking tongs (7), and are parallel to the running direction (8), into movements of the moveable bottom baking-mould parts (21, 22) relative to the respective second mould-parting plane, and in that the circulating movement mechanisms (26) in each case can be activated upstream of the deflection (11), which is arranged upstream of the discharge station (5), and can be deactivated again downstream of this deflection (11).

27. Baking oven according to Claim 26, characterized in that a dedicated movement mechanism (26), arranged between two successive pairs of baking tongs (7), is provided for each moveable bottom baking-mould part (21, 22).

28. Baking oven according to Claim 26, characterized in that, with baking tongs (7) in the case of which, in the bottom tong parts (13), in each case the two bottom baking-mould parts (21, 22) can be moved back and forth in relation to the second mould-parting plane in order to open and close the bottom mould half (18), there is provided between successive pairs of baking tongs (7) in each case a common movement mechanism (26) for the rear bottom baking-mould part (22) of the leading pair of baking tongs (7), as seen in the running direction (8), and the front bottom baking-mould part (21) of the trailing pair of baking tongs (7), as seen in the running direction (8).

29. Baking oven according to one of Claims 26 to 28, characterized in that a movement mechanism (26) comprises at least one control link (26a, 26b) which bridges the interspace between two successive pairs of baking tongs (7), is connected pivotably to one pair of baking tongs (7) and, in order to activate and deactivate the movement mechanism (26), can be engaged with and disengaged from a control bolt (32c) provided on the other pair of baking tongs (7).

30. Baking oven according to Claim 29, characterized in that there is provided a control link (26a, 26b) which is elongate in the running direction (8) and, by way of its rear end, projects beyond the control bolt (32c) of the trailing pair of baking tongs (7) counter to the running direction (8), and in that the control link (26a, 26b) has an elongate guide channel (40) which contains two movement tracks which are intended for the control bolt (32c), are connected to one another, are of different lengths and between which the control bolt (32c) can be moved back and forth upon activation and deactivation of the movement mechanism (26), by virtue of the control link (26a, 26b) being pivoted.

31. Baking oven according to Claim 30, characterized in that the two movement tracks are arranged essentially parallel to one another in the longitudinal direction of the guide channel (40), it being the case that the longer movement track is open in the running direction (8) at the rear end of the control link (26a, 26b), and the shorter movement track extends in the running direction (8) from a front stop surface (40a), which is intended for the control bolt (32c), is arranged at the front end of the guide channel (40) and is oriented rearwards counter to the running direction (8), as far as a forwardly oriented, rear stop surface (40d) on a step arranged between the two ends of the guide channel (40).

32. Baking oven according to Claim 31, characterized in that, in the shorter movement track, the spacing between the front stop surface (40a) and the rear stop surface (40d) is greater than the diameter of the control bolt (32c).

33. Baking oven according to one of Claims 29 to 32, characterized in that the movement mechanism (26) comprises a control mechanism for forcing the control link (26a, 26b) to pivot upon activation and deactivation of the movement mechanism (26).

34. Baking oven according to Claim 33, characterized in that the control mechanism, for deactivating a control link (26a, 26b), comprises a control surface (15e, 15f) which is assigned to the control link (26a, 26b), is provided on the underside of the top tong part (15) of the trailing pair of baking tongs (7) and can be engaged with the top side of the control link (26a, 26b).

35. Baking oven according to Claim 33, characterized in that the control mechanism, for activating a control link (26a, 26b), comprises a push rod (26c, 26d) which is assigned to the control link (26a, 26b), can be displaced, in the bottom tong part (13) of the trailing pair of baking tongs (7), perpendicularly to the main mould-parting plane of said tongs and can be engaged with the underside of the control link (26a, 26b).

36. Baking oven according to Claim 35, characterized in that the control mechanism, for activating a control link (26a, 26b), comprises a stationary control rail (26e) which is assigned to the push rod (26c, 26d), for its part assigned to said control link (26a, 26b), is inclined with respect to the path of the baking tongs (7) and is arranged in the baking oven (1) upstream of the deflection (11) of the baking-tong chain, said deflection being arranged upstream of the discharge station (5).

37. Process for removing shaped articles in the form of cornets or tubs, baked from baking or pouring mixtures, from the baking moulds, which can be opened and closed, of the baking tongs, which can be opened and closed, of an endless baking-tong chain of a baking oven, in which the baking moulds have their top mould halves, which are each designed as male moulds provided with mould cores, received in the top tong parts of the baking tongs and their bottom mould halves, which are each designed as female moulds provided with mould cavities, are separated from the respective top mould half by a main mould-parting plane and are divided into two bottom baking-mould parts by a second mould-parting plane, which is perpendicular to the main mould-parting plane, received in the bottom tong parts of the baking tongs, and the endless, circulating baking-tong chain, which extends from a top transporting plane, via a rear deflection, into a bottom transporting plane and, via a front deflection, back into the top transporting plane again, transports the baking tongs from a pouring station for the baking or pouring mixtures, through a baking area for baking the shaped articles, to a discharge station for the baked shaped articles, it being the case that the baking tongs run through the top transporting plane with the top tong parts located at the top, are upended at the rear deflection, then run through the bottom transporting plane with the top tong parts located at the bottom and, upon passing the front deflection, have their top tong parts turned round to the top again and are opened in the process, characterized in that, during the circulation of the baking tongs, first of all, with the baking tongs upended, the top tong parts, which are located at the bottom, are moved away from the bottom tong parts along the respective second mould-parting plane and, in the process, the upwardly oriented mould cores are moved out of the shaped articles, which remain in the downwardly open mould cavities, by a fraction of the shaped-article height, in that then the bottom mould halves are opened, by virtue of the bottom baking-mould parts being moved apart from one another, and the shaped articles, which have their openings oriented downwards, are intercepted on the upwardly oriented mould cores, in that then the top tong parts are moved away from the bottom tong parts and the shaped articles, together with the upwardly oriented mould cores, are moved completely out of the mould cavities, in that then, as the baking tongs, upon passing the front deflection, have their top tong parts turned round to the top again, the shaped articles, upon running through the top half of the front deflection, are released from the mould cores by the gravitational force and, by way of their ends which are directed towards the bottom tong parts, are intercepted on a directing surface which is arranged between the path of the top tong parts and the path of the bottom tong parts, and in that the shaped articles supported on the directing surface are transported along the directing surface, and beyond the latter, by the mould cores projecting into them and, in the discharge station, are transferred onto a transporting device, which leads out laterally from the baking-tong chain between the path of the top tong parts and the path of the bottom tong parts.

38. Process according to Claim 37, characterized in that the shaped articles, upon running through the top half of the front deflection, are intercepted, and supported, by a stationary, arcuately curved directing plate which is arranged between the path of the top tong parts and the path of the bottom tong parts.

39. Process according to Claim 37 or 38, characterized in that, upon running through the top half of the front deflection, air is blown in between the shaped articles and the mould cores projecting into them in order to release the shaped articles from said mould cores.

## Revendications

1. Pince de cuisson (7, 60, 97) pour la fabrication de corps moulés à paroi mince à partir de pâte de cuisson ou de moulage se dilatant au cours de l'opération de cuisson, comportant un moule de cuisson (16, 71, 98) en au moins deux pièces, apte à s'ouvrir et à se fermer par ouverture et fermeture de la pince de cuisson (7, 60, 97) et dont la moitié supérieure (17, 72, 120, 120a) est reprise dans la partie supérieure (15, 68, 118) de la pince et la moitié inférieure (18, 73, 119) est reprise dans la partie inférieure (13, 70, 116) de la pince, caractérisée en ce qu'au moins un dispositif de serrage (30, 31, 79, 83, 89, 90, 125) maintenant le moule de cuisson (16, 71, 98) fermé sous une précontrainte prédéterminée, lequel dispositif de serrage pouvant, lorsque la pince de cuisson (7, 60, 97) est fermée, être serré pour exercer la précontrainte sur au moins deux parties (13, 15, 17, 18, 68, 70, 72, 73, 116, 118, 119, 120, 120a) du moule de cuisson ou de la pince et pouvant être bloqué de manière inamovible lorsque la précontrainte est exercée, lequel dispositif de serrage présentant un élément de serrage (41, 42, 47, 80, 85, 92, 129) élastiquement dilatable et servant à créer la précontrainte lors du serrage du dispositif de pinçage (30, 31, 79, 83, 89, 90, 125) et au moins deux surfaces de serrage (21b, 21c, 22b, 68e, 70e, 91a, 128, 139a, 139b, 141, 142) aptes à se déplacer l'une par rapport à l'autre par frottement réciproque en correspondance mécanique et de manière autobloquante lorsque le dispositif de serrage (30, 31, 79, 83, 89, 90, 125) est serré, ou des parties de serrage (41c, 42c, 47c, 81, 82, 85b, 92b, 127) sur l'élément (41, 42, 47, 80, 85, 92, 129) élastiquement dilatable ou sur l'une des deux parties (13, 15, 17, 18, 68, 70, 72, 73, 116, 118, 119, 120, 120a) du moule de cuisson ou de la pince.

2. Pince de cuisson selon la revendication 1, caractérisée en ce que le dispositif de serrage (30, 31, 83, 89, 90) présente au moins un levier de serrage (41, 42, 85, 92) configuré comme élément de serrage élastiquement dilatable, qui est monté sur l'une des parties (15, 17, 70, 73) du moule de cuisson ou de la pince de manière à pouvoir pivoter, et possède une partie de serrage (41c, 42c, 85b, 92b) à laquelle est associée une surface extérieure de serrage (21b, 22b, 84a, 91a) installée sur l'autre partie (18, 68, 72) du moule de cuisson ou de la pince, en vue du frottement réciproque en correspondance mécanique et de manière autobloquante.

3. Pince de cuisson selon la revendication 2, caractérisée en ce qu'un dispositif de serrage (30) présente deux leviers de serrage (41, 42) qui sont montés sur une partie (15, 15a, 17) du moule de cuisson ou de la pince de manière à pouvoir pivoter autour d'un axe de pivotement (44) commun, et aux parties de serrage (41c, 42c) de laquelle sont associées deux surfaces extérieures de serrage (21b, 22b), disposées à distance l'une de l'autre sur l'autre partie (18) du moule de cuisson ou de la pince.

4. Pince de cuisson selon la revendication 2, caractérisée en ce que l'axe de pivotement (87, 93) d'un levier de serrage (85, 92) et la surface extérieure de serrage (84a, 91a) associée à sa partie de serrage (85c, 92c) sont disposés essentiellement en symétrie par rapport au plan principal de séparation du moule de cuisson (71) séparant les deux moitiés de moule (72, 73).

5. Pince de cuisson selon la revendication 1, caractérisée en ce que le dispositif de serrage (79) possède au moins un étrier (80) essentiellement en forme de C, configuré comme élément de serrage élastiquement dilatable et qui, à ses extrémités, est doté de parties de serrage (81, 82) dirigées l'une vers l'autre et à chacune desquelles une surface extérieure de serrage (68e, 70e) est associée sur les deux parties (68, 70) du moule de cuisson ou de la pince, en vue de l'engagement réciproque par frottement en correspondance mécanique et autobloquant.

6. Pince de cuisson selon la revendication 5, caractérisée en ce que les surfaces extérieures de serrage (68e, 70e) des deux parties (68, 70) du moule ou de la pince de cuisson associées aux parties de serrage (81, 82) d'un étrier (80) servant à l'engagement réciproque par frottement en correspondance mécanique et autobloquant sont disposés essentiellement symétriquement par rapport au plan principal de séparation du moule de cuisson (71) séparant les deux moitiés de moule (72, 73).

7. Pince de cuisson selon la revendication 1, caractérisée en ce qu'en vue d'exercer une précontrainte prédéterminée sur un moule de cuisson (16) fermé qui possède une moitié inférieure (18) apte à être ouverte et fermée et divisée en deux sous-parties (21, 22) de moule de cuisson, il est prévu au moins un dispositif de serrage (30) qui, lorsque la pince de cuisson (7) est fermée, peut être serré contre la moitié supérieure (17) du moule ou contre la partie supérieure (15) de la pince et contre les deux sous-parties (21, 22) du moule de cuisson et qui peut être bloqué de manière inamovible lorsque la précontrainte est exercée, lequel dispositif de serrage comporte au moins deux leviers de serrage (41, 42) montés sur la moitié supérieure (17) du moule ou sur la partie supérieure (15) de la pince de manière à pouvoir pivoter et configurés comme éléments de serrage élastiquement dilatables, lesquels leviers de serrage possèdent chacun une partie de serrage (41c, 42c) à laquelle une surface extérieure de serrage (21b, 22b) installée sur l'une des sous-parties (21, 22) du moule de cuisson est associée on vue de l'engagement réciproque par frottement en correspondance mécanique et autobloquant.

8. Pince de cuisson selon la revendication 7, caractérisée en ce que les deux leviers de serrage (41, 42) possèdent un axe de pivotement (44) commun, et les deux surfaces extérieures de serrage (21, 22b) associées à leurs parties de serrage (41c, 42c) sont disposées sur les sous-parties (21, 22) du moule de cuisson de manière essentiellement symétrique par rapport au deuxième plan de séparation du moule qui sépare les deux sous-parties (21, 22) du moule de cuisson et perpendiculairement au plan principal de séparation du moule de cuisson (16), et les deux surfaces extérieures de serrage (21b, 22b) ainsi que l'axe de pivotement (44) commun des leviers de serrage (41, 42) forment un triangle isocèle essentiellement symétrique par rapport au deuxième plan de séparation du moule.

9. Pince de cuisson selon les revendications 7 ou 8, caractérisée en ce que les sous-parties (21, 22) du moule de cuisson portant les surfaces extérieures de serrage (21b, 22b) sont disposées dans la partie inférieure (13) de la pince de manière à pouvoir pivoter transversalement par rapport au deuxième plan de séparation du moule.

10. Pince de cuisson selon l'une des revendications 7 à 9, caractérisée en ce que la partie supérieure (15) de la pince qui porte la moitié supérieure (17) du moule et les leviers de serrage (41, 42) du dispositif de serrage (30) peut coulisser par rapport à la partie inférieure (13) de la pince qui porte les deux sous-parties (21, 22) du moule de cuisson, pour ouvrir et fermer le moule de cuisson (16) parallèlement à son deuxième plan de séparation, et la partie supérieure (15) de la pince possède une lame de guidage (14) qui est perpendiculaire au plan principal de séparation du moule de cuisson (16) et qui est guidée dans la partie inférieure (13) de la pince de manière à coulisser perpendiculairement au plan principal de séparation du moule de cuisson (16).

11. Pince de cuisson selon la revendication 10, caractérisée en ce que la lame de guidage (14) est fixée rigidement sur une tête supérieure de guidage (15b) réalisée sur la partie supérieure (15) de la pince et est guidée par une piste intérieure de guidage (14c, 14e) dirigée vers le moule de cuisson (16) et par une piste extérieure de guidage (14d, 14f) non dirigée vers le moule de cuisson (16), de manière à coulisser dans une tête inférieure de guidage (13b) réalisée dans la partie inférieure (13) de la pince, et les deux pistes de guidage possèdent des surfaces de guidage (14c, 14d, 14e, 14f) qui sont obliques par rapport au deuxième plan de séparation du moule et qui, dans la tête inférieure de guidage (13b), s'engagent sur des galets de guidage (37) qui leur sont associés et qui possèdent des axes de rotation parallèles au plan principal de séparation du moule de cuisson (16), lesquels axes de rotation sont situés dans au moins deux plans (35, 36) disposés à des distances différentes du plan principal de séparation du moule.

12. Pince de cuisson selon la revendication 11, caractérisée en ce que les galets de guidage (37) sont de forme conique et présentent chacun un axe de rotation disposé parallèlement au deuxième plan de séparation du moule et au plan principal de séparation du moule.

13. Pince de cuisson selon la revendication 12, caractérisée en ce que chaque galet conique de guidage (37a, 37c, 38a, 38c) associé à une surface de guidage (14c, 14e) de la piste intérieure de guidage et chaque galet conique de guidage (37b, 37d, 38b, 38d) associé à une surface de guidage (14d, 14f) de la piste extérieure de guidage sont disposés sur un corps de roulement (35a, 36a, 35b, 36b) commun qui est monté dans la tête inférieure de guidage (13b) de manière à pouvoir tourner autour d'un axe de rotation parallèle au deuxième plan de séparation du moule.

14. Pince de cuisson selon la revendication 13, caractérisée en ce qu'un galet de guidage (37) de chaque corps de roulement (35a, 36a, 35b, 36b) est configuré d'une seule pièce avec ce dernier, l'autre galet de guidage (37) étant disposé sur le corps de roulement de manière à pouvoir y coulisser axialement.

15. Pince de cuisson selon l'une des revendications 12 à 14, caractérisée en ce qu'à l'exception d'un galet de guidage dans la tête inférieure de guidage (13b), tous les galets coniques de guidage (37) sont montés de manière à ne pas pouvoir coulisser axialement, et seul un galet conique de guidage (37) est soutenu élastiquement dans le sens axial dans la tête inférieure de guidage (13b).

16. Pince de cuisson selon l'une des revendications 1 à 15, caractérisée en ce que pour appliquer une contrainte prédéterminée sur la moitié inférieure fermée (18) d'un moule de cuisson (16) qui possède une moitié inférieure (18) apte à s'ouvrir et se fermer et divisée en deux sous-parties (21, 22) de moule de cuisson, il est prévu au moins un dispositif inférieur de serrage (31) qui peut être serré contre les deux sous-parties (21, 22) du moule de cuisson lorsque la moitié inférieure (18) du moule est fermée, et qui peut être immobilisé de manière inamovible lorsque la précontrainte est exercée, lequel dispositif inférieur de serrage possède au moins un élément de serrage (47) élastiquement dilatable, pour créer la précontrainte lors du serrage du dispositif inférieur de serrage (31), et au moins deux surfaces de serrage (21c, 47d) ou parties de serrage (47c) sur l'élément de serrage (47) élastiquement dilatable ou sur l'une des deux sous-parties (21) du moule de cuisson, qui sont mobiles l'une par rapport à l'autre en engagement réciproque par frottement en correspondance mécanique et autobloquant lorsque le dispositif inférieur de serrage (31) est serré.

17. Pince de cuisson selon la revendication 16, caractérisée en ce que le dispositif inférieur de serrage (31) possède au moins un levier de serrage (47) configuré comme élément de serrage élastiquement dilatable, qui est monté sur une sous-partie (22) du moule de cuisson de manière à pouvoir y pivoter et qui possède une partie de serrage (47c) à laquelle une surface extérieure de serrage (21c) prévue sur l'autre sous-partie (21) du moule de cuisson est associée en vue de l'engagement réciproque par frottement en correspondance mécanique et autobloquant.

18. Pince de cuisson selon la revendication 17, caractérisée en ce que sur le dispositif inférieur de serrage (31), l'axe de pivotement (49) d'un levier de serrage (47) et la surface extérieure de serrage (21c) qui est associée à sa partie de serrage (47c) sont disposés de manière essentiellement symétrique par rapport au deuxième plan de séparation du moule séparant les deux sous-parties (21, 22) du moule de cuisson et perpendiculairement au plan principal de séparation du moule de cuisson (16).

19. Pince de cuisson selon la revendication 16, caractérisée en ce que la pince inférieure de serrage (31) présente au moins un étrier essentiellement en forme de C configuré comme élément de serrage élastiquement dilatable, qui est doté à ses extrémités de parties de serrage dirigées l'une vers l'autre et à chacune desquelles une surface extérieure de serrage est associée sur les deux sous-parties (21, 22) du moule de cuisson, en vue de l'engagement réciproque par frottement en correspondance mécanique et autobloquant.

20. Pince de cuisson selon la revendication 19, caractérisée en ce que les surfaces extérieures de serrage associées aux parties de serrage d'un étrier du dispositif inférieur de serrage en vue de l'engagement réciproque par frottement en correspondance mécanique et autobloquant sont disposées de manière essentiellement symétrique par rapport au deuxième plan de séparation du moule qui sépare les deux sous-parties du moule de cuisson et perpendiculairement au plan principal de séparation du moule de cuisson.

21. Pince de cuisson selon la revendication 1, caractérisée en ce que le dispositif de serrage (125) comporte un premier élément de serrage (129) élastiquement dilatable, relié rigidement à une des parties (118, 120, 120a, 122) du moule ou de la pince de cuisson en vue de créer la précontrainte, lequel élément de serrage possède une surface de serrage (128) en vue de l'engagement par frottement en correspondance mécanique et autobloquant avec une partie de serrage (127) d'un deuxième élément de serrage (126) qui est monté de manière mobile sur l'autre partie (116, 119, 121) du moule ou de la pince de cuisson, et lorsque la pince de cuisson (97) est fermée, le deuxième élément de serrage peut être serré fixement sur les deux parties (116, 118, 119, 120, 120a, 121, 122) du moule ou de la pince de cuisson par sa partie de serrage (127), par engagement de frottement en correspondance mécanique et autobloquant avec la surface de serrage (128) du premier élément de serrage (129).

22. Pince de cuisson selon la revendication 21, caractérisée en ce que les deux éléments de serrage (121, 129) du dispositif de serrage (125) sont disposés sur deux parties d'extrémité (121, 122) des parties (116, 118, 119, 120, 120a, 121, 122) du moule ou de la pince de cuisson, mutuellement opposées par leur côté avant lorsque la pince de cuisson (97) est fermée, en ce que le premier élément de serrage (129) élastiquement dilatable déborde du côté avant du premier tronçon d'extrémité (122) et possède une partie de tête (130) par laquelle il déborde au-delà du côté arrière de la deuxième partie d'extrémité (121) lorsque la pince de cuisson (97) est fermée, et en ce que le deuxième élément de serrage (126) est monté de manière mobile sur le côté arrière de la deuxième partie d'extrémité (121) et, lorsque la pince de cuisson (97) est fermée, il peut être serré fixement par sa partie de serrage (127) entre le côté arrière de la deuxième partie d'extrémité (121) et la partie de tête (130) du premier élément de serrage (129) élastiquement dilatable.

23. Pince de cuisson selon la revendication 22, caractérisée en ce que dans la partie de tête (130) du premier élément de serrage (129) élastiquement dilatable est prévu un canal de passage (134) qui, sur sa paroi dirigée vers le côté avant de la première partie d'extrémité (122), est doté d'une surface de serrage (128) en vue de l'engagement avec la partie de serrage (127) du deuxième élément de serrage (126) mobile.

24. Pince de cuisson selon l'une des revendications 21 à 23, caractérisée en ce que comme deuxième élément de serrage (126), il est prévu un levier en forme de crochet portant au moins un élément d'actionnement (143) en vue du serrage ou de la libération du dispositif de serrage (125), dont l'axe de pivotement (137) est disposé à la perpendiculaire du plan principal de séparation du moule de cuisson (98) qui sépare les deux moitiés de moule (119, 120, 120a) et dont la partie (139) en forme de crochet est configurée comme partie de serrage.

25. Pince de cuisson selon l'une des revendications 21 à 23, caractérisée en ce que comme deuxième élément de serrage, il est prévu un verrou qui porte au moins un élément d'actionnement pour le serrage ou la libération du dispositif de serrage, qui est doté d'une partie de serrage et qui peut coulisser parallèlement au plan principal de séparation du moule de cuisson qui sépare les deux moitiés du moule.

26. Four de cuisson (1) pour la fabrication de corps moulés à paroi mince en pâte de cuisson ou de moulage qui se dilate pendant l'opération de cuisson, dans lequel des moules de cuisson (16) aptes à être ouverts et fermés sont repris dans des pinces de cuisson (7) aptes à être ouvertes et fermées, qui sont reliées les unes aux autres pour former une chaîne sans fin (6) de pinces de cuisson qui parcourt au moins deux courbes (11, 12) et sur le parcours de laquelle un poste de coulée (4) des pâtes de cuisson ou de coulée, une chambre de cuisson (2) pour la cuisson des corps moulés et un poste de sortie (5) des corps moulés cuits sont disposés les uns derrière les autres dans la direction d'avancement (8) des pinces de cuisson (7), et les moules de cuisson (16), qui sont chacun divisés par un deuxième plan de séparation de moule, perpendiculaire au plan principal de séparation du moule, en une moitié supérieure et une moitié inférieure de moule par un plan principal de séparation, sont repris dans les parties supérieures (15) des pinces par leur moitié supérieure (17) et dans les parties inférieures (13) des pinces par leur moitié inférieure (18) apte à s'ouvrir et se fermer, chacune divisée en deux sous-parties (21, 22) de moule de cuisson, caractérisé en ce que les moules de cuisson (16) sont chacun disposés dans les pinces de cuisson (7) de telle sorte que le deuxième plan de séparation du moule, qui sépare les deux sous-parties (21, 22) du moule de cuisson, est transversal par rapport à la direction d'avancement (8), en ce que, pour ouvrir et fermer les moitiés inférieures (18) du moule, des mécanismes de déplacement (26) disposés entre les pinces de cuisson (7) et entourant ces dernières sont prévus pour les sous-parties (21, 22) du moule de cuisson aptes à se déplacer dans les parties inférieures (13) des pinces en va-et-vient par rapport au deuxième plan de séparation du moule, en ce que, lorsque les mécanismes périphériques de déplacement (26) passent sur la courbe (11) située en amont du poste de sortie (5), ils convertissent les modifications de distance qui apparaissent dans la région des mécanismes de déplacement (26) entre des pinces de cuisson (7) successives et parallèles à la direction d'avancement (8) en déplacements relatifs des sous-parties (21, 22) mobiles des moules de cuisson par rapport au deuxième plan de séparation du moule correspondant, et en ce que chacun des mécanismes périphériques de déplacement (26) peut être activé avant la courbe (11) située en amont du poste de sortie (5) et peut être de nouveau désactivé après cette courbe (11).

27. Four de cuisson selon la revendication 26, caractérisé en ce qu'un mécanisme de déplacement (26) propre disposé entre deux pinces de cuisson (7) successives est prévu pour chaque sous-partie (21, 22) mobile du moule de cuisson.

28. Four de cuisson selon la revendication 26, caractérisé en ce que pour des pinces de cuisson (7) pour lesquelles les deux sous-parties (21, 22) du moule de cuisson peuvent chacune se déplacer en va-et-vient dans les parties inférieures de pince (13) par rapport au deuxième plan de séparation du moule, en vue de l'ouverture et la fermeture de la moitié inférieure (18) du moule, un mécanisme commun de déplacement (26) de la sous-partie (22) arrière de la pince de cuisson (7) située en avant dans la direction de déplacement (8) et de la sous-partie (21) avant du moule de cuisson de la pince de cuisson (7) suivante dans la direction d'avancement (8) est prévu entre des pinces de cuisson (7) successives.

29. Four de cuisson selon l'une des revendications 26 à 28, caractérisé en ce qu'un mécanisme de déplacement (26) comporte au moins une languette d'actionnement (26a, 26b) qui couvre l'espace intermédiaire entre deux pinces de cuisson (7) successives et qui est reliée à l'une des pinces de cuisson (7) de manière à pouvoir pivoter, et qui peut être engagée ou désengagée d'un boulon d'activation (32c) installé sur l'autre pince de cuisson (7) pour activer ou désactiver le mécanisme de déplacement (26).

30. Four de cuisson selon la revendication 29, caractérisé en ce qu'une languette d'activation (26a, 26b) allongée dans la direction de déplacement (8) est prévue et déborde du boulon d'actionnement (32c) de la pince de cuisson (7) suivante par son extrémité arrière et en direction opposée à la direction d'avancement (8), et en ce que la languette d'actionnement (26a, 26b) possède un canal de guidage (40) allongé qui contient deux pistes de déplacement communiquant l'une avec l'autre et de longueur différente pour le bouton d'actionnement (32c), et entre lesquelles le boulon d'actionnement (32c) peut être déplacé en va-et-vient lors de l'activation et de la désactivation du mécanisme de déplacement (26) par pivotement de la languette d'actionnement (26a, 26b).

31. Four de cuisson selon la revendication 30, caractérisé en ce que les deux pistes de déplacement sont essentiellement parallèles l'une à l'autre dans la direction longitudinale du canal de guidage (40), la plus longue piste de déplacement est ouverte à l'extrémité de la languette d'actionnement (26a, 26b) située en arrière dans la direction de déplacement (8), et la plus courte piste de déplacement s'étend depuis une surface de butée (40a) du boulon d'actionnement (32c) située en avant dans la direction d'avancement (8), dirigée vers l'arrière par rapport à la direction d'avancement (8) et disposée à l'extrémité avant du canal de guidage (40), jusqu'à une surface arrière de butée (40d) dirigée vers l'avant et située sur un épaulement disposé entre les deux extrémités du canal de guidage (40).

32. Four de cuisson selon la revendication 31, caractérisé en ce que dans la plus petite piste de déplacement, l'écart entre la surface avant de butée (40a) et la surface arrière de butée (40d) est plus grand que le diamètre du bouton d'actionnement (32c).

33. Four de cuisson selon l'une des revendications 29 à 32, caractérisé en ce que le mécanisme de déplacement (26) comporte un mécanisme d'actionnement permettant le pivotement forcé des languettes d'actionnement (26a, 26b) lorsque le mécanisme de déplacement (26) est activé ou désactivé.

34. Four de cuisson selon la revendication 33, caractérisé en ce que le mécanisme d'actionnement servant à désactiver une languette d'actionnement (26a, 26b) comporte une surface d'actionnement (15e, 15f) disposée sur le côté inférieur de la partie supérieure (15) de la pince de cuisson (7) suivante, associée à l'une des languettes d'actionnement (26a, 26b) et apte à être engagée sur le côté supérieur de la languette d'actionnement (26a, 26b).

35. Four de cuisson selon la revendication 33, caractérisé en ce que le mécanisme d'actionnement servant à activer une languette d'actionnement (26a, 26b) comporte une barre coulissante (26b, 26d) associée à la languette d'actionnement (26a, 26b), pouvant coulisser dans la partie inférieure (13) de la pince de cuisson (7) suivante perpendiculairement à son plan principal de séparation du moule et apte à être engagée sur le côté inférieur de la languette d'actionnement (26a, 26b).

36. Four de cuisson selon la revendication 35, caractérisé en ce que le mécanisme d'actionnement servant à activer une languette d'actionnement (26a, 26b) comporte un rail stationnaire d'actionnement (26e) oblique par rapport au parcours de la pince de cuisson (7) et associé à la barre coulissante (26c, 26d), elle-même associée à cette languette d'actionnement (26a, 26b), lequel rail d'actionnement est disposé dans le four de cuisson (1) en avant de la courbe (11) de la chaîne de pinces de cuisson située en amont du poste de sortie (5).

37. Procédé d'extraction de corps moulés en pâte de cuisson ou de coulée cuite, en forme de sac ou de gobelet, hors des moules de cuisson, aptes à s'ouvrir et se fermer, des pinces de cuisson aptes à s'ouvrir et se fermer d'une chaîne sans fin de pinces de cuisson d'un four de cuisson, dans lequel les moules de cuisson sont repris par leur moitié supérieure de moule configurée chacune comme poinçon doté d'une âme de moule dans les parties supérieures des pinces de cuisson et sont repris dans les parties inférieures des pinces de cuisson par leur moitié inférieure configurée chacune comme matrice dotée d'un évidement de moule, séparée de chaque moitié supérieure de moule par un plan principal de séparation du moule et divisée en deux sous-parties de moule de cuisson par un deuxième plan de séparation du moule perpendiculaire au plan principal de séparation du moule, et la chaîne sans fin de pinces de cuisson, qui s'étend entre un plan supérieur de transport et un plan inférieur de transport parcourant une courbe arrière et de nouveau jusque dans le plan supérieur de transport en parcourant une courbe avant, transporte les pinces de cuisson depuis un poste de coulée de la pâte de cuisson ou de coulée, à travers une chambre de cuisson servant à la cuisson des corps moulés, et jusqu'à un poste de sortie des corps moulés cuits, tandis que les pinces de cuisson se déplacent dans le plan supérieur de transport avec leur partie supérieure de pince, sont placées sur leur tête sur la courbe arrière, parcourent ensuite le plan inférieur de transport avec les parties supérieures de pince situées dans le bas, et sont de nouveau dirigées vers le haut et ainsi ouvertes lorsqu'elles passent sur la courbe avant avec leurs parties supérieures de pince, caractérisé en ce que, pendant le circuit des pinces de cuisson, lorsque les pinces de cuisson sont placées sur la tête, les parties supérieures de pince sont écartées des parties inférieures de pince le long de leur deuxième plan de séparation du moule, et à cette occasion les âmes de moule dirigées vers le haut sont extraites sur une partie de la hauteur des corps moulés hors des corps moulés restant dans les évidements de moule ouverts vers le bas, en ce qu'ensuite les moitiés inférieures de moule sont ouvertes par écartement des parties inférieures des moules de cuisson et les corps moulés dont les ouvertures sont dirigées vers le bas sont repris sur les âmes de moule dirigées vers le haut, en ce qu'ensuite les parties supérieures des pinces sont écartées des parties inférieures des pinces et les corps moulés sont entièrement extraits des évidements de moule en même temps que les âmes de moule dirigées vers le haut, en ce qu'ensuite, pendant que les pinces de cuisson sont de nouveau renversées vers le haut lorsqu'elles parcourent la courbe avant par leur partie supérieure de pince, les corps moulés sont libérés des âmes de moule par la gravité lorsque la moitié supérieure parcourt la courbe avant et sont reprises par leur extrémité dirigée vers les parties inférieures des pinces sur une surface de guidage disposée entre le parcours des parties supérieures des pinces et le parcours des parties inférieures des pinces, et en ce que les corps moulés s'appuyant sur la surface de guidage sont transportés dans les âmes de moule qui y débordent à l'intérieur, le long de la surface de guidage et hors de celle-ci et sont transférées dans le poste de sortie sur une unité de transport qui les guide latéralement hors de la chaîne des pinces de cuisson, entre le parcours des parties supérieures des pinces et le parcours des parties inférieures des pinces.

38. Procédé selon la revendication 37, caractérisé en ce que, lorsqu'ils parcourent la moitié supérieure de la courbe avant, les corps moulés sont repris et soutenus par une tôle stationnaire de guidage cintrée en forme d'arc et disposée entre le parcours des parties supérieures de pince et le parcours des parties inférieures de pince.

39. Procédé selon les revendications 37 ou 38, caractérisé en ce que, lorsque les corps moulés parcourent la moitié supérieure de la courbe avant, de l'air est soufflé entre les corps moulés et les âmes de moule pour libérer les corps moulés des âmes de moule qui y débordent à l'intérieur.
